# EUROPEAN PATENT SPECIFICATION

(11) **EP 2 383 737 B1**
(45) Date of publication and mention of the grant of the patent: **03.12.2014**
(21) Application number: 09834543.2
(22) Date of filing: 28.12.2009
(51) Int. Cl.: G11B 20/00, G11B 20/10, G06F 21/80

(54) **RECORDING/REPRODUCING DEVICE AND INFORMATION RECORDING MEDIUM**
AUFZEICHNUNGS-/WIEDERGABEVORRICHTUNG UND INFORMATIONSAUFZEICHNUNGSMEDIUM
DISPOSITIF D'ENREGISTREMENT/REPRODUCTION ET SUPPORT D'ENREGISTREMENT D'INFORMATIONS

(30) Priority: 26.12.2008 JP 2008334750; 26.12.2008 JP 2008334752; 26.12.2008 JP 2008334753; 25.12.2009 JP 2009296272
(43) Date of publication of application: 02.11.2011
(73) Proprietor: Sharp Kabushiki Kaisha, Osaka-shi, Osaka 545-8522 (JP)
(72) Inventor: HAYASHI, Tetsuya, Osaka 545-8522 (JP); UENO, Hiroyasu, Osaka 545-8522 (JP); MAEDA, Shigemi, Osaka 545-8522 (JP); TAJIMA, Hideharu, Osaka 545-8522 (JP); OKUMURA, Tetsuya, Osaka 545-8522 (JP); HARADA, Yasuhiro, Osaka 545-8522 (JP); ETOH, Atsushi, Osaka 545-8522 (JP); MORI, Go, Osaka 545-8522 (JP)
(74) Representative: Müller - Hoffmann & Partner
(86) International application number: PCT/JP2009/007363
(87) International publication number: WO 2010/073737

(56) References cited:
- WO-A1-2005/076140
- WO-A1-2005/122166
- JP-A- 2006 004 543
- JP-A- 2007 110 175
- JP-A- 2007 228 370
- JP-A- 2008 262 684
- US-A1- 2004 078 066
- US-A1- 2006 222 177
- US-A1- 2007 283 442
- US-A1- 2008 232 785

## Description

### Technical Field

The present invention relates to a recording and reproduction device and an information recording medium which make it possible, with sufficient safeguards for software recorded on an information recording medium, to use the software (in a plurality of recording and reproduction devices).

### Background Art

In recent years, a technique for increasing the recording capacity of an information recording medium such a Blu-ray Disc (BD) has been under development. Moreover, such an increase in recording capacity of an information recording medium makes it possible to record a large amount of information such as an OS (operating system).

It should be noted here that an information recording medium allows a plurality of recording and reproduction devices to record and reproduce information. For this reason, even while a recording and reproduction device is using information recorded on an information recording medium, another recording and reproduction device can use the information.

Further, in using information recorded on an information recording medium, a recording and reproduction device can store the information in a memory section of the recording and reproduction device. For this reason, by recording the stored information on another information recording medium, each recording and reproduction device becomes able to replicate an information recording medium having the same information.

Therefore, for improvements in convenience of an information recording medium, there have been demands for an increase in capacity of the information recording medium and prevention of unauthorized access to information recorded on the information recording medium and of replication of the information recording medium. For example, Patent Literatures 1 and 2 disclose techniques for preventing such unauthorized access and replication of an information recording medium.

Patent Literature 1 discloses an installer computer that incorporates identification information of a semiconductor memory into software recorded on an optical disk and installs the software in the semiconductor memory. It should be noted that this semiconductor memory is a removable medium that allows a plurality of recording and reproduction devices to execute an environment setting, an OS, etc.

Moreover, in Patent Literature 1, at the time of activation of the software installed in the semiconductor memory, an activator computer compares the identification information incorporated into the software and the identification information of the semiconductor memory with each other to find whether or not they match each other and, only if they match each other, activates the software.

This configuration allows the activator computer to determine whether or not the software installed in the semiconductor memory is an unauthorized copy, thus restricting use of an unauthorized copy of the software.

Further, Patent Literature 2 discloses a multilayer information medium having multiple recording layers having recorded thereon different pieces of management information for preventing unauthorized access to data recorded on the respective recording layers.

According to this configuration, even if unauthorized access to one recording layer has been permitted, unauthorized access to data recorded on another recording layer can be prevented. That is, the technique of Patent Literature 2 can improve safeguards against unauthorized access to data recorded on a multilayer recording medium.

### Citation List

### Patent Literature 1

Japanese Patent Application Publication, Tokukai, No. 2007-094739 (Publication Date: April 12, 2007)

### Patent Literature 2

Japanese Patent Application Publication, Tokukai, No. 2007-122810 (Publication Date: May 17, 2007)

Further recording and reproduction devices are known from US 2008/0232785, US 2004/0078066, US 2006/0222177 and US 2007/0283442.

### Summary of Invention

### Technical Problem

However, according to the technique of Patent Literature 1, software including identification information of a semiconductor memory is installed in the semiconductor memory. That is, according to the technique of Patent Literature 1, one and the same semiconductor memory has recorded therein both software and identification information required for use of the software. That is, according to this technique, an information recording medium has recorded thereon key information for restricting use of information recorded on the information recording medium (i.e., for permitting use of the information).

Further, according to the technique of Patent Literature 2, different recording layers have recorded thereon data and management information for using the data, respectively. However, as with Patent Literature 1, it can be said that one and the same multiplayer information recording medium has recorded thereon both data and management information for using the data.

Therefore, according to the techniques of Patent Literatures 1 and 2, even if use in one information processing device of information recorded on an information recording medium has been permitted by use of key information (the information has been successfully authenticated), insertion of the information recording medium into another information processing device causes the information to be read out and authenticated again so that the another information processing device can use that information.

That is, whereas the foregoing techniques make allow a plurality of information processing devices to use information recorded on an information recording medium, the foregoing techniques have difficulty in preventing an information processing device from executing the information while another information processing device is executing the information. For this reason, the foregoing techniques hardly make it possible, with sufficient safeguards (license protection) for information recorded on an information recording medium, to use the information (in a plurality of information processing devices).

The present invention has been made in view of the foregoing problems, and it is an object of the present invention to provide a recording and reproduction device and an information recording medium which make it possible, with sufficient safeguards for software recorded on an information recording medium, to use the software (in a plurality of recording and reproduction devices).

### Solution to Problem

The above objects are achieved by the claimed matter according to the independent claims.

In order to solve the foregoing problems, a recording and reproduction device according to the present invention is a recording and reproduction device capable of recording and reproducing information with respect to an information recording medium having recorded thereon first information that needs to be authenticated for use, the recording and reproduction device including: information readout means which reads out the first information recorded on the information recording medium; information storage means which stores, in a memory section of the recording and reproduction device, the first information read out by the information readout means; and enable/disable control means which, when the information recording medium is ejected, enables use of either the first information stored in the memory section by the information storage means or the first information recorded on the information recording medium and disables use of the other.

According to the foregoing configuration, the information storage means stores, in the memory section, the first information read out from the information recording medium by the information readout means. This allows the recording and reproduction device to use the first information stored in the memory section, thus bringing about an improvement in speed of access to the first information.

Further, when the information recording medium is ejected, the enable/disable control means enables use of either the first information stored in the memory section or the first information recorded on the information recording medium and disables use of the other.

For this reason, use of the first information recorded on the information recording medium can be disabled when the first information can be used in the recording and reproduction device from which the information recording medium has been ejected. On the other hand, use of the first information in the recording and reproduction device can be disabled when the information recording medium has been ejected from the recording and reproduction device with its first information left usable. That is, the recording and reproduction device can enable use of only either the first information stored in the device or the first information recorded on the information recording medium.

Therefore, the recording and reproduction device makes it possible, with sufficient safeguards (license protection) for first information recorded on an information recording medium, to use the first information in a plurality of recording and reproduction devices.

In order to solve the foregoing problems, a recording and reproduction device according to the present invention is a recording and reproduction device capable of recording and reproducing information with respect to an information recording medium having recorded thereon (i) first information that needs to be authenticated for use and (ii) first key information for permitting use of the first information, the recording and reproduction device including: authentication and confirmation means which, by use of the first key information recorded on the information recording medium, carries out authentication for use of the first information recorded on the information recording medium, and which confirms whether or not the authentication has been completed successfully; and key information erasing means which erases the first key information from the information recording medium in accordance with a result of confirmation of the authentication by the authentication and confirmation means.

According to the foregoing configuration, the authentication and confirmation means authenticates, by use of the first key information, whether the recording and reproduction device can use the first information. The key information erasing means erases the first key information from the information recording medium in accordance with a result of authentication (of key information at the time of temporary ejection) by the authentication and confirmation means before the temporary ejection at least from the recording and reproduction device.

That is, the information recording medium, which had had the first key information recorded thereon before it was inserted into the recording and reproduction device, becomes devoid of the first key information during a period of time between insertion into the recording and reproduction device and temporary ejection at least from the recording and reproduction device. Thus, even if an attempt to use the first information in another recording and reproduction device has been made, the first information cannot be used in the another recording and reproduction device, since the information recording medium is devoid of the first key information. That is, by erasing the first key information from the information recording medium, the recording and reproduction device can render the first information unusable when the information recording medium has been inserted into another recording and reproduction device.

Therefore, the recording and reproduction device makes it possible, with sufficient safeguards (license protection) for first information recorded on an information recording medium, to use the first information in a plurality of recording and reproduction devices.

It should be noted that the term "first information" refers to information such as software or content such as text data, audio data, text data, etc. Further, the authentication and confirmation (of key information at the time of temporary ejection) by the authentication and confirmation means may be carried out immediately before the information recording medium is ejected during the execution of the first information, for example, but is not intended to be carried out solely immediately before the information recording medium is ejected during the execution of the first information. That is, the authentication and confirmation may be carried out at any stage after the insertion of the information recording medium, as long as the information recording medium is yet to be ejected.

In order to solve the foregoing problems, a recording and reproduction device according to the present invention is a recording and reproduction device capable of recording and reproducing information with respect to an information recording medium having recorded thereon first information that needs to be authenticated for use, the recording and reproduction device including: authentication and confirmation means which, by use of first key information for permitting use of the first information, carries out authentication for use of the first information recorded on the information recording medium, and which confirms whether or not the authentication has been completed successfully; and key information recording means which, in accordance with a result of confirmation of the authentication by the authentication and confirmation means, records, on the information recording medium, prohibition key information for prohibiting use of the first information.

According to the foregoing configuration, the authentication and confirmation means authenticates, by use of the first key information, whether the recording and reproduction device can use the first information (the recording and reproduction device can use the first information if there is no prohibition key information). The key information recording means, in accordance with a result of the authentication by the authentication and confirmation means, records, on the information recording medium, prohibition key information for prohibiting use of the first information.

That is, by getting the prohibition key information recorded thereon during a period of time between insertion into the recording and reproduction device and temporary ejection at least from the recording and reproduction device, the information recording medium comes into a recording state that is different from that in which the information recording medium had been before it was inserted into the recording and reproduction device. Thus, even if the information recording medium has been temporarily ejected from the recording and reproduction device and an attempt to use the first information in another recording and reproduction device has been made, for example, the first information cannot be used in the another recording and reproduction device, since the information recording medium has the prohibition key information recorded thereon. That is, by recording the prohibition key information on the information recording medium, the recording and reproduction device can render the first information unusable when the information recording medium has been inserted into another recording and reproduction device.

Therefore, the recording and reproduction device makes it possible, with sufficient safeguards (license protection) for first information recorded on an information recording medium, to use the first information in a plurality of recording and reproduction devices.

It should be noted that the term "first information" refers to information such as software or content such as text data, audio data, text data, etc. Further, the authentication and confirmation (of key information at the time of temporary ejection) by the authentication and confirmation means may be carried out immediately before the information recording medium is ejected during the execution of the first information, for example, but is not intended to be carried out solely immediately before the information recording medium is ejected during the execution of the first information. That is, the authentication and confirmation may be carried out at any stage after the insertion of the information recording medium, as long as the information recording medium is yet to be ejected.

In order to solve the foregoing problems, a recording and reproduction device according to the present invention is a recording and reproduction device capable of recording and reproducing information with respect to an information recording medium having recorded thereon first information that needs to be authenticated for use, the recording and reproduction device including: a memory section having stored therein device unique information serving as unique information for discriminating the recording and reproduction device from another recording and reproduction device; key information generating means which, by use of at least the device unique information stored in the memory section, generates first key information for permitting use of the first information recorded on the information recording medium; and key information recording means which records, on the information recording medium, the first key information generated by the key information generating means.

According to the foregoing configuration, by use of at least the device unique information, stored in the memory section, which serves as unique information for discriminating the recording and reproduction device from another recording and reproduction device, the key information generating means generates first key information for permitting use of the first information recorded on the information recording medium. Then, the key information recording means records, on the information recording medium, the first key information generated by the key information generating means.

That is, by getting the first key information generated and then recorded thereon during a period of time between insertion into the recording and reproduction device and temporary ejection at least from the recording and reproduction device, the information recording medium comes into a recording state that is different from that in which the information recording medium had been before it was inserted into the recording and reproduction device. Thus, even if the information recording medium has been temporarily ejected from the recording and reproduction device and an attempt to use the first information in another recording and reproduction device has been made, for example, the first information cannot be used in the another recording and reproduction device, since the information recording medium has recorded thereon the first key information generated by the key information generating means. That is, by recording the first key information on the information recording medium, the recording and reproduction device can render the first information unusable when the information recording medium has been inserted into another recording and reproduction device.

Therefore, the recording and reproduction device makes it possible, with sufficient safeguards (license protection) for first information recorded on an information recording medium, to use the first information in a plurality of recording and reproduction devices.

It should be noted that the term "first information" refers to information such as software or content such as text data, audio data, text data, etc.

### Advantageous Effects of Invention

As described above, a recording and reproduction device according to the present invention includes: information readout means which reads out the first information recorded on the information recording medium; information storage means which stores, in a memory section of the recording and reproduction device, the first information read out by the information readout means; and enable/disable control means which, when the information recording medium is ejected, enables use of either the first information stored in the memory section by the information storage means or the first information recorded on the information recording medium and disables use of the other.

As described above, a recording and reproduction device according to the present invention includes: authentication and confirmation means which, by use of the first key information recorded on the information recording medium, carries out authentication for use of the first information recorded on the information recording medium, and which confirms whether or not the authentication has been completed successfully; and key information erasing means which erases the first key information from the information recording medium in accordance with a result of confirmation of the authentication by the authentication and confirmation means.

As described above, a recording and reproduction device according to the present invention includes: authentication and confirmation means which, by use of first key information for permitting use of the first information, carries out authentication for use of the first information recorded on the information recording medium, and which confirms whether or not the authentication has been completed successfully; and key information recording means which, in accordance with a result of confirmation of the authentication by the authentication and confirmation means, records, on the information recording medium, prohibition key information for prohibiting use of the first information.

As described above, a recording and reproduction device according to the present invention includes: a memory section having stored therein device unique information serving as unique information for discriminating the recording and reproduction device from another recording and reproduction device; key information generating means which, by use of at least the device unique information stored in the memory section, generates first key information for permitting use of the first information recorded on the information recording medium; and key information recording means which records, on the information recording medium, the first key information generated by the key information generating means.

Therefore, the recording and reproduction device makes it possible, with sufficient safeguards for first information recorded on an information recording medium, to use the first information (in a plurality of recording and reproduction devices).

### Brief Description of Drawings

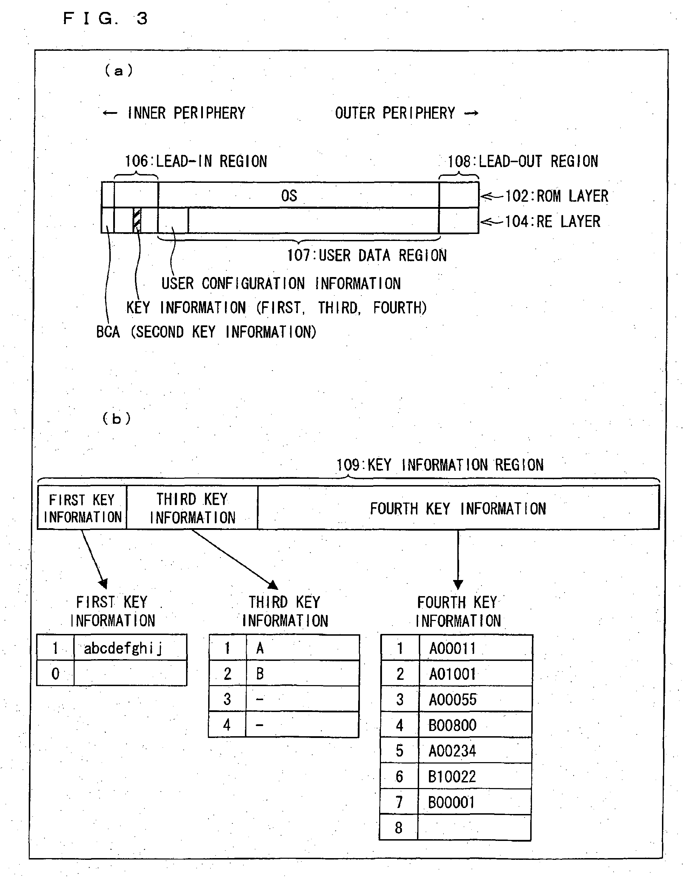

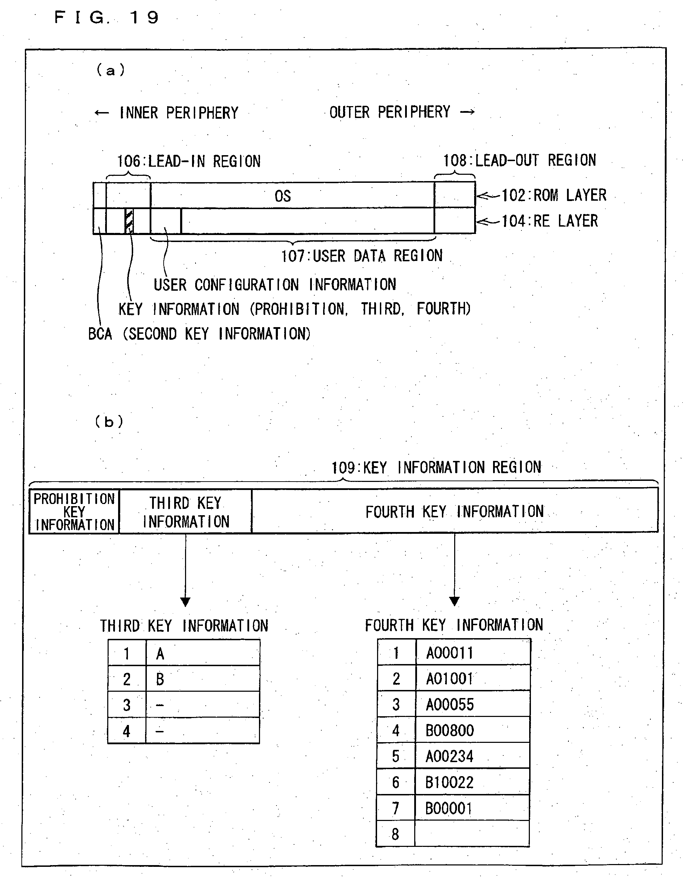

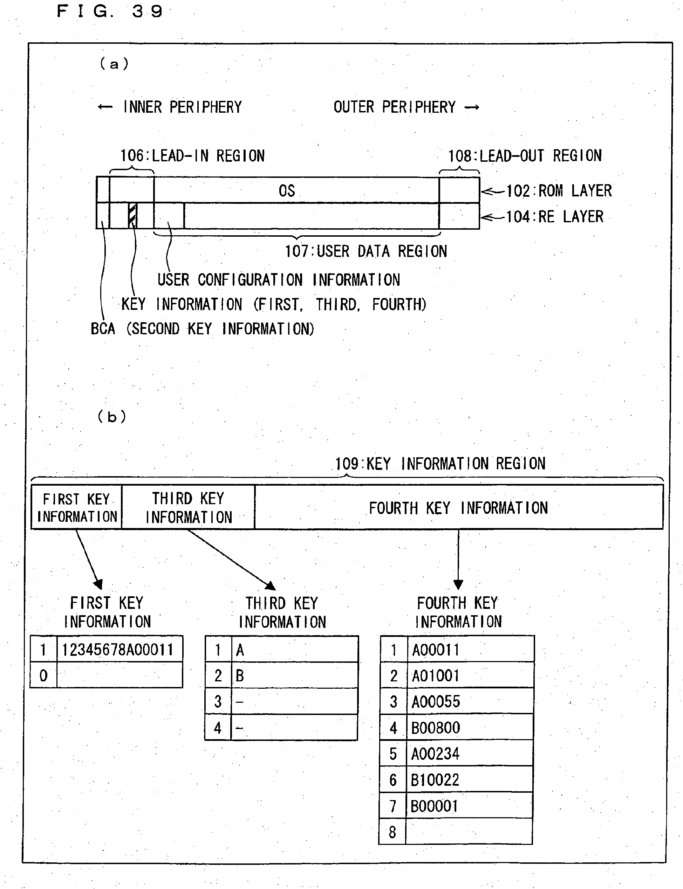

Fig. 1

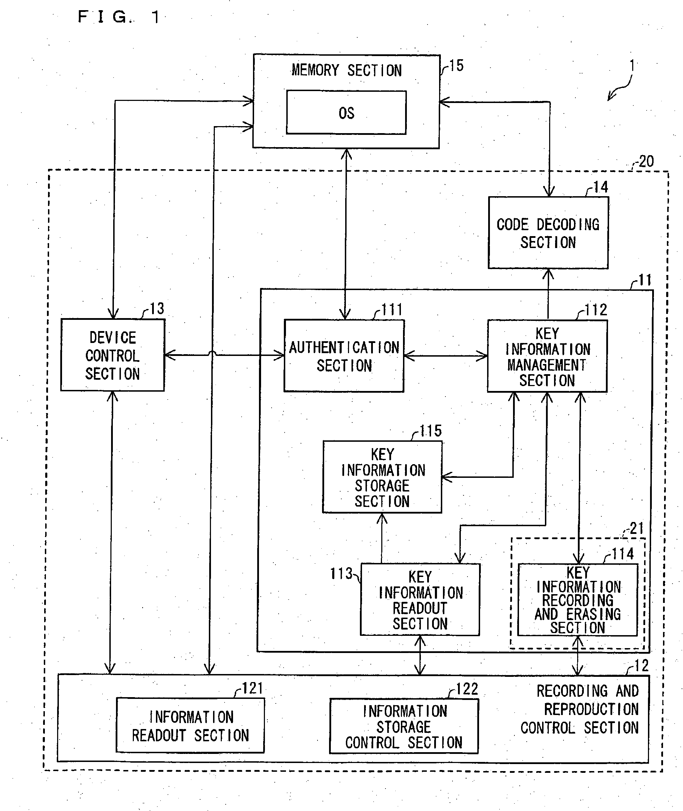

   Fig. 1, showing an embodiment of the present invention, is a block diagram showing the configuration of a control section in a recording and reproduction device.
Fig. 2

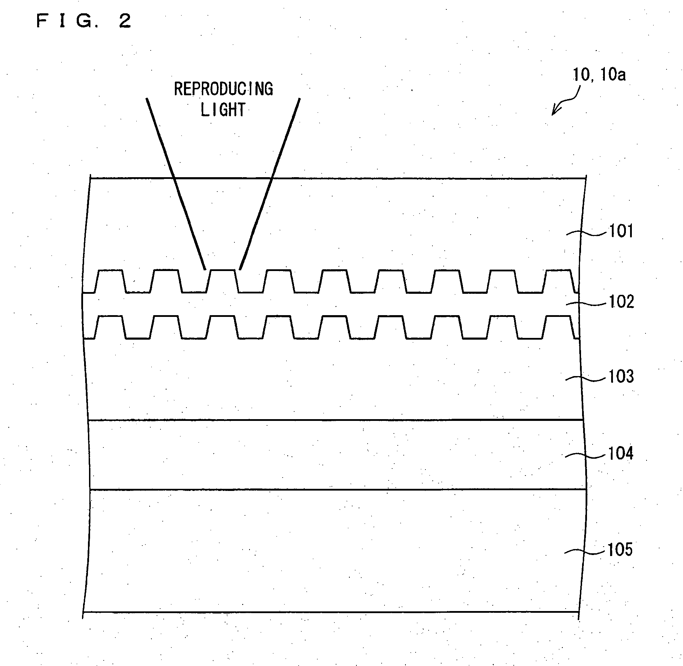

   Fig. 2, showing an embodiment of the present invention, is a cross-sectional view schematically showing the structure of an example of an optical disk.
Fig. 3
   (a) of Fig. 3 is a cross-sectional view more specifically showing the structure of first and second information recording layers of an optical disk, and (b) of Fig. 3 shows an example of information that is recorded in a key information region of the second information recording layer.
Fig. 4

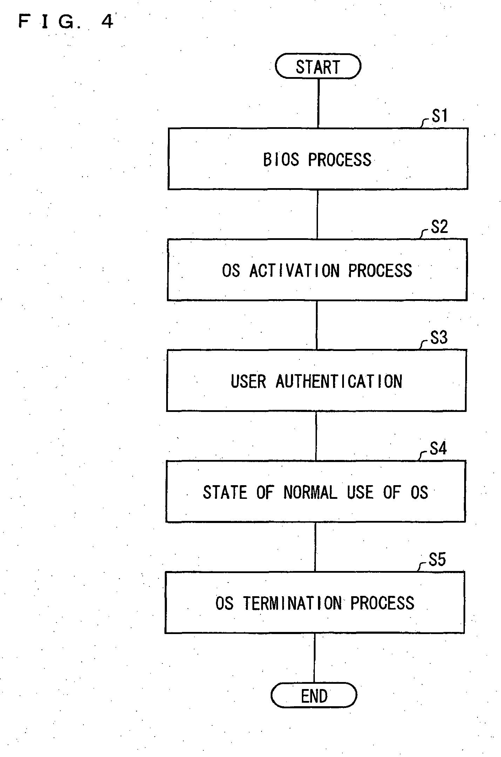

   Fig. 4 is a flow chart showing the general flow of a process that is carried out when the recording and reproduction device of Fig. 1 activates an OS.
Fig. 5

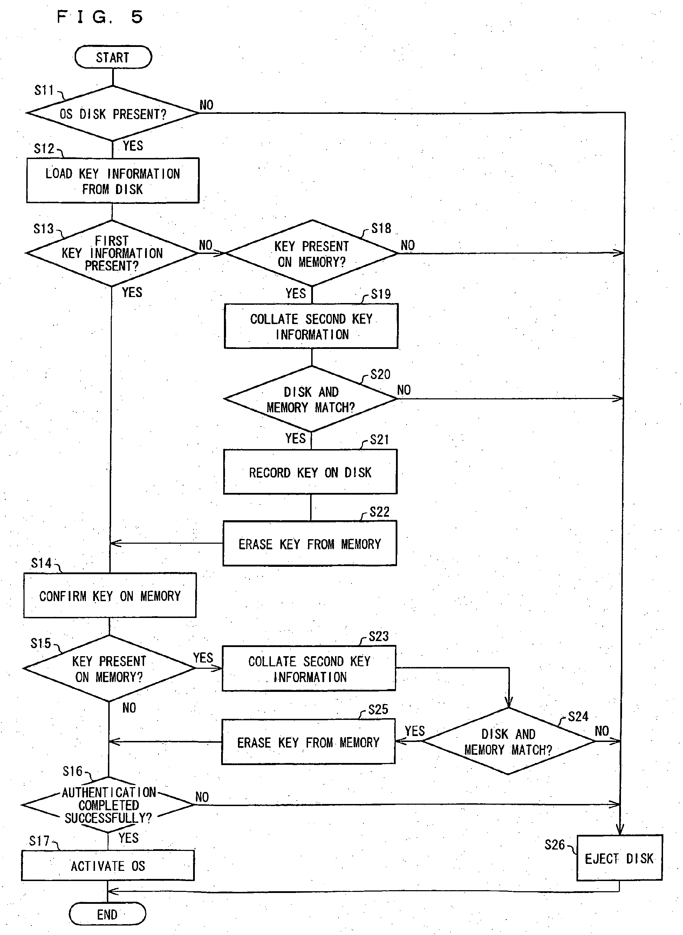

   Fig. 5 is a flow chart showing the flow of a process that is carried out at the time of OS activation in the recording and reproduction device of Fig. 1.
Fig. 6

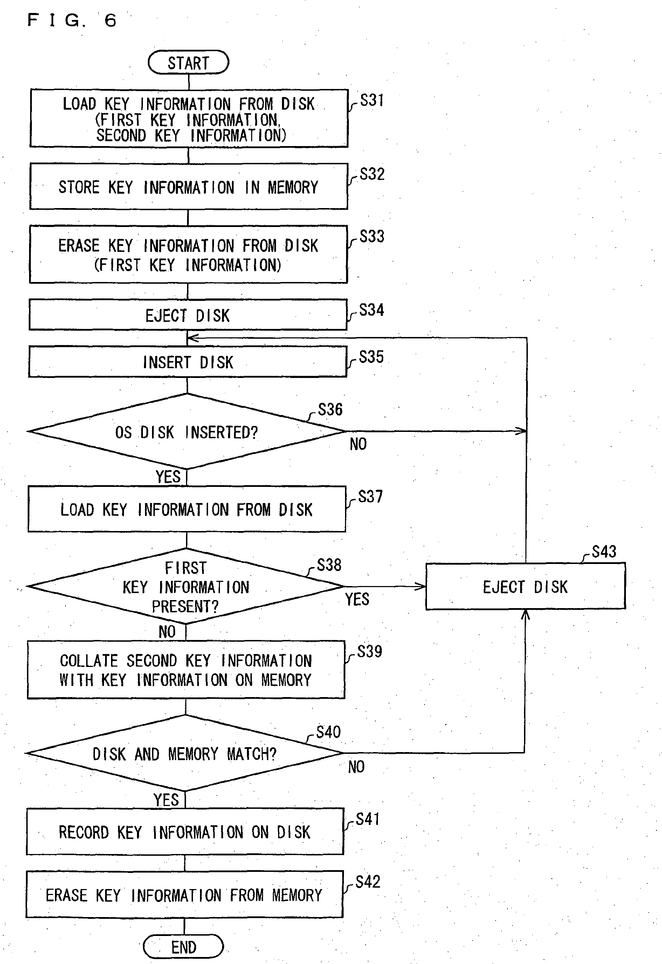

   Fig. 6 is a flow chart showing the flow of a process that is carried out at the time of temporary ejection from the recording and reproduction device of Fig. 1.
Fig. 7

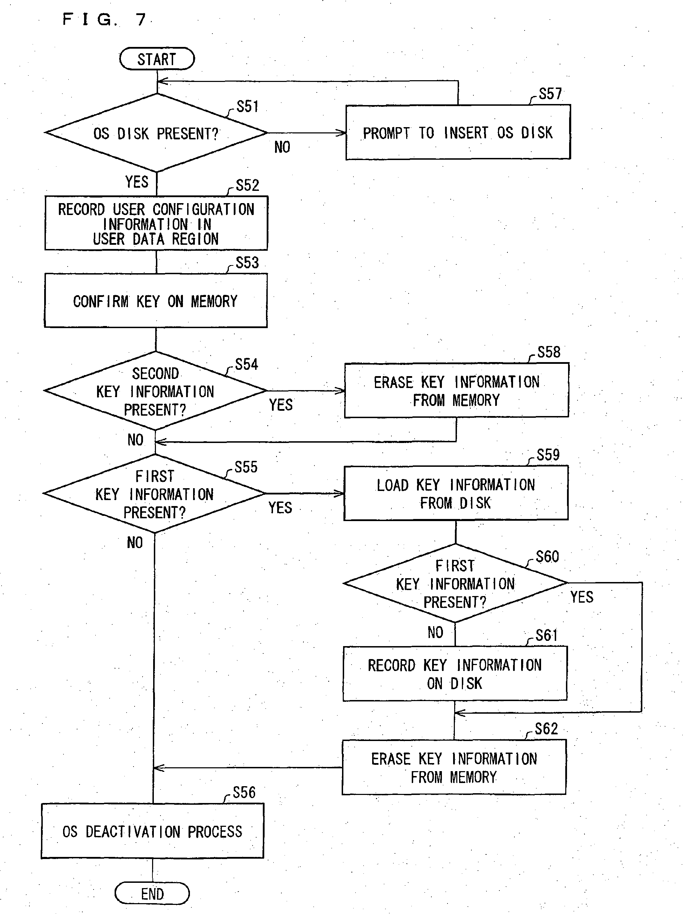

   Fig. 7 is a flow chart showing the flow of a process that is carried out at the time of OS termination in the recording and reproduction device of Fig. 1.
Fig. 8

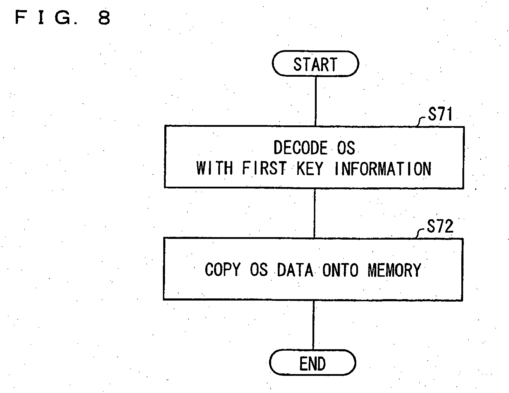

   Fig. 8 is a flow chart showing an example of the flow of a process that is carried out in the recording and reproduction device of Fig. 1 when an OS recorded on the optical disk of Fig. 2 is stored in a memory section of the recording and reproduction device of Fig. 1.
Fig. 9

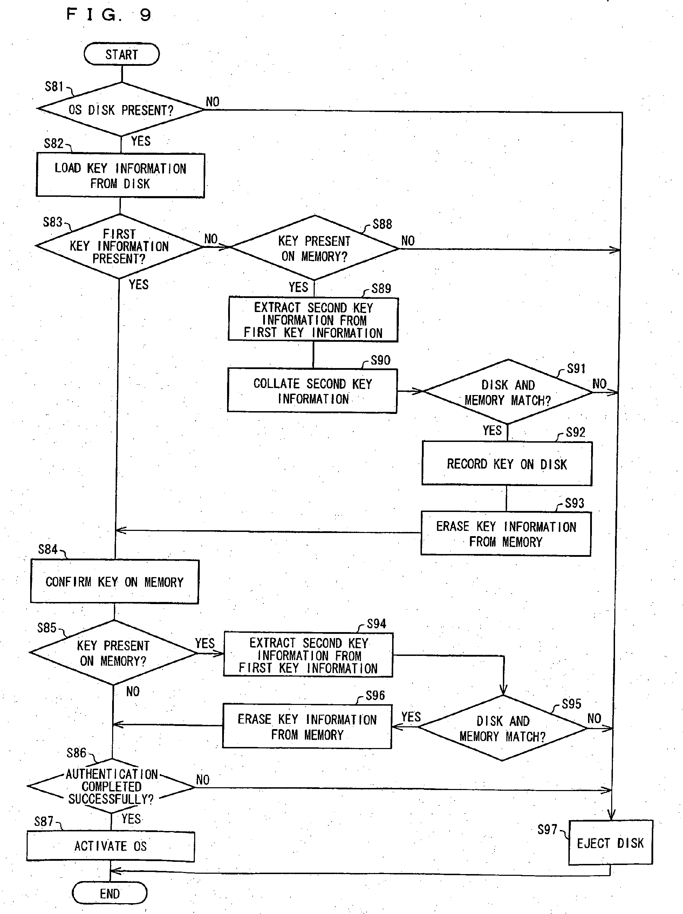

   Fig. 9 is a flow chart showing the flow of another process that is carried out at the time of OS activation in the recording and reproduction device of Fig. 1.
Fig. 10

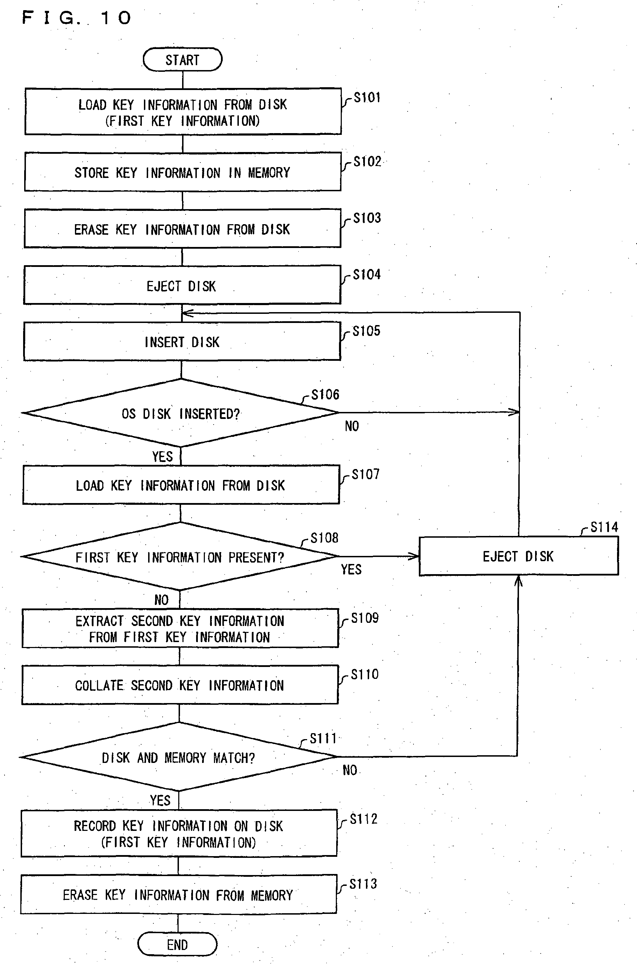

   Fig. 10 is a flow chart showing the flow of another process that is carried out at the time of temporary ejection from the recording and reproduction device of Fig. 1.
Fig. 11

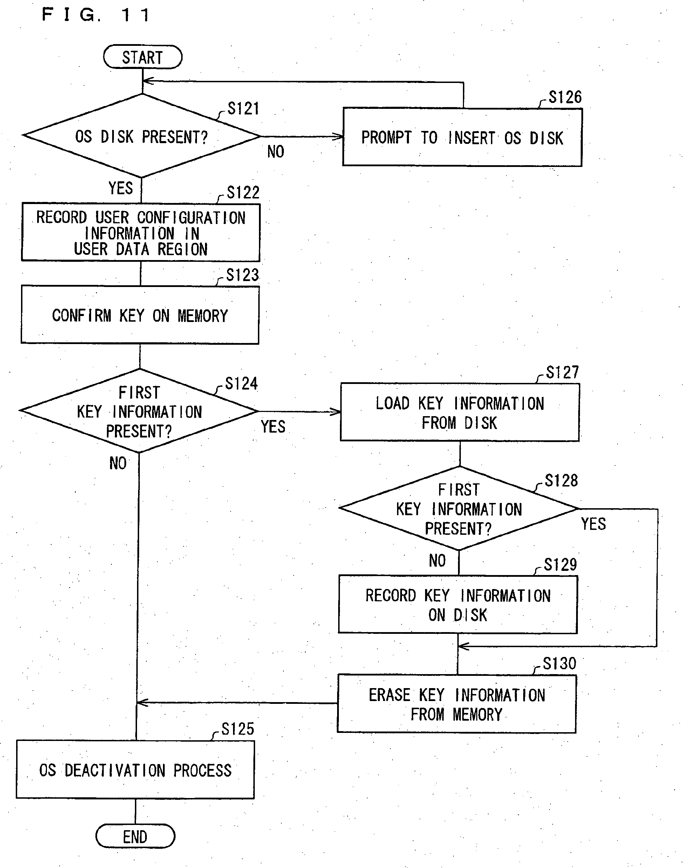

   Fig. 11 is a flow chart showing the flow of another process that is carried out at the time of OS termination in the recording and reproduction device of Fig. 1.
Fig. 12

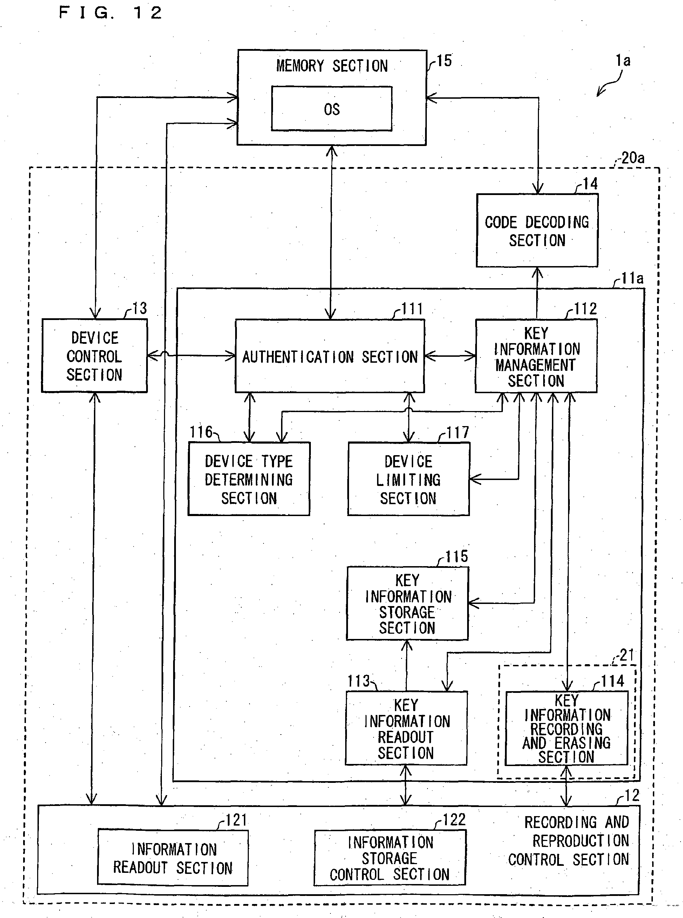

   Fig. 12, showing another embodiment of the present invention, is a block diagram showing the configuration of a control section in a modification of the recording and reproduction device of Fig. 1.
Fig. 13

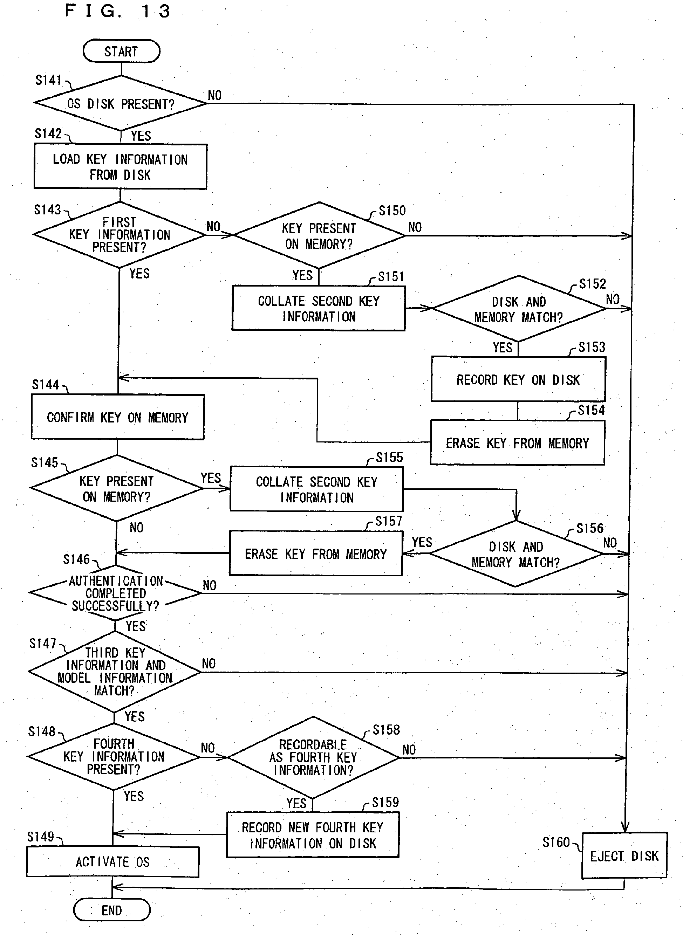

   Fig. 13 is a flow chart showing the flow of a process that is carried out at the time of OS activation in the recording and reproduction device of Fig. 12.
Fig. 14

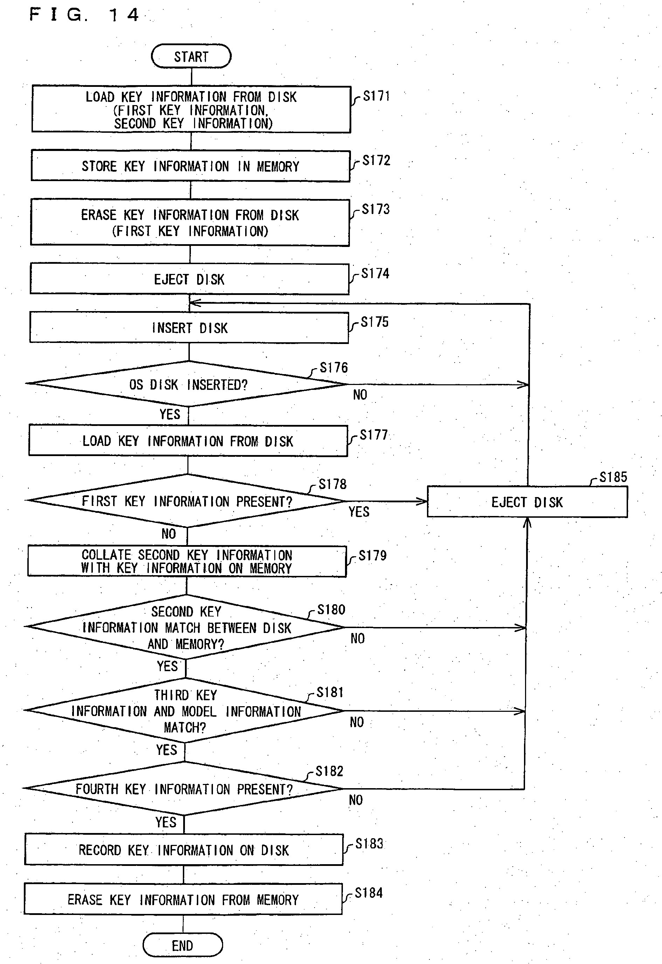

   Fig. 14 is a flow chart showing the flow of a process that is carried out at the time of temporary ejection from the recording and reproduction device of Fig. 12.
Fig. 15

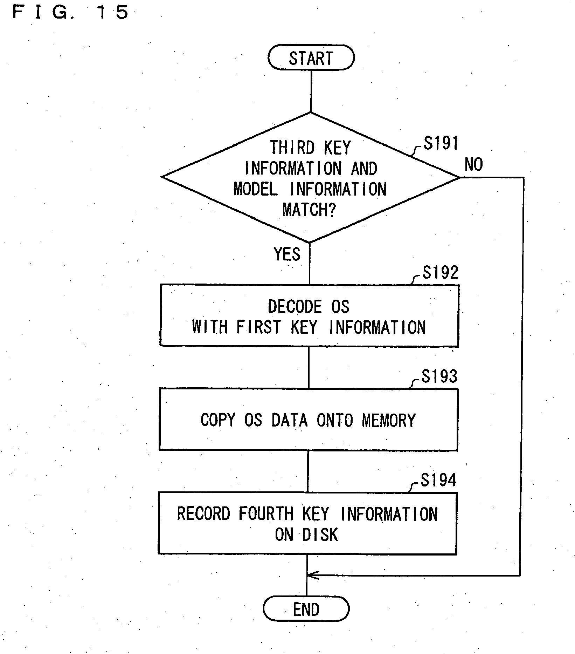

   Fig. 15 is a flow chart showing an example of the flow of a process that is carried out in the recording and reproduction device of Fig. 12 when an OS recorded on the optical disk of Fig. 2 is stored in a memory section of the recording and reproduction device of Fig. 12.
Fig. 16

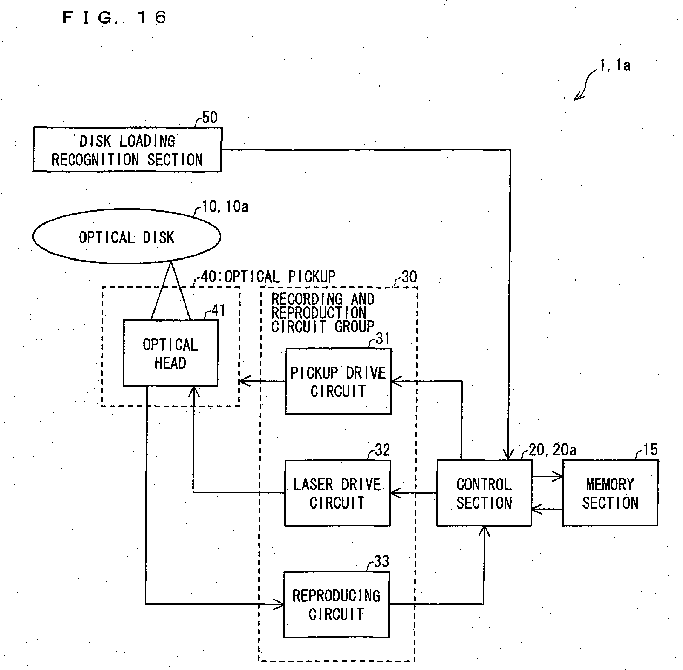

   Fig. 16, showing an embodiment of the present invention, is a block diagram schematically showing the configuration of a recording and reproduction device including a control section as shown in Fig. 1 or 12.
Fig. 17

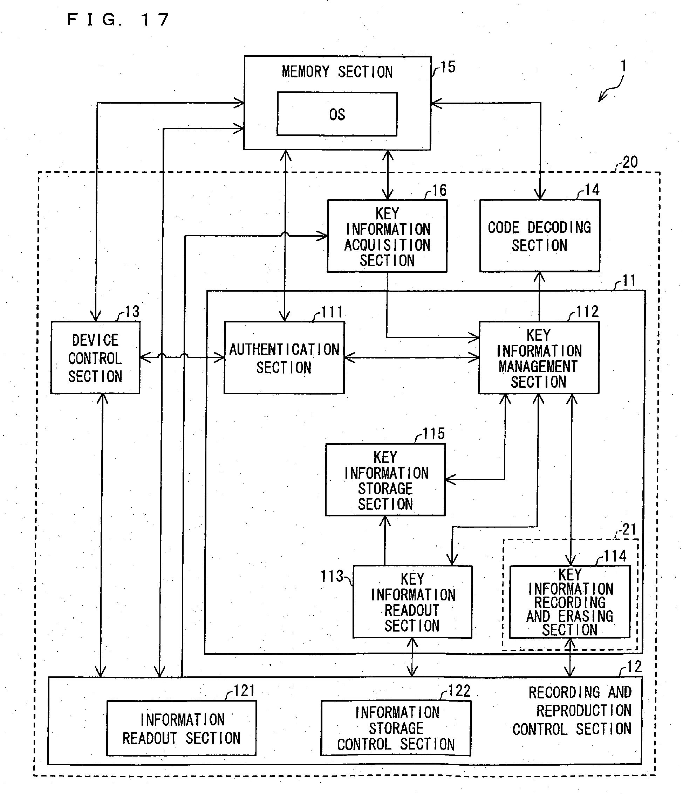

   Fig. 17, showing an embodiment of the present invention, is a block diagram showing the configuration of a control section in a recording and reproduction device.
Fig. 18

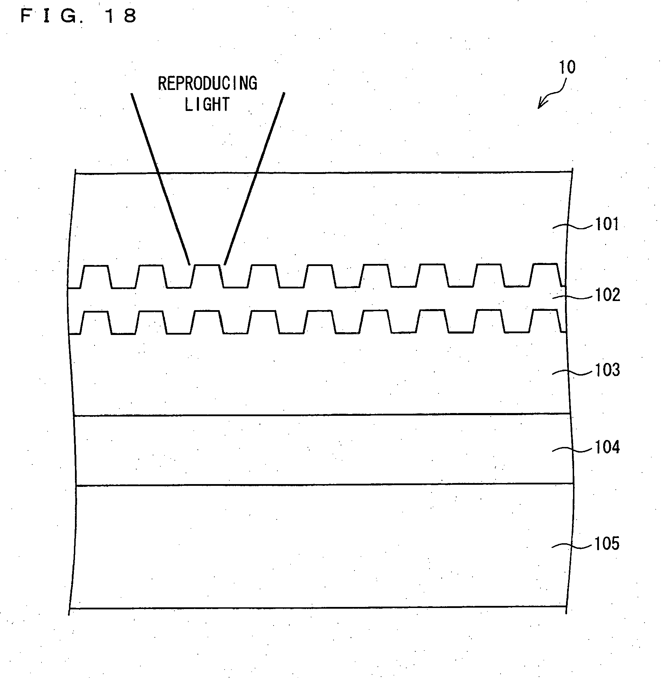

   Fig. 18, showing an embodiment of the present invention, is a cross-sectional view schematically showing the structure of an example of an optical disk.
Fig. 19
   (a) of Fig. 19 is a cross-sectional view more specifically showing the structure of first and second information recording layers of an optical disk, and (b) of Fig. 19 shows an example of information that is recorded in a key information region of the second information recording layer.
Fig. 20

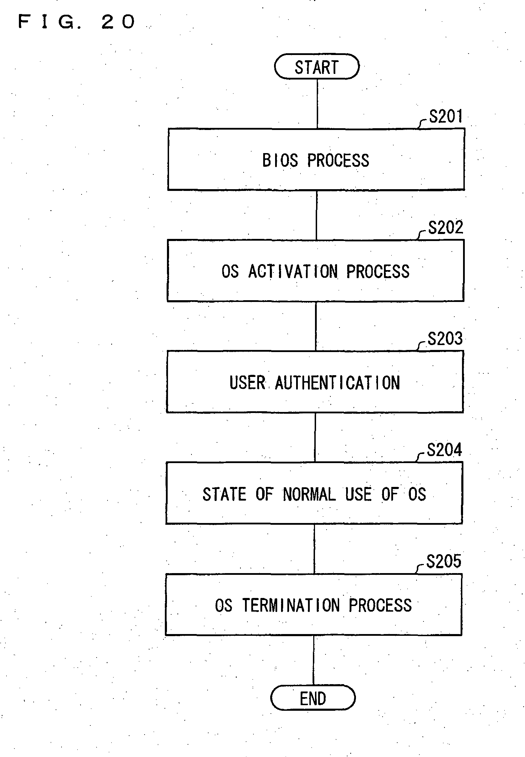

   Fig. 20 is a flow chart showing the general flow of a process that is carried out when the recording and reproduction device of Fig. 17 activates an OS.
Fig. 21

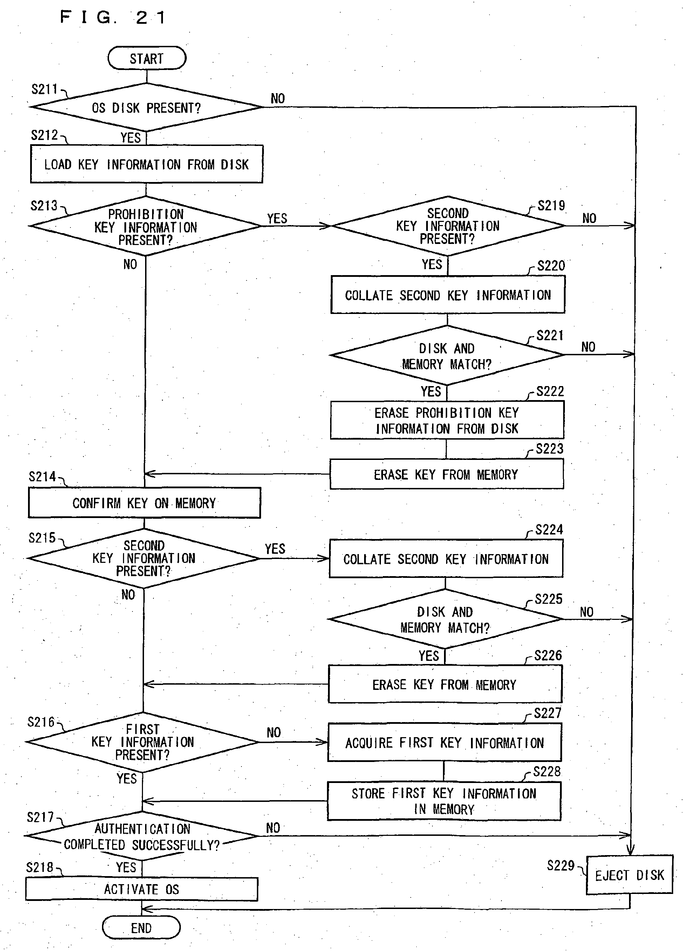

   Fig. 21 is a flow chart showing the flow of a process that is carried out at the time of OS activation in the recording and reproduction device of Fig. 17.
Fig. 22

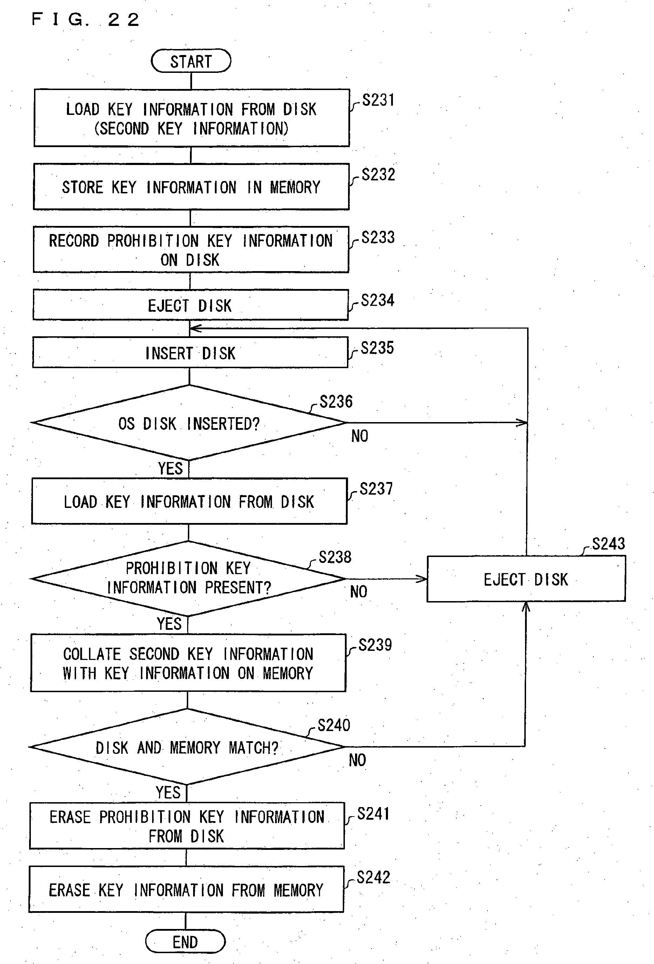

   Fig. 22 is a flow chart showing the flow of a process that is carried out at the time of temporary ejection from the recording and reproduction device of Fig. 17.
Fig. 23

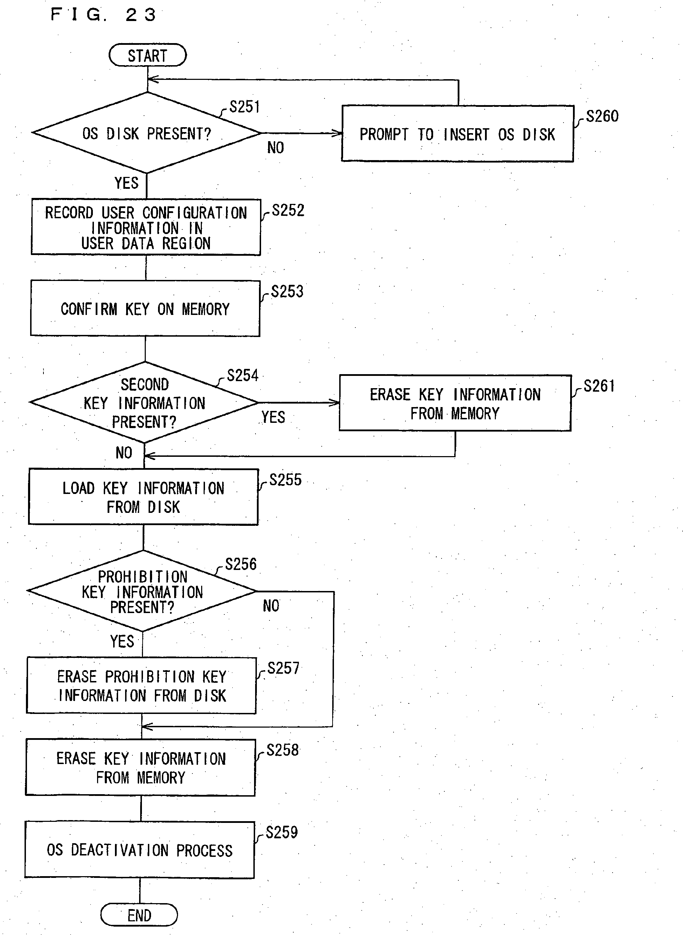

   Fig. 23 is a flow chart showing the flow of a process that is carried out at the time of OS termination in the recording and reproduction device of Fig. 17.
Fig. 24

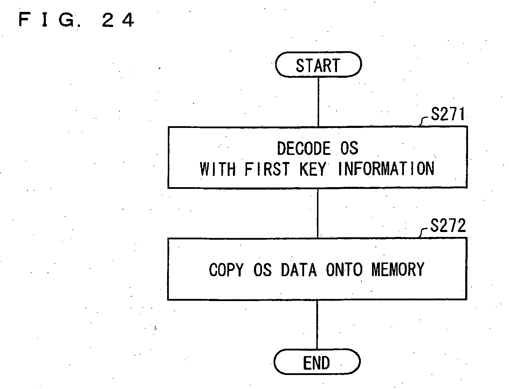

   Fig. 24 is a flow chart showing an example of the flow of a process that is carried out in the recording and reproduction device of Fig. 17 when an OS recorded on the optical disk of Fig. 18 is stored in a memory section of the recording and reproduction device of Fig. 17.
Fig. 25

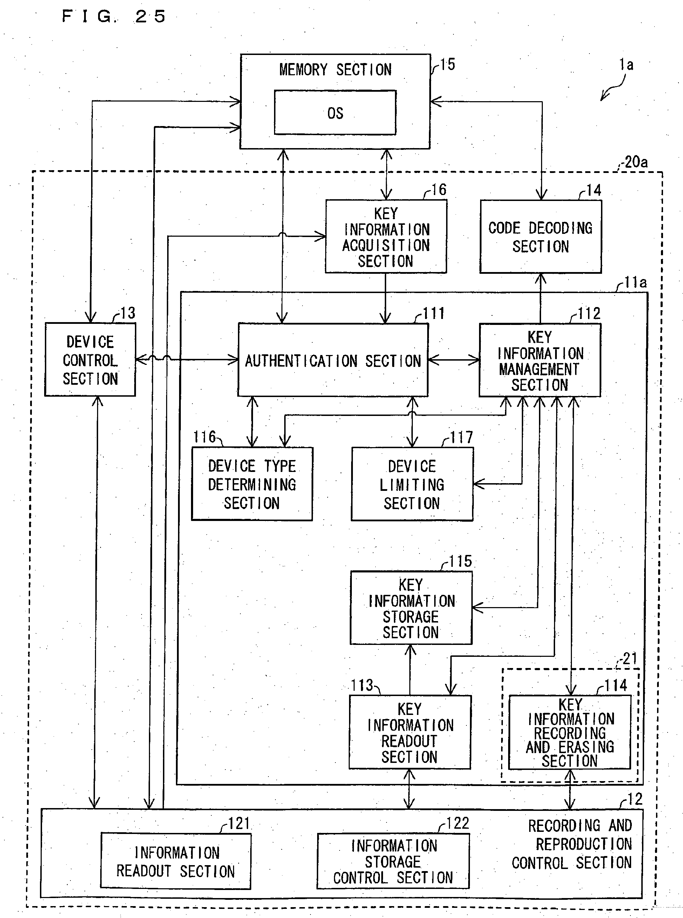

   Fig. 25, showing another embodiment of the present invention, is a block diagram showing the configuration of a control section in a modification of the recording and reproduction device of Fig. 17.
Fig. 26

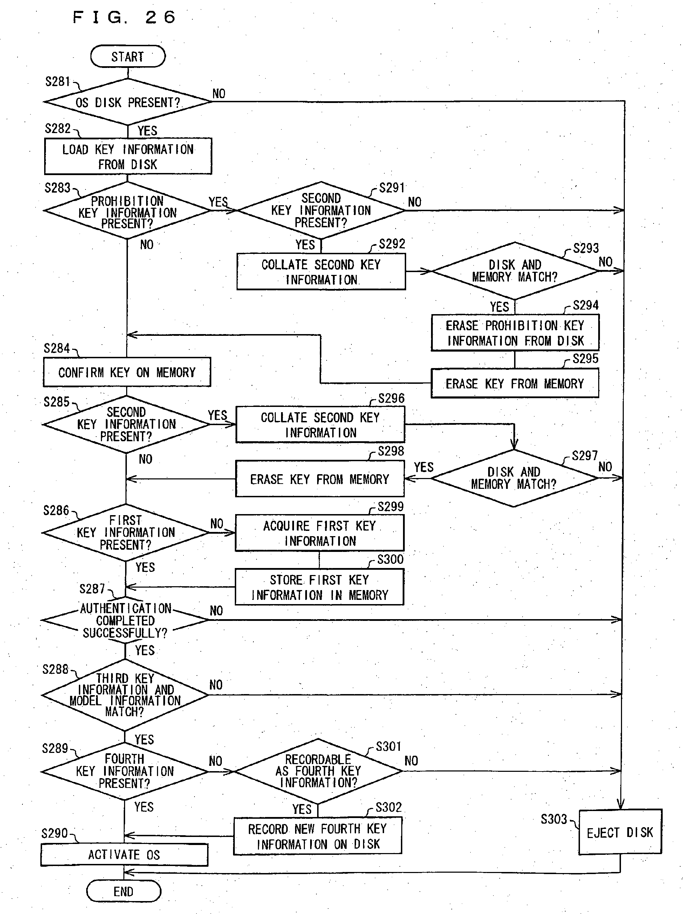

   Fig. 26 is a flow chart showing the flow of a process that is carried out at the time of OS activation in the recording and reproduction device of Fig. 25.
Fig. 27

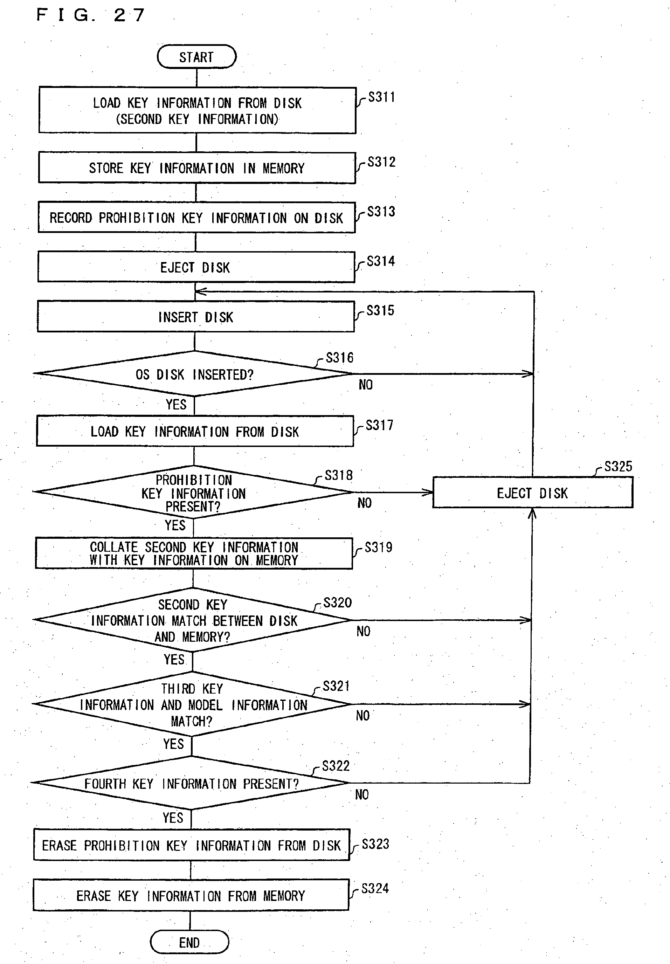

   Fig. 27 is a flow chart showing the flow of a process that is carried out at the time of temporary ejection from the recording and reproduction device of Fig. 25.
Fig. 28

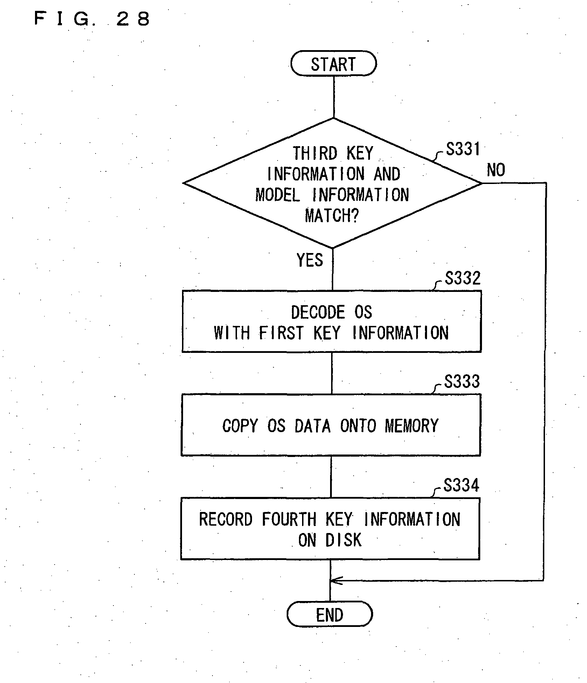

   Fig. 28 is a flow chart showing an example of the flow of a process that is carried out in the recording and reproduction device of Fig. 25 when an OS recorded on the optical disk of Fig. 18 is stored in a memory section of the recording and reproduction device of Fig. 25.
Fig. 29

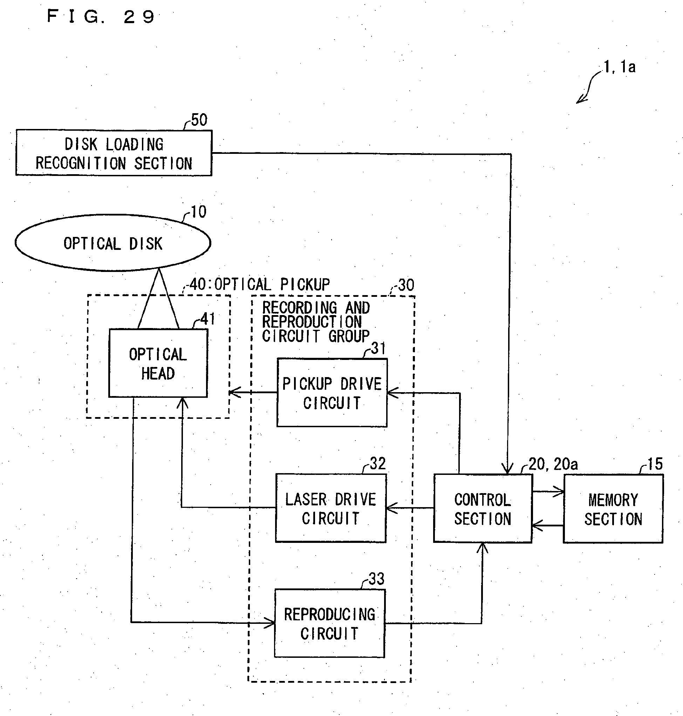

   Fig. 29, showing an embodiment of the present invention, is a block diagram schematically showing the configuration of a recording and reproduction device including a control section as shown in Fig. 17 or 25.
Fig. 30

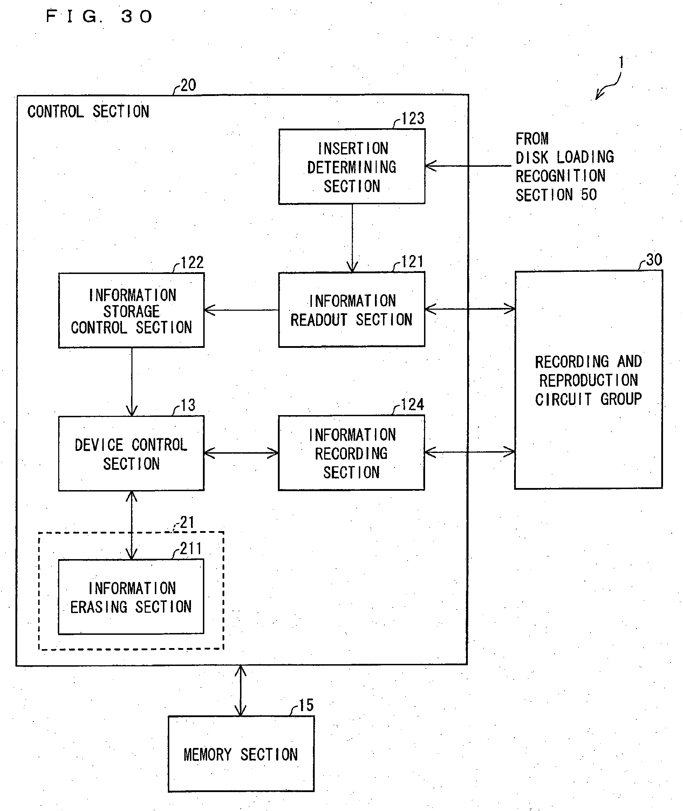

   Fig. 30 is a block diagram showing the configuration of a control section in a recording and reproduction device according to an embodiment of the present invention.
Fig. 31

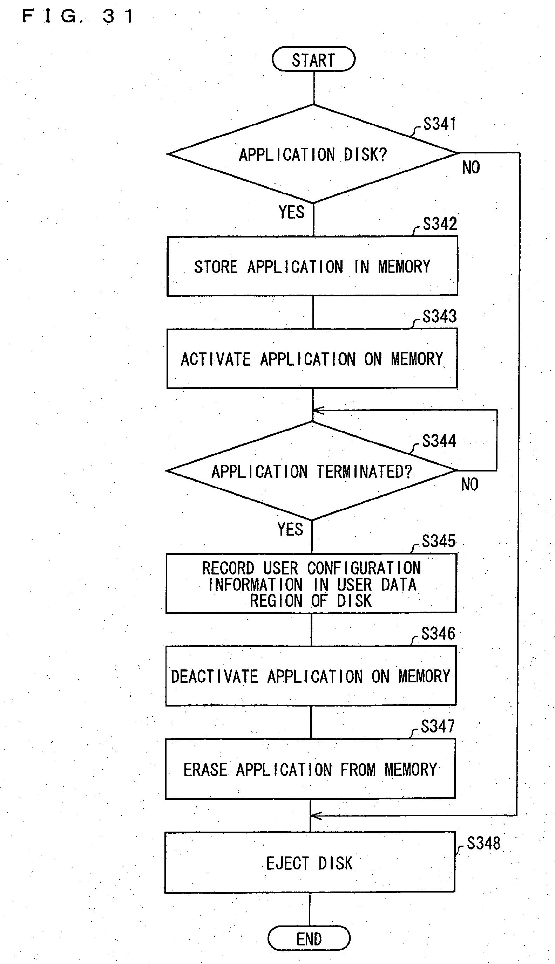

   Fig. 31 is a flow chart showing the flow of a process that is carried out in the recording and reproduction device of Fig. 30 during a period of time from application termination to optical disk ejection.
Fig. 32

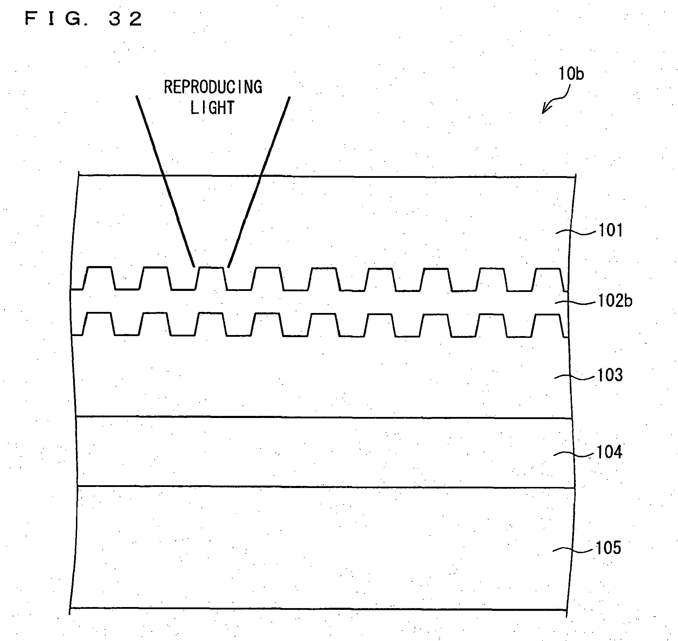

   Fig. 32 is a cross-sectional view schematically showing the structure of an example of an optical disk according to an embodiment of the present invention.
Fig. 33

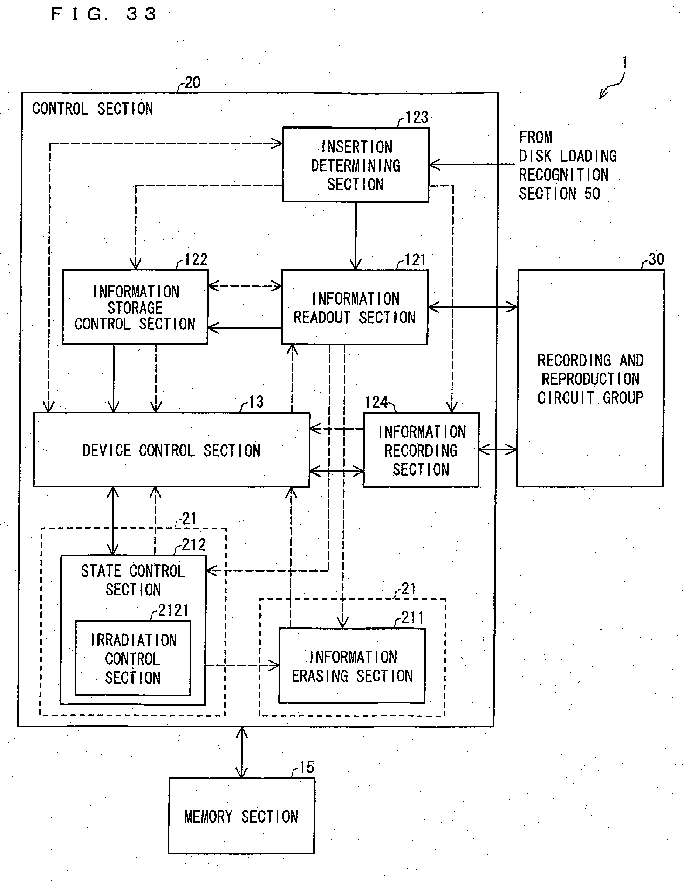

   Fig. 33 is a block diagram showing the configuration of a control section in a recording and reproduction device according to an embodiment of the present invention.
Fig. 34

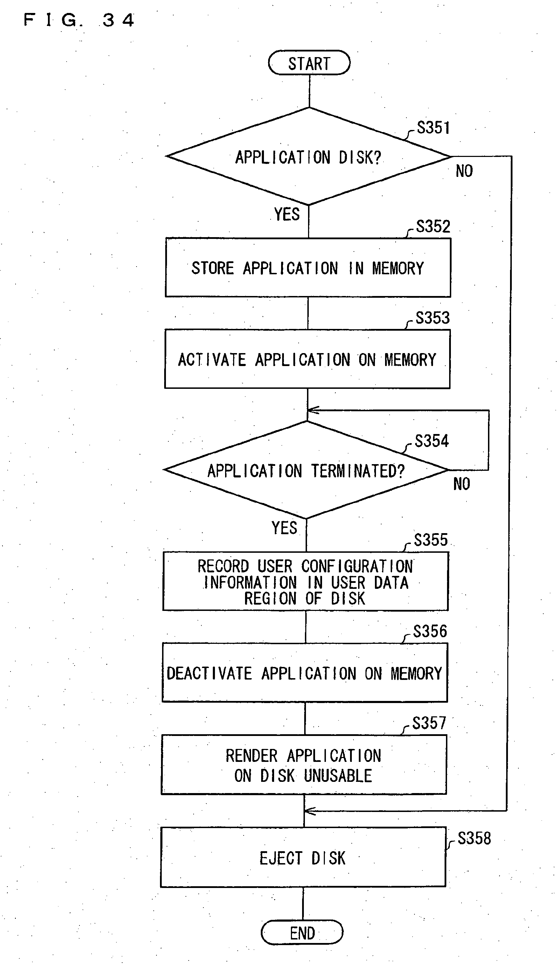

   Fig. 34 is a flow chart showing the flow of a process that is carried out in the recording and reproduction device of Fig. 33 during a period of time from disk insertion to ejection of the optical disk of Fig. 32.
Fig. 35

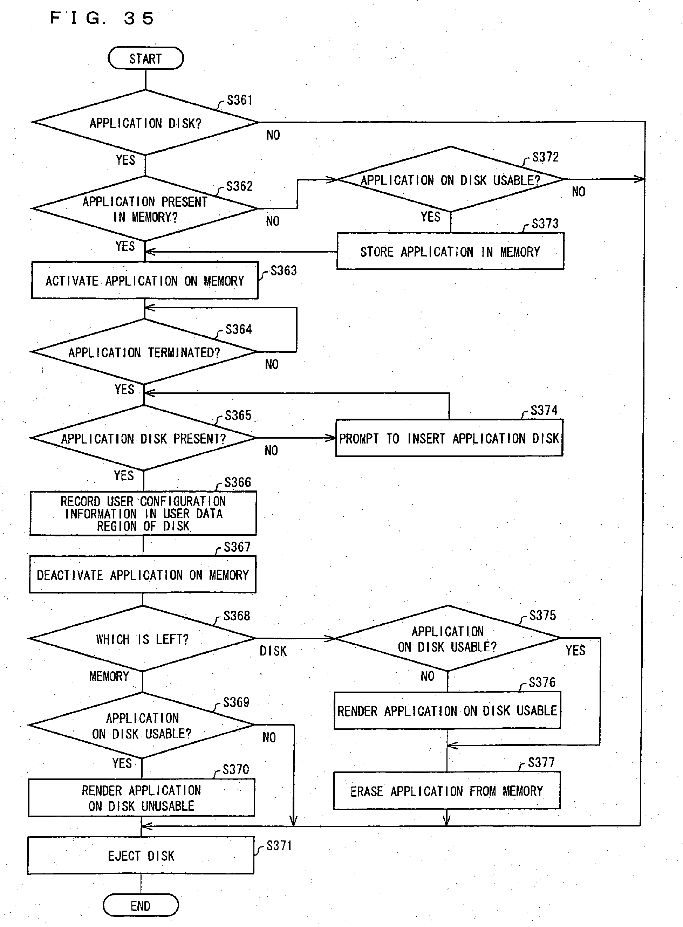

   Fig. 35 is a flow chart showing the flow of another process that is carried out in the recording and reproduction device of Fig. 33 during a period of time from disk insertion to ejection of the optical disk of Fig. 32.
Fig. 36

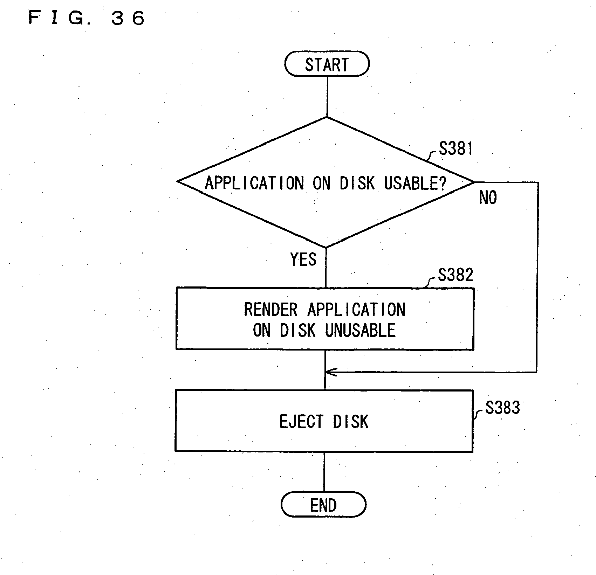

   Fig. 36 is a flow chart showing the flow of a process that is carried out in the recording and reproduction device of Fig. 33 when the optical disk of Fig. 32 is ejected during application execution.
Fig. 37

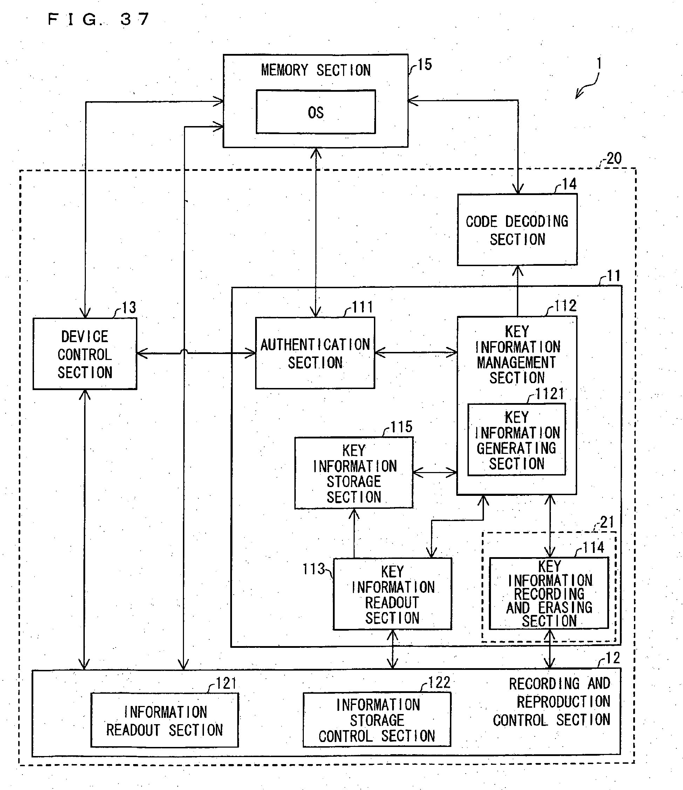

   Fig. 37, showing an embodiment of the present invention, is a block diagram showing the configuration of a control section in a recording and reproduction device.
Fig. 38

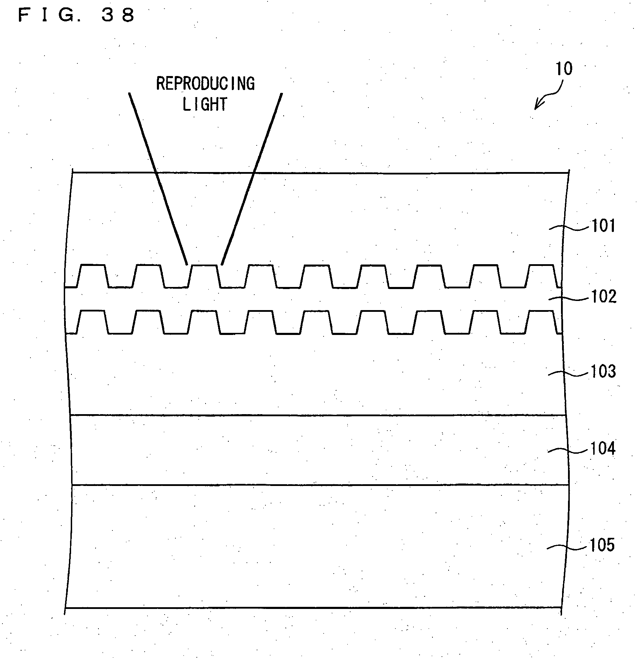

   Fig. 38, showing an embodiment of the present invention, is a cross-sectional view schematically showing the structure of an example of an optical disk.
Fig. 39
   (a) of Fig. 39 is a cross-sectional view more specifically showing the structure of first and second information recording layers of an optical disk, and (b) of Fig. 39 shows an example of information that is recorded in a key information region of the second information recording layer.
Fig. 40

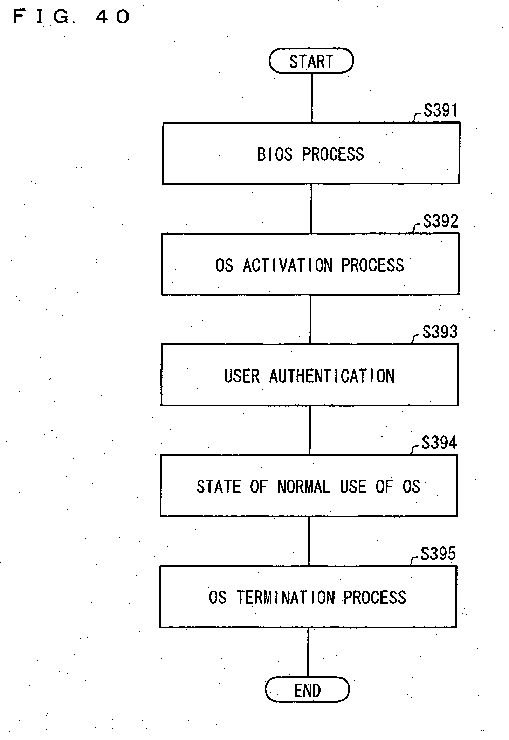

   Fig. 40 is a flow chart showing the general flow of a process that is carried out when the recording and reproduction device of Fig. 37 activates an OS.
Fig. 41

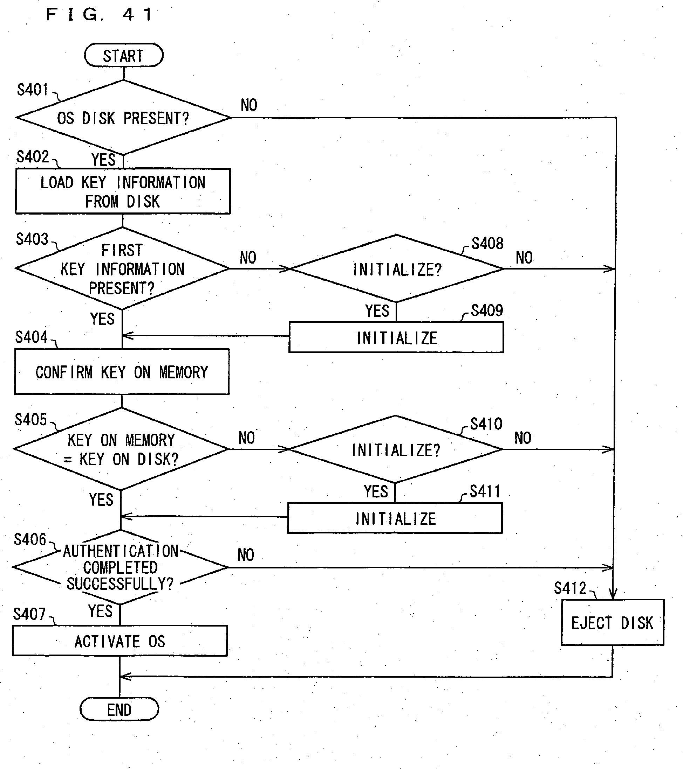

   Fig. 41 is a flow chart showing the flow of a process that is carried out at the time of OS activation in the recording and reproduction device of Fig. 37.
Fig. 42

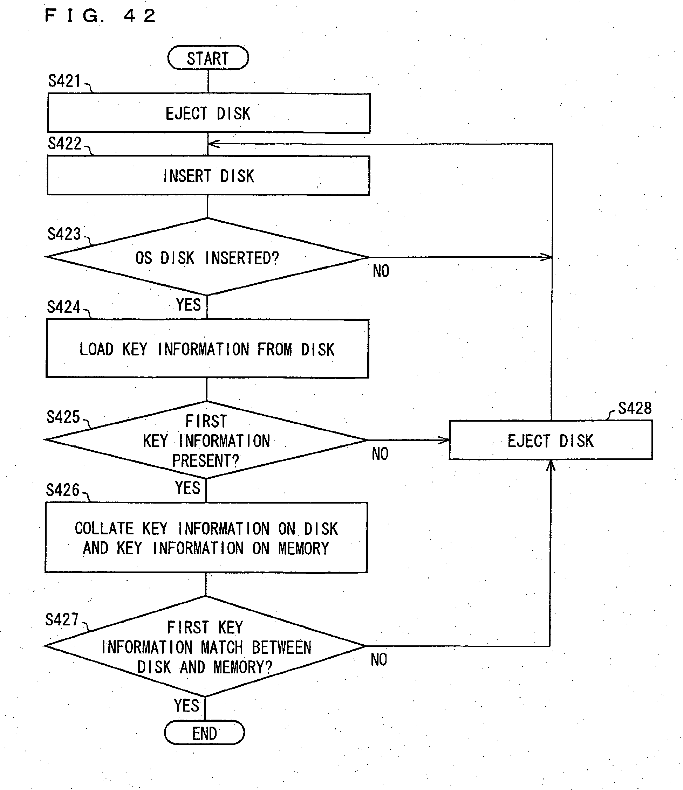

   Fig. 42 is a flow chart showing the flow of a process that is carried out at the time of temporary ejection from the recording and reproduction device of Fig. 37.
Fig. 43

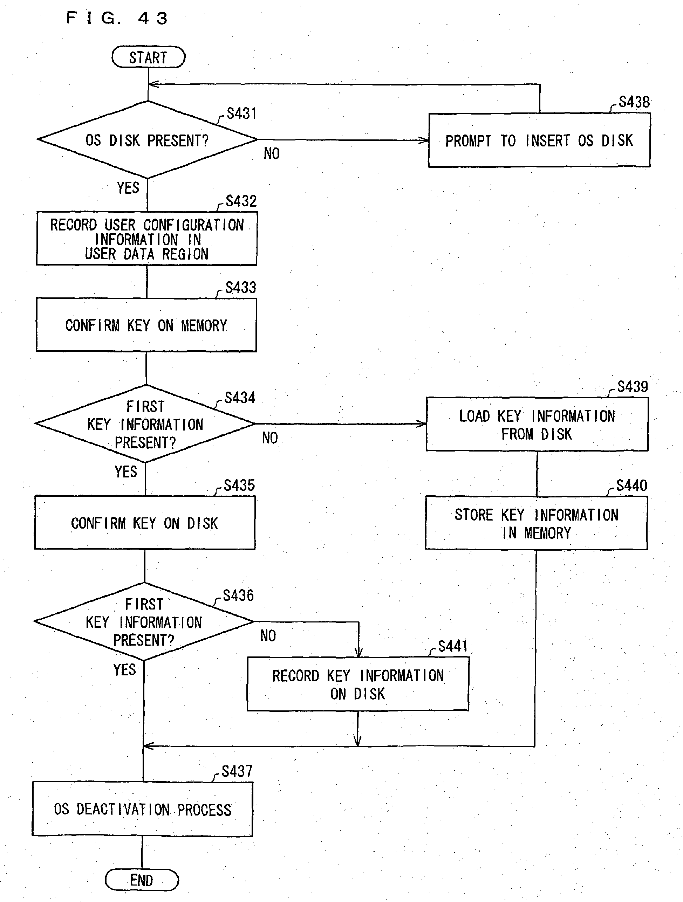

   Fig. 43 is a flow chart showing the flow of a process that is carried out at the time of OS termination in the recording and reproduction device of Fig. 37.
Fig. 44

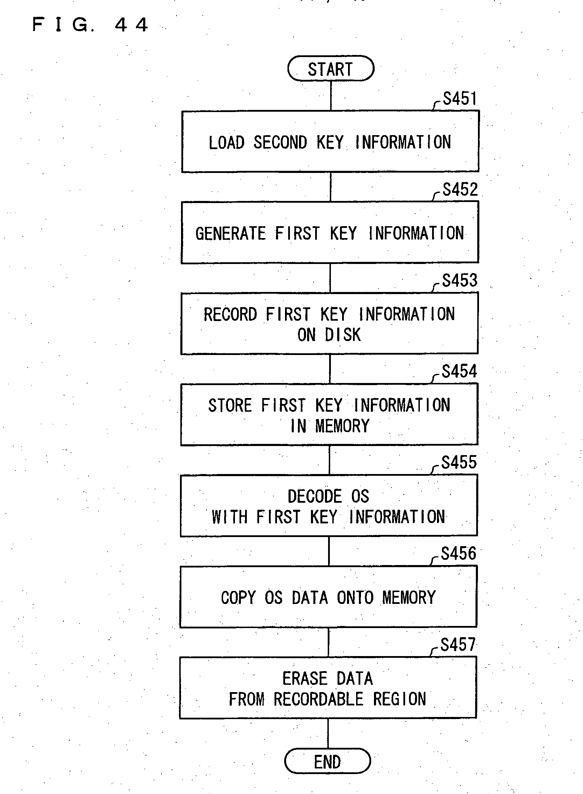

   Fig. 44 is a flow chart showing an example of the flow of a process that is carried out in the recording and reproduction device of Fig. 37 when an OS recorded on the optical disk of Fig. 38 is stored (at the time of initialization) in a memory section of the recording and reproduction device of Fig. 37.
Fig. 45

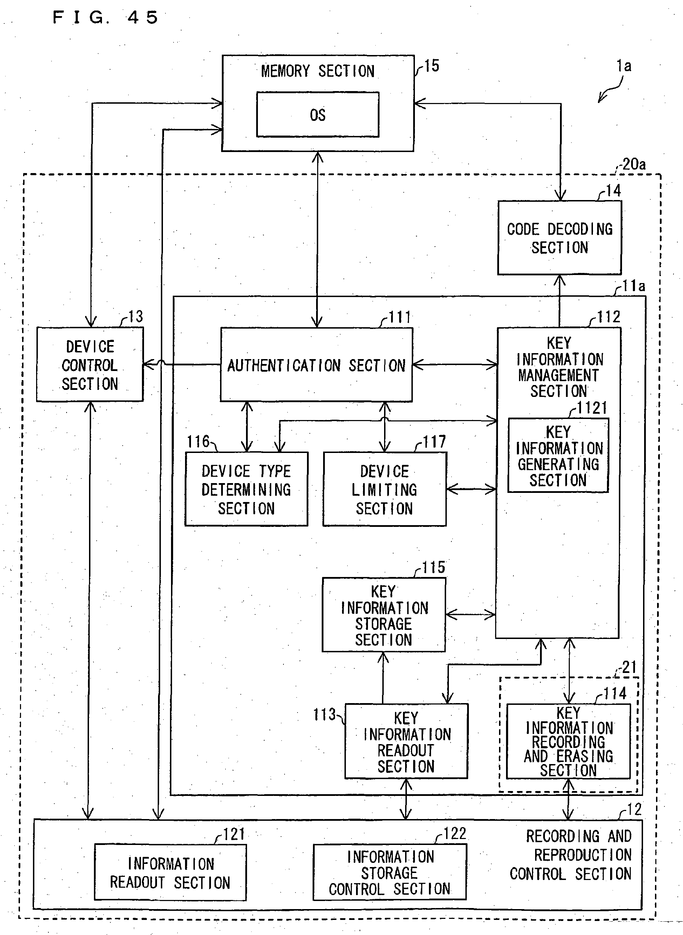

   Fig. 45, showing another embodiment of the present invention, is a block diagram showing the configuration of a control section in a modification of the recording and reproduction device of Fig. 37.
Fig. 46

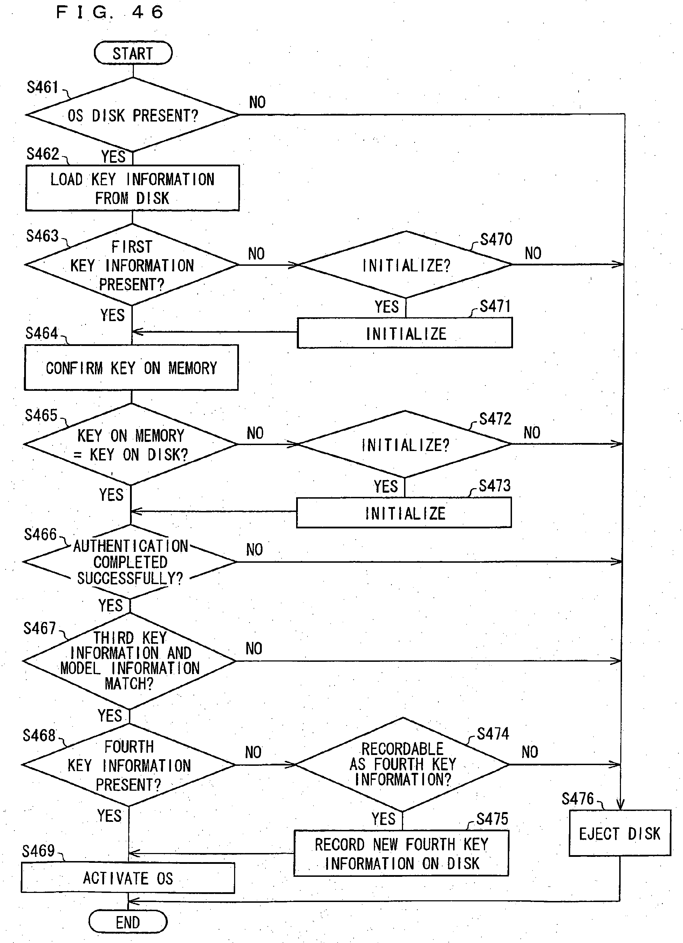

   Fig. 46 is a flow chart showing the flow of a process that is carried out at the time of OS activation in the recording and reproduction device of Fig. 45.
Fig. 47

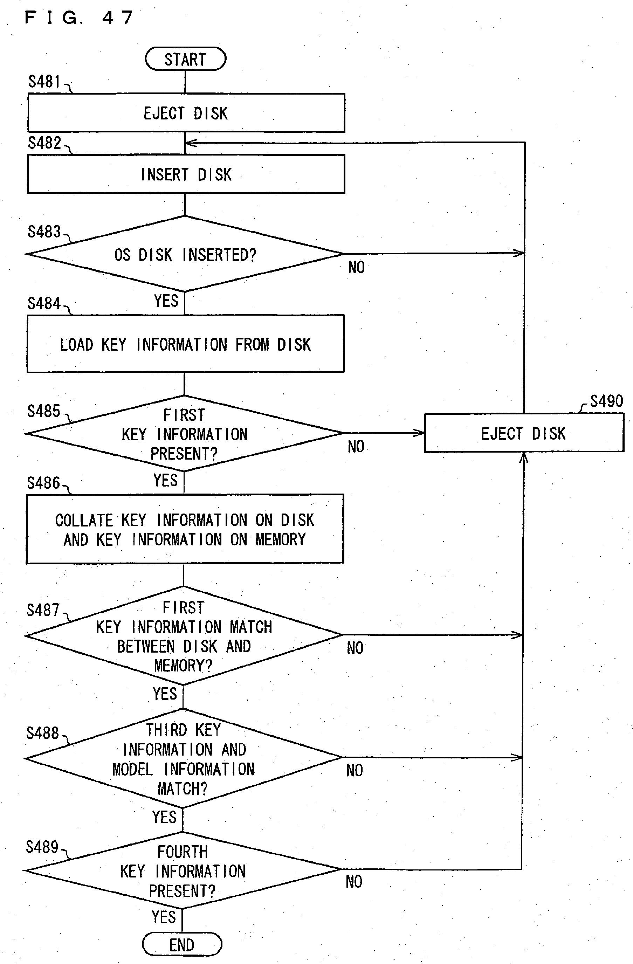

   Fig. 47 is a flow chart showing the flow of a process that is carried out at the time of temporary ejection from the recording and reproduction device of Fig. 45.
Fig. 48

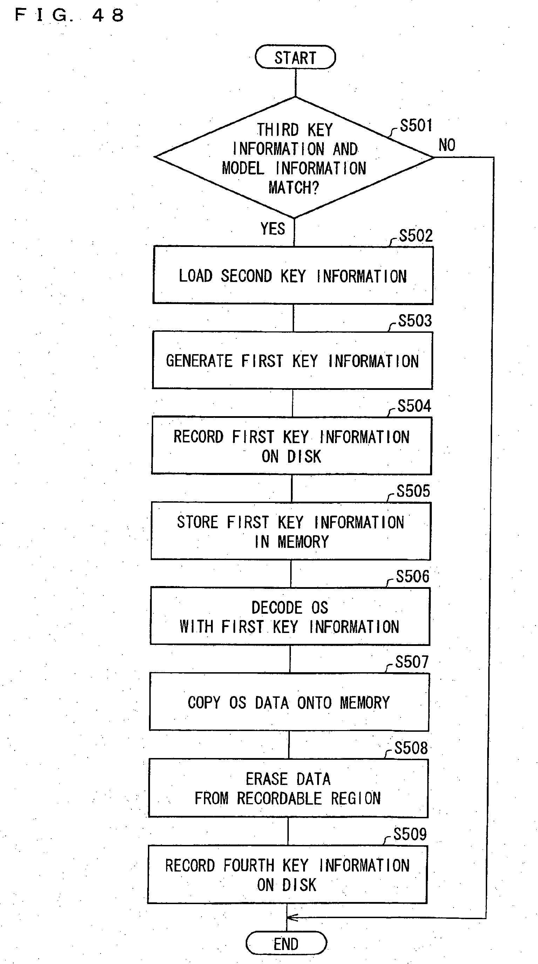

   Fig. 48 is a flow chart showing an example of the flow of a process that is carried out in the recording and reproduction device of Fig. 45 when an OS recorded on the optical disk of Fig. 38 is stored (at the time of initialization) in a memory section of the recording and reproduction device of Fig. 25.
Fig. 49

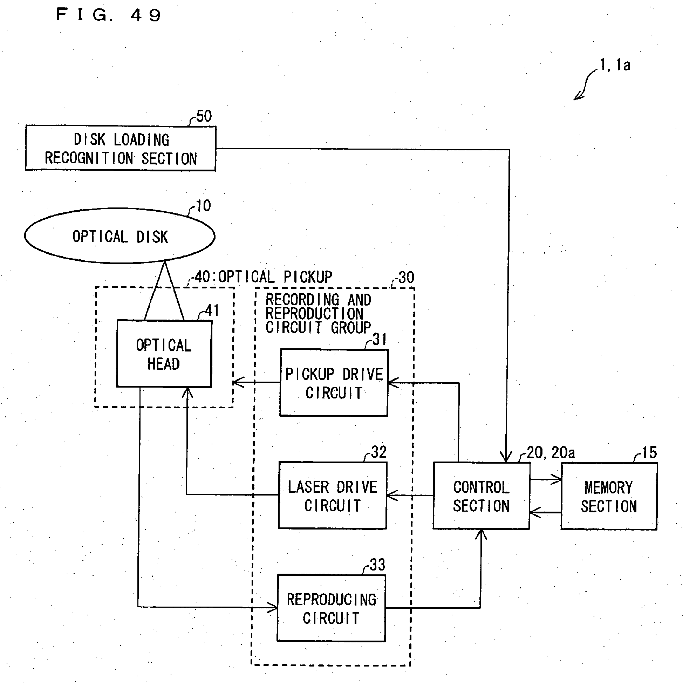

   Fig. 49, showing an embodiment of the present invention, is a block diagram schematically showing the configuration of a recording and reproduction device including a control section as shown in Fig. 37 or 45.

### Description of Embodiments

### [Brief Overview of the Present Invention]

### (Feature Configuration of the Present Invention)

A recording and reproduction device 1 or 1a of the present invention (Embodiments 1 to 5) includes: an information readout section 121 (information readout means), which reads out first information (first information) such as software or content recorded on an optical disk 10, 10a, or 10b (information recording medium); an information storage control section 122 (information storage means), which stores, in a memory section 15, the first information read out by the information readout section 121; and an enable/disable control section 21 (enable/disable control means), which, when the optical disk 10, 10a, or 10b is ejected, enables use of either the first information stored in the memory section 15 by the information storage control section 122 or the first information recorded on the optical disk 10, 10a, or 10b and disables use of the other.

The foregoing configuration, in which the recording and reproduction device 1 or 1a uses the first information stored in the memory section 15 by the information storage control section 122, brings about an improvement in speed of access to the first information.

Further, since the recording and reproduction device 1 or 1a includes the enable/disable control section 21, the first information recorded on the optical disk 10, 10a, or 10b can be rendered unusable when the first information is still usable in the recording and reproduction device 1 or 1a after the optical disk 10, 10a, or 10b has been ejected. On the other hand, the first information can be rendered unusable in the recording and reproduction device 1 or 1a when the optical disk 10, 10a, or 10b has been ejected from the recording and reproduction device 1 or 1a with its first information in a usable state. That is, the recording and reproduction device 1 or 1a can enable use of only either the first information stored in the device or the first information recorded on the information recording medium.

Therefore, the recording and reproduction device 1 or 1a makes it possible, with sufficient safeguards (license protection) for first information recorded on an information recording medium, to use the information in a plurality of information processing devices.

Further, the foregoing presupposes that the information storage control section 122 stores the first information in the memory section 15, and the enable/disable control section 21 controls whether to enable or disable use of the first information; however, this does not imply any limitation. In this case, the recording and reproduction devices 1 and 1a may be configured to directly use the first information recorded on the optical disk 10 or 10a, without the information storage control section 122 storing it in the memory section 15. Examples of this case include Embodiments 1, 2, and 5, etc.

### (First Information)

How the first information recorded on the information recording medium (such as the optical disk 10) and the first information stored in the device's memory section (the memory section 15 of the recording and reproduction device 1 or 1a) according to the embodiments below are used is described here. In the embodiments below, the first information is used, for example, in either
(1) a mode in which the first information recorded on the information recording medium is stored in the device's memory section for use, or
(2) a mode in which the first information recorded on the information recording medium is used without being stored in the device's memory section. It should be noted that the information recording medium may have the first information recorded in advance thereon in an coded form.

### (Mode in Which the First Information Is Stored in the Device's Memory Section [Mode of Memory and Storage in the Device])

In the mode in which the first information is stored in the device's memory section, the first information recorded on the information recording medium is stored in the device's memory section. When the first information is in coded form on the information recording medium, the first information is replicated by being decoded by use of key information (decoded and replicated), for example, and then stored in the memory section 15.

This as a result causes the first information to exist both on the information recording medium and in the device's memory section. In general, the information recording medium used is an optical information recording medium (such as the optical disk 10), and the device's memory section used is a hard disk drive, a semiconductor memory, or the like. Therefore, in executing the first information, it is more advantageous, in terms of access speed, to use the first information stored in the device's memory section. On the other hand, it is more advantageous, in terms of mass distribution, to use the first information recorded on the information recording medium.

Therefore, it is desirable that the first information be recorded on information recording media for mass distribution and replicated in device's memory sections, and that the first information be stored in the device's memory section for execution and use.

It should be noted that although the first information that exists originally on the information recording medium is replicated or decoded and replicated into the device's memory section, the first information recorded on the information recording medium and the first information stored in the device's memory section may not necessarily be identical in content to each other in reality, because the two pieces of first information have different purposes, roles, and functions as mentioned above. However, because the first information recorded on the information recording medium and the first information stored in the device's memory section are identical in original content to each other, the two pieces of first information are both collectively called "first information" for the sake of convenience. That is, in the embodiments below, it is assumed, for the sake of convenience, that an OS, an application, or the like recorded on the information recording medium and an OS, an application, or the like stored in the device's memory section are identical to each other.

In Embodiments 1, 2, and 5, for example, the first information stored in the device's memory section is authenticated by key information and, when it has been authenticated successfully, first becomes executable and usable. The first information for use and execution exists in the device's memory section, and is first used after it has been authenticated successfully. This makes it possible, with sufficient safeguards (license protection) for the content of the first information recorded on the information recording medium, to use the content of the first information in a plurality of recording and reproduction devices. It should be noted that although the content of the first information is assumed to be an OS, an application, content, or the like, but is not limited in its applications.

In Embodiments 1, 2, and 5, authentication is permitted by various types of key information, and key information is recorded in a nonuser data region (key information region 109) of the information recording medium that is not affected by a user operation. This makes it possible to prevent unauthorized use of the first information even if the first information has been illegally replicated onto another information recording medium, because such an information recording medium is not legitimate and its authentication is therefore not permitted.

Further, even if the first information stored in the device's memory section has been illegally replicated into the memory section of another recording and reproduction device, authentication is not permitted unless a legitimate information recording medium is inserted into the another recording and reproduction device. This makes it possible to prevent unauthorized use of the first information even if the first information has been illegally replicated into another recording and reproduction device.

### (Case of a Mode of Memory and Storage in the Device in Embodiment 1)

In Embodiment 1, during execution and use of the first information stored in the device's memory section, the first information recorded on the information recording medium is not used, because it is identical in content to the first information stored in the device's memory section.

In Embodiment 1, the first information recorded on the information recording medium can be rendered unusable in another recording and reproduction device by recording first key information and second key information in the device's memory section and erasing first key information from the information recording medium when the information recording medium is temporarily ejected during execution and use of the first information stored in the device's memory section. That is, the first information recorded on the information recording medium cannot be used during execution of the first information stored in the device's memory section. This makes it possible to ensure sufficient safeguards (license protection) for the content of the first information recorded on the information recording medium.

Further, when the execution and use of the first information stored in the device's memory section is terminated, the information recording medium is made to have the first key information recorded thereon with the first key information and second key information absent from the device's memory section. That is, while the first information recorded on the information recording medium is usable in another recording and reproduction device, the first information stored in the device's memory section is unusable due to the absence of the first key information on the information recording medium. This makes it possible, with sufficient safeguards (license protection) for the content of the first information recorded on the information recording medium, to use the content in a plurality of recording and reproduction devices.

Further, use of the first information stored in the device's memory section brings about the following two effects. One of them is such an effect that, in general, the first information stored in the device's memory section allows higher access speed. Further, conventionally, when the information recording medium has a plurality of layers, i.e., a layer having the first information recorded thereon and other layers, and when a common optical pickup (a single pickup) is used for these layers, simultaneous access is impossible and, what is more, it takes time to switch from one layer to another. However, the foregoing configuration brings about, as the other effect, an effect of allowing simultaneous access to both the first information stored in the device's memory section and information recorded on a layer of the information recording medium that does not have the first information recorded thereon and thus achieving an ever-higher speed. It should be noted that these effects also apply to Embodiments 2 to 5.

### (Case of a Mode of Memory and Storage in the Device in Embodiment 2)

In Embodiment 2, too, during execution and use of the first information stored in the device's memory section, the first information recorded on the information recording medium is not used, because it is identical in content to the first information stored in the device's memory section.

The first information recorded on the information recording medium can be rendered unusable in another recording and reproduction device by recording first key information and second key information in the device's memory section and recording prohibition key information on the information recording medium, with the first information retained on the information recording medium, when the information recording medium is temporarily ejected during execution and use of the first information stored in the device's memory section. That is, the first information recorded on the information recording medium cannot be used during execution of the first information stored in the device's memory section. This makes it possible to ensure sufficient safeguards (license protection) for the content of the first information recorded on the information recording medium.

Further, when the execution and use of the first information stored in the device's memory section is terminated, the information recording medium is made to have the first key information recorded thereon and the prohibition key information erased therefrom with the first key information and second key information absent from the device's memory section. That is, while the first information recorded on the information recording medium is usable in another recording and reproduction device, the first information stored in the device's memory section is unusable due to the absence of the first key information on the information recording medium. This makes it possible, with sufficient safeguards (license protection) for the content of the first information recorded on the information recording medium, to use the content in a plurality of recording and reproduction devices.

### (Case of a Mode of Memory and Storage in the Device in Embodiment 3)

In Embodiment 3, too, during execution and use of the first information stored in the device's memory section, the first information recorded on the information recording medium is not used, because it is identical in content to the first information stored in the device's memory section.

In Embodiment 3, when the execution and use of the first information stored in the device's memory section is terminated, the first information stored in the device's memory section is erased. That is, when the first information recorded on the information recording medium is in a usable state, the first information does not exist in the device's memory section. This makes it possible, with sufficient safeguards (license protection) for the content of the first information recorded on the information recording medium, to use the content in a plurality of recording and reproduction devices.

### (Case of a Mode of Memory and Storage in the Device in Embodiment 4)

In Embodiment 4, too, during execution and use of the first information stored in the device's memory section, the first information recorded on the information recording medium is not used, because it is identical in content to the first information stored in the device's memory section.

In Embodiment 4, the first information recorded on the information recording medium is rendered unusable in another recording and reproduction device by rendering the first information recorded on the information recording medium unusable when the information recording medium is temporarily ejected during execution and use of the first information stored in the device's memory section. This makes it possible to ensure sufficient safeguards (license protection) for the content of the first information recorded on the information recording medium.

Further, when the execution and use of the first information stored in the device's memory section is terminated, a user is allowed to choose which of the two pieces of first information, i.e., the first information recorded on the information recording medium and the first information stored in the device's memory section, to retain (or leave), so that the unchosen first information can be rendered unusable. For example, it is possible to either erase the first information stored in the device's memory section or render the first information recorded on the information recording medium unusable. That is, if the first information stored in the device's memory section is executable, the first information recorded on the information recording medium is rendered unusable; if the first information recorded on the information recording medium is usable, the first information stored in the device's memory section is erased so that the first information does not exist in the device's memory section. This makes it possible, with sufficient safeguards (license protection) for the content of the first information recorded on the information recording medium, to use the content in a plurality of recording and reproduction devices.

### (Case of a Mode of Memory and Storage in the Device in Embodiment 5)

In Embodiment 5, too, during execution and use of the first information stored in the device's memory section, the first information recorded on the information recording medium is not used, because it is identical in content to the first information stored in the device's memory section.

In Embodiment 5, when the information recording medium is first inserted into the recording and reproduction device 1 or 1a, the information recording medium gets its recordable region (user data region 107 of an RE layer 102 of the optical disk 10) initialized by a user selection. That is, the recording and reproduction device 1 or 1a generates first key information by use of at least device unique information and records it on the information recording medium and in the device's memory section.

When the information recording medium is temporarily ejected during execution and use of the first information stored in the device's memory section, the information recording medium thus ejected is not permitted authentication in another recording and reproduction device, because the first key information (including the device unique information) is key information for a different recording and reproduction device (key information for the recording and reproduction device 1 or 1a). Meanwhile, for use in another recording and reproduction device of the first information recorded on the information recording medium, it is inevitable to initialize the information recording medium (including the key information and user configuration information); therefore, it becomes impossible to use the first information including the user configuration information.

That is, during the execution of the first information stored in the device's memory section, the first information recorded in the information recording medium, including the user configuration information, cannot be used in another recording and reproduction device. This makes it possible to ensure sufficient safeguards (license protection) for the content of the first information recorded on the information recording medium.

Further, once the execution and use of the first information stored in the device's memory section is terminated, the information recording medium cannot be used in another recording and reproduction device unless it is initialized. Furthermore, if the information recording medium is to be used in the original recording and reproduction device after it has been initialized and used in another recording and reproduction device, the information recording medium cannot be used unless it is initialized again in the original recording and reproduction device.

That is, although the first information recorded on the information recording medium is usable in another recording and reproduction device, the first information recorded on the information recording medium, including the user configuration information, which has been used in the original recording and reproduction device is initialized in another recording and reproduction device (e.g., a recording and reproduction device A). Further, under these circumstances, the first information recorded on the information recording medium is limited to use in the recording and reproduction device A. For this reason, first key information (generated in the recording and reproduction device A) for use in the recording and reproduction device A and recorded on the information recording medium is not stored in the original device's memory section; therefore, the first information stored in the original device's memory section (i.e., in the memory section of the original recording and reproduction device) then is unusable in the original recording and reproduction device.

This makes it possible, with sufficient safeguards (license protection) for the content of the first information recorded on the information recording medium, to use the content in a plurality of recording and reproduction devices.

### (Mode in Which the First Information Is Not Stored in the Device's Memory Section)

In the mode in which the first information is not stored in the device's memory section, the first information exists only on the information recording medium.

In this case, too, in Embodiments 1, 2, and 5, for example, as in the mode in which the first information is stored in the device's memory section, the first information is authenticated by key information and, when it has been authenticated successfully, first becomes executable and usable. The first information exists only in the device's memory section, and is first used after it has been authenticated successfully. This makes it possible, with sufficient safeguards (license protection) for the content of the first information recorded on the information recording medium, to use the content of the first information in a plurality of recording and reproduction devices. It should be noted that although the content of the first information is assumed to be an OS, an application, content, or the like, but is not limited in its applications.

In Embodiments 1, 2, and 5, authentication is permitted by various types of key information, and key information is recorded in a nonuser data region (key information region 109) of the information recording medium that is not affected by a user operation. This makes it possible to prevent unauthorized use of the first information even if the first information has been illegally replicated onto another information recording medium, because such an information recording medium is not legitimate and its authentication is therefore not permitted.

In Embodiments 1 to 5 below, specific configurations of recording and reproduction devices of the present invention for bringing about the above effects are described. It should be noted that although it is assumed in Embodiments 1, 2, and 5 that the first information is mainly an OS, the first information is not limited to such an OS and may be other software (e.g., an application that is smaller in volume than an OS), content, or the like. That is, unless Embodiments 1, 2, and 5 is described with the term "OS" limited to an OS, the term "OS" can also be read as "application" or "content," .

Further, in Embodiments 1, 2, and 5, it is assumed that a recording and reproduction control section 12 reads out the first information and stores the first information in the memory section. However, in reality, the information readout section 121 reads out the first information, and the information storage control section 122 stores the first information in the memory section.

### [Embodiment 1]

An embodiment of the present invention is described below with reference to Figs. 1 through 16.

### (Brief Overview of the Present Embodiment)

The recording and reproduction devices 1 and 1a of the present embodiment each include an authentication section 111 which, by use of the first key information recorded on the optical disk 10 or 10a, carries out authentication for use of the first information stored in the memory section 15, and which confirms whether or not the authentication has been completed successfully, the enable/disable control means being achieved by a key information erasing section 114 which erases the first key information from the optical disk 10 or 10a in accordance with a result of confirmation of the authentication by the authentication section 111.

Alternatively, the recording and reproduction devices 1 and 1a of the present embodiment each include: an authentication section 111 which, by use of the first key information recorded on the optical disk 10 or 10a, carries out authentication for use of the first information recorded on the optical disk 10 or 10a, and which confirms whether or not the authentication has been completed successfully; and a key information erasing section 114 which erases the first key information from the optical disk 10 or 10a in accordance with a result of confirmation of the authentication by the authentication section 111.

In either of the configurations, the optical disk 10 or 10a, which had had the first key information recorded thereon before it was inserted into the recording and reproduction device 1 or 1a, becomes devoid of the first key information when it has been inserted into the recording and reproduction device 1 or 1a. Thus, even if the optical disk 10 or 10a has been temporarily ejected from the recording and reproduction device 1 or 1a and an attempt to use the first information in another recording and reproduction device has been made, for example, the first information cannot be used in the another recording and reproduction device, since the optical disk 10 or 10a is devoid of the first key information. That is, by erasing the first key information from the optical disk 10 or 10a, the recording and reproduction device 1 or 1a can render the first information unusable when the information recording medium has been inserted into another recording and reproduction device.

### (Embodiment A)

An embodiment A of Embodiment 1 is described below with reference to Figs. 1 through 8 and 16.

### (Structure of an Optical Disk)

First, the structure of an optical disk 10 (information recording medium) according to the present embodiment is described with reference to Fig. 2. Fig. 2 is a cross-sectional view schematically showing the structure of an example of an optical disk 10 according to the present embodiment.

The optical disk 10 is a multilayer structure having a plurality of layers on which content (first information) such as software or video data, audio data, text data, etc. or information such as various types of key information that are to be described later can be recorded, and includes a translucent layer 101, a first information recording layer 102 (reproduce-only region, reproduce-only layer), an intermediate layer 103, a second information recording layer 104 (recordable region), and a substrate 105, arranged in this order starting from the plane of incidence of reproducing light. The optical disk 10 is, for example, a BD on which a large volume (50 GB) of information can be recorded.

The translucent layer 101 is made of a highly transparent ultraviolet curing resin (e.g., a polycarbonate film and a transparent adhesive), for example, having a thickness of 75 µm. It should be noted that the translucent layer 101 may, for example, be a 0.6 mm polycarbonate substrate, depending on the optical system of the recording and reproduction device 1.

The first information recording layer 102 is a ROM (read-only memory) layer, made of aluminum nitride having a thickness of 15 nm, whose refractive index has been adjusted by the flow rate of nitrogen during film formation, for example. It should be noted that the first information recording layer 102 is not limited to aluminum nitride and may, for example, be made of silicon nitride or a dielectric composed mainly of aluminum nitride or of silicon nitride, as well as aluminum nitride.

The intermediate layer 103 is made of a highly transparent ultraviolet curing resin, for example, having a thickness of 25 µm. Further, the intermediate layer 103 has pre-pits provided in a surface thereof facing the first information recording layer 102 and made of depressed and raised parts corresponding to information that is recorded as a shape on the first information recording layer 102.

The second information recording layer 104 is an RE (REwritable) layer, for example, including a first protective film (e.g., ZnS-SiO₂ having a thickness of 35 nm), a second protective film (e.g., ZrO₂ having a thickness of 5 nm), a recording layer (e.g., GeTe-Sb₂Te₃ having a thickness of 10 nm), a third protective film (e.g., ZrO₂ having a thickness of 5 nm), a fourth protective film (e.g., ZnS-SiO₂ having a thickness of 35 nm), a fifth protective film (e.g., ZrO₂ having a thickness of 5 nm), and a reflecting film (e.g., APC (AgPdCu) having a thickness of 20 nm), joined in this order on top of each other.

The substrate 105 is made of polycarbonate, for example, having a thickness of 1.1 mm. It should be noted that the substrate 105 may be made of a polyolefin resin, a metal, or the like, as well as polycarbonate.

It should be noted that although the optical disk 10 of Fig. 2 is structured to include a single first information recording layer 102 and a single second information recording layer 104, it is not limited to such a structure and may be structured to have a plurality of information recording layers 102 and a plurality of second information recording layers 104.

Alternatively, the second information recording layer 104 (recordable layer) may be an R (Recordable) layer. In this case, new information is added by so overwriting the already-recorded information that the already-recorded information is no longer readable, instead of rewriting information (e.g., first key information). Alternatively, the first information recording layer 102 may be an RE layer. In this case, the first information recording layer 102 is used as a reproduce-only layer, e.g., by use of a flag that prohibits information from being rewritten. Alternatively, the first information recording layer 102 may be an R layer. In this case, the first information recording layer 102 can be used as a reproduce-only layer because information once recorded on the R layer cannot be rewritten.

Next, examples of pieces of information that are recorded on the first information recording layer 102 and the second information recording layer 104 are described with reference to Fig. 3. (a) of Fig. 3 is a cross-sectional view more specifically showing the structure of first and second information recording layers 102 and 104 of an optical disk 10, and (b) of Fig. 3 shows an example of information that is recorded in a key information region 109 of the second information recording layer 104. It should be noted that (a) of Fig. 3 omits the intermediate layer 103, which is to be sandwiched between the first and second information recording layers 102 and 104.

As shown in (a) of Fig. 3, the first and second information recording layers 102 and 104 are structured to include a lead-in region 106 (nonuser data region), a user data region 107, and a lead-out region 108 (nonuser data region), arranged in this order starting from the inner peripheral side of the optical disk 10.

The lead-in region 106 is a region in which disk identification information, recording condition information, and the like are recorded, and is a region which is first irradiated with reproducing light (from which information is first read out) when the recording and reproduction device 1 executes processing on each layer. In (a) of Fig. 3, the second information recording layer 104 has various types of key information (first key information, third key information, and fourth key information) recorded in its lead-in region 106.

The user data region 107 is a region in which various pieces of software, content, and the like (first information) that need to be authenticated for use have been recorded (or are recorded) through the recording and reproduction device 1. In (a) of Fig. 3, the first information recording layer 102 has recorded in its user data region 107 an OS (operating system) (software) that can be used (activated, executed) by the recording and reproduction device 1, which is to be described later, and the second information recording layer 104 has recorded in its user data region 107 user configuration information serving as environment information set up for the OS by a user through the recording and reproduction device 1. It should be noted that the user data region 107 may have software other than the OS recorded as information therein.

The lead-out region 108 is a region for notifying the recording and reproduction device 1 of the end of each layer and usually has no information recorded therein.

The key information region 109, provided in the lead-in region 106 of the second information recording layer 104, is a region in which the first key information, the third key information, and the fourth key information can be recorded. It should be noted that these pieces of key information will be described in detail later. Further, although the key information region 109 is provided in the lead-in region 106 of the second information recording layer 104, it is not limited to being provided in such a region and may be provided in another region.

Further, as shown in (a) of Fig. 3, the second information recording layer 104 further has a medium discriminating region (BCA), provided closer to the inner peripheral side than the lead-in region 106 is, in which to record unique information of the optical disk 10, i.e., second key information (medium unique information) that serves as unique information for discriminating the optical disk 10 from another information recording medium.

It should be noted that although an example of the second key information is a BCA (burst cutting area) code, it is not limited to such a code and may be any type of information that allows discrimination of the optical disk 10 from another information recording medium.

Next, (b) of Fig. 3 shows an example of a state in which the key information region 109 has first key information, third key information, and fourth key information recorded therein.

The first key information is used to permit use of the OS recorded on the optical disk 10 and, in (b) of Fig. 3, is designated "abcdefghij". Further, when the OS is in coded form, the first key information is used to decode the OS. It should be noted that the first key information has been recorded in advance in the key information recording region 109 at the stage of manufacture of the optical disk 10.

The third key information is model information, contained in the device unique information of a recording and reproduction device 1, which indicates the model of recording and reproduction device 1, and serves to restrict the model of recording and reproduction device 1 into which the optical disk 10 is inserted. In (b) of Fig. 3, models (A) and (B) of recording and reproduction device 1 have been recorded. It should be noted that, in (b) of Fig. 3, the third key information can be recorded up to four models of recording and reproduction device 1.

It should be noted that the term "device unique information" means unique information recorded in advance in a recording and reproduction device 1 for discriminating the recording and reproduction device 1 from another recording and reproduction device.

The fourth key information serves to indicate the device unique information of a recording and reproduction device 1 into which the optical disk 10 has been inserted, and serves to restrict the number of recording and reproduction devices 1 into which the optical disk 10 is inserted. In (b) of Fig. 3, "A01001", "A00055", "B.00'800", "A00234", "A00234", "B10022", and "B00001", which are pieces of device unique information for their respective recording and reproduction devices 1, have been recorded as the fourth key information in the key information region 109.

Further, in (b) of Fig. 3, the fourth key information, i.e., device unique information can be recorded up to eight recording and reproduction devices 1. That is, the optical disk 10 of Fig. 3 can permit eight recording and reproduction devices 1 to use it.

As described above, the optical disk 10 has recorded on its first information recording layer 102 an OS that is usable in a recording and reproduction device 1, and has recorded on its second information recording layer 104 first key information for permitting the recording and reproduction device 1 to use the OS. Moreover, the first key information is erasable by the recording and reproduction device 1.

Thus, with sufficient safeguards (license protection) for the OS recorded on the optical disk 10, the optical disk 10 allows a plurality of recording and reproduction devices 1 to use the OS.

It should be noted that the optical disk 10 thus structured can be used by an information distributor (manufacturer) for applications in the management of the first key information for use in authentication for permission to use the OS recorded on the first information recording layer 102.

Specifically, the distributor records the first key information corresponding to the OS on the second information recording layer 104 and stores the optical disk 10 having recorded thereon the OS and the first key information, thereby managing the first key information for use in authentication for permission to use the OS.

Then, when the first key information is needed, the first key information is read out from the second information recording layer 104 of the optical disk 10 and distributed. Further, when the first key information needs to be updated, the first key information on the second information recording layer 104 is updated.

This makes it possible to manage first key information with just one optical disk 10 while always keeping the first key information up to date.

A recording and reproduction device 1 records the first key information either by acquiring, as the first key information, information attached to the optical disk 10, for example, by receiving the information from the user through an operation section (not illustrated) capable of acquiring a user operation, or by acquiring the first key information from the distributor of the OS or of the optical disk 10 through a network to use the OS.

Further, it is important for both the manufacture and the user to manage the OS's original data and the first key information in ensuring safeguards for the OS per se, the information recorded on the optical disk 10, and the like.

For example, in the case of recording and storage on an HDD (hard disk) connected to a personal computer, it is necessary to prepare facilities in consideration of a possibility that information might be wiped out by a cyberattack or the like. In such a case, the cost of preparing such facilities is incurred.

Meanwhile, by storing and managing the OS's original data and the first key information on the optical disk 10, which is not connected to a network, the need to prepare such facilities is eliminated, so that a reduction in cost becomes possible.

Further, since the optical disk 10 is a multilayer structure having at least one first information recording layer 102, it can be formed at a high speed, for example, by a stamper. This makes it possible to mass-produce such optical disks 10.

Furthermore, when the OS is in coded form, information leaks can be prevented, for example, even if the OS is illegally copied. Further, the optical disk 10 allows a recording and reproduction device 1 to use the coded OS by decoding it by use of the first key information.

Further, since the optical disk 10 has the first key information recorded in the key information region 109 that is different from the user data region 107 in which various types of information can be recorded, loss of the first key information can be prevented.

Furthermore, by having the third key information recorded in its key information region 109, the optical disk 10 allows a recording and reproduction device 1 to identify its model by use of the third key information. This makes it possible to restrict the OS recorded on the optical disk 10 to use in a particular model of recording and reproduction device. Further, in the key information region 109 of the optical disk 10, the device unique information of a recording and reproduction device 1 that used the OS is recorded as fourth key information. Use of the fourth key information in a recording and reproduction device 1 into which the optical disk 10 has been inserted makes it possible to restrict the OS recorded on the optical disk 10 to use in a particular recording and reproduction device.

Alternatively, it is possible to provide a plurality of key information regions 109 within a single layer (second information recording layer 104). For example, when a piece of first key information becomes unreadable due to deterioration in the optical disk 10, it is possible to use key information recorded in another key information region 109 that is different from a key information region 109 having that piece of first key information recorded therein.

Alternatively, when there are a plurality of second information recording layers 104, it is possible to provide a key information region 109 on each layer. In such a case, by recording identical pieces of first key information on the plurality of second information recording layers 104, the safety of key information management can be enhanced.

Further, by recording first key information at the stage of manufacture (at the time of distribution) of the optical disk 10, the manufacturer (distributor) of the optical disk 10 can arbitrarily set up the first key information for the OS.

### (Schematic Configuration of a Recording and Reproduction Device)

Next, the configuration of a recording and reproduction device 1 according an embodiment of the present invention is schematically described with reference to Fig. 16. Fig. 16 is a block diagram schematically showing the configuration of a recording and reproduction device 1.

As shown in Fig. 16, the recording and reproduction device 1 mainly includes a memory section 15, a disk loading recognition section 50, a recording and reproduction circuit group 30, an optical head 41, an optical pickup 40, and a control section 20.

Further, the recording and reproduction circuit group 30 mainly includes a pickup drive circuit 31, a laser drive circuit 32, and a reproduction circuit 33.

Further, the recording and reproduction device 1 is a device that records and reproduces information with respect to an optical disk 10 such as a DVD (digital versatile disk) or a BD.

In the recording and reproduction device 1, as shown in Fig. 16, the control section 20 has a recording and reproduction control section 12 (information storage means, information recording means) that uses the pickup drive circuit 31 to move the optical pickup 40 toward a track (not illustrated) of the optical disk 10 as the optical disk 10 rotates.

The optical pickup 40 is provided with the optical head 41. Moreover, the control section 20 sets recording conditions through the laser drive circuit 32, and the optical head 41 irradiates a recording site of the optical disk 10 with a recording laser beam, whereby information is recorded on the track of the optical disk 10.

Further, in the recording and reproduction device 1, the recording and reproduction control section 12 of the control section 20 uses the pickup drive circuit 31 to move the optical pickup 40 toward the recording site of the optical disk 10. Then, the control section 20 uses the laser drive circuit 32 for the optical head 41 to irradiate the optical disk 10 with a reproducing laser beam.

Reflected light detected by the optical head 41 is converted into a reproduction signal by the reproduction circuit 33 and inputted to the recording and reproduction control section 12 of the control section 20, whereby the recording and reproduction device 1 reproduces the information recorded on the track of the optical disk 10.

Further, the recording and reproduction device 1 is provided with the disk loading recognition section 50. The disk loading recognition section 50 serves to detect loading of the optical disk 10, and may be achieved by use of any sensor that can detect loading of the optical disk 10, although examples of the disk loading recognition section 50 include various types of sensors.

Further, the disk loading recognition section 50 is configured to output a detected result as a detection signal to the recording and reproduction control section 12 of the control section 20.

### (Configuration of the Control Section)

Next, the configuration of the control section 20 in the recording and reproduction device 1 according to the present embodiment is described with reference to Fig. 1. Fig. 1 is a block diagram showing the configuration of the control section 20 in the recording and reproduction device 1 according to the present embodiment.

As shown in Fig. 1, the control section 20 serves to control various types of processing in the recording and reproduction device 1, and includes a key information control section 11, a recording and reproduction control section 12, a device control section 13 (execution control means), and a code decoding section 14 (code decoding means).

The key information control section 11 serves to control its components to record or erase key information stored in the recording and reproduction device 1 or key information recorded on an optical disk 10. It should be noted that the functions of the components of the key information control section 11 will be described later.

The recording and reproduction control section 12 serves to, in accordance with an instruction from the key information control section 11, read out key information recorded on an optical disk 10 or either record or erase the key information. Further, the recording and reproduction control section 12 also serves to read out (reproduce) an OS recorded on an optical disk 10.

The recording and reproduction control section 12 serves to, in accordance with an instruction from the key information control section 11, read out key information recorded on an optical disk 10, erase the key information, or record, on an optical disk 10, key information stored in a key information storage section 115 that is to be described later. Further, the recording and reproduction control section 12 also serves to read out (reproduce) an OS recorded on an optical disk 10.

It should be noted that the recording and reproduction control section 12 gives the recording and reproduction circuit group 30 an instruction to record or erase key information or an instruction to read out key information or an OS.

The device control section 13 serves to control a BIOS (basic input/output system) process, an OS activation process, a user authentication process, an OS termination process (OS deactivation process), etc. in the recording and reproduction device 1, for example, when an optical disk 10 having an OS recorded thereon has been inserted.

Further, the device control section 13 also serves to, in accordance with an instruction from the key information control section 11, carry out an OS activation process, an OS termination process, a process of controlling the power source of the recording and reproduction device 1, a process of ejecting an optical disk 10, etc. In addition to this, the device control section 13 also serves to detect an operation of ejecting an optical disk 10, to detect an OS termination operation, to give a prompt to insert a predetermined optical disk 10, etc.

The code decoding section 14 serves to, by use of first key information, decode a coded OS recorded on an optical disk 10.

Next, the configuration of the key information control section 11 is described more specifically. As shown in Fig. 1, the key information control section 11 includes an authentication section 111 (authentication and confirmation means), a key information management section 112 (key information management means, device key confirmation means), a key information readout section 113 (key information readout means, medium key confirmation means), a key information recording and erasing section 114 (key information erasing means, key information recording means), and a key information storage section 115 (memory section).

The authentication section 111 serves to, by use of first key information, authenticate an OS recorded on an optical disk 10 and to confirm the authentication. Further, the authentication section 111 also serves to determine whether or not second key information stored in the key information storage section 115 and second key information recorded on an optical disk 10 match each other.

The key information management section 112 serves to manage the authentication section 111, key information readout section 113, key information recording and erasing section 114, and key information storage section 115 of the key information control section 11.

The key information readout section 113 serves to, by instructing the recording and reproduction control section 12, read out key information recorded on an optical disk 10.

The key information recording and erasing section 114 serves to, by instructing the recording and reproduction control section 12, record key information on an optical disk 10 or erase key information recorded on an optical disk 10.

The phrase "erase key information" here means making unrecorded a key information region 109 having various types of key information therein or rewriting key information to be totally irrelevant information (information that makes no sense).

The key information storage section 115 serves to store key information read out by the key information readout section 113, and also stores device unique information indicating the unique information of a recording and reproduction device 1. It should be noted that although the key information storage section 115 is configured to be included in the key information control section 11, it is not limited to such a configuration and may be configured to be contained in the memory section 15.

Further, the memory section 15 of the recording and reproduction device 1 serves to store an OS read out from an optical disk 10 by the key information control section 11. In addition to this, the memory section 15 has stored therein various types of application that are executed by the control section 20.

It should be noted that the recording and reproduction device 1 may record part of a configuration parameter for an OS recorded on the first information recording layer of an optical disk 10, so that the part may be recorded as first key information on the second information recording layer 104 of the optical disk 10.

In such a case, in using this OS, the recording and reproduction device 1 stores, in the key information storage section 115, the first key information read out from the second information recording layer 104 and associates the first key information with the OS. At the time of distribution of the optical disk 10, the first key information recorded on the optical disk 10 is a numerical value (configuration parameter) given by the distributor as a default setting. When a user has made a change in parameter, the recording and reproduction device 1 changes the first key information and stores the first key information thus changed in the second information recording layer 104.

Thus, even in the case of a non-rewritable OS recorded on the first information recording layer 102, the recording and reproduction device 1 can change part of the OS that needs to be changed. Since a single optical disk 10 has first and second information recording layers 102 and 104 in it, it is possible to simultaneously transfer an OS and a configuration parameter simply by taking out the optical disk 10. This as a result eliminates the need to transfer the configuration parameter with a different optical disk, to reconfigure the configuration parameter at the start of use, etc., thus enhancing user-friendliness.

### (Flow from OS Activation to OS Termination in the Recording and Reproduction Device)

Next, the general flow of a process that is carried out in the recording and reproduction device 1 as it activates an OS is described with reference to Fig. 4. Fig. 4 is a flow chart showing the general flow of the process that is carried out in the recording and reproduction device 1 as it activates an OS.

It is assumed here that the recording and reproduction device 1 has an optical disk 10 inserted therein, reads out an OS recorded on the optical disk 10, and stores the OS in its memory section 15. However, this does not imply any limitation, and the recording and reproduction device 1 may directly activates the OS without storing the OS of the optical disk 10 in its memory section 15.

First, upon insertion of the optical disk 10 into a disk insertion section, the disk loading recognition section 50 (see Fig. 16) detects the insertion of the optical disk 10 into the recording and reproduction device 1. Then, the disk loading recognition section 50 sends the recording and reproduction control section 12 an insertion detection signal indicating that the insertion of the optical disk 10 has been detected.

Upon receiving the insertion detection signal, the recording and reproduction control section 12 sends the device control section 13 a BIOS start instruction signal for starting a BIOS process. Upon receiving the BIOS start instruction signal, the device control section 13 starts a BIOS process (S1). That is, the device control section 13 reads out a BIOS stored in the memory section 15 and starts up the disk insertion section, a keyboard, a video card, a display device, etc. (none of which is illustrated) connected to the control section 20 of the recording and reproduction device 1.

Next, upon completion of the BIOS process, the device control section 13 sends the key information control section 11 a BIOS completion notification indicating that the BIOS process has been completed. The key information control section 11 determines whether or not to permit activation of the OS and sends a result of the determination to the device control section 13.

Upon receiving a result of determination indicating that the activation of the OS is permitted, the device control section 13 starts a process of activating the OS (S2). It should be noted that the process of activating the OS will be described later.

After activating the OS in S2, the device control section 13 carries out a user authentication process (S3). Specifically, the device control section 13 causes the display device to display an image that allows a user to carry out password authentication and fingerprint authentication, thereby instructing the user to carry authentication. Then, the device control section 13 determines whether or not the user authentication has been completed successfully.

If the device control section 13 confirms that the user authentication has been completed successfully, the OS comes into a usable state (state of normal use of the OS) (S4).

Then, upon confirming, for example, through a user operation that there has been an instruction to terminate the OS, the device control section 13 sends the key information control section 11 an OS termination notification indicating that the OS is to be terminated. Upon receiving the OS termination notification, the key information control section 11 carries out a process of terminating the OS.

Upon completion of the process of terminating the OS, the key information control section 11 sends the device control section 13 a process completion notification indicating the completion of the process, whereby the device control section 13 terminates the OS being executed (S5).

### (Flow of a Process in the Recording and Reproduction Device at the Time of OS Activation)

Next, the flow of a process (OS activation process) in the recording and reproduction device 1 at the time of OA activation is described with reference to Fig. 5. Fig. 5 is a flow chart showing the flow of the process in the recording and reproduction device 1 at the time of OS activation.

First, upon insertion of an optical disk 10 (disk) into the disk insertion section, the disk loading recognition section 50 (see Fig. 16) detects the insertion of the optical disk 10 into the recording and reproduction device 1. Then, the disk loading recognition section 50 sends the recording and reproduction control section 12 an insertion detection signal indicating that the insertion of the optical disk 10 has been detected.

Upon receiving the insertion detection signal, the recording and reproduction control section 12 reads out part of information present in a BCA of the optical disk 10 and determines whether or not the inserted optical disk 10 has an OS recorded thereon (whether or not there is an OS disk) (S11). Normally, the BCA has recorded therein information indicative of the type of the optical disk 10 (e.g., information indicative of a two-layer RE, a two-layer R, a single-layer ROM, and a two-layer OS), etc., as well as second key information (medium unique information and individual recognition information) of the optical disk 10.

If the recording and reproduction control section 12 determines that the inserted optical disk 10 has an OS recorded thereon (YES in S11), the recording and reproduction control section 12 sends the key information readout section 113 an insertion confirmation signal indicating that the optical disk 10 has been inserted. Upon receiving the insertion confirmation signal, the key information readout section 113 sends the recording and reproduction control section 12 a readout instruction to read out key information. Upon receiving the readout instruction, the recording and reproduction control section 12 reads out key information from the inserted optical disk 10. That is, the key information readout section 113 reads out the key information from the inserted optical disk 10 through the recording and reproduction control section 12 (S12).

Next, the recording and reproduction control section 12 sends the key information thus read out to the key information readout section 113. Upon receiving the key information, the key information readout section 113 determines whether the key information is first key information or not (S13). If the key information readout section 113 determines that the key information thus received is first key information (YES in S13), the key information readout section 113 sends the first key information to the key information management section 112.

At this point in time, the key information management section 112 confirms whether or not there exists key information in the key information storage section 115 (memory) (S14). Then, by confirming the existence of key information in the key information storage section 115, the key information management section 112 determines whether or not there exists first key information in the key information (S15).

If the key information management section 112 determines that the key information storage section 115 has no first key information stored therein (NO in S15), the key information management section 112 sends the authentication section 111 the first key information received from the key information readout section 113 (i.e., the first key information read out from the optical disk 10). Upon receiving the first key information, the authentication section 111 reads out the OS stored in the memory section 15. Then, the authentication section 111 authenticates the OS for activation by use of the first key information and confirms whether the OS has been successfully authenticated (S16). It should be noted that the authentication section 111 authenticates the OS by use of the first key information according to an existing method.

If, as a result of the confirmation, the authentication section 111 determines that the OS has been successfully authenticated (YES in S16), the authentication section 111 sends the device control section 13 a successful authentication notification indicating that the OS has been successfully authenticated. Upon receiving the successful authentication notification, the device control section 13 activates the OS (S17), whereby the OS activation process in the recording and reproduction device 1 is completed.

It should be noted that by once previously copying the OS into the memory section 15, the recording and reproduction device 1 can activate the OS from the memory section 15 without executing a process of copying the OS, provided that the OS has been successfully authenticated. This makes it possible to reduce the readout time and expedite the process of activating an OS recorded on an information recording medium.

Meanwhile, if the key information readout section 113 determines in S13 that the key information received from the recording and reproduction control section 12 is not first key information (NO in S13), the key information readout section 113 sends the determination result to the key information management section 112.

Upon receiving the determination result indicating that no first key information has been read out from the optical disk 10, the key information management section 112 confirms whether or not there exists key information in the key information storage section 115. Then, by confirming the existence of key information in the key information storage section 115, the key information management section 112 determines whether or not there exists second key information in the key information (S18).

If the key information management section 112 determines that there exists second key information in the key information storage section 115 (YES in S18), the key information management section 112 reads out the second key information and sends it to the authentication section 111. At this point in time, the key information management section 112 instructs the key information readout section 113 to read out second key information from the optical disk 10.

Specifically, the key information management section 112 sends the key information readout section 113 a readout instruction to read out second key information from the optical disk 10. The key information readout section 113 sends the readout instruction to the recording and reproduction control section 12, thereby causing the recording and reproduction control section 12 to read out second key information recorded on the optical disk 10. That is, the key information readout section 113 reads out the second key information from the optical disk 10 through the recording and reproduction control section 12.

After reading out the second key information through the recording and reproduction control section 12, the key information readout section 113 sends the second key information to the key information management section 112. Then, the key information management section 112 sends the second key information thus received to the authentication section 111.

The authentication section 111 collates the two pieces of second key information received from the key information management section 112 (S19). That is, the authentication section 111 determines whether or not the second key information read out from the optical disk 10 and the second key information stored in the key information storage section 115 match each other (S20).

If the authentication section 111 determines that the two pieces of second key information match each other (YES in S20), the authentication section 111 sends the determination result to the key information management section 112. Upon receiving the determination result indicating that the two pieces of second key information match each other, the key information management section 112 sends the key information recording and erasing section 114 first key information stored in the key information storage section 115.

Upon receiving the first key information, the key information recording and erasing section 114 sends the recording and reproduction control section 12 the first key information and a recording instruction signal to instruct the recording and reproduction control section 12 to record the first key information on the optical disk 10. Upon receiving the first key information and the recording instruction signal, the recording and reproduction control section 12 records the first key information on the optical disk 10 (specifically, in the key information region 109 of the lead-in region 106 of the second information recording layer 104). That is, the key information recording and erasing section 114 uses the recording and reproduction control section 12 to record, on the optical disk 10, the first key information stored in the key information storage section 115 (S21).

After recording the first key information on the optical disk 10, the recording and reproduction control section 12 sends a key recording completion notification indicative of the completion of the recording to the key information management section 112 through the key information recording and erasing section 114. Upon receiving the key recording completion notification, the key information management section 112 erases the first key information and second key information stored in the key information storage section 115 (S22). It should be noted that upon completion of S22, the key information management section 112 shifts to S14.

Alternatively, if the key information management section 112 determines in S15 that the key information storage section 115 has first key information stored therein (YES in S15), the key information management section 112 reads out second key information stored in the key information storage section 115 and sends it to the authentication section 111. At this point in time, the key information management section 112 instructs the key information readout section 113 to read out second key information from the optical disk 10. It should be noted that the specific process that is carried out at this point in time is the same as that which is carried out if YES in S18 and, as such, is not described here.

Upon receiving, from the key information readout section 113, the second key information read out from the optical disk 10, the key information management section 112 sends the second key information to the authentication section 111.

The authentication section 111 collates the two pieces of second key information received from the key information management section 112 (S23). That is, the authentication section 111 determines whether or not the second key information read out from the optical disk 10 and the second key information stored in the key information storage section 115 match each other (S24).

If the authentication section 111 determines that the two pieces of second key information match each other (YES in S24), the authentication section 111 sends the determination result to the key information management section 112. Upon receiving the determination result indicating that the two pieces of second key information match each other, the key information management section 112 erases the first key information and second key information stored in the key information storage section 115 (S25). It should be noted that upon completion of S25, the key information management section 112 shifts to S16.

It should be noted that if NO in S11, NO in S16, NO in S18, NO is S20, and NO in S24, the device control section 13 ejects the optical disk 10 from the recording and reproduction device 1 (S26) and causes the recording and reproduction device 1 to complete the OS activation process.

As described above, when the key information readout section 113 confirms the existence of first key information on an optical disk 10 inserted and when the key information management section 112 confirms that the key information storage section 115 has neither first nor second key information stored therein, the authentication section 111 carries out authentication.

This allows the recording and reproduction device 1 to, before authenticating first information, confirm whether or not use of an OS recorded on the optical disk 10 has been normally terminated and then use the OS.

Alternatively, when the key information readout section 113 confirms the nonexistence of first key information on an optical disk 10 inserted and when the key information management section 112 confirms that the memory section has both first key information and second key information stored therein, the authentication section 111 carries out authentication after determining whether or not the two pieces of second key information match each other.

This allows the recording and reproduction device 1 to correctly recognize and authenticate the inserted optical disk 10 even if use of the OS is terminated, for example, after the occurrence of such a peculiar situation where the power supply has been shut off with both first key information and second key information existing in the recording and reproduction device 1 (i.e., even if the OS is abnormally terminated). That is, the recording and reproduction device 1 can put the OS back into the state of normal use preceding the abnormal termination.

Furthermore, by use of second key information stored in the key information management section 112, the authentication section 111 identifies an optical disk 10 inserted in the recording and reproduction device 1. By use of the second key information, the recording and reproduction device 1 can determine, for example, whether the optical disk 10 is one that has been temporarily ejected from the recording and reproduction device 1.

### (Flow of a Process in the Recording and Reproduction Device at the Time of Temporary Ejection)

Next, the flow of a process in the recording and reproduction device 1 at the time of temporary ejection is described with reference to Fig. 6. Fig. 6 is a flow chart showing the flow of the process in the recording and reproduction device 1 at the time of temporary ejection. It should be noted that the recording and reproduction device 1 is in an OS normal processing state shown in S4 of Fig. 4, with the optical disk 10 inserted in the disk insertion section of the recording and reproduction device 1.

First, when, in order to eject the optical disk 10, the user carries out an ejection operation such as pressing of an ejection button (not illustrated), the device control section 13 detects the ejection operation and sends the key information management section 112 an ejection detection signal indicative of the detection.

Upon receiving the ejection detection signal, the key information management section 112 sends the key information readout section 113 a readout instruction to read out first key information and second key information. By sending the readout instruction to the recording and reproduction control section 12, the key information readout section 113 causes the recording and reproduction control section 12 to read out the first key information and second key information recorded on the optical disk 10. That is, the key information readout section 113 reads out the first key information and the second key information from the inserted optical disk 10 (S31).

After reading out the first key information and the second key information, the key information readout section 113 stores these pieces of key information in the key information storage section 115 (S32) and sends the key information management section 112 a storage confirmation signal indicating that those pieces of key information have been stored.

Upon receiving the storage confirmation signal, the key information management section 112 sends the key information recording and erasing section 114 an erasure instruction signal for erasing the first key information recorded on the optical disk 10. By sending the erasure instruction signal to the recording and reproduction control section 12, the key information recording and erasing section 114 causes the recording and reproduction control section 12 to erase the first key information recorded on the optical disk 10. That is, the key information recording and erasing section 114 erases the first key information from the optical disk 10 (S33).

After erasing the first key information through the recording and reproduction control section 12, the key information recording and erasing section 114 sends the key information management section 112 an erasure completion notification indicating that the erasure has been completed. The key information management section 112 sends the erasure completion notification to the device control section 13.

Upon receiving the erasure completion notification, the device control section 13 sends the disk insertion section an instruction to eject the optical disk 10, whereby the optical disk 10 is ejected from the disk insertion section (S34). It should be noted that after the optical disk 10 has been temporarily ejected, it becomes possible to insert a disk other than the optical disk 10 having the OS recorded thereon. Examples of optical disks that can be inserted include CDs, DVDs, HD-DVDs, BDs other than OS disks.

Let it be assumed here that after the ejection of the optical disk 10 in S34, the optical disk 10 has been inserted again into the disk insertion section (S35). Then, the disk loading recognition section 50 (see Fig. 16) detects the insertion of the optical disk 10 into the recording and reproduction device 1 and sends an insertion detection signal to the recording and reproduction control section 12.

Upon receiving the insertion detection signal, the recording and reproduction control section 12 reads out part of information present in a BCA of the optical disk 10 and determines whether or not the inserted optical disk 10 has an OS recorded thereon (S36). Alternatively, upon receiving the insertion detection signal, the recording and reproduction control section 12 may read out information recorded on the first information recording layer 102 of the optical disk 10 and determine whether or not the inserted optical disk 10 has an OS recorded thereon.

If the recording and reproduction control section 12 determines that the inserted optical disk 10 has an OS recorded thereon (YES in S36), the recording and reproduction control section 12 sends the key information readout section 113 an insertion confirmation signal indicating that the optical disk 10 has been inserted. Upon receiving the insertion confirmation signal, the key information readout section 113 sends the recording and reproduction control section 12 a readout instruction to read out key information. Upon receiving the readout instruction, the recording and reproduction control section 12 reads out key information from the inserted optical disk 10. That is, the key information readout section 113 reads out the key information from the inserted optical disk 10 through the recording and reproduction control section 12 (S37).

After reading out the key information from the key information region 109 having the first key information recorded therein, the recording and reproduction control section 12 sends the key information to the key information readout section 113. Upon receiving the key information, the key information readout section 113 determines whether the key information is first key information or not (S38). That is, the key information readout section 113 confirms whether or not the key information region 109 has first key information recorded therein.

If the key information readout section 113 determines that the key information received from the recording and reproduction control section 12 is not first key information (NO in S38), the key information readout section 113 sends the recording and reproduction control section 12 a readout instruction to read out second key information from the optical disk 10. The key information readout section 113 sends the readout instruction to the recording and reproduction control section 12, thereby causing the recording and reproduction control section 12 to read out second key information recorded on the optical disk 10. That is, the key information readout section 113 reads out the second key information from the optical disk 10.

After reading out the second key information through the recording and reproduction control section 12, the key information readout section 113 sends the second key information to the key information management section 112. The key information management section 112 reads out second key information stored in the key information storage section 115 and sends the second key information thus read out to the authentication section 111, together with the second key information thus received. The authentication section 111 collates the two pieces of second key information thus received (S39). That is, the authentication section 111 determines whether or not the second key information read out from the optical disk 10 and the second key information stored in the key information storage section 115 match each other (S40).

If the authentication section 111 determines that the two pieces of second key information match each other (YES in S40), the authentication section 111 sends the determination result to the key information management section 112. Upon receiving the determination result indicating that the two pieces of second key information match each other, the key information management section 112 sends the key information recording and erasing section 114 first key information stored in the key information storage section 115.

Upon receiving the first key information, the key information recording and erasing section 114 sends the recording and reproduction control section 12 the first key information and a recording instruction signal to instruct the recording and reproduction control section 12 to record the first key information on the optical disk 10. Upon receiving the first key information and the recording instruction signal, the recording and reproduction control section 12 records the first key information on the optical disk 10 (specifically, in the key information region 109). That is, the key information recording and erasing section 114 uses the recording and reproduction control section 12 to record, on the optical disk 10, the first key information stored in the key information storage section 115 (S41).

After recording the first key information on the optical disk 10, the recording and reproduction control section 12 sends a key recording completion notification indicative of the completion of the recording to the key information management section 112 through the key information recording and erasing section 114. Upon receiving the key recording completion notification, the key information management section 112 erases the first key information and second key information stored in the key information storage section 115 (S42), whereby the process of temporary ejection from the recording and reproduction device 1 is completed.

It should be noted that if YES in S38 and NO in S40, the device control section 13 sends the disk insertion section an instruction to eject the optical disk 10, whereby the optical disk 10 is ejected from the disk insertion section (S43), and then returns to S35. Similarly, if NO in S36, the device control section 13 returns to S35.

Further, the step of erasing the first key information and the second key information in S42 may be executed at the time of OS termination instead of being executed here.

In the recording and reproduction device 1, as described above, the authentication section 111 carries out, by use of first key information recorded on an optical disk 10, authentication for use of an OS recorded on the optical disk 10 (or an OS stored in the memory section 15), and confirms whether the authentication has been completed successfully. Then, the key information recording and erasing section 114 erases the first key information from the optical disk 10 in accordance with a result of confirmation of the authentication by the authentication section 111.

As such, the recording and reproduction device 1 makes it possible, with sufficient safeguards (license protection) for an OS recorded on an optical disk 10, to use the OS in a plurality of recording and reproduction devices.

Further, by executing the steps S39 to S42, the recording and reproduction device 1 can determine whether the optical disk 10 with which the OS being executed by the device control section 13 was authenticated for use and the inserted optical disk 10 are identical or not and, as such, can surely write the first key information stored in the key information storage section 115 back onto the original optical disk 10 (the optical disk 10 on which the OS had been recorded).

### (Flow of a Process in the Recording and Reproduction Device at the Time of OS Termination)

Next, the flow of a process (OS termination process) in the recording and reproduction device 1 at the time of OS termination is described with reference to Fig. 7. Fig. 7 is a flow chart showing the flow of the process in the recording and reproduction device 1 at the time of OS termination.

First, when a user carries out an operation of terminating the OS (an operation such as activating an exit option for the OS or turning off the recording and reproduction device 1), the device control section 13 sends a termination detection signal to the recording and reproduction control section 12.

Upon receiving the termination detection signal, the recording and reproduction control section 12 determines whether or not an optical disk 10 having recorded thereon the OS being used in the recording and reproduction device 1 has been inserted (S51).

If the recording and reproduction control section 12 determines that an optical disk 10 having the OS recorded thereon has been inserted into the disk insertion section (YES in S51), the recording and reproduction control section 12 reads out the user configuration information stored in the memory section 15. At this point in time, the recording and reproduction control section 12 instructs the key information management section 112 to read out the device unique information of the recording and reproduction device 1, thereby causing the key information management section 112 to read out the unique device information from the key information storage section 115. Then, the recording and reproduction control section 12 records the user configuration information in a predetermined region (specifically, in the user data region 107 of the second information recording layer 104) of the optical disk 10 (S52).

It should be noted that the recording and reproduction control section 12 may record the user configuration information and the device unique information in association with each other. This allows the recording and reproduction device 1 to determine in which recording and reproduction device the user configuration information was recorded.

After recording the user configuration information on the optical disk 10, the recording and reproduction control section 12 sends an information recording completion notification indicative of the completion of the recording to the key information management section 112 through the key information readout section 113 or through the key information recording and erasing section 114. Upon receiving the information recording completion notification, the key information management section 112 confirms whether or not there exists key information in the key information storage section 115 (S53). Then, by confirming the existence of key information in the key information storage section 115, the key information management section 112 determines whether or not there exists second key information in the key information (S54).

It should be noted that in the case of normal use of the OS in the recording and reproduction device 1 (use of the OA after normal authentication carried out in line with the process of Fig. 5), the step S53 serves a function of checking for a failure occurring although there exists no key information in the key information storage section 115.

If the key information management section 112 determines that there exists no second key information in the key information storage section 115 (NO in S54), the key information management section 112 goes on to determine whether or not there exists first key information in the key information storage section 115 (S55).

If the key information management section 112 determines that the key information storage section 115 has no first key information stored therein (NO in S55), the key information management section 112 sends the determination result to the device control section 13. Upon receiving the determination result indicating that the key information storage section 115 has no first key information stored therein, the device control section 13 starts a process of deactivating the OS being used (S56). Then, upon completion of the OS deactivation process by the device control section 13, the recording and reproduction device 1 completes the OS termination process.

Meanwhile, if the recording and reproduction control section 12 determines in S51 that an optical disk 10 having recorded thereon the OS being used in the recording and reproduction device 1 has not been inserted (NO in S51), the recording and reproduction control section 12 sends the determination result to the device control section 13.

Upon receiving the determination result indicating that such an optical disk 10 has not been inserted into the disk insertion section, the device control section 13 prompts the user to insert, into the disk insertion section, an optical disk 10 having recorded thereon the OS being used (S57). Through a display device, an audio output device (not illustrated), etc. connected to the recording and reproduction device 1, for example, the device control section 13 prompts the user to insert an optical disk 10 having the OS recorded thereon. It should be noted that upon completion of S57, the device control section 13 returns to S51.

Alternatively, if the key information management section 112 determines in S54 that the key information storage section 115 has second key information stored therein (YES in S54), the key information management section 112 erases the second key information from the key information storage section 115 (S58). It should be noted that upon completion of S58, the key information management section 112 shifts to S55.

Furthermore, if the key information management section 112 determines in S55 that the key information storage section 115 has first key information stored therein (YES in S55), the key information management section 112 sends the determination result to the key information readout section 113. Upon receiving the determination result indicating that the key information storage section 115 has first key information stored therein, the key information readout section 113 sends the recording and reproduction control section 12 a readout instruction to read out key information. Upon receiving the readout instruction, the recording and reproduction control section 12 reads out key information from the inserted optical disk 10 (S59).

Next, the recording and reproduction control section 12 sends the key information thus read out to the key information readout section 113. Upon receiving the key information, the key information readout section 113 determines whether the key information is first key information or not (S60).

If the key information readout section 113 determines that the key information thus received is first key information (YES in S60), the key information readout section 113 sends the determination result to the key information management section 112, whereby the key information management section 112 confirms that the optical disk 10 has first key information. Then, upon receiving the determination result indicating that the key information thus received is first key information, the key information management section 112 erases the first key information stored in the key information storage section 115 (S62).

Meanwhile, if the key information readout section 113 determines that the key information thus received is not first key information (NO in S60), the key information readout section 113 sends the determination result to the key information management section 112. Upon receiving the determination result indicating that the key information thus received is not first key information, the key information management section 112 determines that the optical disk 10 has no first key information, reads out the first key information stored in the key information storage section 115, and sends it to the key information recording and erasing section 114.

Upon receiving the first key information, the key information recording and erasing section 114 sends the recording and reproduction control section 12 the first key information and a recording instruction signal for instructing the recording and reproduction control section 12 to record the first key information on the optical disk 10. Upon receiving the first key information and the recording instruction signal, the recording and reproduction control section 12 records the first key information on the optical disk 10 (specifically, in the key information region 109). That is, the key information recording and erasing section 114 uses the recording and reproduction control section 12 to record, on the optical disk 10, the first key information stored in the key information storage section 115 (S61). Then, after S61, the process shifts to S62.

It should be noted upon completion of S62, the key information management section 112 shifts to S56. At this point in time, the key information management section 112 sends the device control section 13 an erasure notification indicating that the first key information has been erased from the key information storage section 115. Upon receiving the erasure notification, the device control section 13 executes the step 556.

As described above, when the execution of an OS by the device control section 13 is terminated, the recording and reproduction device 1 can, on the one hand, render the previously inserted optical disk 10 usable in another recording and reproduction device and, on the other hand, render the OS unusable in the recording and reproduction device 1 (i.e., the recording and reproduction device from which the optical disk 10 has been ejected). This allows the recording and reproduction device 1 to ensure sufficient safeguards for the OS.

Further, since the recording and reproduction control section 12 records, on an optical disk 10, user configuration information configured by a user for an OS, the recording and reproduction device 1 can share the user configuration for the OS with another recording and reproduction device when the OS is used in the another recording and reproduction device.

### (Flow of a Process in the Recording and Reproduction Device at the Time of OS Storage)

Next, an example of the flow of a process that is carried out in the recording and reproduction device when an OS recorded on an optical disk 10 is stored in the memory section 15 of the recording and reproduction device 1 is described with reference to Fig. 8. Fig. 8 is a flow chart showing an example of the flow of the process that is carried out in the recording and reproduction device 1 when the OS recorded on the optical disk 10 is stored in the memory section 15 of the recording and reproduction device 1. It should be noted that the process of storing the OS in the memory section 15 of the recording and reproduction device 1 is mainly carried out when the optical disk 10 is first used by the recording and reproduction device 1.

It is assumed here that an optical disk 10 that is inserted into the disk insertion section has an OS recorded thereon. It is also assumed that the OS recorded on the optical disk 10 has been coded by first key information or by key information that is different from the first key information (but can be decoded by the first key information).

First, upon insertion of an optical disk 10 into the disk insertion section, the recording and reproduction control section 12 executes the step S11 of Fig. 5, and if the recording and reproduction control section 12 determines that the inserted optical disk 10 has an OS recorded thereon, the recording and reproduction control section 12 reads out the OS recorded on the optical disk 10. Then, the recording and reproduction control section 12 sends the key information readout section 113 a readout notification indicating that the OS has been read out from the optical disk 10. At this point in time, the recording and reproduction control section 12 temporarily stores, in the memory section 15, the OS read out from the optical disk 10.

Next, upon receiving the readout notification, the key information readout section 113 sends the recording and reproduction control section 12 a readout instruction to read out first key information. Upon receiving the readout instruction, the recording and reproduction control section 12 reads out the first key information from the optical disk 10 and sends it to the code decoding section 14. At this point in time, the code decoding section 14 reads out the OS temporarily stored in the memory section 15 by the recording and reproduction control section 12.

After receiving the first key information and reading out the OS, the code decoding section 14 decodes the OS that is in coded form (S71). It should be noted that the code decoding section 14 decodes the OS by use of the first key information according to an existing method.

Upon completion of the decoding of the OS, the code decoding section 14 sends the OS thus decoded to the recording and reproduction control section 12. Upon receiving the OS thus decoded, the recording and reproduction control section 12 stores the OS in the memory section 15 (S72).

As described above, by including the code decoding section 14, the recording and reproduction device 1 can use even a coded OS by decoding it.

Further, by having the OS in coded form, the optical disk 10 can prevent information leaks, for example, even if the OS is illegally copied. Further, even when the OS is in coded form, the recording and reproduction device 1 can use the OS by decoding it with the first information. It should be noted that even when the optical disk 10 has lost the first key information as a decoding key, it is possible to go on to decode the OS by obtaining new first key information.

It should be noted that since the optical disk 10 has the OS recorded on its first information recording layer 102, the OS normally cannot be rewritten into a different form of information. That is, the OS recorded on the optical disk 10 remains as recorded first on the optical disk 10 (i.e., remains in an initial state).

Therefore, by storing in the memory section 15 of the recording and reproduction device 1 the OS recorded on the optical disk 10, the OS can be put back to the initial state (initialized) even when the OS has been changed as a result of the OS being used by the recording and reproduction device 1.

Further, such a configuration is possible that authentication by use of the first key information is needed to authenticate for use the data, programs, content, etc. recorded in the user data region 107 of the recordable region. This makes it possible to ensure safeguards for the user configuration information (user data) as well as the OS.

### (Embodiment B)

Next, another embodiment B of Embodiment 1 is described below with reference to Figs. 1 and 9 through 11.

An optical disk 10a (information recording medium) according to the present invention is identical in structure to the optical disk 10 of Fig. 2, but different from the optical disk 10 according to the embodiment A in that the optical disk 10a has recorded thereon first key information created to contain second key information serving as unique information for discriminating the optical disk 10a from another optical disk.

Further, the key information management section 112 (key information management means, device key confirmation means) is different from the key information management section 112 according to Embodiment A in that it stores only the first key information in the key information storage section 115 and extracts the second key information contained in the first key information.

As in the embodiment A, by carrying out the following processes with respect to the optical disk 10a, the recording and reproduction device 1 makes it possible, with sufficient safeguards (license protection) for an OS recorded on the optical disk 10, to use the OS in a plurality of recording and reproduction devices.

It should be noted that those members which have the same functions as those of the embodiment A are given the same reference numerals and, as such, are not described below. That is, the configuration of the recording and reproduction device 1 as shown in Fig. 1 and the process of storing a coded OS in the recording and reproduction device 1 as shown in Fig. 8 are not described below.

The following describes those processes which the recording and reproduction device 1 carries out in executing an OS recorded on an optical disk 10a. It is should be noted that the processes are described below with reference to a case where the optical disk 10a has been inserted into the recording and reproduction device 1. However, this does not imply any limitation, and also when the optical disk 10a has been inserted into a recording and reproduction device 1a that is to be described later, the recording and reproduction device 1a carries out the same processes as the recording and reproduction device 1.

### (Flow of a Process in the Recording and Reproduction Device at the Time of OS Activation)

First, the flow of a process (OS activation process) in the recording and reproduction device 1 at the time of OA activation is described with reference to Fig. 9. Fig. 9 is a flow chart showing the flow of the process in the recording and reproduction device 1 at the time of OS activation.

It should be noted that the steps S81 to S87 of Fig. 9 are identical to the steps S11 to S17 of Fig. 5 respectively and, as such, are not described here.

First, if the key information readout section 113 (key information readout means, medium key confirmation means) determines in S83 that the key information received from the recording and reproduction control section 12 is not first key information (NO in S83), the key information readout section 113 sends the determination result to the key information management section 112.

Upon receiving the determination result indicating that the key information thus received is not first key information (i.e., the determination result indicating that no first key information has been read out from the optical disk 10), the key information management section 112 confirms whether or not there exists key information in the key information storage section 115. Then, by confirming the existence of key information in the key information storage section 115, the key information management section 112 determines whether or not there exists first key information in the key information (S88).

If the key information management section 112 determines that there exists first key information in the key information storage section 115 (YES in S88), the key information management section 112 reads out the first key information stored in the key information storage section 115 and extracts second key information from the first key information (S89).

It should be noted that the key information storage section 115 has a standardized form of second key information set up in advance therein. The key information management section 112 reads out this form of second key information from the key information storage section 115 and, by performing a predetermined operation, extracts the second key information from the first key information.

After extracting the second key information, the key information management section 112 sends the second key information to the authentication section 111. At this point in time, by instructing the key information readout section 113 to read out the second key information from the optical disk 10a, the key information management section 112 receives the second key information read out from the optical disk 10a by the key information readout section 113.

The subsequent steps S90 to S93 are identical to the steps S19 to S22 of Fig. 5 respectively and, as such, are not described here. It should be noted that, in S93, the key information management section 112 erases the first key information upon receiving the key recording completion notification.

Alternatively, if the key information management section 112 determines in S85 that the key information storage section 115 has first key information stored therein (YES in S85), the key information management section 112 carries out the steps S89 and S90 (S94 and S95). Then, if YES in S95, the key information management section 112 erases the first key information (S96) as in S93, and returns to S86.

It should be noted that if NO in S81, NO in S86, NO in S88, NO in S91, and NO in S95, the device control section 13 ejects the optical disk 10 from the recording and reproduction device 1 (S97), thereby causing the recording and reproduction device 1 to complete the OS activation process, as in the case shown in Fig. 5.

As described above, when the key information readout section 113 confirms the existence of first key information on an optical disk 10 inserted and when the key information management section 112 confirms that the key information storage section 115 has no first key information stored therein, the authentication section 111 carries out authentication.

This allows the recording and reproduction device 1 to, before insertion of an optical disk 10, confirm whether or not use of first information recorded on the optical disk 10 has been normally terminated and then use the OS.

Alternatively, when the key information readout section 113 confirms the nonexistence of first key information on an optical disk 10 inserted and when the key information management section 112 confirms that the key information storage section 115 has first key information stored therein, the authentication section 111 carries out authentication after determining whether or not the second key information extracted by the key information management section 112 and second key information recorded on the inserted information recording medium match each other.

This allows the recording and reproduction device 1 to correctly recognize and authenticate the inserted optical disk 10 even if use of the OS is terminated, for example, after the occurrence of such a peculiar situation where the power supply has been shut off with both first key information and second key information existing in the recording and reproduction device 1 (i.e., even if the OS is abnormally terminated). That is, the recording and reproduction device 1 can put the OS back into the state of normal use preceding the abnormal termination.

### (Flow of a Process in the Recording and Reproduction Device at the Time of Temporary Ejection)

Next, the flow of a process in the recording and reproduction device 1 at the time of temporary ejection is described with reference to Fig. 10. Fig. 10 is a flow chart showing the flow of the process in the recording and reproduction device 1 at the time of temporary ejection. It should be noted that, as in Fig. 6, the recording and reproduction device 1 is in an OS normal processing state shown in S4 of Fig. 4, with the optical disk 10a inserted in the disk insertion section of the recording and reproduction device 1.

First, as in S31 of Fig. 6, when the device control section 13 detects an ejection operation, the key information readout section 113 reads out first key information from the inserted optical disk 10a (S101) and shifts to S102.

It should be noted that the steps S102 to S108 of Fig. 10 are identical to the steps S32 to S38 of Fig. 6 respectively and, as such, are not described here.

After reading out second key information through the recording and reproduction control section 12, the key information readout section 113 sends the second key information to the key information management section 112. The key information management section 112 sends the second key information thus received to the authentication section 111, reads out the first key information stored in the key information storage section 115, and extracts the second key information from the first key information (S111).

After extracting the second key information, the key information management section 112 sends the second key information to the authentication section 11. The authentication section 111 collates the two pieces of second key information received from the key information management section 112 (S101). That is, the authentication section 111 determines whether or not the second key information read out from the optical disk 10a and the second key information extracted from the first key information stored in the key information storage section 115 match each other (S111).

If it is determined by the authentication section 111 that the two pieces of second key information match each other (YES in S111), the process shifts to S112. The step S112 is identical to the step S41 and, as such, is not described here.

If, in S112, the recording and reproduction control section 12 records the first key information on the optical disk 10a, the key information management section 112 erases the first key information stored in the key information storage section 115 (S113), whereby the process of temporary ejection from the recording and reproduction device 1 is completed.

It should be noted that if YES in S108 and NO in S111, the device control section 13 causes the optical disk 10 to be ejected from the disk insertion section (S114), as in the case shown in Fig. 6, and then returns to S105. Similarly, if NO in S106, the device control section 13 returns to S105.

As described above, the key information management section 112 stores, in the key information storage section 115, first key information read out by the key information readout section 113 during execution of an OS by the device control section 13.

Thus, upon insertion of an optical disk 10, the recording and reproduction device 1 can determine, by use of the first key information stored in the key information storage section 115, whether or not the optical disk 10 is an optical disk 10 having recorded thereon the OS being executed by the device control section 13. Further, since the key information readout section 113 stores only the first key information in the key information storage section 115, the recording and reproduction device 1 can simplify the process as compared with the case where second key information is also read out.

Further, by executing the steps S109 to S112, the recording and reproduction device 1 can determine whether the optical disk 10 with which the OS being executed by the device control section 13 was authenticated for use and the inserted optical disk 10 are identical or not and, as such, can surely write the first key information stored in the key information storage section 115 back onto the original optical disk 10 (the optical disk 10 on which the first key information had been recorded).

### (Flow of a Process in the Recording and Reproduction Device at the Time of OS Termination)

Next, the flow of a process (OS termination process) in the recording and reproduction device 1 at the time of OS termination is described with reference to Fig. 11. Fig. 11 is a flow chart showing the flow of the process in the recording and reproduction device 1 at the time of OS termination.

First, when a user carries out an operation of terminating the OS (an operation such as activating an exit option for the OS or turning off the recording and reproduction device 1), the device control section 13 sends a termination detection signal to the recording and reproduction control section 12. The subsequent steps S121 to S123 are identical to the steps S51 to S53 of Fig. 7 respectively and, as such, are not described here.

By confirming the existence of key information in the key information storage section 115 in S123, the key information management section 112 determines whether or not there exists first key information in the key information (S124).

If the key information management section 112 determines that the key information storage section 115 has no first key information stored therein (NO in S124), the key information management section 112 sends the determination result to the device control section 13. The subsequent step S 125 is identical to the step S56 of Fig. 7 and, as such, is not described here.

It should be noted that the step S 126, to which the process shifts if NO in S121, and the steps S127 to S130, to which the process shifts if YES in S124, are identical to S57 and S59 to S62 of Fig. 7 respectively and, as such, are not described here.

As described above, when the execution of an OS by the device control section 13 is terminated, the recording and reproduction device 1 can, on the one hand, render the previously inserted optical disk 10 usable in another recording and reproduction device and, on the other hand, render the OS unusable in the recording and reproduction device 1 (i.e., the recording and reproduction device from which the optical disk 10 has been ejected). This allows the recording and reproduction device 1 to ensure sufficient safeguards for the OS.

### (Embodiment C)

Next, another embodiment C of Embodiment 1 is described below with reference to Figs. 12 through 15. A case is described here where a recording and reproduction device 1a, i.e., a modification of the recording and reproduction device 1 uses third and fourth key information recorded on an optical disk 10.

It should be noted that those members which have the same functions as those of the embodiment A are given the same reference numerals and, as such, are not described below. Further, those processes which the recording and reproduction device 1a carries out are described with reference to a case where an optical disk 10 has been inserted into the recording and reproduction device 1a. However, as for those processes which are carried out with respect to the third and fourth key information, the same processes are carried out also when an optical disk 10a has been inserted.

### (Modification of the Control Section)

Next, the configuration of a control section 20a in a recording and reproduction device 1a, i.e., in a modification of the recording and reproduction device 1 of Fig. 1 is described with reference to Fig. 12. Fig. 12 is a block diagram showing the configuration of a control section 20a in a modification of the recording and reproduction device (i.e., in a recording and reproduction device 1a) according to the present embodiment.

As shown in Fig. 12, the recording and reproduction device 1a includes a control section 20a instead of a control section 20. Further, the control section 20a includes a key information control section 11a including a device type determining section 116 (device type determining means) and a device limiting section 117 (device limiting means). That is, the control section 20a of the recording and reproduction device 1a according to the present embodiment is different from the control section 20 of the recording and reproduction device 1 according to the embodiments A and B in that the control section 20a includes the device type determining section 116 and the device limiting section 117.

The device type determining section 116 serves to determine whether or not third key information recorded on an optical disk 10 and model information contained in device unique information stored in the key information storage section 115 match each other, thereby determining whether or not an OS recorded on the optical disk 10 can be activated by the recording and reproduction device 1a.

It should be noted that the model information does not need to be contained in the device unique information and may be any type of information that indicates the model of recording and reproduction device 1.

The device limiting section 117 serves to determine whether or not the device unique information of a recording and reproduction device 1 having an optical disk 10 inserted therein exists in fourth key information recorded on the optical disk 10. Further, if the device unique information does not exists in the fourth key information, the device limiting section 117 serves to determine whether or not it is possible to record the device unique information as the fourth key information on the optical disk 10.

Further, since the key information control section 11a includes the device type determining section 116 and the device limiting section 117, the embodiment C is different from the embodiments A and B also in that the key information management section 112 manages these members.

### (Process in the Recording and Reproduction Device (Modification) at the Time of OS Activation)

Next, a process (OS activation process) in the recording and reproduction device 1a at the time of OA activation is described with reference to Fig. 13. Fig. 13 is a flow chart showing the process in the recording and reproduction device 1a at the time of OS activation.

Let it be assumed here that the optical disk 10 has set up in advance thereon the models of recording and reproduction devices (including at least the recording and reproduction device 1a) in which the optical disk 10 is used and has recorded thereon model information serving as third key information for discriminating the model of recording and reproduction device 1a from another model of recording and reproduction device, and that the memory section 15 has stored therein device model information indicating the model of recording and reproduction device 1a and serving as model information for discriminating the model of recording and reproduction device 1a from another model of recording and reproduction device.

Further, the steps S141 to S146, S149 to S157, and S160 of Fig. 13 are identical to the steps of Fig. 5 and, as such, are not described here. That is, the process of Fig. 13 is achieved by adding steps S 147, S148, S158, and S159 between the steps S16 and S17 of Fig. 5.

If the authentication section 111 determines that authentication for activation of the OS recorded on the optical disk 10 has been completed successfully (YES in S146), the authentication section 111 sends the device type determining section 116 a successful authentication notification indicating that the authentication has been completed successfully. Upon receiving the successful authentication notification, the device type determining section 116 instructs the key information readout section 113 through the key information management section 112 to read out the third key information from the optical disk 10. It should be noted that the concrete process that is carried out at this point in time is identical to the process that is carried out if YES in S18 and, as such, is not described here.

After reading out the third key information through the recording and reproduction control section 12, the key information readout section 113 sends the third key information to the device type determining section 116 through the key information management section 112. Upon receiving the third key information from the key information management section 112, the device type determining section 116 reads out the device unique information stored in the key information storage section 115.

The device type determining section 116 collates the third key information read out from the optical disk 10 and the model information, contained in the device unique information stored in the key information storage section 115, which indicates the model of recording and reproduction device 1a. That is, the device type determining section 116 determines whether or not the third key information recorded on the optical disk 10 and the device model information indicating the model of recording and reproduction device 1a and serving as model information for discriminating the model of recording and reproduction device 1a from another model of recording and reproduction device match each other (S147).

This allows the recording and reproduction device 1a to determine whether or not the inserted optical disk 10 is usable in the recording and reproduction device 1a. That is, since the optical disk 10 can be used only in the model of recording and reproduction device 1a indicated by the third key information, it is possible to further improve safeguards for the optical disk 10. Furthermore, the recording and reproduction device 1a can provide a particular application to a user who uses the target OS.

If the device type determining section 116 determines that the third key information and the device unique information match each other (YES in S 147), the device type determining section 116 sends the determination result to the device limiting section 117. Upon receiving the determination results indicating that the third key information and the device unique information match each other, the device limiting section 117 instructs the key information readout section 113 through the key information management section 112 to read out the fourth key information from the optical disk 10. It should be noted that the concrete process that is carried out at this point in time is identical to the process that is carried out when the third key information is read out and, as such, is not described here.

After reading out the fourth key information through the recording and reproduction control section 12, the key information readout section 113 sends the fourth key information to the device limiting section 117 through the key information management section 112. Upon receiving the fourth key information from the key information readout section 113, the device limiting section 117 reads out the device unique information stored in the key information storage section 115.

The device limiting section 117 collates the fourth key information read out from the optical disk 10 and the device unique information. That is, by determining whether or not the fourth key information recorded on the optical disk 10 and the device unique information stored in the key information storage section 115 match each other, the device limiting section 117 determines whether or not device unique information indicative of the recording and reproduction device 1a into which the optical disk 10 has been inserted exists in the fourth key information (S148).

If the device limiting section 117 determines that there is fourth key information that matches the device unique information (YES in S 148), the device limiting section 117 sends the determination result to the device control section 13. Upon receiving the determination result indicating that there is fourth key information that matches the device unique information, the device control section 13 actives the OS stored in the memory section 15 (S149), whereby the OS activation process in the recording and reproduction device 1a is completed.

Meanwhile, if the device limiting section 117 determines that there is no fourth key information that matches the device unique information (NO in S 148), the device limiting section 117 determines whether or not it is possible to record the device unique information as fourth key information on the optical disk 10 (S158). It should be noted that in receiving fourth key information, for example, the device limiting section 117 may receive remaining-capacity information, contained in the fourth key information, which indicates a remaining capacity that can be recorded as the fourth key information.

If the device limiting section 117 determines that it is possible to record the device unique information as fourth key information on the optical disk 10 (YES in S158), the device limiting section 117 instructs the key information recording and erasing section 114 (key information erasing means, key information recording means, fourth key information recording means) to record the device unique information as fourth key information in a predetermined region (specifically, in the key information region 109) of the optical disk 10. Upon receiving the instruction, the key information recording and erasing section 114 uses the recording and reproduction control section 12 to record the device unique information as new fourth key information in the key information region 109 of the optical disk 10 (S159). It should be noted that after S159, the process shifts to S 149.

It should be noted that if NO in S141, NO in S146, NO in S147, NO in S150, NO in S152, NO in S156, and NO in S158, the device control section 13 ejects the optical disk 10 from the recording and reproduction device 1 (S 160), thereby causing the recording and reproduction device 1a to complete the OS activation process, as in the case shown in Fig. 5.

It should be noted that although, in the process of Fig. 13, the device type determining section 116 carries out its step (S147) and the device limiting section 1 17 carries out its steps (S148, S158, and S159) after the authentication section 111 carries out its step (S146), this does not imply any limitation. That is, the authentication section 111 may carry out its step after the device type determining section 116 carries out its step and the device limiting section 117 carries out its steps.

Further, although, in the process of Fig. 13, the device type determining section 116 carries out its step and the device limiting section 117 carries out its steps, this does not imply any limitation. Either the device type determining section 116 or the device limiting section 117 may carry out its step(s).

As described above, the authentication section 111 carries out authentication if the device type determining section 116 determines that the model information and the third key information match each other. This makes it impossible to use the optical disk 10 in a model of recording and reproduction device 1 other than the model of recording and reproduction device 1 set up on the optical disk 10, thus restricting use of the first information.

Further, the authentication section 111 carries out authentication if the device limiting section 117 determines that the model information and the fourth key information match each other. This makes it impossible to use the optical disk 10 in a model of recording and reproduction device 1 other than the model of recording and reproduction device 1 set up on the optical disk 10, thus restricting use of the first information.

Therefore, by including the device type determining section 116 and the device limiting section 117, the recording and reproduction device 1 can use the first information with sufficient safeguards for the OS.

### (Flow of a Process in the Recording and Reproduction Device (Modification) at the Time of Temporary Ejection)

Next, the flow of a process in the recording and reproduction device 1 at the time of temporary ejection is described with reference to Fig. 14. Fig. 14 is a flow chart showing the flow of the process in the recording and reproduction device 1a at the time of temporary ejection.

Further, the steps S171 to S180 and S 183 to S 185 of Fig. 14 are identical to the steps of Fig. 6 and, as such, are not described here. That is, the process of Fig. 14 is achieved by adding steps S181 and S182 between the steps S40 and S41 of Fig. 6.

If the authentication section 111 determines that the two pieces of second key information match each other (YES in S180), the authentication section 111 sends the determination result to the device type determining section 116. Upon receiving the determination result indicating that the two pieces of second key information match each other, the device type determining section 116 instructs the key information management section 112 to read out the third key information from the optical disk 10. Upon receiving the instruction, the key information management section 112 sends the key information readout section 113 a readout instruction to read out the third key information from the optical disk 10. Upon receiving the readout instruction, the key information readout section 113 reads out the third key information through the recording and reproduction control section 12 and sends the third key information to the device type determining section 116 through the key information management section 112.

As in the step S 147 of Fig. 13, the device type determining section 116 determines whether or not the third key information read out from the optical disk 10 and the information, contained in the device unique information stored in the key information storage section 115, which indicates the model of recording and reproduction device 1a match each other (S181).

If the device type determining section 116 determines that the third key information and the device unique information match each other (YES in S181), the device type determining section 116 sends the determination result to the device limiting section 117. As in the step S148 of Fig. 13, the device limiting section 117 determines whether or not the fourth key information read out from the optical disk 10 by the key information readout section 113 and the device unique information stored in the key information storage section 115 match each other (S182).

If the device limiting section 117 determines that there is fourth key information that matches the device unique information (YES in S 182), the device limiting section 117 sends the determination result to the key information management section 112. Upon receiving the determination result indicating that there is fourth key information that matches the device unique information, the key information management section 112 sends the key information recording and erasing section 114 the first key information stored in the key information storage section 115. Upon receiving the first key information, the key information recording and erasing section 114 records the first key information on the optical disk 10 through the recording and reproduction control section 12 (S183).

It should be noted that if YES in S178 and NO in S180 to S182, the device control section 13 causes the optical disk 10 to be ejected from the disk insertion section (S185), and then returns to S175. Similarly, if NO in S176, the device control section 13 returns to S175.

### (Flow of a Process in the Recording and Reproduction Device at the Time of OS Storage)

Next, the flow of a process that is carried out in the recording and reproduction device 1a when the OS recorded on the optical disk 10 is stored in the memory section 15 of the recording and reproduction device 1a is described with reference to Fig. 15. Fig. 15 is a flow chart showing the flow of the process that is carried out in the recording and reproduction device 1a when the OS recorded on the optical disk 10 is stored in the memory section 15 of the recording and reproduction device 1a.

Further, the steps S192 and S193 of Fig. 15 are identical to the steps S71 and S72 of Fig. 8 and, as such, are not described here. That is, the process of Fig. 15 is achieved by adding steps S191 and S194 to the process of Fig. 8.

First, as in the step S 147 of Fig. 13, the device type determining section 116 determines whether or not the third key information read out from the optical disk 10 and the information, contained in the device unique information stored in the key information storage section 115, which indicates the model of recording and reproduction device 1a match each other (S191).

If the device type determining section 116 determines that the third key information and the device unique information match each other (YES in S191), the device type determining section 116 sends the determination result to the code decoding section 14 through the key information management section 112. Upon receiving the determination result indicating that the third key information and the device unique information match each other, the code decoding section 14 carries out the step S192. Then, after the recording and reproduction control section 12 carries out the step S193, the recording and reproduction control section 12 sends the device limiting section 117 through the key information recording and erasing section 114 and through the key information management section 112 a storage notification indicating that the decoded OS has been stored in the memory section 15.

Upon receiving the storage notification, the device limiting section 117 instructs the key information recording and erasing section 114, as in the step S159 of Fig. 13, to record the device unique information, stored in the key information storage section 115, as fourth key information on the optical disk 10. This causes the key information recording and erasing section 114 to store the device unique information as fourth key information on the optical disk 10 through the recording and reproduction control section 12 (S194).

### (Supplementary Information)

Finally, the blocks of the recording and reproduction device 1 or 1a according to the present embodiment, or the key information control section 11 (authentication section 11, key information management section 112, key information readout section 113, key information recording and erasing section 114 (enable/disable control section 21), device type determining section 116, device limiting section 117), the recording and reproduction control section 12 (information readout section 121, information storage control section 122), the device control section 13, and the code decoding section 14 in particular, may be constituted by hardware logic, or may be constituted by software with use of a CPU as described below.

That is, the recording and reproduction device 1 or 1a according to the present embodiment includes: a CPU (central processing unit) for executing an instruction of a control program for realizing various functions; a ROM (read-only memory) in which the program has been stored; a RAM for expanding the program; and a memory device (recording medium), such as a memory, in which the program and various data are stored. The object of the present invention can also be achieved by providing the mobile communication device 1 with a storage medium in which a program code (executable program, intermediate code, or source program) of the control program of the mobile communication device 1 has been stored in a computer readable manner, and by causing the computer (CPU or MPU) to read and execute the program code stored in the storage medium, the program code serving as software for realizing the aforementioned functions.

Examples of the recording medium include: a tape such as a magnetic tape or a cassette tape; a magnetic disk such as a floppy (registered trademark) disk or a hard disk; an optical disk such as a CD-ROM, an MO, an MD, a DVD, or a CD-R; a card such as an IC card (inclusive of a memory card) or an optical card; and a semiconductor memory such as a mask ROM, an EPROM, an EEPROM, or a flash ROM.

Further, the recording and reproduction device 1 or 1a according to the present embodiment may be connectable to a communication network, and the program code may be supplied via the communication network. Examples of the communication network include, but are not particularly limited to, the Internet, an intranet, an extranet, a LAN (local area network), an ISDN (integrated services digital network), a VAN (value added network), a CATV (cable TV) communication network, a virtual private network, a telephone network, a mobile communication network, and a satellite communication network. Further, usable examples of a transmission medium that constitutes the communication network include, but are not particularly limited to, a cable medium such as IEEE 1394, a USB, power line communication, a cable TV line, a telephone line, or an ADSL line and a wireless medium such as IrDA, infrared rays used for a remote controller, Bluetooth (registered trademark), IEEE 802.11, HDR (High Data Rate), a mobile phone network, satellite connection, or a terrestrial digital network. It should be noted that the present invention can also be realized in the form of a computer data signal realized by electronic transmission of the program code and embedded in a carrier wave.

### (Putting the Present Invention Differently)

It should be noted that the present invention can be expressed as follows:

That is, a recording and reproduction device according to the present invention includes: key information readout means which reads out key information from an information recording medium; authentication means which authenticates information for permission of use by use of the key information; key information storage means in which the key information thus read out is stored; and key information recording and erasing means which records or erases the key information, when the information recording medium is ejected, the key information being read out by the key information readout means, stored in the key information storage means, and erased by the key information recording and erasing means.

Further, a recording and reproduction device according to the present invention, targeted at an information recording medium, having a reproduce-only region and a recordable region having the first key information recorded therein, with which information recorded in the reproduce-only region is authenticated for permission of use by use of first key information recorded in the recordable region, is configured to further include: key information readout means which reads out the first key information from the information recording medium; authentication means which authenticates the information for permission of use by use of the key information; key information storage means in which the first key information thus read out is stored; and key information recording and erasing means which records or erases the first key information, when the information recording medium is ejected, the first key information being read out by the key information readout means, stored in the key information storage means, and erased by the key information recording and erasing means.

Further, the recording and reproduction device according to the present invention is preferably configured such that: the key information readout means reads out second key information unique to the information recording medium; and the authentication means identifies the information recording medium by use of the second key information.

Further, the recording and reproduction device according to the present invention is preferably configured to further include key information management means which manages the key information recorded on the information recording medium or stored in the key information storage means, and controlled such that when the information recording medium is ejected during execution of an operating system installed from the information recording medium into in-device memory means, the key information management means stores the first key information in the key information storage means, erases the first key information from the recordable region, and stores the second key information in the key information storage means.

Further, the recording and reproduction device according to the present invention is preferably controlled such that when an information recording device has been inserted again during execution of the operating system, the key information management means reads out the second key information and causes the authentication means to determine whether the second key information matches the second key information stored in the key information storage means and, if it does, determines that the information recording medium is one that was ejected during execution of the operating system, records the first key information in the recordable region of the information recording medium, and erases the first key information from the key information storage means.

Further, the recording and reproduction device according to the present invention is preferably controlled such that if the first key information and the second key information have been stored in the key information storage means at the time of termination of execution of the operating system, the key information management means records the first key information in the recordable region of the information recording medium, erases the first key information from the key information storage means, and erases the second key information from the key information storage means.

Further, the recording and reproduction device according to the present invention is preferably controlled such that the key information management means reads out the first key information from the information recording medium when the information recording medium has been inserted while the operating system is not being executed, and that if the first key information has not been recorded, and if the key information storage means has neither the first nor second key information stored therein, the key information management means causes the authentication means to carry out authentication by use of the first key information so that activation of the operating system is started.

Further, the recording and reproduction device according to the present invention is preferably controlled such that the key information management means reads out the first key information from the information recording medium when the information recording medium has been inserted while the operating system is not being executed, and that if the first key information has not been recorded, and if the key information management means confirms that the key information storage means has both the first key information and second key information stored therein, the key information management means reads out the second key information from the information recording medium, causes the authentication means to determine whether the two pieces of second key information match each other and, if they do, causes the authentication means to carry out authentication by use of the first key information so that activation of the operating system is started, records the first key information in the recordable region, and erases the first key information and the second key information from the key information storage means.

Further, the recording and reproduction device according to the present invention is preferably configured to copy or install, in the in-device memory on the recording and reproduction device, information recorded in the reproduce-only region of the information recording medium, and to use the information from the in-device memory means.

Further, the recording and reproduction device according to the present invention is preferably configured such that the information recorded in the reproduce-only region is an operating system, is activated in the in-device memory means on the recording and reproduction device, and stores data in the recordable region.

Further, the recording and reproduction device according to the present invention, targeted at the information recording medium, is preferably configured to further include key information management means which manages the key information recorded on the information recording medium or stored in the key information storage means, and controlled such that when the information recording medium is ejected during execution of an operating system installed from the information recording medium into in-device memory means, the key information management means stores the first key information in the key information storage means and erases the first key information from the recordable region.

Further, the recording and reproduction device according to the present invention, targeted at the information recording medium, is preferably controlled such that when an information recording device has been inserted again during execution of the operating system, the key information management means reads out the second key information, generates first key information from the second key information, and causes the authentication means to determine whether the first key information matches the first key information stored in the key information storage means and, if it does, determines that the information recording medium is one that was ejected during execution of the operating system, records the first key information in the recordable region of the information recording medium, and erases the first key information from the key information storage means.

Further, the recording and reproduction device according to the present invention, targeted at the information recording medium, is preferably controlled such that if the first key information has been stored in the key information storage means at the time of termination of execution of the operating system, the key information management means records the first key information in the recordable region of the information recording medium and erases the first key information from the key information storage means.

Further, the recording and reproduction device according to the present invention, targeted at the information recording medium, is preferably controlled such that the key information management means reads out the first key information from the information recording medium when the information recording medium has been inserted while the operating system is not being executed, and that if the first key information has been recorded, and if the key information storage means has no first key information stored therein, the key information management means causes the authentication means to carry out authentication by use of the first key information so that activation of the operating system is started.

Further, the recording and reproduction device according to the present invention, targeted at the information recording medium, is preferably controlled such that the key information management means reads out the first key information from the information recording medium when the information recording medium has been inserted while the operating system is not being executed, and that if the first key information has not been recorded, and if the key information storage means has the first key information stored therein, the key information management means reads out the second key information from the information recording medium, generates first key information from the second key information, causes the authentication means to determine whether the two pieces of first key information match each other and, if they do, causes the authentication means to carry out authentication by use of the first key information so that activation of the operating system is started, records the first key information in the recordable region of the information recording medium, and erases the first key information from the key information storage means.

Further, the recording and reproduction device according to the present invention is preferably configured to record, in the recordable region, environment configuration information set up by a user in at least one recording and reproduction device, together with identification information unique to the recording and reproduction device.

Further, the recording and reproduction device according to the present invention is preferably configured such that the second key information contains at least BCA code information.

Further, the recording and reproduction device according to the present invention is preferably configured to further include information code decoding means, wherein: the first key information contains key information for decoding the information recorded in the reproduce-only region; and by use of the first key information thus read out, the information code decoding means decodes the information recorded in the reproduce-only region.

Further, the recording and reproduction device according to the present invention is preferably configured such that: the first key information is recorded in a region of the recordable region that is different from a user data region; and the key information readout means reads out the first key information from a region that is different from a user region.

Further, the recording and reproduction device according to the present invention is preferably configured to further include device type determining means which records, as third key information in the recordable region of the information recording medium, information of a recording and reproduction device in which the information recorded in the reproduce-only region or in the recordable region can be used, wherein the authentication means renders the information usable only when the third key information read out by the key information readout means matches key information of a type of recording and reproduction device registered in advance in the device type determining means.

Further, the recording and reproduction device according to the present invention is preferably configured to further include device limiting means, wherein: the key information recording and erasing means records, as fourth key information in the recordable region of the information recording medium, information unique to a recording and reproduction device that used the information recorded in the reproduce-only region; and the authentication means renders the information usable only when the fourth key information read out from the information recording medium by the key information readout means is contained in fourth key information stored in the device limiting means.

Further, the recording and reproduction device according to the present invention is preferably configured such that the authentication means carries out authentication by use of the first key information, the second key information, the third key information, and the fourth key information.

Further, an information recording medium according to the present invention is preferably an information recording having a reproduce-only region and a recordable region having first key information recorded therein, information recorded in the reproduce-only region being authenticated for permission of use by use of the first key information.

Further, the information recording medium according to the present invention is preferably configured such that the information recorded in the reproduce-only region is an operating system, is activated in in-device memory means on the recording and reproduction device, and stores data in the recordable region.

Further, the information recording medium according to the present invention is preferably configured such that environment configuration information set up by a user in at least one recording and reproduction device is recorded in the recordable region together with identification information unique to the recording and reproduction device.

Further, the information recording medium according to the present invention is preferably a multilayer structure having at least one reproduce-only layer and at least one recordable layer.

Further, the information recording medium according to the present invention is preferably configured such that the first key information recorded in the recordable region contains key information for decoding the information recorded in the reproduce-only region.

Further, the information recording medium according to the present invention preferably has the first key information recorded in a region of the recordable region that is different from a user data region.

Further, the information recording medium according to the present invention preferably has recorded information as third key information in the recordable region, the information regarding a recording and reproduction device in which the information recorded in the reproduce-only region and in the recordable region is usable.

Further, the information recording medium according to the present invention preferably has information recorded as fourth key information in the recordable region, the information being unique to a recording and reproduction device that used the information recorded in the reproduce-only region.

Further, the information recording medium according to the present invention preferably has the first key information recorded in advance before the information recording medium starts to be used in a recording and reproduction device.

### [Embodiment 2]

Another embodiment of the present invention is described below with reference to Figs. 17 through 29.

### (Brief Overview of the Present Embodiment)

The recording and reproduction devices 1 and 1a of the present embodiment each include an authentication section 111 which, by use of first key information for permitting use of the first information, carries out authentication for use of the first information stored in the memory section 15, and which confirms whether or not the authentication has been completed successfully, the enable/disable control section 21 being achieved by a key information recording and erasing section 114 which, in accordance with a result of confirmation of the authentication by the authentication section 111, records, on the optical disk 10, prohibition key information for prohibiting use of the first information.

Further, the recording and reproduction devices 1 and 1a of the present embodiment each include: an authentication section 111 which, by use of first key information for permitting use of the first information, carries out authentication for use of the first information recorded on the optical disk 10, and which confirms whether or not the authentication has been completed successfully; and a key information recording and erasing section 114 which, in accordance with a result of confirmation of the authentication by the authentication section 111, records, on the optical disk 10, prohibition key information for prohibiting use of the first information.

In either of the configurations, by being inserted into the recording and reproduction device 1 or 1a to get the prohibition key information recorded thereon, the optical disk 10 comes into a recording state that is different from that in which the optical disk 10 had been before it was inserted into the recording and reproduction device 1 or 1a. Thus, even if the optical disk 10 has been temporarily ejected from the recording and reproduction device 1 or 1a and an attempt to use the first information in another recording and reproduction device has been made, for example, the first information cannot be used in the another recording and reproduction device, since the optical disk 10 has the prohibition key information recorded thereon. That is, by recording the prohibition key information on the optical disk 10, the recording and reproduction device 1 or 1a render the first information unusable when the optical disk 10 has been inserted into another recording and reproduction device.

### (Embodiment D)

An embodiment D of Embodiment 2 is described below with reference to Figs. 17 through 24 and 29.

### (Structure of an Optical Disk)

First, an optical disk 10 (information recording medium) according to the present embodiment is described with reference to Fig. 18. Fig. 18 is a cross-sectional view schematically showing the structure of an example of an optical disk 10 according to the present embodiment.

The optical disk 10 is a multilayer structure having a plurality of layers on which content (first information) such as software or video data, audio data, text data, etc. or information such as various types of key information that are to be described later can be recorded, and includes a translucent layer 101, a first information recording layer 102 (reproduce-only region, reproduce-only layer), an intermediate layer 103, a second information recording layer 104 (recordable region), and a substrate 105, arranged in this order starting from the plane of incidence of reproducing light. The optical disk 10 is, for example, a BD on which a large volume (50 GB) of information can be recorded.

The translucent layer 101 is made of a highly transparent ultraviolet curing resin (e.g., a polycarbonate film and a transparent adhesive), for example, having a thickness of 75 µm. It should be noted that the translucent layer 101 may, for example, be a 0.6 mm polycarbonate substrate, depending on the optical system of the recording and reproduction device 1.

The first information recording layer 102 is a ROM (read-only memory) layer, made of aluminum nitride having a thickness of 15 nm, whose refractive index has been adjusted by the flow rate of nitrogen during film formation, for example. It should be noted that the first information recording layer 102 is not limited to aluminum nitride and may, for example, be made of silicon nitride or a dielectric composed mainly of aluminum nitride or of silicon nitride, as well as aluminum nitride.

The intermediate layer 103 is made of a highly transparent ultraviolet curing resin, for example, having a thickness of 25 µm. Further, the intermediate layer 103 has pre-pits provided in a surface thereof facing the first information recording layer 102 and made of depressed and raised parts corresponding to information that is recorded as a shape on the first information recording layer 102.

The second information recording layer 104 is an RE (REwritable) layer, for example, including a first protective film (e.g., ZnS-SiO₂ having a thickness of 35 nm), a second protective film (e.g., ZrO₂ having a thickness of 5 nm), a recording layer (e.g., GeTe-Sb₂Te₃ having a thickness of 10 nm), a third protective film (e.g., ZrO₂ having a thickness of 5 nm), a fourth protective film (e.g., ZnS-SiO₂ having a thickness of 35 nm), a fifth protective film (e.g., ZrO₂ having a thickness of 5 nm), and a reflecting film (e.g., APC (AgPdCu) having a thickness of 20 nm), joined in this order on top of each other.

The substrate 105 is made of polycarbonate, for example, having a thickness of 1.1 mm. It should be noted that the substrate 105 may be made of a polyolefin resin, a metal, or the like, as well as polycarbonate.

It should be noted that although the optical disk 10 of Fig. 18 is structured to include a single first information recording layer 102 and a single second information recording layer 104, it is not limited to such a structure and may be structured to have a plurality of information recording layers 102 and a plurality of second information recording layers 104.

Alternatively, the second information recording layer 104 (recordable layer) may be an R (Recordable) layer. In this case, new information is added by so overwriting the already-recorded information that the already-recorded information is no longer readable, instead of rewriting information (e.g., first key information). Alternatively, the first information recording layer 102 may be an RE layer. In this case, the first information recording layer 102 is used as a reproduce-only layer, e.g., by use of a flag that prohibits information from being rewritten. Alternatively, the first information recording layer 102 may be an R layer. In this case, the first information recording layer 102 can be used as a reproduce-only layer because information once recorded on the R layer cannot be rewritten.

Next, examples of pieces of information that are recorded on the first information recording layer 102 and the second information recording layer 104 are described with reference to Fig. 19. (a) of Fig. 19 is a cross-sectional view more specifically showing the structure of first and second information recording layers 102 and 104 of an optical disk 10, and (b) of Fig. 19 shows an example of information that is recorded in a key information region 109 (nonuser data region) of the second information recording layer 104. It should be noted that (a) of Fig. 19 omits the intermediate layer 103, which is to be sandwiched between the first and second information recording layers 102 and 104.

As shown in (a) of Fig. 19, the first and second information recording layers 102 and 104 are structured to include a lead-in region 106 (nonuser data region), a user data region 107, and a lead-out region 108 (nonuser data region), arranged in this order starting from the inner peripheral side of the optical disk 10.

The lead-in region 106 is a region in which disk identification information, recording condition information, and the like are recorded, and is a region which is first irradiated with reproducing light (from which information is first read out) when the recording and reproduction device 1 executes processing on each layer. In (a) of Fig. 19, the second information recording layer 104 has various types of key information (prohibition key information, third key information, and fourth key information) recorded in its lead-in region 106.

The user data region 107 is a region in which various pieces of software, content, and the like (first information) that need to be authenticated for use have been recorded (or are recorded) through the recording and reproduction device 1. In (a) of Fig. 19, the first information recording layer 102 has recorded in its user data region 107 an OS (operating system) (software) that can be used (activated, executed) by the recording and reproduction device 1, which is to be described later, and the second information recording layer 104 has recorded in its user data region 107 user configuration information serving as environment information set up for the OS by a user through the recording and reproduction device 1. It should be noted that the user data region 107 may have software other than the OS recorded as information therein.

The lead-out region 108 is a region for notifying the recording and reproduction device 1 of the end of each layer and usually has no information recorded therein.

The key information region 109, provided in the lead-in region 106 of the second information recording layer 104, is a region in which the prohibition key information, the third key information, and the fourth key information can be recorded. It should be noted that these pieces of key information will be described in detail later. Further, although the key information region 109 is provided in the lead-in region 106 of the second information recording layer 104, it is not limited to being provided in such a region and may be provided in another region.

Further, as shown in (a) of Fig. 19, the second information recording layer 104 further has a medium discriminating region (BCA), provided closer to the inner peripheral side than the lead-in region 106 is, in which to record unique information of the optical disk 10, i.e., second key information (medium unique information) that serves as unique information for discriminating the optical disk 10 from another information recording medium.

It should be noted that although an example of the second key information is a BCA (burst cutting area) code, it is not limited to such a code and may be any type of information that allows discrimination of the optical disk 10 from another information recording medium.

Next, (b) of Fig. 19 shows an example of a state in which the key information region 109 has prohibition key information, third key information, and fourth key information recorded therein.

The prohibition key information serves to prohibit use of the OS recorded on the optical disk 10 and, when the OS is ejected from a disk insertion section (not illustrated) during use (execution) of the OS by the recording and reproduction device 1, is recorded on the optical disk 10 having the OS recorded thereon. It should be noted that the prohibition key information will be described in further detail later.

The third key information is model information, contained in the device unique information of a recording and reproduction device 1, which indicates the model of recording and reproduction device 1, and serves to restrict the model of recording and reproduction device 1 into which the optical disk 10 is inserted. In (b) of Fig. 19, models (A) and (B) of recording and reproduction device 1 have been recorded. It should be noted that, in (b) of Fig. 19, the third key information can be recorded up to four models of recording and reproduction device 1.

It should be noted that the term "device unique information" means unique information recorded in advance in a recording and reproduction device 1 for discriminating the recording and reproduction device 1 from another recording and reproduction device.

The fourth key information serves to indicate the device unique information of a recording and reproduction device 1 into which the optical disk 10 has been inserted, and serves to restrict the number of recording and reproduction devices 1 into which the optical disk 10 is inserted. In (b) of Fig. 19, "A01001", "A00055", -B00800-, "A00234", "A00234", "B10022" and "B00001", which are pieces of device unique information for their respective recording and reproduction devices 1, have been recorded as the fourth key information in the key information region 109.

Further, in (b) of Fig. 19, the fourth key information, i.e., device unique information can be recorded up to eight recording and reproduction devices 1. That is, the optical disk 10 of Fig. 19 can permit eight recording and reproduction devices 1 to use it.

As described above, the optical disk 10 has recorded on its first information recording layer 102 an OS that is usable in a recording and reproduction device 1, and is structured such that prohibition key information for prohibiting use of the first information is recorded on its second information recording layer 104 by the recording and reproduction device.

Thus, with sufficient safeguards (license protection) for the OS recorded on the optical disk 10, the optical disk 10 allows a plurality of recording and reproduction devices 1 to use the OS.

Further, since the optical disk 10 is a multilayer structure having at least one first information recording layer 102, it can be formed at a high speed, for example, by a stamper. This makes it possible to mass-produce such optical disks 10.

Furthermore, when the OS is in coded form, information leaks can be prevented, for example, even if the OS is illegally copied. Further, the optical disk 10 allows a recording and reproduction device 1 to use the coded OS by decoding it by use of the first key information.

Further, since the optical disk 10 has the prohibition key information recorded in the key information region 109 that is different from the user data region 107 in which various types of information can be recorded, loss of the prohibition key information can be prevented.

Furthermore, by having the third key information recorded in its key information region 109, the optical disk 10 allows a recording and reproduction device 1 to identify its model by use of the third key information. This makes it possible to restrict the OS recorded on the optical disk 10 to use in a particular model of recording and reproduction device. Further, in the key information region 109 of the optical disk 10, the device unique information of a recording and reproduction device 1 that used the OS is recorded as fourth key information. Use of the fourth key information in a recording and reproduction device 1 into which the optical disk 10 has been inserted makes it possible to restrict the OS recorded on the optical disk 10 to use in a particular recording and reproduction device.

Alternatively, it is possible to provide a plurality of key information regions 109 within a single layer (second information recording layer 104). For example, in preparation for a case where a piece of prohibition key information becomes unreadable due to deterioration in the optical disk 10, it is possible to record prohibition key information in another key information region 109 that is different from a key information region 109 having that piece of first key information recorded therein and read out the prohibition key information.

Alternatively, when there are a plurality of second information recording layers 104, it is possible to provide a key information region 109 on each layer. In such a case, by recording identical pieces of prohibition key information on the plurality of second information recording layers 104, the safety of key information management can be enhanced.

### (Schematic Configuration of a Recording and Reproduction Device)

Next, the configuration of a recording and reproduction device 1 according an embodiment of the present invention is schematically described with reference to Fig. 29. Fig. 29 is a block diagram schematically showing the configuration of a recording and reproduction device 1.

As shown in Fig. 29, the recording and reproduction device 1 mainly includes a memory section 15, a disk loading recognition section 50, a recording and reproduction circuit group 30, an optical head 41, an optical pickup 40, and a control section 20.

Further, the recording and reproduction circuit group 30 mainly includes a pickup drive circuit 31, a laser drive circuit 32, and a reproduction circuit 33.

Further, the recording and reproduction device 1 is a device that records and reproduces information with respect to an optical disk 10 such as a DVD (digital versatile disk) or a BD.

In the recording and reproduction device 1, as shown in Fig. 29, the control section 20 has a recording and reproduction control section 12 (information storage means, information recording means) that uses the pickup drive circuit 31 to move the optical pickup 40 toward a track (not illustrated) of the optical disk 10 as the optical disk 10 rotates.

The optical pickup 40 is provided with the optical head 41. Moreover, the control section 20 sets recording conditions through the laser drive circuit 32, and the optical head 41 irradiates a recording site of the optical disk 10 with a recording laser beam, whereby information is recorded on the track of the optical disk 10.

Further, in the recording and reproduction device 1, the recording and reproduction control section 12 of the control section 20 uses the pickup drive circuit 31 to move the optical pickup 40 toward the recording site of the optical disk 10. Then, the control section 20 uses the laser drive circuit 32 for the optical head 41 to irradiate the optical disk 10 with a reproducing laser beam.

Reflected light detected by the optical head 41 is converted into a reproduction signal by the reproduction circuit 33 and inputted to the recording and reproduction control section 12 of the control section 20, whereby the recording and reproduction device 1 reproduces the information recorded on the track of the optical disk 10.

Further, the recording and reproduction device 1 is provided with the disk loading recognition section 50. The disk loading recognition section 50 serves to detect loading of the optical disk 10, and may be achieved by use of any sensor that can detect loading of the optical disk 10, although examples of the disk loading recognition section 50 include various types of sensors.

Further, the disk loading recognition section 50 is configured to output a detected result as a detection signal to the recording and reproduction control section 12 of the control section 20.

### (Configuration of the Control Section)

Next, the configuration of the control section 20 in the recording and reproduction device 1 according to the present embodiment is described with reference to Fig. 1. Fig. 17 is a block diagram showing the configuration of the control section 20 in the recording and reproduction device 1 according to the present embodiment.

As shown in Fig. 17, the control section 20 serves to control various types of processing in the recording and reproduction device 1, and includes a key information control section 11, a recording and reproduction control section 12, a device control section 13 (execution control means), a code decoding section 14 (code decoding means), and a key information acquisition section 16.

The key information control section 11 serves to control its components to record or erase key information stored in the recording and reproduction device 1 or key information recorded on an optical disk 10. It should be noted that the functions of the components of the key information control section 11 will be described later.

The recording and reproduction control section 12 serves to, in accordance with an instruction from the key information control section 11, read out key information recorded on an optical disk 10 or either record or erase the key information. Further, the recording and reproduction control section 12 also serves to read out (reproduce) an OS recorded on an optical disk 10.

It should be noted that the recording and reproduction control section 12 gives the recording and reproduction circuit group 30 an instruction to record or erase key information or an instruction to read out key information or an OS.

The phrase "erase key information" here means making unrecorded a key information region 109 having various types of key information therein or rewriting key information to be totally irrelevant information (information that makes no sense).

The device control section 13 serves to control a BIOS (basic input/output system) process, an OS activation process, a user authentication process, an OS termination process (OS deactivation process), etc. in the recording and reproduction device 1, for example, when an optical disk 10 having an OS recorded thereon has been inserted.

Further, the device control section 13 also serves to, in accordance with an instruction from the key information control section 11, carry out an OS activation process, an OS termination process, a process of controlling the power source of the recording and reproduction device 1, a process of ejecting an optical disk 10, etc. In addition to this, the device control section 13 also serves to detect an operation of ejecting an optical disk 10, to detect an OS termination operation, to give a prompt to insert a predetermined optical disk 10, etc.

The code decoding section 14 serves to, by use of first key information that is to be described later, decode a coded OS recorded on an optical disk 10.

The key information acquisition section 16 serves to acquire first key information that is needed to use an OS recorded on an optical disk 10 and store the first key information in a key information storage section 115 that is to be described later through a key information management section 112. It should be noted that the first key information is used to permit use of the OS recorded on the optical disk 10 and, for example, is designated "abcdefghij". Further, the first key information may be information for decoding a coded OS.

In acquiring, as the first key information, information attached to the optical disk 10, for example, the key information acquisition section 16 receives the information from a user through an operation section (not illustrated) capable of acquiring a user operation. Alternatively, the key information acquisition section 16 may acquire the first key information from the distributor of the OS or of the optical disk 10 through a network to use the OS. In such a case, the key information acquisition section 16 may be configured to input or acquire the first key information, for example, by giving a prompt by causing a display device (not illustrated) to display an image for inputting or acquiring the first key information.

Next, the configuration of the key information control section 11 is described more specifically. As shown in Fig. 17, the key information control section 11 includes an authentication section 111 (authentication and confirmation means), a key information management section 112 (key information management means, device key confirmation means), a key information readout section 113 (key information readout means, medium key confirmation means), a key information recording and erasing section 114 (key information erasing means, key information recording means), and a key information storage section 115 (memory section).

The authentication section 111 serves to, by use of first key information, authenticate an OS recorded on an optical disk 10 and to confirm the authentication. Further, the authentication section 111 also serves to determine whether or not second key information stored in the key information storage section 115 and second key information recorded on an optical disk 10 match each other.

The key information management section 112 serves to manage the authentication section 111, key information readout section 113, key information recording and erasing section 114, and key information storage section 115 of the key information control section 11. Further, the key information management section 112 also serves to create prohibition key information for prohibiting use of the OS in another recording and reproduction device.

The key information readout section 113 serves to, by instructing the recording and reproduction control section 12, read out key information recorded on an optical disk 10.

The key information recording and erasing section 114 serves to, by instructing the recording and reproduction control section 12, record key information on an optical disk 10 or erase key information recorded on an optical disk 10. In particular, the information recording and erasing section 114 serves to, when the optical disk 10 is ejected during use of the OS, record on the optical disk 10 the prohibition key information created by the key information management section 112.

The key information storage section 115 serves to store key information read out by the key information readout section 113, first key information acquired by the key information acquisition section 16, and prohibition key information created by the key information management section 112, and also stores device unique information indicating the unique information of a recording and reproduction device 1. It should be noted that although the key information storage section 115 is configured to be included in the key information control section 11, it is not limited to such a configuration and may be configured to be contained in the memory section 15.

Further, the memory section 15 of the recording and reproduction device 1 serves to store an OS read out from an optical disk 10 by the key information control section 11. In addition to this, the memory section 15 has stored therein various types of application that are executed by the control section 20.

It should be noted here that the key information management section 112 creates prohibition key information by attaching the device unique information of the recording and reproduction device 1 to either the medium unique information of an optical disk 10 inserted in the recording and reproduction device 1 or first key information acquired by the key information acquisition section 16. It should be noted that the key information management section 112 is not so limited, but serves to set any information as prohibition key information, e.g., set, as prohibition key information, either device unique information (i.e., information stored in advance in the key information storage section 115) per se or medium unique information read out from an optical disk 10.

It should be noted that in order to show that the version of an OS recorded in the first information recording layer 102 of an optical disk 10 is so old that the OS cannot be used, the recording and reproduction device 1 may record prohibition key information in the second information recording layer 104. This allows a user to know, before an activation process is started in starting use of the optical disk 10, that the OS cannot be used, thereby shortening the waiting time.

### (Flow from OS Activation to OS Termination in the Recording and Reproduction Device)

Next, the general flow of a process that is carried out in the recording and reproduction device 1 as it activates an OS is described with reference to Fig. 20. Fig. 20 is a flow chart showing the general flow of the process that is carried out in the recording and reproduction device 1 as it activates an OS.

It is assumed here that the recording and reproduction device 1 has an optical disk 10 inserted therein, reads out an OS recorded on the optical disk 10, and stores the OS in its memory section 15. However, this does not imply any limitation, and the recording and reproduction device 1 may directly activates the OS without storing the OS of the optical disk 10 in its memory section 15.

First, upon insertion of the optical disk 10 into a disk insertion section, the disk loading recognition section 50 (see Fig. 13) detects the insertion of the optical disk 10 into the recording and reproduction device 1. Then, the disk loading recognition section 50 sends the recording and reproduction control section 12 an insertion detection signal indicating that the insertion of the optical disk 10 has been detected.

Upon receiving the insertion detection signal, the recording and reproduction control section 12 sends the device control section 13 a BIOS start instruction signal for starting a BIOS process. Upon receiving the BIOS start instruction signal, the device control section 13 starts a BIOS process (S201). That is, the device control section 13 reads out a BIOS stored in the memory section 15 and starts up the disk insertion section, a keyboard, a video card, a display device, etc. (none of which is illustrated) connected to the control section 20 of the recording and reproduction device 1.

Next, upon completion of the BIOS process, the device control section 13 sends the key information control section 11 a BIOS completion notification indicating that the BIOS process has been completed. The key information control section 11 determines whether or not to permit activation of the OS and sends a result of the determination to the device control section 13.

Upon receiving a result of determination indicating that the activation of the OS is permitted, the device control section 13 starts a process of activating the OS (S202). It should be noted that the process of activating the OS will be described later.

After activating the OS in S2, the device control section 13 carries out a user authentication process (S203). Specifically, the device control section 13 causes the display device to display an image that allows a user to carry out password authentication and fingerprint authentication, thereby instructing the user to carry authentication. Then, the device control section 13 determines whether or not the user authentication has been completed successfully.

If the device control section 13 confirms that the user authentication has been completed successfully, the OS comes into a usable state (state of normal use of the OS) (S204).

Then, upon confirming, for example, through a user operation that there has been an instruction to terminate the OS, the device control section 13 sends the key information control section 11 an OS termination notification indicating that the OS is to be terminated. Upon receiving the OS termination notification, the key information control section 11 carries out a process of terminating the OS.

Upon completion of the process of terminating the OS, the key information control section 11 sends the device control section 13 a process completion notification indicating the completion of the process, whereby the device control section 13 terminates the OS being executed (S205).

### (Flow of a Process in the Recording and Reproduction Device at the Time of OS Activation)

Next, the flow of a process (OS activation process) in the recording and reproduction device 1 at the time of OA activation is described with reference to Fig. 21. Fig. 21 is a flow chart showing the flow of the process in the recording and reproduction device 1 at the time of OS activation.

First, upon insertion of an optical disk 10 (disk) into the disk insertion section, the disk loading recognition section 50 (see Fig. 29) detects the insertion of the optical disk 10 into the recording and reproduction device 1. Then, the disk loading recognition section 50 sends the recording and reproduction control section 12 an insertion detection signal indicating that the insertion of the optical disk 10 has been detected.

Upon receiving the insertion detection signal, the recording and reproduction control section 12 reads out part of information present in a BCA of the optical disk 10 and determines whether or not the inserted optical disk 10 has an OS recorded thereon (whether or not there is an OS disk) (S211). Normally, the BCA has recorded therein information indicative of the type of the optical disk 10 (e.g., information indicative of a two-layer RE, a two-layer R, a single-layer ROM, and a two-layer OS), etc., as well as second key information (medium unique information and individual recognition information) of the optical disk 10. Alternatively, the recording and reproduction control section 12 may determine, by reading out information from the first information recording layer 102, that the optical disk 10 has an OS recorded thereon.

If the recording and reproduction control section 12 determines that the inserted optical disk 10 has an OS recorded thereon (YES in S211), the recording and reproduction control section 12 sends the key information readout section 113 an insertion confirmation signal indicating that the optical disk 10 has been inserted. Upon receiving the insertion confirmation signal, the key information readout section 113 sends the recording and reproduction control section 12 a readout instruction to read out key information. Upon receiving the readout instruction, the recording and reproduction control section 12 reads out key information from the inserted optical disk 10. That is, the key information readout section 113 reads out the key information from the inserted optical disk 10 through the recording and reproduction control section 12 (S212).

At this point in time, the recording and reproduction control section 12 may read out the OS from the first information recording layer 102 of the optical disk 10 and store the OS in the memory section 15.

Next, the recording and reproduction control section 12 sends the key information thus read out to the key information readout section 113. Upon receiving the key information, the key information readout section 113 determines whether the key information is prohibition key information or not (S213). If the key information readout section 113 determines that the key information thus received is not prohibition key information (there is no prohibition key information) (NO in S213), the key information readout section 113 sends prohibition key information to the key information management section 112.

At this point in time, the key information management section 112 confirms whether or not there exists key information in the key information storage section 115 (memory) (S214). Then, by confirming the existence of key information in the key information storage section 115, the key information management section 112 determines whether or not there exists second key information in the key information (S215).

If the key information management section 112 determines that there exists no second key information in the key information storage section 115 (NO in S215), the key information management section 112 determines, by further confirming the existence of key information in the key information storage section 115, whether or not there exists first key information in the key information (S216).

If the key information management section 112 determines that the key information storage section 115 has first key information stored therein (YES in S216), the key information management section 112 sends the first key information to the authentication section 111. Upon receiving the first key information, the authentication section 111 reads out the OS stored in the memory section 15. Then, the authentication section 111 authenticates the OS for activation by use of the first key information and confirms whether the OS has been successfully authenticated (S217). It should be noted that the authentication section 111 authenticates the OS by use of the first key information according to an existing method.

If, as a result of the confirmation, the authentication section 111 determines that the authentication has been completed successfully (YES in S217), the authentication section 111 sends the device control section 13 a successful authentication notification indicating that the authentication has been completed successfully. Upon receiving the successful authentication notification, the device control section 13 activates the OS (S218), whereby the OS activation process in the recording and reproduction device 1 is completed.

It should be noted that by once previously copying the OS into the memory section 15, the recording and reproduction device 1 can activate the OS from the memory section 15 without executing a process of copying the OS, provided that the OS has been successfully authenticated. This makes it possible to reduce the readout time and expedite the process of activating an OS recorded on an information recording medium.

Meanwhile, if the key information readout section 113 determines in S213 that the key information received from the recording and reproduction control section 12 is prohibition key information (YES in S213), the key information readout section 113 sends the determination result to the key information management section 112.

Upon receiving the determination result indicating that the prohibition key information has been read out from the optical disk 10, the key information management section 112 confirms whether or not there exists key information in the key information storage section 115. Then, by confirming the existence of key information in the key information storage section 115, the key information management section 112 determines whether or not there exists second key information in the key information (S219).

If the key information management section 112 determines that there exists second key information in the key information storage section 115 (YES in S219), the key information management section 112 reads out the second key information and sends it to the authentication section 111. At this point in time, the key information management section 112 instructs the key information readout section 113 to read out second key information from the optical disk 10.

Specifically, the key information management section 112 sends the key information readout section 113 a readout instruction to read out second key information from the optical disk 10. The key information readout section 113 sends the readout instruction to the recording and reproduction control section 12, thereby causing the recording and reproduction control section 12 to read out second key information recorded on the optical disk 10. That is, the key information readout section 113 reads out the second key information from the optical disk 10 through the recording and reproduction control section 12.

After reading out the second key information through the recording and reproduction control section 12, the key information readout section 113 sends the second key information to the key information management section 112. Then, the key information management section 112 sends the second key information thus received to the authentication section 111.

The authentication section 111 collates the two pieces of second key information received from the key information management section 112 (S220). That is, the authentication section 111 determines whether or not the second key information read out from the optical disk 10 and the second key information stored in the key information storage section 115 match each other (S221).

If the authentication section 111 determines that the two pieces of second key information match each other (YES in S221), the authentication section 111 sends the determination result to the key information management section 112. Upon receiving the determination result indicating that the two pieces of second key information match each other, the key information management section 112 sends the key information recording and erasing section 114 an erasure instruction signal for erasing the prohibition key information recorded on the optical disk 10. By sending the erasure instruction signal to the recording and reproduction control section 12, the key information recording and erasing section 114 causes the recording and reproduction control section 12 to erase the prohibition key information recorded on the optical disk 10. That is, the key information recording and erasing section 114 erases the prohibition key information from the optical disk 10 (S222).

After erasing the prohibition key information from the optical disk 10, the recording and reproduction control section 12 sends an erasure completion notification indicative of the completion of the erasure to the key information management section 112 through the key information recording and erasing section 114. Upon receiving the erasure completion notification, the key information management section 112 erases the second key information stored in the key information storage section 115 (S223). It should be noted that upon completion of S22, the key information management section 112 shifts to S214.

Alternatively, if the key information management section 112 determines in S215 that there exists second key information in the key information storage section 115 (YES in S215), the key information management section 112 reads out the second key information and sends it to the authentication section 111. At this point in time, the key information management section 112 instructs the key information readout section 113 to read out second key information from the optical disk 10. After reading out the second key information through the recording and reproduction control section 12, the key information readout section 113 sends the second key information to the key information management section 112. Then, the key information management section 112 sends the second key information thus received to the authentication section 111.

The authentication section 111 collates the two pieces of second key information received from the key information management section 112 (S224). That is, the authentication section 111 determines whether or not the second key information read out from the optical disk 10 and the second key information stored in the key information storage section 115 match each other (S225). If the authentication section 111 determines that the two pieces of second key information match each other (YES in S225), the authentication section 111 sends the determination result to the key information management section 112. Upon receiving the determination result indicating that the two pieces of second key information match each other, the key information management section 112 erases the second key information stored in the key information storage section 115 (S226). It should be noted that upon completion of S226, the key information management section 112 shifts to S216.

Alternatively, if the key information management section 112 determines in S216 that the key information storage section 115 has no first key information stored therein (NO in S216), the key information management section 112 sends the key information acquisition section 16 an acquisition signal for acquiring first key information. Upon receiving the acquisition signal, the key information acquisition section 16 prompts the user to input or acquire first key information for using the OS stored in the memory section 15, thereby acquiring the first key information (S227). The key information acquisition section 16 sends the first key information thus acquired to the key information management section 112.

Upon receiving the first key information, the key information management section 112 stores the first key information in the key information storage section 115 (S228). It should be noted that upon completion of S228, the key information management section 112 shifts to S217.

It should be noted that if NO in S211, NO in S217, NO in S219, NO in S221, and NO in S225, the device control section 13 ejects the disk from the recording and reproduction device 1 (S229), thereby causing the recording and reproduction device 1 to complete the OS activation process.

As described above, when the key information readout section 113 confirms the nonexistence of prohibition key information on an optical disk 10 inserted and when the key information management section 112 confirms that the key information storage section 115 has prohibition key information stored therein, the authentication section 111 carries out authentication.

This allows the recording and reproduction device 1 to, before authenticating first information, confirm whether or not use of an OS recorded on the optical disk 10 has been normally terminated and then use the OS.

Alternatively, when the key information readout section 113 confirms the existence of prohibition key information on an optical disk 10 inserted and when the key information management section 112 confirms that the key information storage section 115 has second key information stored therein, the authentication section 111 carries out authentication after determining whether or not the two pieces of second key information match each other.

This allows the recording and reproduction device 1 to correctly recognize and authenticate the inserted optical disk 10 even if use of the OS is terminated, for example, after the occurrence of such a peculiar situation where the power supply has been shut off with second key information existing in the recording and reproduction device 1 (i.e., even if the OS is abnormally terminated). That is, the recording and reproduction device 1 can put the OS back into the state of normal use preceding the abnormal termination.

Furthermore, by use of second key information stored in the key information management section 112, the authentication section 111 identifies an optical disk 10 inserted in the recording and reproduction device 1. By use of the second key information, the recording and reproduction device 1 can determine, for example, whether the optical disk 10 is one that has been temporarily ejected from the recording and reproduction device 1.

It should be noted that the recording and reproduction device 1 may be configured such that prohibition key information is stored in the key information storage section 115 instead of second key information. In this case, in S219 of the process, the key information management section 112 confirms the existence of key information in the key information storage section 115, thereby determining whether or not there exists prohibition key information in the key information. Then, in S220, the authentication section 111 collates the two pieces of prohibition key information. If the authentication section 111 determines in S221 that the two pieces of prohibition key information match each other, the prohibition key information is erased from the optical disk 10. After that, in S223, the prohibition key information stored in the key information storage section 115 is erased. It should be noted, however, that the prohibition key information may be kept stored instead of being erased.

This allows the recording and reproduction device 1 to carry out the process with a single piece of key information, thus making it possible to bring about the effect while making the process more efficient.

### (Flow of a Process in the Recording and Reproduction Device at the Time of Temporary Ejection)

Next, the flow of a process in the recording and reproduction device 1 at the time of temporary ejection is described with reference to Fig. 22. Fig. 22 is a flow chart showing the flow of the process in the recording and reproduction device 1 at the time of temporary ejection. It should be noted that the recording and reproduction device 1 is in an OS normal processing state shown in S204 of Fig. 20, with the optical disk 10 inserted in the disk insertion section of the recording and reproduction device 1.

First, when, in order to eject the optical disk 10, the user carries out an ejection operation such as pressing of an ejection button (not illustrated), the device control section 13 detects the ejection operation and sends the key information management section 112 an ejection detection signal indicative of the detection.

Upon receiving the ejection detection signal, the key information management section 112 sends the key information readout section 113 a readout instruction to read out second key information. By sending the readout instruction to the recording and reproduction control section 12, the key information readout section 113 causes the recording and reproduction control section 12 to read out second key information recorded on the optical disk 10. That is, the key information readout section 113 reads out the second key information from the inserted optical disk 10 (S231).

After reading out the second key information, the key information readout section 113 stores the second key information in the key information storage section 115 (S232) and sends the key information management section 112 a storage confirmation signal indicating that the second key information has been stored.

Upon receiving the storage confirmation signal, the key information management section 112 creates prohibition key information for prohibiting use of the OS being executed by the device control section 13 and sends the recording and reproduction control section 12 the prohibition key information and a recording instruction signal for instructing the recording and reproduction control section 12 to record the prohibition key information on the optical disk 10. Upon receiving the prohibition key information and the recording instruction signal, the recording and reproduction control section 12 records the prohibition key information on the optical disk 10 (specifically, the lead-in region 106 of the second information recording layer 104). That is, the key information recording and erasing section 114 uses the recording and reproduction control section 12 to record, on the optical disk 10, the prohibition key information created by the key information management section 112 (S233). It should be noted that the steps S232 and S233 may be carried out in the reverse order.

After recording the prohibition key information on the optical disk 10 through the recording and reproduction control section 12, the key information recording and erasing section 114 sends the key information management section 112 a key recording completion notification indicative of the completion of the recording. The key information management section 112 sends the key recording completion notification to the device control section 13.

Upon receiving the key recording completion notification, the device control section 13 sends the disk insertion section an instruction to eject the optical disk 10, whereby the optical disk 10 is ejected from the disk insertion section (S234). It should be noted that after the optical disk 10 has been temporarily ejected, it becomes possible to insert a disk other than the optical disk 10 having the OS recorded thereon. Examples of optical disks that can be inserted include CDs, DVDs, HD-DVDs, BDs other than OS disks.

Let it be assumed here that after the ejection of the optical disk 10 in S324, the optical disk 10 has been inserted again into the disk insertion section (S235). Then, the disk loading recognition section 50 (see Fig. 29) detects the insertion of the optical disk 10 into the recording and reproduction device 1 and sends an insertion detection signal to the recording and reproduction control section 12.

The recording and reproduction control section 12 reads out part of information present in a BCA of the optical disk 10 and determines whether or not the inserted optical disk 10 has an OS recorded thereon (S36). Alternatively, upon receiving the insertion detection signal, the recording and reproduction control section 12 may read out information recorded on the first information recording layer 102 of the optical disk 10 and determine whether or not the inserted optical disk 10 has an OS recorded thereon.

If the recording and reproduction control section 12 determines that the inserted optical disk 10 has an OS recorded thereon (YES in S236), the recording and reproduction control section 12 sends the key information readout section 113 an insertion confirmation signal indicating that the optical disk 10 has been inserted. Upon receiving the insertion confirmation signal, the key information readout section 113 sends the recording and reproduction control section 12 a readout instruction to read out key information. Upon receiving the readout instruction, the recording and reproduction control section 12 reads out key information from the inserted optical disk 10. That is, the key information readout section 113 reads out the key information from the inserted optical disk 10 through the recording and reproduction control section 12 (S237).

After reading out the key information, the recording and reproduction control section 12 sends the key information to the key information readout section 113. Upon receiving the key information, the key information readout section 113 determines whether the key information is prohibition key information or not (S238).

If the key information readout section 113 determines that the key information received from the recording and reproduction control section 12 is prohibition key information (YES in S238), the key information readout section 113 sends the recording and reproduction control section 12 a readout instruction to read out second key information from the optical disk 10. The key information readout section 113 sends the readout instruction to the recording and reproduction control section 12, thereby causing the recording and reproduction control section 12 to read out second key information recorded on the optical disk 10. That is, the key information readout section 113 reads out the second key information from the optical disk 10.

After reading out the second key information through the recording and reproduction control section 12, the key information readout section 113 sends the second key information to the key information management section 112. The key information management section 112 reads out second key information stored in the key information storage section 115 and sends the second key information thus read out to the authentication section 111, together with the second key information thus received. The authentication section 111 collates the two pieces of second key information thus received (S239). That is, the authentication section 111 determines whether or not the second key information read out from the optical disk 10 and the second key information stored in the key information storage section 115 match each other (S240).

If the authentication section 111 determines that the two pieces of second key information match each other (YES in S240), the authentication section 111 sends the determination result to the key information management section 112. Upon receiving the determination result indicating that the two pieces of second key information match each other, the key information management section 112 sends the key information recording and erasing section 114 an erasure instruction signal for erasing the prohibition key information recorded on the optical disk 10, whereby the key information recording and erasing section 114 erases the prohibition key information from the optical disk 10 (S241), as in S222 of Fig. 20.

After erasing the prohibition key information from the optical disk 10, the recording and reproduction control section sends an erasure completion notification indicative of the completion of the erasure to the key information management section 112 through the key information recording and erasing section 114. Upon receiving the erasure completion notification, the key information management section 112 erases the second key information stored in the key information storage section 115 (S242), whereby the process of temporary ejection from the recording and reproduction device 1 is completed. At the same time, the first key information may be erased.

It should be noted that if NO in S238 and NO in S240, the device control section 13 sends the disk insertion section an instruction to eject the optical disk 10, whereby the optical disk 10 is ejected from the disk insertion section (S243), and then returns to S235. Similarly, if NO in S236, the device control section 13 returns to S235.

Further, the step of erasing the second key information in S242 may be executed at the time of OS termination instead of being executed here.

In the recording and reproduction device 1, as described above, the authentication section 111 carries out, by use of first key information for permitting use of an OS, authentication for use of an OS recorded on the optical disk 10 (or an OS stored in the memory section 15), and confirms whether the authentication has been completed successfully. Then, in accordance with a result of confirmation of the authentication by the authentication section 111, the key information recording and erasing section 114 records, on the optical disk 10, prohibition key information for prohibiting use of the OS.

As such, the recording and reproduction device 1 makes it possible, with sufficient safeguards (license protection) for an OS recorded on an optical disk 10, to use the OS in a plurality of recording and reproduction devices. Further, by recording prohibition key information the recording and reproduction device 1 can disable use in another recording and reproduction device of the OS-containing optical disk 10 that has been temporarily ejected (use of the OS).

Further, by executing the steps S239 to S242, the recording and reproduction device 1 can determine whether the optical disk 10 with which the OS being executed by the device control section 13 was authenticated for use and the inserted optical disk 10 are identical or not and, as such, can surely put the inserted optical disk 10 back to the same state as the state of recording prior to the authentication by the authentication section 111.

It should be noted that the recording and reproduction device 1 may be configured to use prohibition key information instead of second key information. In this case, in S233 of the process, the key information management section 112 creates prohibition key information and records it on the optical disk 10. In addition, in S232, the key information management section 112 stores the prohibition key information in the key information storage section 115, albeit with the order reversed. Then, the recording and reproduction device 1 executes the process of ejecting the optical disk 10. At the time of reinsertion, the key information management section 112, in S239, sends the authentication section 111 the prohibition key information read out from the optical disk 10 by the key information readout section 113 and the prohibition key information stored in the key information storage section 115. In S240, the authentication section 111 determines whether or not the two pieces of prohibition key information match each other. If the authentication section 111 determines that the two pieces of prohibition key information match each other, the prohibition key information is erased from the optical disk 10 in S241. After that, the prohibition key information stored in the key information storage section 115 is erased. However, the recording and reproduction device 1 may be configured not to erase the prohibition key information stored in the key information storage section 115.

This allows the recording and reproduction device 1 to carry out the process with a single piece of key information, thus making it possible to bring about the effect while making the process more efficient.

It should be noted that the key information management section 112 may record key information for use in authentication on the optical disk 10 instead of the prohibition key information.

### (Flow of a Process in the Recording and Reproduction Device at the Time of OS Termination)

Next, the flow of a process (OS termination process) in the recording and reproduction device 1 at the time of OS termination is described with reference to Fig. 23. Fig. 23 is a flow chart showing the flow of the process in the recording and reproduction device 1 at the time of OS termination.

First, when a user carries out an operation of terminating the OS (an operation such as activating an exit option for the OS or turning off the recording and reproduction device 1), the device control section 13 sends a termination detection signal to the recording and reproduction control section 12.

Upon receiving the termination detection signal, the recording and reproduction control section 12 determines whether or not an optical disk 10 having recorded thereon the OS being used in the recording and reproduction device 1 has been inserted (S251).

If the recording and reproduction control section 12 determines that an optical disk 10 having the OS recorded thereon has been inserted into the disk insertion section (YES in S251), the recording and reproduction control section 12 reads out the user configuration information stored in the memory section 15. At this point in time, the recording and reproduction control section 12 instructs the key information management section 112 to read out the device unique information of the recording and reproduction device 1, thereby causing the key information management section 112 to read out the unique device information from the key information storage section 115. Then, the recording and reproduction control section 12 records the user configuration information in a predetermined region (specifically, in the user data region 107 of the second information recording layer 104) of the optical disk 10 (S252).

It should be noted that the recording and reproduction control section 12 may record the user configuration information and the device unique information in association with each other. This allows the recording and reproduction device 1 to determine in which recording and reproduction device the user configuration information was recorded.

After recording the user configuration information on the optical disk 10, the recording and reproduction control section 12 sends an information recording completion notification indicative of the completion of the recording to the key information management section 112 through the key information readout section 113 or through the key information recording and erasing section 114. Upon receiving the information recording completion notification, the key information management section 112 confirms whether or not there exists key information in the key information storage section 115 (S253). Then, by confirming the existence of key information in the key information storage section 115, the key information management section 112 determines whether or not there exists second key information in the key information (S254).

If the key information management section 112 determines that the key information storage section 115 has no second first key information stored therein (NO in S254), the key information management section 112 sends the determination result to the key information readout section 113. Upon receiving the determination result indicating that the key information storage section 115 has no second key information stored therein, the key information readout section 113 sends the recording and reproduction control section 12 a readout instruction to read out key information. Upon receiving the readout instruction, the recording and reproduction control section 12 reads out key information from the inserted optical disk 10 (S255).

Next, the recording and reproduction control section 12 sends the key information thus read out to the key information readout section 113. Upon receiving the key information, the key information readout section 113 determines whether the key information is prohibition key information or not (S256).

If the key information readout section 113 determines that the key information thus received is not prohibition key information (there is no prohibition key information) (NO in S256), the key information readout section 113 sends the determination result to the key information management section 112, whereby the key information management section 112 confirms that there is no prohibition key information on the optical disk 10. Then, upon receiving the determination result indicating that the key information thus received is not prohibition key information, the key information management section 112 erases the first key information stored in the key information storage section 115 (S258).

Meanwhile, if the key information readout section 113 determines that the key information thus received is prohibition key information (NO in S256), the key information readout section 113 sends the determination result to the key information management section 112. Upon receiving the determination result indicating that the key information thus received is prohibition key information, the key information management section 112 determines that there is prohibition key information on the optical disk 10, and sends the key information recording and erasing section 114 an erasure instruction signal for erasing the prohibition key information, whereby the key information recording and erasing section 114 erases the prohibition key information from the optical disk 10 (S257), as in S222 of Fig. 21. Then, after S257, the process shifts to S258.

After erasing the first key information from the key information storage section 115 in S258, the key information management section 112 sends an erasure notification indicative of the erasure to the device control section 13. Upon receiving the erasure notification, the device control section 13 starts a process of deactivating the OS being used (S59). Then, upon completion of the OS deactivation process by the device control section 13, the recording and reproduction device 1 completes the OS termination process.

Meanwhile, if the recording and reproduction control section 12 determines in S251 that an optical disk 10 having recorded thereon the OS being used in the recording and reproduction device 1 has not been inserted (NO in S251), the recording and reproduction control section 12 sends the determination result to the device control section 13.

Upon receiving the determination result indicating that such an optical disk 10 has not been inserted into the disk insertion section, the device control section 13 prompts the user to insert, into the disk insertion section, an optical disk 10 having recorded thereon the OS being used (S260). Through a display device, an audio output device (not illustrated), etc. connected to the recording and reproduction device 1, for example, the device control section 13 prompts the user to insert an optical disk 10 having the OS recorded thereon. It should be noted that upon completion of S260, the device control section 13 returns to S251.

Alternatively, if the key information management section 112 determines in S254 that the key information storage section 115 has second key information stored therein (YES in S254), the key information management section 112 erases the second key information from the key information storage section 115 (S261). It should be noted that upon completion of S261, the key information management section 112, shifts to S255.

As described above, when the execution of an OS by the device control section 13 is terminated, the recording and reproduction device 1 can, on the one hand, render the previously inserted optical disk 10 usable in another recording and reproduction device and, on the other hand, render the OS unusable in the recording and reproduction device 1 (i.e., the recording and reproduction device from which the optical disk 10 has been ejected). This allows the recording and reproduction device 1 to ensure sufficient safeguards for the OS.

Further, since the recording and reproduction control section 12 records, on an optical disk 10, user configuration information configured by a user for an OS, the recording and reproduction device 1 can share the user configuration for the OS with another recording and reproduction device when the OS is used in the another recording and reproduction device.

It should be noted that the recording and reproduction device 1 may be configured to use prohibition key information instead of second key information. In this case, in S253 of the process, the key information management section 112 confirms whether or not there exists key information in the key information storage section 115 and, in S254, determines whether there exists prohibition key information. If the key information management section 112 determines that the key information storage section 115 has prohibition key information stored therein (YES in S254), the prohibition key information is erased from the key information storage section 115. However, the recording and reproduction device 1 may be configured not to erase the prohibition key information.

This allows the recording and reproduction device 1 to carry out the process with a single piece of key information, thus making it possible to bring about the effect while making the process more efficient.

### (Flow of a Process in the Recording and Reproduction Device at the Time of OS Storage)

Next, an example of the flow of a process that is carried out in the recording and reproduction device when an OS recorded on an optical disk 10 is stored in the memory section 15 of the recording and reproduction device 1 is described with reference to Fig. 24. Fig. 24 is a flow chart showing an example of the flow of the process that is carried out in the recording and reproduction device 1 when the OS recorded on the optical disk 10 is stored in the memory section 15 of the recording and reproduction device 1. It should be noted that the process of storing the OS in the memory section 15 of the recording and reproduction device 1 is mainly carried out when the optical disk 10 is first used by the recording and reproduction device 1.

It is assumed here that an optical disk 10 that is inserted into the disk insertion section has an OS recorded thereon. It is also assumed that the OS recorded on the optical disk 10 has been coded by first key information or by key information that is different from the first key information (but can be decoded by the first key information).

First, upon insertion of an optical disk 10 into the disk insertion section, the recording and reproduction control section 12 executes the step S211 of Fig. 21, and if the recording and reproduction control section 12 determines that the inserted optical disk 10 has an OS recorded thereon, the recording and reproduction control section 12 reads out the OS recorded on the optical disk 10. Then, the recording and reproduction control section 12 sends the key information management section 112 a readout notification indicating that the OS has been read out from the optical disk 10. Upon receiving the readout notification, the key information management section 112 sends the key information acquisition section 16 an acquisition signal for acquiring first key information. At this point in time, the recording and reproduction control section 12 temporarily stores, in the memory section 15, the OS read out from the optical disk 10.

Next, upon receiving the acquisition signal, the key information acquisition section 16 acquires first key information as in S227 and sends it to the key information management section 112. Upon receiving the first key information, the key information management section sends the first key information to the code decoding section 14. At this point in time, the code decoding section 14 reads out the OS temporarily stored in the memory section 15 by the recording and reproduction control section 12.

After receiving the first key information and reading out the OS, the code decoding section 14 decodes the OS that is in coded form (S271). It should be noted that the code decoding section 14 decodes the OS by use of the first key information according to an existing method.

Upon completion of the decoding of the OS, the code decoding section 14 sends the OS thus decoded to the recording and reproduction control section 12. Upon receiving the OS thus decoded, the recording and reproduction control section 12 stores the OS in the memory section 15 (S272).

As described above, by including the code decoding section 14, the recording and reproduction device 1 can use even a coded OS by decoding it. Further, by having the OS in coded form, the optical disk 10 can prevent information leaks, for example, even if the OS is illegally copied.

Further, since the optical disk 10 has the OS recorded on its first information recording layer 102, the OS normally cannot be rewritten into a different form of information. That is, the OS recorded on the optical disk 10 remains as recorded first on the optical disk 10 (i.e., remains in an initial state).

Therefore, by storing in the memory section 15 of the recording and reproduction device 1 the OS recorded on the optical disk 10, the OS can be put back to the initial state (initialized) even when the OS has been changed as a result of the OS being used by the recording and reproduction device 1.

It should be noted that the recording and reproduction device 1 initializes the OS only when there exists no prohibition key information on the optical disk 10.

Further, such a configuration is possible that authentication by use of the first key information is needed to authenticate for use the data, programs, content, etc. recorded in the user data region 107 of the recordable region. This makes it possible to ensure safeguards for the user configuration information (user data) as well as the OS.

Further, at the time of OS storage, the key information management section 112 may create prohibition key information and store it in the key information storage section 115.

Furthermore, the recording and reproduction device 1 may be configured such that once the first key information has been stored in the key information storage section 115, the first key information is kept stored instead of being erased. The OS information is protected by not activating the OS when the optical disk 10 is not inserted into the recording and reproduction device 1. This eliminates processes of recording and erasing the first key information, thus accelerating the processing speed of the recording and reproduction device 1.

Further, in the present embodiment, the recording and reproduction device 1 is configured to acquire the first key information from an outside source through the key information acquisition section 16. However, the recording and reproduction device 1 may be configured to record the first key information on the key information recording region 109 of the second information recording layer 104 of the optical disk 10 and read it out at the time of authentication. This makes it possible to save the user the trouble of inputting the first key information.

### (Embodiment E)

Next, another embodiment E of Embodiment 2 is described below with reference to Figs. 25 through 28. A case is described here where a recording and reproduction device 1a, i.e., a modification of the recording and reproduction device 1 uses third and fourth key information recorded on an optical disk 10.

It should be noted that those members which have the same functions as those of the embodiment D are given the same reference numerals and, as such, are not described below.

### (Modification of the Control Section)

Next, the configuration of a control section 20a in a recording and reproduction device 1a, i.e., in a modification of the recording and reproduction device 1 of Fig. 1 is described with reference to Fig. 25. Fig. 25 is a block diagram showing the configuration of a control section 20a in a modification of the recording and reproduction device (i.e., in a recording and reproduction device 1a) according to the present embodiment.

As shown in Fig. 25, the recording and reproduction device 1a includes a control section 20a instead of a control section 20. Further, the control section 20a includes a key information control section 11a including a device type determining section 116 (device type determining means) and a device limiting section 117 (device limiting means). That is, the control section 20a of the recording and reproduction device 1a according to the present embodiment is different from the control section 20 of the recording and reproduction device 1 according to the embodiment D in that the control section 20a includes the device type determining section 116 and the device limiting section 117.

The device type determining section 116 serves to determine whether or not third key information recorded on an optical disk 10 and model information contained in device unique information stored in the key information storage section 115 match each other, thereby determining whether or not an OS recorded on the optical disk 10 can be activated by the recording and reproduction device 1a.

It should be noted that the model information does not need to be contained in the device unique information and may be any type of information that indicates the model of recording and reproduction device 1.

The device limiting section 117 serves to determine whether or not the device unique information of a recording and reproduction device 1 having an optical disk 10 inserted therein exists in fourth key information recorded on the optical disk 10. Further, if the device unique information does not exists in the fourth key information, the device limiting section 117 serves to determine whether or not it is possible to record the device unique information as the fourth key information on the optical disk 10.

Further, since the key information control section 11a includes the device type determining section 116 and the device limiting section 117, the embodiment C is different from the embodiment D also in that the key information management section 112 manages these members.

### (Process in the Recording and Reproduction Device (Modification) at the Time of OS Activation)

Next, a process (OS activation process) in the recording and reproduction device 1a at the time of OA activation is described with reference to Fig. 26. Fig. 26 is a flow chart showing the process in the recording and reproduction device 1a at the time of OS activation.

Let it be assumed here that the optical disk 10 has set up in advance thereon the models of recording and reproduction devices (including at least the recording and reproduction device 1a) in which the optical disk 10 is used and has recorded thereon model information serving as third key information for discriminating the model of recording and reproduction device 1a from another model of recording and reproduction device, and that the memory section 15 has stored therein device model information indicating the model of recording and reproduction device 1a and serving as model information for discriminating the model of recording and reproduction device 1a from another model of recording and reproduction device.

Further, the steps S281 to S287, S290 to S300, and S303 of Fig. 26 are identical to the steps of Fig. 21 and, as such, are not described here. That is, the process of Fig. 26 is achieved by adding steps S288, S289, S301, and S302 between the steps S217 and S218 of Fig. 21.

If the authentication section 111 determines that authentication for activation of the OS recorded on the optical disk 10 has been completed successfully (YES in S287), the authentication section 111 sends the device type determining section 116 a successful authentication notification indicating that the authentication has been completed successfully. Upon receiving the successful authentication notification, the device type determining section 116 instructs the key information readout section 113 through the key information management section 112 to read out the third key information from the optical disk 10. It should be noted that the concrete process that is carried out at this point in time is identical to the process that is carried out if YES in S219 and, as such, is not described here.

After reading out the third key information through the recording and reproduction control section 12, the key information readout section 113 sends the third key information to the device type determining section 116 through the key information management section 112. Upon receiving the third key information from the key information management section 112, the device type determining section 116 reads out the device unique information stored in the key information storage section 115.

The device type determining section 116 collates the third key information read out from the optical disk 10 and the model information, contained in the device unique information stored in the key information storage section 115, which indicates the model of recording and reproduction device 1a. That is, the device type determining section 116 determines whether or not the third key information recorded on the optical disk 10 and the device model information indicating the model of recording and reproduction device 1a and serving as model information for discriminating the model of recording and reproduction device 1a from another model of recording and reproduction device match each other (S288).

This allows the recording and reproduction device 1a to determine whether or not the inserted optical disk 10 is usable in the recording and reproduction device 1a. That is, since the optical disk 10 can be used only in the model of recording and reproduction device 1a indicated by the third key information, it is possible to further improve safeguards for the optical disk 10. Furthermore, the recording and reproduction device 1a can provide a particular application to a user who uses the target OS.

If the device type determining section 116 determines that the third key information and the device unique information match each other (YES in S288), the device type determining section 116 sends the determination result to the device limiting section 117. Upon receiving the determination results indicating that the third key information and the device unique information match each other, the device limiting section 117 instructs the key information readout section 113 through the key information management section 112 to read out the fourth key information from the optical disk 10. It should be noted that the concrete process that is carried out at this point in time is identical to the process that is carried out when the third key information is read out and, as such, is not described here.

After reading out the fourth key information through the recording and reproduction control section 12, the key information readout section 113 sends the fourth key information to the device limiting section 117 through the key information management section 112. Upon receiving the fourth key information from the key information readout section 113, the device limiting section 117 reads out the device unique information stored in the key information storage section 115.

The device limiting section 117 collates the fourth key information read out from the optical disk 10 and the device unique information. That is, by determining whether or not the fourth key information recorded on the optical disk 10 and the device unique information stored in the key information storage section 115 match each other, the device limiting section 117 determines whether or not device unique information indicative of the recording and reproduction device 1a into which the optical disk 10 has been inserted exists in the fourth key information (S289).

If the device limiting section 117 determines that there is fourth key information that matches the device unique information (YES in S289), the device limiting section 117 sends the determination result to the device control section 13. Upon receiving the determination result indicating that there is fourth key information that matches the device unique information, the device control section 13 actives the OS stored in the memory section 15 (S290), whereby the OS activation process in the recording and reproduction device 1a is completed.

Meanwhile, if the device limiting section 117 determines that there is no fourth key information that matches the device unique information (NO in S289), the device limiting section 117 determines whether or not it is possible to record the device unique information as fourth key information on the optical disk 10 (S301). It should be noted that in receiving fourth key information, for example, the device limiting section 117 may receive remaining-capacity information, contained in the fourth key information, which indicates a remaining capacity that can be recorded as the fourth key information.

If the device limiting section 117 determines that it is possible to record the device unique information as fourth key information on the optical disk 10 (YES in S301), the device limiting section 117 instructs the key information recording and erasing section 114 (key information erasing means, key information recording means, fourth key information recording means) to record the device unique information as fourth key information in a predetermined region (specifically, in the key information region 109) of the optical disk 10. Upon receiving the instruction, the key information recording and erasing section 114 uses the recording and reproduction control section 12 to record the device unique information as new fourth key information in the key information region 109 of the optical disk 10 (S302). It should be noted that after S302, the process shifts to S290.

It should be noted that if NO in S281, NO in S287, NO in S288, NO in S291, NO in S293, NO in S297, and NO in S301, the device control section 13 ejects the optical disk 10 from the recording and reproduction device 1 (S303), thereby causing the recording and reproduction device 1a to complete the OS activation process, as in the case shown in Fig. 21.

It should be noted that although, in the process of Fig. 26, the device type determining section 116 carries out its step (S288) and the device limiting section 117 carries out its steps (S289, S301, and S302) after the authentication section 111 carries out its step (S287), this does not imply any limitation. That is, the authentication section 111 may carry out its step after the device type determining section 116 carries out its step and the device limiting section 117 carries out its steps.

Further, although, in the process of Fig. 26, the device type determining section 116 carries out its step and the device limiting section 117 carries out its steps, this does not imply any limitation. Either the device type determining section 116 or the device limiting section 117 may carry out its step(s).

As described above, the authentication section 111 carries out authentication if the device type determining section 116 determines that the model information and the third key information match each other. This makes it impossible to use the optical disk 10 in a model of recording and reproduction device 1 other than the model of recording and reproduction device 1 set up on the optical disk 10, thus restricting use of the first information.

Further, the authentication section 111 carries out authentication if the device limiting section 117 determines that the model information and the fourth key information match each other. This makes it impossible to use the optical disk 10 in a model of recording and reproduction device 1 other than the model of recording and reproduction device 1 set up on the optical disk 10, thus restricting use of the first information.

Therefore, by including the device type determining section 116 and the device limiting section 117, the recording and reproduction device 1 can use the first information with sufficient safeguards for the OS.

### (Flow of a Process in the Recording and Reproduction Device (Modification) at the Time of Temporary Ejection)

Next, the flow of a process in the recording and reproduction device 1 at the time of temporary ejection is described with reference to Fig. 27. Fig. 27 is a flow chart showing the flow of the process in the recording and reproduction device 1a at the time of temporary ejection.

Further, the steps S311 to S320 and S324 to S325 of Fig. 27 are identical to the steps of Fig. 22 and, as such, are not described here. That is, the process of Fig. 27 is achieved by adding steps S321 and S322 between the steps S240 and S241 of Fig. 22.

If the authentication section 111 determines that the two pieces of second key information match each other (YES in S320), the authentication section 111 sends the determination result to the device type determining section 116. Upon receiving the determination result indicating that the two pieces of second key information match each other, the device type determining section 116 instructs the key information management section 112 to read out the third key information from the optical disk 10. Upon receiving the instruction, the key information management section 112 sends the key information readout section 113 a readout instruction to read out the third key information from the optical disk 10. Upon receiving the readout instruction, the key information readout section 113 reads out the third key information through the recording and reproduction control section 12 and sends the third key information to the device type determining section 116 through the key information management section 112.

As in the step S288 of Fig. 26, the device type determining section 116 determines whether or not the third key information read out from the optical disk 10 and the information, contained in the device unique information stored in the key information storage section 115, which indicates the model of recording and reproduction device 1a match each other (S321).

If the device type determining section 116 determines that the third key information and the device unique information match each other (YES in S321), the device type determining section 116 sends the determination result to the device limiting section 117. As in the step S289 of Fig. 26, the device limiting section 117 determines whether or not the fourth key information read out from the optical disk 10 by the key information readout section 113 and the device unique information stored in the key information storage section 115 match each other (S322).

If the device limiting section 117 determines that there is fourth key information that matches the device unique information (YES in S322), the device limiting section 117 sends the determination result to the key information management section 112. Upon receiving the determination result indicating that there is fourth key information that matches the device unique information, the key information management section 112 sends the key information recording and erasing section 114 an erasure instruction signal for erasing the prohibition key information recorded on the optical disk 10. Thus, as in the step 222 of Fig. 21, the key information recording and erasing section 114 erases the prohibition key information from the optical disk 10 (S323).

It should be noted that if NO in S318 and NO in S320 to S322, the device control section 13 causes the optical disk 10 to be ejected from the disk insertion section (S325), and then returns to S315. Similarly, if NO in S316, the device control section 13 returns to S315.

### (Flow of a Process in the Recording and Reproduction Device at the Time of OS Storage)

Next, the flow of a process that is carried out in the recording and reproduction device 1a when the OS recorded on the optical disk 10 is stored in the memory section 15 of the recording and reproduction device 1a is described with reference to Fig. 28. Fig. 28 is a flow chart showing the flow of the process that is carried out in the recording and reproduction device 1a when the OS recorded on the optical disk 10 is stored in the memory section 15 of the recording and reproduction device 1a.

Further, the steps S332 and S333 of Fig. 28 are identical to the steps S271 and S272 of Fig. 24 and, as such, are not described here. That is, the process of Fig. 28 is achieved by adding steps S331 and S334 to the process of Fig. 24.

First, as in the step S288 of Fig. 26, the device type determining section 116 determines whether or not the third key information read out from the optical disk 10 and the information, contained in the device unique information stored in the key information storage section 115, which indicates the model of recording and reproduction device 1a match each other (S331).

If the device type determining section 116 determines that the third key information and the device unique information match each other (YES in S331), the device type determining section 116 sends the determination result to the code decoding section 14 through the key information management section 112. Upon receiving the determination result indicating that the third key information and the device unique information match each other, the code decoding section 14 carries out the step S332. Then, after the recording and reproduction control section 12 carries out the step S333, the recording and reproduction control section 12 sends the device limiting section 117 through the key information recording and erasing section 114 and through the key information management section 112 a storage notification indicating that the decoded OS has been stored in the memory section 15.

Upon receiving the storage notification, the device limiting section 117 instructs the key information recording and erasing section 114, as in the step S302 of Fig. 26, to record the device unique information, stored in the key information storage section 115, as fourth key information on the optical disk 10. This causes the key information recording and erasing section 114 to store the device unique information as fourth key information on the optical disk 10 through the recording and reproduction control section 12 (S334).

### (Supplementary Information)

Finally, the blocks of the recording and reproduction device 1 or 1a according to the present embodiment, or the key information control section 11 (authentication section 111, key information management section 112, key information readout section 113, key information recording and erasing section 114 (enable/disable control section 21), device type determining section 116, device limiting section 117), the recording and reproduction control section 12 (information readout section 121, information storage control section 122), the device control section 13, and the code decoding section 14 in particular, may be constituted by hardware logic, or may be constituted by software with use of a CPU as described below.

That is, the recording and reproduction device 1 or 1a according to the present embodiment includes: a CPU (central processing unit) for executing an instruction of a control program for realizing various functions; a ROM (read-only memory) in which the program has been stored; a RAM for expanding the program; and a memory device (recording medium), such as a memory, in which the program and various data are stored. The object of the present invention can also be achieved by providing the mobile communication device 1 with a storage medium in which a program code (executable program, intermediate code, or source program) of the control program of the mobile communication device 1 has been stored in a computer readable manner, and by causing the computer (CPU or MPU) to read and execute the program code stored in the storage medium, the program code serving as software for realizing the aforementioned functions.

Examples of the recording medium include: a tape such as a magnetic tape or a cassette tape; a magnetic disk such as a floppy (registered trademark) disk or a hard disk; an optical disk such as a CD-ROM, an MO, an MD, a DVD, or a CD-R; a card such as an IC card (inclusive of a memory card) or an optical card; and a semiconductor memory such as a mask ROM, an EPROM, an EEPROM, or a flash ROM.

Further, the recording and reproduction device 1 or 1a according to the present embodiment may be connectable to a communication network, and the program code may be supplied via the communication network. Examples of the communication network include, but are not particularly limited to, the Internet, an intranet, an extranet, a LAN (local area network), an ISDN (integrated services digital network), a VAN (value added network), a CATV (cable TV) communication network, a virtual private network, a telephone network, a mobile communication network, and a satellite communication network. Further, usable examples of a transmission medium that constitutes the communication network include, but are not particularly limited to, a cable medium such as IEEE 1394, a USB, power line communication, a cable TV line, a telephone line, or an ADSL line and a wireless medium such as IrDA, infrared rays used for a remote controller, Bluetooth (registered trademark), IEEE 802.11, HDR (High Data Rate), a mobile phone network, satellite connection, or a terrestrial digital network. It should be noted that the present invention can also be realized in the form of a computer data signal realized by electronic transmission of the program code and embedded in a carrier wave.

### (Putting the Present Invention Differently)

It should be noted that the present invention can be expressed as follows:

That is, a recording and reproduction device according to the present invention includes: key information readout means which reads out key information from an information recording medium; authentication means which authenticates information for permission of use by use of the key information; key information storage means in which the key information thus read out is stored; and key information recording and erasing means which records or erases the key information, when the information recording medium is ejected, the key information being read out by the key information readout means, stored in the key information storage means, and erased by the key information recording and erasing means.

Further, a recording and reproduction device according to the present invention, targeted at an information recording medium, having a reproduce-only region and a recordable region having the first key information recorded therein, with which information recorded in the reproduce-only region is authenticated for permission of use by use of first key information recorded in the recordable region, is configured to further include: key information readout means which reads out the first key information from the information recording medium; authentication means which authenticates the information for use of permission by use of the key information; key information storage means in which the first key information thus read out is stored; and key information recording and erasing means which records or erases the first key information, when the information recording medium is ejected, the first key information being read out by the key information readout means, stored in the key information storage means, and erased by the key information recording and erasing means.

Further, the recording and reproduction device according to the present invention is preferably configured such that: the key information readout means reads out second key information unique to the information recording medium; and the authentication means identifies the information recording medium by use of the second key information.

Further, the recording and reproduction device according to the present invention is preferably configured to further include key information management means which manages the key information recorded on the information recording medium or stored in the key information storage means, and controlled such that when the information recording medium is ejected during execution of an operating system installed from the information recording medium into in-device memory means, the key information management means stores the first key information in the key information storage means, erases the first key information from the recordable region, and stores the second key information in the key information storage means.

Further, the recording and reproduction device according to the present invention is preferably controlled such that when an information recording device is again inserted during execution of the operating system, the key information management means reads out the second key information and causes the authentication means to determine whether the second key information matches the second key information stored in the key information storage means and, if it does, determines that the information recording medium is one that was ejected during execution of the operating system, records the first key information in the recordable region of the information recording medium, and erases the first key information from the key information storage means.

Further, the recording and reproduction device according to the present invention is preferably controlled such that if the first key information and the second key information have been stored in the key information storage means at the time of termination of execution of the operating system, the key information management means records the first key information in the recordable region of the information recording medium, erases the first key information from the key information storage means, and erases the second key information from the key information storage means.

Further, the recording and reproduction device according to the present invention is preferably controlled such that the key information management means reads out the first key information from the information recording medium when the information recording medium has been inserted while the operating system is not being executed, and that if the first key information has not been recorded, and if the key information storage means has neither the first nor second key information stored therein, the key information management means causes the authentication means to carry out authentication by use of the first key information so that activation of the operating system is started.

Further, the recording and reproduction device according to the present invention is preferably controlled such that the key information management means reads out the first key information from the information recording medium when the information recording medium has been inserted while the operating system is not being executed, and that if the first key information has not been recorded, and if the key information management means confirms that the key information storage means has both the first key information and second key information stored therein, the key information management means reads out the second key information from the information recording medium, causes the authentication means to determine whether the two pieces of second key information match each other and, if they do, causes the authentication means to carry out authentication by use of the first key information so that activation of the operating system is started, records the first key information in the recordable region, and erases the first key information and the second key information from the key information storage means.

Further, the recording and reproduction device according to the present invention is preferably configured to copy or install, in the in-device memory on the recording and reproduction device, information recorded in the reproduce-only region of the information recording medium, and to use the information from the in-device memory means.

Further, the recording and reproduction device according to the present invention is preferably configured such that the information recorded in the reproduce-only region is an operating system, is activated in the in-device memory means on the recording and reproduction device, and stores data in the recordable region.

Further, the recording and reproduction device according to the present invention is preferably configured to record, in the recordable region, environment configuration information set up by a user in at least one recording and reproduction device, together with identification information unique to the recording and reproduction device.

Further, the recording and reproduction device according to the present invention is preferably configured such that the second key information contains at least BCA code information.

Further, the recording and reproduction device according to the present invention is preferably configured to further include information code decoding means, wherein: the first key information contains key information for decoding the information recorded in the reproduce-only region; and by use of the first key information thus read out, the information code decoding means decodes the information recorded in the reproduce-only region.

Further, the recording and reproduction device according to the present invention is preferably configured such that: the first key information is recorded in a region of the recordable region that is different from a user data region; and the key information readout means reads out the first key information from a region that is different from a user region.

Further, the recording and reproduction device according to the present invention is preferably configured to further include device type determining means which records, as third key information in the recordable region of the information recording medium, information of a recording and reproduction device in which the information recorded in the reproduce-only region or in the recordable region can be used, wherein the authentication means renders the information usable only when the third key information read out by the key information readout means matches key information of a type of recording and reproduction device registered in advance in the device type determining means.

Further, the recording and reproduction device according to the present invention is preferably configured to further include device limiting means, wherein: the key information recording and erasing means records, as fourth key information in the recordable region of the information recording medium, information unique to a recording and reproduction device that used the information recorded in the reproduce-only region; and the authentication means renders the information usable only when the fourth key information read out from the information recording medium by the key information readout means is contained in fourth key information stored in the device limiting means.

Further, the recording and reproduction device according to the present invention is preferably configured such that the authentication means carries out authentication by use of the first key information, the second key information, the third key information, and the fourth key information.

Further, an information recording medium according to the present invention is preferably an information recording having a reproduce-only region and a recordable region having first key information recorded therein, information recorded in the reproduce-only region being authenticated for permission of use by use of the first key information.

Further, the information recording medium according to the present invention is preferably configured such that the information recorded in the reproduce-only region is an operating system, is activated in in-device memory means on the recording and reproduction device, and stores data in the recordable region.

Further, the information recording medium according to the present invention is preferably configured such that environment configuration information set up by a user in at least one recording and reproduction device is recorded in the recordable region together with identification information unique to the recording and reproduction device.

Further, the information recording medium according to the present invention is preferably a multilayer structure having at least one reproduce-only layer and at least one recordable layer.

Further, the information recording medium according to the present invention is preferably configured such that the first key information recorded in the recordable region contains key information for decoding the information recorded in the reproduce-only region.

Further, the information recording medium according to the present invention preferably has the first key information recorded in a region of the recordable region that is different from a user data region.

Further, the information recording medium according to the present invention preferably has recorded information as third key information in the recordable region, the information regarding a recording and reproduction device in which the information recorded in the reproduce-only region and in the recordable region is usable.

Further, the information recording medium according to the present invention preferably has information recorded as fourth key information in the recordable region, the information being unique to a recording and reproduction device that used the information recorded in the reproduce-only region.

### [Embodiment 3]

An embodiment of the present invention is described below with reference to Figs. 30 and 31.

### (Brief Overview of the Present Embodiment)

By mainly using first key information or prohibition key information, each of Embodiments 1 and 2 enables use of either (i) first information (registered information) such as software (application) or content stored in the memory section 15 or (ii) first information recorded on an optical disk 10 or 10a and disables use of the other when the optical disk 10 or 10a is ejected. Alternatively, by use of the first key information or the prohibition key information, each of Embodiments 1 and 2 disables use of the first information, recorded on the optical disk 10 or 10a, in another recording and reproduction device when the first information is usable in the recording and reproduction device 1 or 1a and disables use of the first information in the recording and reproduction device 1 or 1a when the first information is usable in another recording and reproduction device.

Meanwhile, the enable/disable control section 21 of a recording and reproduction device 1 of the present embodiment is achieved by an information erasing section 211 which, when the optical disk 10 is ejected, erases the first information (application) stored in the memory section 15 by the information storage control section 122. It should be noted that the present embodiment presupposes that the application is used after being stored in the memory section 15.

The foregoing configuration can create such a situation that although the first information is usable in the recording and reproduction device 1 while the recording and reproduction device 1 is having the optical disk 10 inserted therein, the first information becomes unusable in the recording and reproduction device 1 once the optical disk 10 has been ejected.

That is, in the present embodiment, the information erasing section 211, which serves as the enable/disable control section 21, controls whether the application is in a usable or unusable state, without using such key information as that described above. This makes it possible, with sufficient safeguards (license protection) for the application recorded on the optical disk 10, to use the first information in a plurality of recording and reproduction devices 1.

It should be noted that the optical disk for use in the present embodiment needs only be structured in the same way, for example, as the optical disk 10 or 10a for use in Embodiments 1 and 2 (e.g., see Fig. 3) and, as such, is not described here. It should be noted that in the present embodiment, it is not necessary to have a key information region 109. That is, the optical disk 10 of the present embodiment needs only have at least first information stored thereon.

Further, the recording and reproduction device according to the present embodiment needs only be schematically configured in the same way as the recording and reproduction device 1 or 1a for use in Embodiments 1 and 2 and, as such, is not described here.

Therefore, the present embodiment is described on the assumption that the recording and reproduction device is configured in the same way as the recording and reproduction device of Fig. 16 and the optical disk is structured in the same way as the optical disk 10 of Fig. 3.

### (Configuration of the Control Section)

Next, the configuration of the control section 20 in the recording and reproduction device 1 according to the present embodiment is described with reference to Fig. 30. Fig. 30 is a block diagram showing the configuration of the control section 20 in the recording and reproduction device 1 according to the present embodiment.

As shown in Fig. 30, the control section 20 of the recording and reproduction device 1 includes a device control section 13, an information readout section 121, an information storage control section 122, an insertion determining section 123, an information recording section 124, and an information erasing section 211 (information erasing means). It should be noted that the information readout section 121, the information storage control section 122, the insertion determining section 123, and the information recording section 124 perform the same functions as the recording and reproduction control section 12 of Embodiments 1 and 2.

When the recording and reproduction device 1 has inserted therein an optical disk 10 having an application recorded thereon, for example, the device control section 13 serves to control the recording and reproduction device 1 for a process of activating the application, an application termination process (application deactivation process), etc. It should be noted that when the optical disk 10 has an OS recorded thereon, the device control section 13 may carry out a BIOS (basic input/output system) process, as in Embodiment 1 (see Fig. 4), as well as the OS activation and termination processes.

In addition to this, the device control section 13 also serves to control the power source of the recording and reproduction device 1, to carry out a process of ejecting an optical disk 10, to detect an operation of ejecting an optical disk 10, to detect an application termination operation, and to give an prompt to insert a predetermined optical disk 10, etc.

The information readout section 121 serves to, by controlling the recording and reproduction circuit group 30, read out an application recorded on an optical disk 10.

The information storage control section 122 serves to store, in the memory section 15, an application read out by the information readout section 121.

The insertion determining section 123 serves to determine whether or not an optical disk 10 has been inserted, depending on whether or not the insertion determining section 123 has received an insertion detection signal from the disk loading recognition section 50 (see Fig. 16).

The information recording section 124 serves to, by controlling the recording and reproduction circuit group 30, record, on an optical disk 10, user configuration information stored, for example, in the memory section 15.

The information erasing section 211 serves to perform the function of the enable/disable control section 21 by, when the optical disk 10 is ejected, erasing the application stored in the memory section 15 by the information erasing section 211.

Further, the memory section 15 has an application stored therein by the information storage control section 122. In addition to this, the memory section 15 has stored therein various application programs that are executed by the control section 20.

### (Flow of a Process in the Recording and Reproduction Device from Application Termination to Ejection)

Next, the flow of a process in the recording and reproduction device 1 from application termination to ejection of an optical disk 10 is described with reference to Fig. 31. Fig. 31 is a flow chart showing the flow of the process in the recording and reproduction device 1 from application termination to ejection of the optical disk 10.

First, upon insertion of the optical disk 10 into a disk insertion section, the disk loading recognition section 50 (see Fig. 13) detects the insertion of the optical disk 10 into the recording and reproduction device 1. Then, the disk loading recognition section 50 sends the insertion determining section 123 an insertion detection signal indicating that the insertion of the optical disk 10 has been detected.

Upon receiving the insertion detection signal, the insertion determining section 123 reads out part of information present in a BCA of the optical disk 10 and determines whether or not the inserted optical disk 10 has an application recorded thereon (whether or not there is an application disk) (S341). Normally, the BCA has recorded therein information indicative of the type of the optical disk 10 (e.g., information indicative of a two-layer RE, a two-layer R, a single-layer ROM, and a two-layer OS), etc., as well as second key information (medium unique information and individual recognition information) of the optical disk 10. It should be noted that by determining whether or not information read out from the first information recording layer 102 by the information readout section 121 is an application, the insertion determining section 123 may determine that the optical disk 10 has an application recorded thereon.

If the insertion determining section 123 determines that the inserted optical disk 10 has an application recorded thereon (YES in S341), the insertion determining section 123 sends the information readout section 121 an insertion confirmation signal indicating that the optical disk 10 has been inserted. Upon receiving the insertion confirmation signal, the information readout section 121 reads out the application from the inserted optical disk 10 and sends the application to the information storage control section 122. The information storage control section 122 stores, in the memory section 15 (memory), the application read out from the optical disk 10 (S342).

After storing the application in the memory section 15, the information storage control section 122 notifies the device control section 13 of the storage. Upon receiving the notification, the device control section 13 activates the application stored in the memory section 15 (on the memory) (S343).

After that, the device control section 13 determines whether or not the application thus activated has been terminated (S344). When an operation of terminating the application (an operation such as activating an exit option for the application or turning off the recording and reproduction device 1) is detected as it is carried out by a user, the device control section 13 determines that the application has been terminated.

If the device control section 13 determines that the application has been terminated (YES in S344), the device control section 13 sends the information recording section 124 a termination detection signal indicating that the termination of the application has been detected. Upon receiving the termination detection signal, the information recording section 124 reads out user configuration information serving as environment information set up for the application by a user and records the user configuration information in a predetermined region of the optical disk 10 (specifically, in the user data region 107 of the second information recording layer 104) (S345).

Alternatively, if the device control section 13 determines that the application has not been terminated (NO in S344), the device control section 13 returns to S344 to repeat the step until the application is terminated.

Upon completion of the recording of the user configuration information to the optical disk 10, the information recording section 124 notifies the device control section 13 accordingly. Upon receiving the notification, the device control section 13 starts a process of deactivating the in-use application stored in the memory section 15 (on the memory) (S346).

Upon completion of the process of deactivating the application, the device control section 13 notifies the information erasing section 211 accordingly. Upon receiving the notification, the information erasing section 211 erases the application stored in the memory section 15 (S347) and notifies the device control section 13 accordingly. Upon receiving the notification, the device control section 13 ejects the optical disk 10 from the recording and reproduction device 1 (S348), thereby causing the recording and reproduction device 1 according to the present embodiment to complete the process. Alternatively, if the insertion determining section 123 determines in S341 that the inserted disk is not an application disk (NO in S341), the insertion determining section 123 notifies the device control section 13 accordingly, whereby the device control section 13 ejects the optical disk 10.

In the recording and reproduction device 1, as described above, the device control section 13 activates and executes the application read out from the optical disk 10 by the information readout section 121 and stored in the memory section 15 by the information storage control section 122. Then, when the optical disk 10 is ejected, the information erasing section 211 erases the application stored in the memory section 15. That is, such a situation can be created that although the application recorded on the optical disk 10 (related to the optical disk 10) can be executed in the recording and reproduction device 1 while the recording and reproduction device 1 is having the optical disk 10 inserted therein, the application becomes unusable in the recording and reproduction device 1 once the optical disk 10 has been ejected.

As such, use of the recording and reproduction device 1 makes it possible, with sufficient safeguards (license protection) for an application recorded on an optical disk 10, to use the application in a plurality of recording and reproduction devices.

### [Embodiment 4]

An embodiment of the present invention is described below with reference to Figs. 32 through 36.

### (Brief Overview of the Present Embodiment)

The enable/disable control section 21, of a recording and reproduction device 1 of the present embodiment is achieved by a state control section 212 which, after the information storage control section 122 stores the application (first information) in the memory section 15, disables use of the application recorded on the optical disk 10 or 10b.

As a more concrete configuration, the enable/disable control section 21 is achieved by an irradiation control section 2121 which, after the information storage control section 122 stores the application in the memory section 15, irradiates the first information recording layer 102b of the optical disk 10b with light having a particular light intensity that disables use of the application recorded in the first information recording layer 102b. It should be noted that the present embodiment presupposes that the application is used after being stored in the memory section 15.

The foregoing configuration makes it possible to, when an optical disk 10 or 10b is ejected, render first information recorded on the optical disk 10 or 10b unusable. Meanwhile, since the recording and reproduction device 1 stores the first information in its memory section 15 before the first information recorded on the optical disk 10 or 10b becomes unusable, the recording and reproduction device 1 can use the first information. That is, the recording and reproduction device 1 can render the first information unusable in another recording and reproduction device when it can use the first information.

More specifically, the irradiation control section 2121 irradiates the first information recording layer 102b of the optical disk 10b with light having a particular light intensity, thereby turning the first information recording layer 102b into a region from which information cannot be read out. This makes it impossible to read out the first information from the region even if the first information recording layer 102b is later irradiated with reproducing light. That is, such a situation can be created that while the recording and reproduction device can use the first information stored in the memory section 15, another recording and reproduction device cannot use the first information, because it cannot read out the first information from the reproduce-only region of the information recording medium.

That is, in the present embodiment, as in Embodiment 3, the enable/disable control section 21 serving as the state control section 212 (state control means) (e.g., the enable/disable control section 21 serving as the irradiation control section 2121 (irradiation control means)) controls whether the application is in a usable or unusable state, without using key information. This makes it possible, with sufficient safeguards (license protection) for the application recorded on the optical disk 10, to use the first information in a plurality of recording and reproduction devices 1.

It should be noted that as in Embodiment 3, the recording and reproduction device of the present embodiment is described on the assumption that it is configured in the same way as the recording and reproduction device 1 of Fig. 16.

### (Structure of an Optical Disk)

First, an optical disk 10b (information recording medium) according to the present embodiment is described with reference to Fig. 32. Fig. 32 is a cross-sectional view schematically showing the structure of an example of an optical disk 10b according to the present embodiment.

As with the optical disk 10, the optical disk 10b is a multilayer structure having a plurality of layers on which information such as software (an application) or content can be recorded, and includes a translucent layer 101, a first information recording layer 102b (reproduce-only region, reproduce-only layer), an intermediate layer 103, a second information recording layer 104 (recordable region), and a substrate 105, arranged in this order starting from the plane of incidence of reproducing light. The optical disk 10b is, for example, a BD on which a large volume (50 GB) of information can be recorded.

It should be noted that the translucent layer 101, the intermediate layer 103, the second information recording layer 104, and the substrate 105 are arranged in the same way as those of the optical disk 10 of Fig. 3. and, as such, are not described here.

The first information recording layer 102b is a layer having formed thereon a phase change recording film similar to an RE (REwritable) layer on a ROM recording surface similar to a conventional one having a sequence of pits formed in advance in accordance with the recorded information, and is expressed as "ROM-RE layer" in this paragraph. As with the RE layer, the ROM-RE layer, for example, includes a first protective film (e.g., ZnS-SiO₂ having a thickness of 35 nm), a second protective film (e.g., ZrO₂ having a thickness of 5 nm), a recording layer (e.g., GeTe-Sb₂Te₃ having a thickness of 6 nm), a third protective film (e.g., ZrO₂ having a thickness of 5 nm), a reflecting film (e.g., APC (AgPdCu) having a thickness of 10 nm), and a fourth protective film (e.g., TiO₂ having a thickness of 20 nm), joined in this order on top of each other. Alternatively, it is possible to provide a normal RE layer having no ROM pits, instead of the ROM-RE layer, and use the RE layer as a reproduce-only layer by use of a rewrite prohibition flag or the like.

By thus providing the first information recording layer 102b with a recording layer composed of a phase change recording material, the first information recording layer 102b can take on two different types of reflectance (e.g., reflectances A and B) by use of the difference of reflectance in amorphous state and crystalline state of the phase change recording material as is widely said. Such reflectance can be achieved by the recording and reproduction device 1 radiating light having at least two types of particular light intensity or illuminating a sequence of pits (generally called "strategies") corresponding to such intensities. That is, the recording and reproduction device 1 can achieve the reflectances A and B by irradiating the first information recording layer 102b with light having a particular light intensity to render the application recorded on the recording layer unusable. For example, the recording and reproduction device 1 takes on the reflectance A by radiating light having a light intensity A' and takes on the reflectance B by radiating light having a light intensity B'. The light intensities A' and B' are light intensities that are generally called recording powers or erasing powers with respect to a phase change recording material. It is of no particular importance whether the light intensities A' and B' correspond to recording powers or erasing powers.

Since the first information recording layer 102b has a sequence of pits provided in advance therein as with an ordinary ROM (read-only memory), the first information recording layer 102b has an application recorded in advance thereon. The recording and reproduction device 1 can obtain signal waveforms corresponding to the pits by radiating reproducing light both in the state of reflectance A and the state of reflectance B. However, the reflectances A and B are different both in reflectance and intensity of reflected light, so that the signal waveforms obtained from the same pits are at different signal levels.

Therefore, by setting a signal level A" at the reflectance A as "usable state" and a signal level B" at the reflectance B as "unusable state" (i.e., by storing the signal level A" at the reflectance A as "usable state" and the signal level B" at the reflectance B as "unusable state" in advance in the memory section 15), for example, the first information recording layer 102b can be set to be usable or unusable in the recording and reproduction device 1 or in another recording and reproduction device. A signal having the signal level B" can be recognized in the optical system and signal system of the recording and reproduction device 1, but the recording and reproduction device 1 does not recognize the signal, because the first information recording layer 102b has been set to be unusable, nor can it be used by the will of a user.

Furthermore, by radiating light at the light intensity A' or B', the recording and reproduction device 1 can keep the first information recording layer 102b in a desired state. With this, use of the recording and reproduction device 1 makes it possible to render the application on the optical disk 10b unusable without completely erasing it and restore it (render it usable) as needed.

### (Configuration of the Control Section)

Next, the configuration of the control section 20 in the recording and reproduction device 1 according to the present embodiment is described with reference to Fig. 33. Fig. 33 is a block diagram showing the configuration of the control section 20 in the recording and reproduction device 1 according to the present embodiment.

As shown in Fig. 33, the control section 20 of the recording and reproduction device 1 includes a device control section 13, an information readout section 121, an information storage control section 122, an insertion determining section 123, an information recording section 124, a state control section 212, and an information erasing section 211. It should be noted that the information readout section 121, the information storage control section 122, the insertion determining section 123, the information recording section 124, the state control means 125 perform the same functions as the recording and reproduction control section 12 of Embodiments 1 and 2. Further, the information storage control section 122, the insertion determining section 123, the information recording section 124, and the information erasing section 211 are the same as those of Embodiment 3 and, as such, are not described here.

In addition to the processes described in Embodiment 3, the device control section 13 serves to decide whether the application recorded on the optical disk 10b or the application stored in the memory section 15 is left as usable.

In addition to the processes described in Embodiment 3, the information readout section 121 serves to, by irradiating the first information recording layer 102b with reproducing light, determines whether the application recorded on the optical disk 10b is usable or not.

In addition to the processes described in Embodiment 3, the information storage control section 122 serves to, after the optical disk 10b has been inserted, determines whether or not there exists an application in the memory section 15.

The state control section 212 serves to control whether the application recorded on the optical disk 10b is in a usable or unusable state, and includes an irradiation control section 2121 as an embodiment thereof.

The irradiation control section 2121 serves to, after the information storage control section 122 has stored the application in the memory section 15, irradiate the first information recording layer 102b of the optical disk 10b with light having a particular light intensity to render the application recorded on the first information recording layer 102b unusable.

It should be noted that the memory section 15 has an application stored therein by the information storage control section 122. In addition to this, the memory section 15 has stored therein various application programs that are executed by the control section 20, configuration information (table) by which the usable and unusable states, the intensities of light that the recording and reproduction device 1 radiates, and the signal levels that are obtained are associated with one another, etc. In the present embodiment, it is assumed that as mentioned above, the signal level A" at the reflectance A has been set as "usable state" and the signal level B" at the reflectance B has been set as "unusable state".

### (Process in the Recording and Reproduction Device from Optical Disk Insertion to Ejection (Part I))

Next, the flow of a process in the recording and reproduction device 1 from disk insertion to ejection of the optical disk 10b is described with reference to Fig. 34. Fig. 34 is a flow chart showing the flow of the process in the recording and reproduction device 1 from disk insertion to ejection of the optical disk 10b. It should be noted that the flow of the process of Fig. 34 is indicated by solid lines in Fig. 33.

The flow chart of Fig. 34 shows a basic process that is carried out by the recording and reproduction device 1 to render the application recorded on the optical disk 10b unusable when the optical disk 10b is ejected after the termination of the application, and also shows a process that is carried out when the optical disk 10b has been first inserted into the recording and reproduction device 1 (when the application is first executed).

It should be noted that the steps S351 to S356 of Fig. 34 are identical to the steps S341 to S346 of Fig. 31 and, as such, are not described here.

Upon completion of the process of deactivating the application stored in the memory section 15 (on the memory) in S356, the device control section 13 notifies the state control section 212 accordingly. Upon receiving the notification, the irradiation control section 2121 of the state control section 212 renders the application recorded on the optical disk 10b unusable (S357).

In this case, by sending the recording and reproduction circuit group 30 an irradiation instruction to irradiate the first information recording layer 102b with light at the light intensity B', the irradiation control section 2121 sets the reflectance of the first information recording layer 102b at the reflectance B. Thus, when, after ejection in S358, another recording and reproduction device (which may be the recording and reproduction device 1) radiates reproducing light to read out the application from the first information recording layer 102b, it obtains the signal level B" from the first information recording layer 102b. Since, according to the settings stored in the memory section of the another recording and reproduction device, the signal level B" is associated with an "unusable state", the another recording and reproduction device can recognize the application as being in an "unusable state" by referring to the settings. That is, the recording and reproduction device 1 can make it impossible for another recording and reproduction device to read out the application from the first information recording layer 102b of the optical disk 10b.

After finishing irradiating the first information recording layer 102b with light at the light intensity B', the irradiation control section 2121 notifies the device control section 13 accordingly. Upon receiving the notification, the device control section 13 ejects the optical disk 10b from the recording and reproduction device 1 (S358), thereby causing the recording and reproduction device 1 according to the present embodiment to complete the process.

As described above, at the time of termination of the application, the application recorded on the optical disk 10b is rendered unusable while the application stored in the memory section 15 is kept usable. This makes it possible to, after the application is terminated and the optical disk 10b is then ejected, ensure sufficient safeguards (license protection) for the application recorded on the optical disk 10b.

### (Process in the Recording and Reproduction Device from Optical Disk Insertion to Ejection (Part II))

Next, another example of the flow of a process in the recording and reproduction device 1 from disk insertion to ejection of the optical disk 10b is described with reference to Fig. 35. Fig. 35 is a flow chart showing another example of the flow of the process in the recording and reproduction device 1 from disk insertion to ejection of the optical disk 10b. It should be noted that the flow of the process of Fig. 35 is indicated by solid lines in Fig. 33.

The flow chart of Fig. 35 shows a process that is carried out by the recording and reproduction device 1 to make it possible to choose whether to render the application recorded on the optical disk 10b unusable or erase the application stored in the memory section 15 when the optical disk 10b is ejected after the termination of the application. Further, this process covers a case where it is not the first time the optical disk 10b is inserted into the recording and reproduction device 1 (i.e., a case where the optical disk 10b is inserted into the recording and reproduction device 1 for the second time or later) and, after it has been rendered impossible to read out the application from the optical disk 10b, makes it possible to read out the application again (i.e., in consideration of restoration of application readout).

First, as in S351, the insertion determining section 123 determines whether or not the inserted optical disk 10b has an application recorded thereon (whether or not an application disk has been inserted) (S361). If the insertion determining section 123 determines that the inserted disk is an application disk (YES in S361), the insertion determining section 123 notifies the information storage control section 122 accordingly. Alternatively, if the insertion determining section 123 determines that the inserted disk is not an application disk, the insertion determining section 123 notifies the device control section 13 accordingly, whereby the device control section 13 shifts to S371, which is to be described later.

Upon receiving the notification indicating that the inserted optical disk is an application disk, the information storage control section 122 determines whether or not there exists an application in the memory section 15 (memory) (S362). If the information storage control section 122 determines that there exists an application in the memory section 15 (YES in S362), the information storage control section 122 notifies the device control section 13 accordingly. Upon receiving the notification, the device control section 13 activates the application stored in the memory section 15 (on the memory) (S363). That is, this flow chart presupposes that regardless of whether the application recorded on the optical disk 10b is usable or not, the application stored in the memory section 15 is used when the optical disk 10b can be recognized.

Alternatively, if the information storage control section 122 determines that there exists no application in the memory section 15 (NO in S362), the information storage control section 122 notifies the information readout section 121 accordingly. Upon receiving the notification, the information readout section 121 determines whether the application recorded on the optical disk 10b is usable or not (S372). Specifically, by controlling the recording and reproduction circuit group 30, the information readout section 121 determines the application recorded on the optical disk 10b is usable or not, depending on whether or not the application can be read out from the first information recording layer 102b. For example, when the reflectance of the first information recording layer 12b is the reflectance B, the information readout section 121 obtains a signal waveform at the signal level B" and therefore, by referring to the memory section 15, determines that the application recorded on the optical disk 10b is in an "unusable state".

If the information readout section 121 determines that the application recorded on the optical disk 10b is usable (YES in S372), the information readout section 121 reads out the application from the optical disk 10b by controlling the recording and reproduction circuit group 30. The information storage control section 122 stores, in the memory section 15, the application read out by the information readout section 121 (S373) and notifies the device control section 13 accordingly, thereby shifting to S363. It should be noted that if the information readout section 121 determines that the application recorded on the optical disk 10b is unusable (NO in S372), the information readout section 121 notifies the device control section 13 accordingly and the device control section 13 shifts to S371, which is to be described later.

After S363, as in S344, the device control section 13 determines whether or not the application thus activated has been terminated (S364). If the device control section 13 determines that the application has been terminated (YES in S364), the device control section 13 sends the insertion determining section 123 a termination detection signal indicating that the termination of the application has been detected. Upon receiving the termination detection signal, the insertion determining section 123 determines whether or not an optical disk 10b having recorded thereon the application being used in the recording and reproduction device 1 has been inserted (S365). If the insertion determining section 123 determines that such an optical disk 10b has been inserted (YES in S365), the insertion determining section 123 notifies the information recording section 124 accordingly. Upon receiving the notification, the information recording section 124 records, on the optical disk 10b, the user configuration information stored in the memory section 15 (S366). Upon completion of the recording of the user configuration information on the optical disk 10b, the information recording section 124 notifies the device control section 13 accordingly. Upon receiving the notification, the device control section 13 starts a process of deactivating the in-use application stored in the memory section 15 (on the memory) (S367).

If the insertion determining section 123 determines in S365 that the disk insertion section (not illustrated) does not have inserted therein an optical disk 10b having recorded thereon the application being used in the recording and reproduction device 1 (NO in S365), the insertion determining section 123 notifies the device control section 13 accordingly.

Upon receiving the notification, the device control section 13 prompts the user to insert into the disk insertion section an optical disk 10b having recorded thereon the application being used (S374), for example, as in S57 of Fig. 7. Upon completion of S374, the device control section 13 notifies the insertion determining section 123 accordingly, thereby returning to S365.

It should be noted that if the device control section 13 determines the application has not been terminated (NO in S364), the device control section 13 returns to S364 to repeat the determination process until the application is terminated.

Upon completion of the process of deactivating the application, the device control section 13 decides whether the application recorded on the optical disk 10b or the application stored in the memory section 15 (memory) is recorded or stored in a usable state (left as it is) (S368). For example, the device control section 13 asks the user through a display device, an audio output device (not illustrated), etc. connected to the recording and reproduction device 1 which of the applications is left in a usable state.

If the user decides to leave the application stored in the memory section 15 in a usable state ("MEMORY" in S368), the device control section 13 notifies the information readout section 121 accordingly. Upon receiving the notification, the information readout section 121 controls the recording and reproduction circuit group 30 to irradiate the first information recording layer 102b with reproducing light, thereby determining whether the application recorded on the optical disk 10b is usable or not (S369).

If the information readout section 121 obtains a signal waveform at the signal level A", i.e., if the information readout section 121 determines that the application recorded on the optical disk 10b is usable (YES in S369), the information readout section 121 notifies the irradiation control section 2121 accordingly. Upon receiving the notification, the irradiation control section 2121 controls the recording and reproduction circuit group 30 to irradiate the first information recording layer 102b with light at the light intensity B' to set the reflectance of the first information recording layer 102b at the reflectance B, thereby rendering the application recorded on the optical disk 10b unusable (S370), as in S357.

After rendering the application recorded on the optical disk 10b unusable, the irradiation control section 2121 notifies the device control section 13 accordingly. Upon receiving the notification, the device control section 13 ejects the optical disk 10b from the recording and reproduction device 10b (S371), thereby causing the recording and reproduction device 1 according to the present embodiment to complete the process.

It should be noted that if the information readout section 121 obtains a signal waveform at the signal level B", i.e., if the information readout section 121 determines that the application recorded on the optical disk 10b is unusable (NO in S369), the information readout section 121 notifies the device control section 13 accordingly and the device control section 13 shifts to S371.

Alternatively, the user decides to leave the application stored in the memory section 15 in a usable state ("DISK" in S368), the device control section 13 notifies the information readout section 121 accordingly. Upon receiving the notification, the information readout section 121 controls the recording and reproduction circuit group 30 to irradiate the first information recording layer 102b with reproducing light, thereby determining whether the application recorded on the optical disk 10b is usable or not (S375), as in S369.

If the information readout section 121 obtains a signal waveform at the signal level B", i.e., if the information readout section 121 determines that the application recorded on the optical disk 10b is unusable (YES in S375), the information readout section 121 notifies the irradiation control section 2121 accordingly. Upon receiving the notification, the irradiation control section 2121 controls the recording and reproduction circuit group 30 to irradiate the first information recording layer 102b with light at the light intensity A' to set the reflectance of the first information recording layer 102b at the reflectance A, thereby rendering the application recorded on the optical disk 10b usable (S376). After rendering the application recorded on the optical disk 10b unusable, the irradiation control section 2121 notifies the information erasing section 211 accordingly. Upon receiving the notification, the information erasing section 211 erases the application stored in the memory section 15 (S377) and notifies the device control section 13 accordingly, whereby the device control section 13 shifts to S371.

Alternatively, if the information readout section 121 obtains a signal waveform at the signal level A", i.e., if the information readout section 121 determines that the application recorded on the optical disk 10b is usable (YES in S375), the information readout section 121 notifies the information erasing section 211 accordingly and the information erasing section 211 shifts to S377.

That is, by carrying out the steps S369 and S375 in deciding in S368 whether the application recorded on the optical disk 10b or the application stored in the memory section 15 is rendered usable, a process can be carried out which corresponds to whether the application was usable or not when the optical disk 10b was previously ejected.

For example, when the application was left as it is at the time of the previous termination of the application, the optical disk 10b has been ejected with its application in an unusable state. Therefore, upon reinsertion of the optical disk 10b, the recording and reproduction device 1 ejects the optical disk 10b as it is in the case of "MEMORY" in S368 since the application recorded on the optical disk 10b was rendered unusable at the time of S368 or, in the case of "DISK" in S368, renders the application recorded on the optical disk 10b usable and ejects the optical disk 10b after erasing the application stored in the memory section 15.

Alternatively, for example, when the application stored in the memory section 15 was erased at the time of the previous termination of the application, the optical disk 10b has been ejected with its application in a usable state. Therefore, upon reinsertion of the optical disk 10b, the recording and reproduction device 1, in the case of "MEMORY" in S368, ejects the optical disk 10b after rendering the application recorded on the optical disk 10b unusable, since the application recorded on the optical disk 10b was rendered usable at the time of S368. Alternatively, in the case of "DISK" in S368, the recording and reproduction device 1 ejects the optical disk 10b after erasing the application stored in the memory section 15 (i.e., without carrying out the process on the optical disk 10b).

It should be noted that at the time of S373, the device control section 13 may carry out a process of making sure to render the application recorded on the optical disk 10b unusable. In this case, it is not necessary to carry out the steps S369, S370, and S375.

As described above, at the time of termination of the application, a storage area that is different from an application storage area chosen to be usable is rendered unusable. For example, at the time of termination of the application, the application recorded on the optical disk 10b is rendered unusable when the application is stored in the memory section 15, and the application stored in the memory section 15 is erased when the application recorded on the optical disk 10b is rendered usable. This makes it possible to, even when the application storage area is chosen, ensure sufficient safeguards (license protection) for the application recorded on the optical disk 10b.

### (Flow of a Process in the Recording and Reproduction Device at the Time of Temporary Ejection)

Next, the flow of a process that is carried out in the recording and reproduction device 1 when the optical disk 10b has been ejected during the execution of the application is described with reference to Fig. 36. Fig. 36 is a flow chart showing the flow of the process that is carried out in the recording and reproduction device 1 when the optical disk 10b has been ejected during the execution of the application.

The flow chart of Fig. 36 shows a process which, when the optical disk 10b is temporarily ejected during the execution of the application, is carried out by the recording and reproduction device 1 to disable use of the application of the optical disk 10b in order to disable use of the optical disk 10b in another recording and reproduction device. That is, this flow chart presupposes that with the optical disk 10b inserted, the device control section 13 is executing the application stored in the memory section 15.

First, upon receiving an ejection instruction from a user during the execution of the application, for example, the device control section 13 notifies the information readout section 121 accordingly. Upon receiving the notification, the information readout section 121 determines whether the application recorded on the optical disk 10b is usable or not (S381), as in S369. This is intended, as in S369, to carry out a process which corresponds to whether the application recorded on the optical disk 10b is currently usable or not. This process does not need to be carried out when the device control section 13 carries out a process of making sure to render the application recorded on the optical disk 10b unusable.

The subsequent steps S382 and S383 are identical to the steps S370 and S371 of Fig. 35 and, as such, are not described here.

As described above, even when the optical disk 10b is temporarily ejected during the execution of the application, the application recorded on the optical disk 10b is rendered unusable while the application stored in the memory section 15 is kept usable. This makes it possible to, even when the optical disk 10b is temporarily ejected, ensure sufficient safeguards (license protection) for the application recorded on the optical disk 10b.

### (Modification 1)

Further, a configuration in which a normal RE layer having no ROM pits is provided instead of the ROM-RE layer and the RE layer is used as a reproduce-only layer with a rewrite prohibition flag or the like is thought of as follows.

In the case of such a configuration, the first information recording layer 102b has its first information recorded thereon in the form of recorded bits on the RE layer. In a usable state, the information is used with the RE layer as a reproduce-only layer with a rewrite prohibition flag. By use of a recording and reproduction prohibition flag (rewrite/readout prohibition flag) or the like with the recorded bits of first information as they are, the information can be rendered unusable. Once thus agreed upon, it is possible to switch between usable and unusable states simply by changing flags. This allows processing at a higher speed than in the case of the ROM-RE layer, which requires irradiation of the whole region corresponding to the first information with light at a particular intensity for change of state.

### (Modification 2)

It should be noted that although, in the foregoing, the recording and reproduction device 1 has the irradiation control section 2121 provided in the state control section 212, uses the optical disk 1b provided with the first information recording layer 102b, and thereby controls whether the application recorded on the optical disk 10b or the application stored in the memory section 15 is usable or unusable, this does not imply any limitation. That is, the state control section 212 may tell the user to thermally deform the optical disk or scratch a surface of the optical disk to, in S357, disable use of the application recorded on the optical disk. Alternatively, when the recording and reproduction device 1 includes a surface damaging member (not illustrated) such as a needle, the state control section 212 may control the surface damaging member to scratch the surface of the optical disk to disable use of the application.

### (Supplementary Information to Embodiment 3 and 4)

The blocks of the recording and reproduction device according to Embodiment 3, or the information readout section 121, the information storage control section 122, the insertion determining section 123, the information recording section 124, the information erasing section 211 (enable/disable control section 21), and the device control section 13 in particular, may be constituted by hardware logic, or may be constituted by software with use of a CPU as described below.

Further, the blocks of the recording and reproduction device according to Embodiment 4, or the information readout section 121, the information storage control section 122, the insertion determining section 123, the information recording section 124, the state control section 212 (irradiation control section 2121) (enable/disable control section 21), the information erasing section 211 (enable/disable control section 21), and the device control section 13 in particular, may be constituted by hardware logic, or may be constituted by software with use of a CPU as described below.

That is, the recording and reproduction devices 1 according to Embodiments 3 and 4 each include: a CPU (central processing unit) for executing an instruction of a control program for realizing various functions; a ROM (read-only memory) in which the program has been stored; a RAM for expanding the program; and a memory device (recording medium), such as a memory, in which the program and various data are stored. The object of the present invention can also be achieved by providing the mobile communication device 1 with a storage medium in which a program code (executable program, intermediate code, or source program) of the control program of the mobile communication device 1 has been stored in a computer readable manner, and by causing the computer (CPU or MPU) to read and execute the program code stored in the storage medium, the program code serving as software for realizing the aforementioned functions.

Examples of the recording medium include: a tape such as a magnetic tape or a cassette tape; a magnetic disk such as a floppy (registered trademark) disk or a hard disk; an optical disk such as a CD-ROM, an MO, an MD, a DVD, or a CD-R; a card such as an IC card (inclusive of a memory card) or an optical card; and a semiconductor memory such as a mask ROM, an EPROM, an EEPROM, or a flash ROM.

Further, the recording and reproduction devices 1 according to Embodiments 3 and 4 may each be connectable to a communication network, and the program code may be supplied via the communication network. Examples of the communication network include, but are not particularly limited to, the Internet, an intranet, an extranet, a LAN (local area network), an ISDN (integrated services digital network), a VAN (value added network), a CATV (cable TV) communication network, a virtual private network, a telephone network, a mobile communication network, and a satellite communication network. Further, usable examples of a transmission medium that constitutes the communication network include, but are not particularly limited to, a cable medium such as IEEE 1394, a USB, power line communication, a cable TV line, a telephone line, or an ADSL line and a wireless medium such as IrDA, infrared rays used for a remote controller, Bluetooth (registered trademark), IEEE 802.11, HDR (High Data Rate), a mobile phone network, satellite connection, or a terrestrial digital network. It should be noted that the present invention can also be realized in the form of a computer data signal realized by electronic transmission of the program code and embedded in a carrier wave.

Further, as with Embodiments 1 and 2, Embodiments 3 and 4 may each be configured to authenticate an application by use of key information and then permit use of the application. Further, when the application is in coded form, the application may be decoded by use of the key information. Further, exclusive use in a particular recording and reproduction device of the application recorded on the optical disk 10 or 10b may be permitted by use of third key information and fourth key information.

### [Embodiment 5]

An embodiment of the present invention is described below with reference to Figs. 37 through 49.

### (Brief Overview of the Present Embodiment)

The recording and reproduction devices 1 and 1a of the present embodiment each include a key information generating section 1121 which, by use of at least device unique information stored in the memory section to serve as unique information for discriminating the recording and reproduction device from another recording and reproduction device, generates first key information for permitting use of the first information stored in the memory section, the enable/disable control section 21 being achieved by a key information recording and erasing section 114 which records, on the optical disk 10, the first key information generated by the key information generating section 1121.

Further, the recording and reproduction devices 1 and 1a of the present embodiment each include: a memory section 15 having stored therein device unique information serving as unique information for discriminating the recording and reproduction device from another recording and reproduction device; a key information generating section 1121 which, by use of at least the device unique information stored in the memory section 15, generates first key information for permitting use of the first information recorded on the optical disk 10; and a key information recording and erasing section 114 which records, on the optical disk 10, the first key information generated by the key information generating section 1121.

In either of the foregoing configurations, by being inserted into the recording and reproduction device 1 or 1a to get recorded thereon the first key information generated by the recording and reproduction device 1 or 1a, the optical disk 10 comes into a recording state that is different from that in which the optical disk 10 had been before it was inserted into the recording and reproduction device 1 or 1a. Thus, even if the optical disk 10 has been temporarily ejected from the recording and reproduction device 1 or 1a and an attempt to use the first information in another recording and reproduction device has been made, for example, the first information cannot be used in the another recording and reproduction device, since the optical disk 10 has recorded thereon the first key information generated by the recording and reproduction device 1 or 1a. That is, by recording the first key information on the optical disk 10, the recording and reproduction device 1 or 1a can render the first information unusable when the optical disk 10 has been inserted into another recording and reproduction device.

### (Embodiment F)

An embodiment F of Embodiment 5 is described below with reference to Figs. 37 through 44 and 49.

### (Structure of an Optical Disk)

First, an optical disk 10 (information recording medium) according to the present embodiment is described with reference to Fig. 38. Fig. 38 is a cross-sectional view schematically showing the structure of an example of an optical disk 10 according to the present embodiment.

The optical disk 10 is a multilayer structure having a plurality of layers on which content (first information) such as software or video data, audio data, text data, etc. or information such as various types of key information that are to be described later can be recorded, and includes a translucent layer 101, a first information recording layer 102 (reproduce-only region, reproduce-only layer), an intermediate layer 103, a second information recording layer 104 (recordable region), and a substrate 105, arranged in this order starting from the plane of incidence of reproducing light. The optical disk 10 is, for example, a BD on which a large volume (50 GB) of information can be recorded.

The translucent layer 101 is made of a highly transparent ultraviolet curing resin (e.g., a polycarbonate film and a transparent adhesive), for example, having a thickness of 75 µm. It should be noted that the translucent layer 101 may, for example, be a 0.6 mm polycarbonate substrate, depending on the optical system of the recording and reproduction device 1.

The first information recording layer 102 is a ROM (read-only memory) layer, made of aluminum nitride having a thickness of 15 nm, whose refractive index has been adjusted by the flow rate of nitrogen during film formation, for example. It should be noted that the first information recording layer 102 is not limited to aluminum nitride and may, for example, be made of silicon nitride or a dielectric composed mainly of aluminum nitride or of silicon nitride, as well as aluminum nitride.

The intermediate layer 103 is made of a highly transparent ultraviolet curing resin, for example, having a thickness of 25 µm. Further, the intermediate layer 103 has pre-pits provided in a surface thereof facing the first information recording layer 102 and made of depressed and raised parts corresponding to information that is recorded as a shape on the first information recording layer 102.

The second information recording layer 104 is an RE (REwritable) layer, for example, including a first protective film (e.g., ZnS-SiO₂ having a thickness of 35 nm), a second protective film (e.g., ZrO₂ having a thickness of 5 nm), a recording layer (e.g., GeTe-Sb₂Te₃ having a thickness of 10 nm), a third protective film (e.g., ZrO₂ having a thickness of 5 nm), a fourth protective film (e.g., ZnS-SiO₂ having a thickness of 35 nm), a fifth protective film (e.g., ZrO₂ having a thickness of 5 nm), and a reflecting film (e.g., APC (AgPdCu) having a thickness of 20 nm), joined in this order on top of each other.

The substrate 105 is made of polycarbonate, for example, having a thickness of 1.1 mm. It should be noted that the substrate 105 may be made of a polyolefin resin, a metal, or the like, as well as polycarbonate.

It should be noted that although the optical disk 10 of Fig. 38 is structured to include a single first information recording layer 102 and a single second information recording layer 104, it is not limited to such a structure and may be structured to have a plurality of information recording layers 102 and a plurality of second information recording layers 104.

Next, examples of pieces of information that are recorded on the first information recording layer 102 and the second information recording layer 104 are described with reference to Fig. 39. (a) of Fig. 39 is a cross-sectional view more specifically showing the structure of first and second information recording layers 102 and 104 of an optical disk 10, and (b) of Fig. 39 shows an example of information that is recorded in a key information region 109 (nonuser data region) of the second information recording layer 104. It should be noted that (a) of Fig. 39 omits the intermediate layer 103, which is to be sandwiched between the first and second information recording layers 102 and 104.

As shown in (a) of Fig. 39, the first and second information recording layers 102 and 104 are structured to include a lead-in region 106 (nonuser data region), a user data region 107, and a lead-out region 108 (nonuser data region), arranged in this order starting from the inner peripheral side of the optical disk 10.

The lead-in region 106 is a region in which disk identification information, recording condition information, and the like are recorded, and is a region which is first irradiated with reproducing light (from which information is first read out) when the recording and reproduction device 1 executes processing on each layer. In (a) of Fig. 39, the second information recording layer 104 has various types of key information (prohibition key information, third key information, and fourth key information) recorded in its lead-in region 106.

The user data region 107 is a region in which various pieces of software, content, and the like (first information) that need to be authenticated for use have been recorded (or are recorded) through the recording and reproduction device 1. In (a) of Fig. 39, the first information recording layer 102 has recorded in its user data region 107 an OS (operating system) (software) that can be used (activated, executed) by the recording and reproduction device 1, which is to be described later, and the second information recording layer 104 has recorded in its user data region 107 user configuration information serving as environment information set up for the OS by a user through the recording and reproduction device 1. It should be noted that the user data region 107 may have software other than the OS recorded as information therein.

The lead-out region 108 is a region for notifying the recording and reproduction device 1 of the end of each layer and usually has no information recorded therein.

The key information region 109, provided in the lead-in region 106 of the second information recording layer 104, is a region in which the prohibition key information, the third key information, and the fourth key information can be recorded. It should be noted that these pieces of key information will be described in detail later. Further, although the key information region 109 is provided in the lead-in region 106 of the second information recording layer 104, it is not limited to being provided in such a region and may be provided in another region.

Further, as shown in (a) of Fig. 39, the second information recording layer 104 further has a medium discriminating region (BCA), provided closer to the inner peripheral side than the lead-in region 106 is, in which to record unique information of the optical disk 10, i.e., second key information (medium unique information) that serves as unique information for discriminating the optical disk 10 from another information recording medium.

It should be noted that although an example of the second key information is a BCA (burst cutting area) code, it is not limited to such a code and may be any type of information that allows discrimination of the optical disk 10 from another information recording medium.

Alternatively, the second information recording layer 104 (recordable layer) may be an R (Recordable) layer. In this case, the configuration does not rewrites information (e.g., first key information), but adds new information by so overwriting already-recorded information that the already-recorded information is no longer readable.

Next, (b) of Fig. 39 shows an example of a state in which the key information region 109 has prohibition key information, third key information, and fourth key information recorded therein.

The first key information is used to permit use of the OS recorded on the optical disk 10, and is generated by the recording and reproduction device 1 by use of at least either the second key information or the device unique information and recorded in the key information region 109.

(b) of Fig. 39 shows "12345678A00011"recorded as an example of first key information. This first key information is first key information generated to include the second key information "12345678" and the device unique information "A00011" of the recording and reproduction device 1. It should be noted that first key information needs only include at least device unique information.

It should be noted that the term "device unique information" means unique information recorded in advance in a recording and reproduction device 1 for discriminating the recording and reproduction device 1 from another recording and reproduction device.

The third key information is model information, contained in the device unique information of a recording and reproduction device 1, which indicates the model of recording and reproduction device 1, and serves to restrict the model of recording and reproduction device 1 into which the optical disk 10 is inserted. In (b) of Fig. 39, models (A) and (B) of recording and reproduction device 1 have been recorded. It should be noted that, in (b) of Fig. 39, the third key information can be recorded up to four models of recording and reproduction device 1.

The fourth key information serves to indicate the device unique information of a recording and reproduction device 1 into which the optical disk 10 has been inserted, and serves to restrict the number of recording and reproduction devices 1 into which the optical disk 10 is inserted. In (b) of Fig. 39, "A01001", "A00055", "B00800", "A00234", "A00234", "B10022", and "B00001", which are pieces of device unique information for their respective recording and reproduction devices 1, have been recorded as the fourth key information in the key information region 109.

Further, in (b) of Fig. 39, the fourth key information, i.e., device unique information can be recorded up to eight recording and reproduction devices 1. That is, the optical disk 10 of Fig. 3 can permit eight recording and reproduction devices 1 to use it.

As described above, the optical disk 10 has recorded on its first information recording layer 102 an OS that is usable in a recording and reproduction device 1, and has recorded on its second information recording layer 104 second key information serving as unique information for identifying the optical disk 10. The recording and reproduction device 1 has stored therein device unique information serving as unique information for discriminating the recording and reproduction device 1 from another recording and reproduction device. Furthermore, it is possible to record, on the second information recording layer 104, first key information generated by the recording and reproduction device 1 by use of at least either the second key information or the device unique information to permit use of the OS.

Thus, with sufficient safeguards (license protection) for the OS recorded on the optical disk 10, the optical disk 10 allows a plurality of recording and reproduction devices 1 to use the OS.

Further, since the optical disk 10 is a multilayer structure having at least one first information recording layer 102, it can be formed at a high speed, for example, by a stamper. This makes it possible to mass-produce such optical disks 10.

Further, since the optical disk 10 has the first key information recorded in the key information region 109 that is different from the user data region 107 in which various types of information can be recorded, loss of the first key information can be prevented.

Furthermore, when the OS is in coded form, information leaks can be prevented, for example, even if the OS is illegally copied. Further, the optical disk 10 allows a recording and reproduction device 1 to use the coded OS by decoding it by use of the first key information.

Furthermore, by having the third key information recorded in its key information region 109, the optical disk 10 allows a recording and reproduction device 1 to identify its model by use of the third key information. This makes it possible to restrict the OS recorded on the optical disk 10 to use in a particular model of recording and reproduction device. Further, in the key information region 109 of the optical disk 10, the device unique information of a recording and reproduction device 1 that used the OS is recorded as fourth key information. Use of the fourth key information in a recording and reproduction device 1 into which the optical disk 10 has been inserted makes it possible to restrict the OS recorded on the optical disk 10 to use in a particular recording and reproduction device.

Alternatively, it is possible to provide a plurality of key information regions 109 within a single layer (second information recording layer 104). For example, when a piece of first key information becomes unreadable due to deterioration in the optical disk 10, it is possible to use key information recorded in another key information region 109 that is different from a key information region 109 having that piece of first key information recorded therein.

Alternatively, when there are a plurality of second information recording layers 104, it is possible to provide a key information region 109 on each layer. In such a case, by recording identical pieces of first key information on the plurality of second information recording layers 104, the safety of key information management can be enhanced.

### (Schematic Configuration of a Recording and Reproduction Device)

Next, the configuration of a recording and reproduction device 1 according an embodiment of the present invention is schematically described with reference to Fig. 49. Fig. 49 is a block diagram schematically showing the configuration of a recording and reproduction device 1.

As shown in Fig. 49, the recording and reproduction device 1 mainly includes a memory section 15, a disk loading recognition section 50, a recording and reproduction circuit group 30, an optical head 41, an optical pickup 40, and a control section 20.

Further, the recording and reproduction circuit group 30 mainly includes a pickup drive circuit 31, a laser drive circuit 32, and a reproduction circuit 33.

Further, the recording and reproduction device 1 is a device that records and reproduces information with respect to an optical disk 10 such as a DVD (digital versatile disk) or a BD.

In the recording and reproduction device 1, as shown in Fig. 49, the control section 20 has a recording and reproduction control section 12 (information storage means, information recording means) that uses the pickup drive circuit 31 to move the optical pickup 40 toward a track (not illustrated) of the optical disk 10 as the optical disk 10 rotates.

The optical pickup 40 is provided with the optical head 41. Moreover, the control section 20 sets recording conditions through the laser drive circuit 32, and the optical head 41 irradiates a recording site of the optical disk 10 with a recording laser beam, whereby information is recorded on the track of the optical disk 10.

Further, in the recording and reproduction device 1, the recording and reproduction control section 12 of the control section 20 uses the pickup drive circuit 31 to move the optical pickup 40 toward the recording site of the optical disk 10. Then, the control section 20 uses the laser drive circuit 32 for the optical head 41 to irradiate the optical disk 10 with a reproducing laser beam.

Reflected light detected by the optical head 41 is converted into a reproduction signal by the reproduction circuit 33 and inputted to the recording and reproduction control section 12 of the control section 20, whereby the recording and reproduction device 1 reproduces the information recorded on the track of the optical disk 10.

Further, the recording and reproduction device 1 is provided with the disk loading recognition section 50. The disk loading recognition section 50 serves to detect loading of the optical disk 10, and may be achieved by use of any sensor that can detect loading of the optical disk 10, although examples of the disk loading recognition section 50 include various types of sensors.

Further, the disk loading recognition section 50 is configured to output a detected result as a detection signal to the recording and reproduction control section 12 of the control section 20.

### (Configuration of the Control Section)

Next, the configuration of the control section 20 in the recording and reproduction device 1 according to the present embodiment is described with reference to Fig. 37. Fig. 37 is a block diagram showing the configuration of the control section 20 in the recording and reproduction device 1 according to the present embodiment.

As shown in Fig. 37, the control section 20 serves to control various types of processing in the recording and reproduction device 1, and includes a key information control section 11, a recording and reproduction control section 12, a device control section 13 (execution control means), and a code decoding section 14 (code decoding means).

The key information control section 11 serves to control its components to record or erase key information stored in the recording and reproduction device 1 or key information recorded on an optical disk 10. It should be noted that the functions of the components of the key information control section 11 will be described later.

The recording and reproduction control section 12 serves to, in accordance with an instruction from the key information control section 11, read out key information recorded on an optical disk 10, erase the key information, or record, on an optical disk 10, key information stored in a key information storage section 115 that is to be described later. Further, the recording and reproduction control section 12 also serves to read out (reproduce) an OS recorded on an optical disk 10.

It should be noted that the recording and reproduction control section 12 gives the recording and reproduction circuit group 30 an instruction to record or erase key information or an instruction to read out key information or an OS.

The phrase "erase key information" here means making unrecorded a key information region 109 having various types of key information therein or rewriting key information to be totally irrelevant information (information that makes no sense).

The device control section 13 serves to control a BIOS (basic input/output system) process, an OS activation process, a user authentication process, an OS termination process (OS deactivation process), etc. in the recording and reproduction device 1, for example, when an optical disk 10 having an OS recorded thereon has been inserted.

Further, the device control section 13 also serves to, in accordance with an instruction from the key information control section 11, carry out an OS activation process, an OS termination process, a process of controlling the power source of the recording and reproduction device 1, a process of ejecting an optical disk 10, etc. In addition to this, the device control section 13 also serves to detect an operation of ejecting an optical disk 10, to detect an OS termination operation, to give a prompt to insert a predetermined optical disk 10, etc.

The code decoding section 14 serves to, by use of first key information generated by a key information generation section 1121 that is to be described later, decode a coded OS recorded on an optical disk 10.

Next, the configuration of the key information control section 11 is described more specifically. As shown in Fig. 37, the key information control section 11 includes an authentication section 111 (key information determining means), a key information management section 112 (key information management means), a key information readout section 113 (key information readout means), a key information recording and erasing section 114 (key information recording means), and a key information storage section 115 (memory section).

The authentication section 111 serves to, by use of first key information, authenticate an OS recorded on an optical disk 10 and to confirm the authentication. Further, the authentication section 111 also serves to determine whether or not first key information stored in the key information storage section 115 and first key information recorded on an optical disk 10 match each other.

The key information management section 112 serves to manage the authentication section 111, key information readout section 113, key information recording and erasing section 114, and key information storage section 115 of the key information control section 11.

Further, as mentioned above, the key information management section 112 includes a key information generating section 1121 (key information generating means) which, upon insertion of an optical disk 10, generates first key information by use of second key information recorded on the optical disk 10. After the key information generating section 1121 generates first key information, the key information management section 112 stores the first key information in the information storage section 115.

The key information readout section 113 serves to, by instructing the recording and reproduction control section 12, read out key information recorded on an optical disk 10.

The key information recording and erasing section 114 serves to, by instructing the recording and reproduction control section 12, record key information on an optical disk 10 or erase key information recorded on an optical disk 10. In particular, upon insertion of an optical disk 10, the key information recording and erasing section 114 records, on the optical disk 10, first key information generated by the key information generating section 1121 by use of second key information.

The key information storage section 115 serves to store first key information read out by the key information readout section 113 or first key information generated by the key information generating section 112, and also stores device unique information indicating the unique information of a recording and reproduction device 1. It should be noted that although the key information storage section 115 is configured to be included in the key information control section 11, it is not limited to such a configuration and may be configured to be contained in the memory section 15.

Further, the memory section 15 of the recording and reproduction device 1 serves to store an OS read out from an optical disk 10 by the key information control section 11. In addition to this, the memory section 15 has stored therein various types of application that are executed by the control section 20.

It should be noted that by storing plural pieces of device unique information, combining any of the pieces of device unique information with unique information for identifying an optical disk 10, and thereby creating key information, a dedicated disk can be created which contains pieces of key information respectively corresponding to a plurality of recording and reproduction devices and a plurality of optical disks 10. This allows a user to record in series data created in the corresponding recording and reproduction device and prevent data created in another recording and reproduction device from existing on the same optical disk 10, thus bringing about an effect such as facilitation of data management.

### (Flow from OS Activation to OS Termination in the Recording and Reproduction Device)

Next, the general flow of a process that is carried out in the recording and reproduction device 1 as it activates an OS is described with reference to Fig. 40. Fig. 40 is a flow chart showing the general flow of the process that is carried out in the recording and reproduction device 1 as it activates an OS.

It is assumed below that the recording and reproduction device 1 has an optical disk 10 inserted therein, reads out an OS recorded on the optical disk 10, and stores the OS in its memory section 15. However, this does not imply any limitation, and the recording and reproduction device 1 may directly activates the OS without storing the OS of the optical disk 10 in its memory section 15.

First, upon insertion of the optical disk 10 into a disk insertion section, the disk loading recognition section 50 (see Fig. 49) detects the insertion of the optical disk 10 into the recording and reproduction device 1. Then, the disk loading recognition section 50 sends the recording and reproduction control section 12 an insertion detection signal indicating that the insertion of the optical disk 10 has been detected.

Upon receiving the insertion detection signal, the recording and reproduction control section 12 sends the device control section 13 a BIOS start instruction signal for starting a BIOS process. Upon receiving the BIOS start instruction signal, the device control section 13 starts a BIOS process (S391). That is, the device control section 13 reads out a BIOS stored in the memory section 15 and starts up the disk insertion section, a keyboard, a video card, a display device, etc. (none of which is illustrated) connected to the control section 20 of the recording and reproduction device 1.

Next, upon completion of the BIOS process, the device control section 13 sends the key information control section 11 a BIOS completion notification indicating that the BIOS process has been completed. The key information control section 11 determines whether or not to permit activation of the OS and sends a result of the determination to the device control section 13.

Upon receiving a result of determination indicating that the activation of the OS is permitted, the device control section 13 starts a process of activating the OS (S392). It should be noted that the process of activating the OS will be described later.

After activating the OS in S2, the device control section 13 carries out a user authentication process (S393). Specifically, the device control section 13 causes the display device to display an image that allows a user to carry out password authentication and fingerprint authentication, thereby instructing the user to carry authentication. Then, the device control section 13 determines whether or not the user authentication has been completed successfully.

If the device control section 13 confirms that the user authentication has been completed successfully, the OS comes into a usable state (state of normal use of the OS) (S394).

Then, upon confirming, for example, through a user operation that there has been an instruction to terminate the OS, the device control section 13 sends the key information control section 11 an OS termination notification indicating that the OS is to be terminated. Upon receiving the OS termination notification, the key information control section 11 carries out a process of terminating the OS.

Upon completion of the process of terminating the OS, the key information control section 11 sends the device control section 13 a process completion notification indicating the completion of the process, whereby the device control section 13 terminates the OS being executed (S395).

### (Flow of a Process in the Recording and Reproduction Device at the Time of OS Activation)

Next, the flow of a process (OS activation process) in the recording and reproduction device 1 at the time of OA activation is described with reference to Fig. 41. Fig. 41 is a flow chart showing the flow of the process in the recording and reproduction device 1 at the time of OS activation.

First, as in S391 of Fig. 40, upon insertion of an optical disk 10 (disk) into the disk insertion section, the disk loading recognition section 50 sends the recording and reproduction control section 12 an insertion detection signal indicating that the insertion of the optical disk 10 has been detected.

Upon receiving the insertion detection signal, the recording and reproduction control section 12 reads out part of information present in a BCA of the optical disk 10 and determines whether or not the inserted optical disk 10 has an OS recorded thereon (whether or not there is an OS disk) (S401). Normally, the BCA has recorded therein information indicative of the type of the optical disk 10 (e.g., information indicative of a two-layer RE, a two-layer R, a single-layer ROM, and a two-layer OS), etc., as well as second key information (medium unique information and individual recognition information) of the optical disk 10. Alternatively, the recording and reproduction control section 12 may determine, by reading out information from the first information recording layer 102, that the optical disk 10 has an OS recorded thereon.

If the recording and reproduction control section 12 determines that the inserted optical disk 10 has an OS recorded thereon (YES in S401), the recording and reproduction control section 12 sends the key information readout section 113 an insertion confirmation signal indicating that the optical disk 10 has been inserted. Upon receiving the insertion confirmation signal, the key information readout section 113 sends the recording and reproduction control section 12 a readout instruction to read out key information. Upon receiving the readout instruction, the recording and reproduction control section 12 reads out key information from the inserted optical disk 10. That is, the key information readout section 113 reads out the key information from the inserted optical disk 10 through the recording and reproduction control section 12 (S402).

Next, the recording and reproduction control section 12 sends the key information thus read out to the key information readout section 113. Upon receiving the key information, the key information readout section 113 determines whether or not there exists first key information in the key information thus received (S403). If the key information readout section 113 determines that there exists first key information in the key information thus received (YES in S403), the key information readout section 113 sends the first key information to the key information management section 112.

The key information management section 112 confirms whether or not there exists key information in the key information storage section 115 (memory) (S404). Then, by confirming the existence of key information in the key information storage section 115, the key information management section 112 determines whether or not there exists first key information in the key information.

If the key information management section 112 confirms that there exists first key information in the key information stored in the key information storage section 115, the key information management section 112 sends the authentication section 111 the first key information and the first key information received from the key information readout section 113.

Upon receiving the two pieces of first key information, the authentication section 111 determines whether or not the two pieces of first key information match each other (S405). If the authentication section 111 determines that the two pieces of first key information match each other (YES in S405), the authentication section 111 reads out the OS stored in the memory section 15. Then, the authentication section 111 authenticates the OS for activation by use of the first key information and confirms whether the OS has been successfully authenticated (S406). It should be noted that the authentication section 111 authenticates the OS by use of the first key information according to an existing method.

If, as a result of the confirmation, the authentication section 111 determines that the authentication has been completed successfully (YES in S406), the authentication section 111 sends the device control section 13 a successful authentication notification indicating that the authentication has been completed successfully. Upon receiving the successful authentication notification, the device control section 13 activates the OS (S407), whereby the OS activation process in the recording and reproduction device 1 is completed.

It should be noted that by once previously copying an OS into the memory section 15, the recording and reproduction device 1 can activate the OS from the memory section 15 without executing a process of copying the OS, provided that the authentication has been completed successfully. This makes it possible to reduce the readout time and expedite the process of activating an OS recorded on an information recording medium.

Meanwhile, if the key information readout section 113 determines in S403 that there exists no first key information in the key information received from the recording and reproduction control section 12 (NO in S403), the key information readout section 113 sends the determination result to the key information management section 112.

Upon receiving the determination result indicating that there exists no first key information in the received key information, the key information management section 112 sends through the authentication section. 111 to the device control section 13 an inquiry notification for asking the user whether or not to carry out an initialization process that is to described later.

Upon receiving the inquiry notification, the device control section 13 produces, through a display device, an audio output device (not illustrated), etc. connected to the recording and reproduction device 1, for example, an output for inquiring whether or not to cause the recording and reproduction device 1 to carry out an initialization process. That is, the device control section 13 asks the user whether or not to carry out an initialization process (S408).

If, after the inquiry, the device control section 13 detects a user operation indicating that the user will carry out an initialization process (YES in S408), the device control section 13 sends the key information control section 11 an operation detection signal indicating that the user operation has been detected.

Upon receiving the operation detection signal, the key information control section 11 carries out control for carrying out an initialization process (S409). It should be noted the initialization process will be described later. Further, upon completion of S409, the process shifts to S404.

That is, when the user carries out a user operation for carrying out an initialization process (i.e., an operation of permitting the key information generating section 1121 to generate first key information by use of second key information and device unique information (at least device unique information) of the inserted optical disk 10), the key information generating section 1121 serves, as will be described later, to generate first key information by use of the second key information recorded on the inserted optical disk 10.

Alternatively, if the authentication section 111 determines in S405 that the two pieces of first key information do not match each other (NO in S405), the authentication section 111 sends the determination result to the key information management section 112. Upon receiving the determination result indicating that the two pieces of first key information do not match each other, the key information management section 112 sends through the authentication section 111 to the device control section 13 an inquiry notification for asking the user whether or not to carry out an initialization process, as described above. It should be noted that the subsequent steps S410 and S411 are identical to the steps S408 and S409. Further, upon completion of S411, the process shifts to S406.

If the key information management section 112 confirms in S404 that there exists no key information in the key information storage section 115, the key information management section 112 sends the inquiry notification through the authentication section 111, as in the case where it received from the authentication section 111 the determination result indicating that the two pieces of first key information do not match each other. This allows the recording and reproduction device 1 to shifts to S410 also when there exists no key information in the key information storage section 115.

It should be noted that if NO in S401, NO in S406, NO in S408, and NO is S410, the device control section 13 ejects the optical disk 10 from the recording and reproduction device 1 (S412) and causes the recording and reproduction device 1 to complete the OS activation process.

As described above, if the key information readout section 113 confirms that there exists first key information on an optical disk 10 and if the key information management section 112 confirms that the key information storage section 115 has first key information stored therein, the authentication section 111 determines whether or not the two pieces of first key information match each other. Then, if the authentication section 111 determines that the two pieces of first key information match each other, the authentication section 111 carries out authentication for use of the OS.

This allows the recording and reproduction device 1 to use an OS recorded on an optical disk 10, after confirming that the optical disk 10 is one that was once inserted into the recording and reproduction device 1, i.e., with sufficient safeguards for the OS.

### (Flow of a Process in the Recording and Reproduction Device at the Time of Temporary Ejection)

Next, the flow of a process in the recording and reproduction device 1 at the time of temporary ejection is described with reference to Fig. 42. Fig. 42 is a flow chart showing the flow of the process in the recording and reproduction device 1 at the time of temporary ejection. It should be noted that the recording and reproduction device 1 is in an OS normal processing state shown in S294 of Fig. 40, with the optical disk 10 inserted in the disk insertion section of the recording and reproduction device 1.

First, when, in order to eject the optical disk 10, the user carries out an ejection operation such as pressing of an ejection button (not illustrated), the device control section 13 detects the ejection operation. Upon detecting the ejection operation, the device control section 13 sends the disk insertion section an instruction to eject the optical disk 10, whereby the optical disk 10 is ejected from the disk insertion section (S421).

It should be noted that after the optical disk 10 has been temporarily ejected, it becomes possible to insert a disk other than the optical disk 10 having the OS recorded thereon. Examples of optical disks that can be inserted include CDs, DVDs, HD-DVDs, BDs other than OS disks.

Let it be assumed here that after the ejection of the optical disk 10 in S421, the optical disk 10 has been inserted again into the disk insertion section (S422). Then, the disk loading recognition section 50 (see Fig. 49) detects the insertion of the optical disk 10 into the recording and reproduction device 1 and sends an insertion detection signal to the recording and reproduction control section 12.

Upon receiving the insertion detection signal, the recording and reproduction control section 12 reads out part of information present in a BCA of the optical disk 10 and determines whether or not the inserted optical disk 10 has an OS recorded thereon (S423). Alternatively, the recording and reproduction control section 12 may read out information from the first information recording layer 102 and determine whether or not the inserted optical disk 10 has an OS recorded thereon.

If the recording and reproduction control section 12 determines that the inserted optical disk 10 has an OS recorded thereon (YES in S423), the recording and reproduction control section 12 sends the key information readout section 113 an insertion confirmation signal indicating that the optical disk 10 has been inserted. Upon receiving the insertion confirmation signal, the key information readout section 113 sends the recording and reproduction control section 12 a readout instruction to read out key information. Upon receiving the readout instruction, the recording and reproduction control section 12 reads out key information from the inserted optical disk 10. That is, the key information readout section 113 reads out the key information from the inserted optical disk 10 through the recording and reproduction control section 12 (S424).

Next, after reading out the key information, the recording and reproduction control section 12 sends the key information to the key information readout section 113. Upon receiving the key information, the key information readout section 113 determines whether or not there exists first key information in the key information (S425).

If the key information readout section 113 determines that there exists first key information in the key information (YES in S425), the key information readout section 113 sends the first key information to the key information management section 112. Upon receiving the first key information from the key information readout section 113, the key information management section 112 reads out the first key information stored in the key information storage section 115 and sends the two pieces of first key information to the authentication section 111.

Upon receiving the two pieces of first key information, the authentication section 111 collates the two pieces of first key information (S426). That is, the authentication section 111 determines whether or not the first key information read out from the optical disk 10 and the first key information stored in the key information storage section 115 match each other (S427).

If the authentication section 111 determines that the two pieces of second key information match each other (YES in S427), whereby the process of temporary ejection from the recording and reproduction device 1 is completed.

It should be noted that if NO in S425 and NO in S427, the device control section 13 sends the disk insertion section an instruction to eject the optical disk 10, whereby the optical disk 10 is ejected from the disk insertion section (S428), and then returns to S422. Similarly, if NO in S423, the device control section 13 returns to S422.

As described above, if, when an optical disk 10 has been inserted during execution of an OS, the authentication section 111 determines that the two pieces of first key information match each other, the device control section 13 maintain the execution of the OS.

This allows the recording and reproduction device 1 to use an OS recorded on an optical disk 10, after confirming that the optical disk 10 is one that was once inserted into the recording and reproduction device 1, i.e., with sufficient safeguards for the OS.

### (Flow of a Process in the Recording and Reproduction Device at the Time of OS Termination)

Next, the flow of a process (OS termination process) in the recording and reproduction device 1 at the time of OS termination is described with reference to Fig. 43. Fig. 43 is a flow chart showing the flow of the process in the recording and reproduction device 1 at the time of OS termination.

First, when a user carries out an operation of terminating the OS (an operation such as activating an exit option for the OS or turning off the recording and reproduction device 1), the device control section 13 sends a termination detection signal to the recording and reproduction control section 12.

Upon receiving the termination detection signal, the recording and reproduction control section 12 determines whether or not an optical disk 10 having recorded thereon the OS being used in the recording and reproduction device 1 has been inserted (S431).

If the recording and reproduction control section 12 determines that an optical disk 10 having the OS recorded thereon has been inserted into the disk insertion section (YES in S431), the recording and reproduction control section 12 reads out the user configuration information stored in the memory section 15. At this point in time, the recording and reproduction control section 12 instructs the key information management section 112 to read out the device unique information of the recording and reproduction device 1, thereby causing the key information management section 112 to read out the unique device information from the key information storage section 115. Then, the recording and reproduction control section 12 records the user configuration information in a predetermined region (specifically, in the user data region 107 of the second information recording layer 104) of the optical disk 10 (S432).

It should be noted that the recording and reproduction control section 12 may record the user configuration information and the device unique information in association with each other. This allows the recording and reproduction device 1 to determine in which recording and reproduction device the user configuration information was recorded.

After recording the user configuration information on the optical disk 10, the recording and reproduction control section 12 sends an information recording completion notification indicative of the completion of the recording to the key information management section 112 through the key information readout section 113 or through the key information recording and erasing section 114. Upon receiving the information recording completion notification, the key information management section 112 confirms whether or not there exists key information in the key information storage section 115 (S433). Then, by confirming the existence of key information in the key information storage section 115, the key information management section 112 determines whether or not there exists first key information in the key information (S434).

If the key information management section 112 determines that the key information storage section 115 has no first key information stored therein (YES in S434), the key information management section 112 sends the determination result to the key information readout section 113, Upon receiving the determination result indicating that the key information storage section 115 has first key information stored therein, the key information readout section 113 sends the recording and reproduction control section 12 a readout instruction to read out key information, thereby checking for key information recorded on the optical disk 10 (S435).

Upon receiving the readout instruction, the recording and reproduction control section 12 reads out key information from the inserted optical disk 10 and sends the key information thus read out to the key information readout section 113. Upon receiving the key information, the key information readout section 113 determines whether or not there exists first key information in the key information (S436).

If the key information readout section 113 determines that there exists first key information in the received key information (YES in S436), the key information readout section 113 sends the determination result to the key information management section 112. Upon receiving the determination result indicating that there exists first key information in the key information recorded on the optical disk 10, the key information management section 112 sends the device control section 13 a deactivation instruction signal for starting a process of deactivating the OS. Upon receiving the deactivation instruction signal, the device control section 13 starts a process of deactivating the OS being used (S437). Then, when the device control section 13 completes the process of deactivating the OS, the recording and reproduction device 1 completes the OS termination process.

Meanwhile, if the recording and reproduction control section 12 determines in S431 that an optical disk 10 having recorded thereon the OS being used in the recording and reproduction device 1 has not been inserted (NO in S431), the recording and reproduction control section 12 sends the determination result to the device control section 13.

Upon receiving the determination result indicating that such an optical disk 10 has not been inserted into the disk insertion section, the device control section 13 prompts the user to insert, into the disk insertion section, an optical disk 10 having recorded thereon the OS being used (S438). Through a display device, an audio output device (not illustrated), etc. connected to the recording and reproduction device 1, for example, the device control section 13 prompts the user to insert an optical disk 10 having the OS recorded thereon. It should be noted that upon completion of S438, the device control section 13 returns to S431.

Meanwhile, if the key information management section 112 determines that the key information storage section 115 has no first key information stored therein (NO in S434), the key information management section 112 instructs the key information readout section 113 to read out first key information from the optical disk 10.

Specifically, the key information management section 112 sends the key information readout section 113 a readout instruction to read out first key information from the optical disk 10. By sending the readout instruction to the recording and reproduction control section 12, the key information readout section 113 causes the recording and reproduction control section 12 to read out the first key information recorded on the optical disk 10. That is, the key information readout section 113 reads out the first key information from the optical disk 10 through the recording and reproduction control section 12 (S439).

After reading out the first key information through the recording and reproduction control section 12, the key information readout section 113 sends the first key information to the key information management section 112. Then, the key information management section 112 stores the key information thus received in the key information storage section 115 (S440). It should be noted that after S440, the process shifts to S437.

Alternatively, the key information readout section 114 determines in S436 that there exists no first key information in the received key information (NO in S436), the key information readout section 113 sends the determination result to the key information management section 112.

Upon receiving the determination result indicating that there exists no first key information in the key information recorded on the optical disk 10, the key information management section 112 reads out the first key information stored in the key information storage section 115 and sends it to the key information recording and erasing section 114.

Upon receiving the first key information, the key information recording and erasing section 114 sends the recording and reproduction control section 12 the first key information and a recording instruction signal for instructing the recording and reproduction control section 12 to record the first key information on the optical disk 10. Upon receiving the first key information and the recording instruction signal, the recording and reproduction control section 12 records the first key information on the optical disk 10 (specifically, in the key information region 109). That is, the key information recording and erasing section 114 uses the recording and reproduction control section 12 to record, on the optical disk 10, the first key information stored in the key information storage section 115 (S441). Then, after S441, the process shifts to S437.

As described above, until the device control section 13 terminates the OS being executed, or if there exists no first key information on the optical disk 10 by the time the OS is terminated, the recording and reproduction device 1 records, on the optical disk 10, the first key information stored in the key information storage section 115. Similarly, if there exists no first key information in the key information storage section 115, the recording and reproduction device 1 stores, in the key information storage section 115, the first key information recorded on the optical disk 10.

This allows the recording and reproduction device 1 records to create such a situation at the time of termination of the OS that there exists first key information on the optical disk 10 and in the key information storage section 15. This makes it possible to surely authenticate the OS again by determining whether or not the two pieces of first key information match each other.

Further, since the recording and reproduction control section 12 of the recording and reproduction device 1 records, on an optical disk 10, user configuration information configured by a user with respect to an OS, the user configuration for the OS can be used when the OS is used in the recording and reproduction device 1 or in another recording and reproduction device after the optical disk 10 has been ejected once and inserted again.

### (Flow of a Process in the Recording and Reproduction Device at the Time of Initialization)

Next, an example of the flow of a process that is carried out in the recording and reproduction device 1 when the memory section 15 is initialized by storing, in the memory section 15, an OS recorded on an optical disk 10 is described with reference to Fig. 41. Fig. 41 is a flow chart showing an example of the flow of the process that is carried out in the recording and reproduction device 1 when the memory section 15 is initialized by storing, in the memory section 15, the OS recorded on the optical disk 10. It should be noted that the process of storing the OS in the memory section 15 of the recording and reproduction device 1 is mainly carried out when the optical disk 10 is first used by the recording and reproduction device 1.

The process of Fig. 41 is a process that is carried out in the form of the steps S409 and 411 (initialization process), i.e., a process that is carried out when the device control section 13 acquires a user operation indicating that the user will carry out an initialization process.

It is assumed here that an optical disk 10 that is inserted into the disk insertion section has an OS recorded thereon. It is also assumed that the OS recorded on the optical disk 10 has been coded by first key information or by key information that is different from the first key information (but can be decoded by the first key information).

It should be noted that the OS that is stored in the memory section 15 at the time of initialization does not need to be in coded form. In such a case, the step S455 is not carried out (that is, after S454, the process shifts to S456).

First, as soon as the key information control section 11 receives the operation detection signal from the device control section 13, the recording and reproduction control section 12 carries out the step S401 of Fig. 41 and, if it determines that the inserted optical disk 10 has an OS recorded thereon, reads out the OS recorded on the optical disk 10. Then, the recording and reproduction control section 12 sends the key information readout section 113 a readout notification to notify the key information readout section 113 that the OS has been read out from the optical disk 10. At this point in time, the recording and reproduction control section 12 stores temporarily, in the memory section 15, the OS read out from the optical disk 10.

Further, as soon as the key information control section 11 receives the operation detection signal, the key information readout section 113 carries out the same step as S420, thereby reading out second key information from the inserted optical disk 10 through the recording and reproduction control section 12 (S451).

After reading out the second key information, the key information readout section 113 sends the second key information to the key information management section 112. Upon receiving the second key information, the key information management section 112 causes the key information generating section 1121 to generate first key information by use of the second key information and the device unique information stored in the key information storage section 115 (S452).

After causing the key information generating section 1121 to generate first key information, the key information management section 112 instructs the key information recording and erasing section 114 to record the first key information on the optical disk 10. That is, the key information recording and erasing section 114 records, on the optical disk 10, the first key information generated by the key information generating section 1121 (S453). The specific process that is carried out at this point in time is the same as that which is carried out if NO in S436 and, as such, is not described here.

After recording the first key information on the optical disk 10, the recording and reproduction control section 12 sends a key recording completion notification indicative of the completion of the recording to the key information management section 112 through the key information recording and erasing section 114. Upon receiving the key recording completion notification, the key information management section 112 stores, in the key information storage section 115, the first key information generated by the key information generating section 1121 (S454).

After storing the first key information in the key information storage section 115, the key information management section 112 sends the code decoding section 14 a storage completion notification indicating the completion of the storage. Upon receiving the storage completion notification, the code decoding section 14 reads out the first key information from the key information storage section 115 (i.e., the first key information generated by the key information generating section 1121). At this point in time, the code decoding section 14 reads out the OS stored temporarily in the memory section 15 by the recording and reproduction control section 12.

After reading out the first key information and the OS, the code decoding section 14 decodes, by use of the first key information, the OS that is in coded form (S455). It should be noted that the code decoding section 14 decodes the OS by use of the first key information according to an existing method.

Upon completion of the decoding of the OS, the code decoding section 14 sends the OS thus decoded to the recording and reproduction control section 12. Upon receiving the OS thus decoded, the recording and reproduction control section 12 stores the OS in the memory section 15 (S456).

Further, after storing the OS in the memory section 15, the recording and reproduction control section 12 erases the data such as the user configuration information recorded on the optical disk 10 (specifically, in the user data region 107 of the second information recording layer 104) (S457).

As described above, by use of at least either the second key information, recorded on the optical disk 10, which serves as unique information for discriminating the optical disk 10 from another optical disk 10 or the device unique information, which serves as unique information for discriminating the recording and reproduction device 1 from another recording and reproduction device (i.e., by use of at least the device unique information stored in the memory section 15), the key information generating section 1121 generates first key information for permitting use of the OS recorded on the optical disk 10 (or the OS stored in the memory section 15). Then, the key information recording and erasing section 114 records, on the optical disk 10, the first key information generated by the key information generating section 1121.

Thus, with sufficient safeguards (license protection) for the OS recorded on the optical disk 10, the recording and reproduction device 1 can use the OS.

Furthermore, the key information management section 112 stores, in the key information storage section 115, the first key information generated by the key information generating section 1121. Thus, when an optical disk 10 has been inserted, the recording and reproduction device 1 can determine, by use of the first key information stored in the key information storage section 115, whether or not the optical disk 10 is one that was once inserted.

Furthermore, if the key information readout section 113 confirms that there exists no first key information on the optical disk 10 and if the key information management section 112 confirms that there exists no first key information in the key information storage section 115, the key information recording and erasing section 114 records, on the optical disk 10, the first key information generated by the key information generating section 1121, and the key information management section 112 stores, in the key information storage section 115, the first key information generated by the key information generating section 1121.

This allows the recording and reproduction device 1 to determine that since there exists no first key information on the optical disk 10, the optical disk 10 is unused, and to record and store first key information on the optical disk 10. Further, the recording and storage allow the recording and reproduction device 1, when the optical disk 10 is inserted next time, to identify the optical disk 10 as one that was once inserted.

Furthermore, if the authentication section 111 determines that the two pieces of key information respectively existing on the optical disk 10 and in the key information storage section 115 do not match each other, or if it is determined that only either the optical disk 10 or the key information storage section 115 has first key information recorded thereon or stored therein, the key information generating section 1121 generates first key information in accordance with a user operation. That is, the recording and reproduction device 1 can first recognize insertion of another optical disk that is different from the optical disk 10, having the executed OS and then generate, in accordance with a user operation, first key information for permitting use of an OS of the optical disk 10 inserted.

This allows the recording and reproduction device 1, even when an optical disk 10 that was already used in another recording and reproduction device has been inserted, to permit, in accordance with a user operation, use of an OS recorded on the optical disk 10. Therefore, the recording and reproduction device 1 can both ensure sufficient safeguards for an OS recorded on an optical disk 10 and improve user friendliness.

That is, by enabling use of an OS of an optical disk 10 in a plurality of recording and reproduction devices for the sake of user friendliness on the one hand but carrying out initialization on the other hand to generate first key information and erase the user configuration information and the user data from the user data region 107, the first key information and the user configuration information that were used in the recording and reproduction device 1 used in the past can be rendered unusable in another recording and reproduction device. This obviates the risk of personal data theft even when the OS is used in a plurality of recording and reproduction devices, thus enhancing safeguards for the OS. Further, even in the case of theft of an optical disk 10 having an OS, erasure of the user configuration information and the user data prevents the content from being known.

Furthermore, by including the code decoding section 14, the recording and reproduction device 1 can use even a coded OS by decoding it. Further, by having the OS in coded form, the optical disk 10 can prevent information leaks, for example, even if the OS is illegally copied.

Further, since the optical disk 10 has the OS recorded on its first information recording layer 102, the OS normally cannot be rewritten into a different form of information. That is, the OS recorded on the optical disk 10 remains as recorded first on the optical disk 10 (i.e., remains in an initial state).

Therefore, by storing in the memory section 15 of the recording and reproduction device 1 the OS recorded on the optical disk 10, the OS can be put back to the initial state (initialized) even when the OS has been changed as a result of the OS being used by the recording and reproduction device 1.

Furthermore, the recording and reproduction device 1 may be configured not to erase information from the second information recording layer 104 (recordable region). In this case, the recording and reproduction device 1 initializes only the OS, whereby the OS becomes no longer correlated with the user configuration information or the user data. Repetition of this disables normal use of the OS, thus brining about the same effect as that which is brought about by erasing the information from the second information recording layer 104.

Alternatively, such a configuration is possible that authentication by use of the first key information is needed to authenticate for use the data, programs, content, etc. recorded in the user data region 107 of the second information recording layer 104. This makes it possible to ensure safeguards for the user configuration information (user data) as well as the OS.

### (Embodiment G)

Next, another embodiment G of Embodiment 5 is described below with reference to Figs. 45 through 48. A case is described here where a recording and reproduction device 1a, i.e., a modification of the recording and reproduction device 1 uses third and fourth key information recorded on an optical disk 10.

It should be noted that those members which have the same functions as those of the embodiment F are given the same reference numerals and, as such, are not described below.

### (Modification of the Control Section)

Next, the configuration of a control section 20a in a recording and reproduction device 1a, i.e., in a modification of the recording and reproduction device 1 of Fig. 37 is described with reference to Fig. 45. Fig. 45 is a block diagram showing the configuration of a control section 20a in a modification of the recording and reproduction device (i.e., in a recording and reproduction device 1a) according to the present embodiment.

As shown in Fig. 45, the recording and reproduction device 1a includes a control section 20a instead of a control section 20. Further, the control section 20a includes a key information control section 11a including a device type determining section 116 (device type determining means) and a device limiting section 117 (device limiting means). That is, the control section 20a of the recording and reproduction device 1a according to the present embodiment is different from the control section 20 of the recording and reproduction device 1 according to the embodiment F in that the control section 20a includes the device type determining section 116 and the device limiting section 117.

The device type determining section 116 serves to determine whether or not third key information recorded on an optical disk 10 and model information contained in device unique information stored in the key information storage section 115 match each other, thereby determining whether or not an OS recorded on the optical disk 10 can be activated by the recording and reproduction device 1a.

It should be noted that the model information does not need to be contained in the device unique information and may be any type of information that indicates the model of recording and reproduction device 1.

The device limiting section 117 serves to determine whether or not the device unique information of a recording and reproduction device 1 having an optical disk 10 inserted therein exists in fourth key information recorded on the optical disk 10. Further, if the device unique information does not exists in the fourth key information, the device limiting section 117 serves to determine whether or not it is possible to record the device unique information as the fourth key information on the optical disk 10.

Further, since the key information control section, 11a includes the device type determining section 116 and the device limiting section 117, the embodiment C is different from the embodiment F also in that the key information management section 112 manages these members.

### (Process in the Recording and Reproduction Device (Modification) at the Time of OS Activation)

Next, a process (OS activation process) in the recording and reproduction device 1a at the time of OA activation is described with reference to Fig. 46. Fig. 46 is a flow chart showing the process in the recording and reproduction device 1a at the time of OS activation.

Let it be assumed here that the optical disk 10 has set up in advance thereon the models of recording and reproduction devices (including at least the recording and reproduction device 1a) in which the optical disk 10 is used and has recorded thereon model information serving as third key information for discriminating the model of recording and reproduction device 1a from another model of recording and reproduction device, and that the memory section 15 has stored therein device model information indicating the model of recording and reproduction device 1a and serving as model information for discriminating the model of recording and Reproduction device 1a from another model of recording and reproduction device.

Further, the steps S461 to S466, S469 to S473, and S476 of Fig. 10 are identical to the steps of Fig. 41 and, as such, are not described here. That is, the process of Fig. 46 is achieved by adding steps S467, S468, S474, and S475 between the steps S406 and S407 of Fig. 41.

If the authentication section 111 determines that authentication for activation of the OS recorded on the optical disk 10 has been completed successfully (YES in S466), the authentication section 111 sends the device type determining section 116 a successful authentication notification indicating that the authentication has been completed successfully. Upon receiving the successful authentication notification, the device type determining section 116 instructs the key information readout section 113 through the key information management section 112 to read out the third key information from the optical disk 10. It should be noted that the concrete process that is carried out at this point in time is identical to the process that is carried out if NO in S434 and, as such, is not described here.

After reading out the third key information through the recording and reproduction control section 12, the key information readout section 113 sends the third key information to the device type determining section 116 through the key information management section 112. Upon receiving the third key information from the key information management section 112, the device type determining section 116 reads out the device unique information stored in the key information storage section 115.

The device type determining section 116 collates the third key information read out from the optical disk 10 and the model information, contained in the device unique information stored in the key information storage section 115, which indicates the model of recording and reproduction device 1a. That is, the device type determining section 116 determines whether or not the third key information recorded on the optical disk 10 and the device model information indicating the model of recording and reproduction device 1a and serving as model information for discriminating the model of recording and reproduction device 1a from another model of recording and reproduction device match each other (S467).

This allows the recording and reproduction device 1a to determine whether or not the inserted optical disk 10 is usable in the recording and reproduction device 1a. That is, since the optical disk 10 can be used only in the model of recording and reproduction device 1a indicated by the third key information, it is possible to further improve safeguards for the optical disk 10. Furthermore, the recording and reproduction device 1a can provide a particular application to a user who uses the target OS.

If the device type determining section 116 determines that the third key information and the device unique information match each other (YES in S467), the device type determining section 116 sends the determination result to the device limiting section 117. Upon receiving the determination results indicating that the third key information and the device unique information match each other, the device limiting section 117 instructs the key information readout section 113 through the key information management section 112 to read out the fourth key information from the optical disk 10. It should be noted that the concrete process that is carried out at this point in time is identical to the process that is carried out when the third key information is read out and, as such, is not described here.

After reading out the fourth key information through the recording and reproduction control section 12, the key information readout section 113 sends the fourth key information to the device limiting section 117 through the key information management section 112. Upon receiving the fourth key information from the key information readout section 113, the device limiting section 117 reads out the device unique information stored in the key information storage section 115.

The device limiting section 117 collates the fourth key information read out from the optical disk 10 and the device unique information. That is, by determining whether or not the fourth key information recorded on the optical disk 10 and the device unique information stored in the key information storage section 115 match each other, the device limiting section 117 determines whether or not device unique information indicative of the recording and reproduction device 1a into which the optical disk 10 has been inserted exists in the fourth key information (S468).

If the device limiting section 117 determines that there is fourth key information that matches the device unique information (YES in S468), the device limiting section 117 sends the determination result to the device control section 13. Upon receiving the determination result indicating that there is fourth key information that matches the device unique information, the device control section 13 actives the OS stored in the memory section 15 (S469), whereby the OS activation process in the recording and reproduction device 1a is completed.

Meanwhile, if the device limiting section 117 determines that there is no fourth key information that matches the device unique information (NO in S468), the device limiting section 117 determines whether or not it is possible to record the device unique information as fourth key information on the optical disk 10 (S474). It should be noted that in receiving fourth key information, for example, the device limiting section 117 may receive remaining-capacity information, contained in the fourth key information, which indicates a remaining capacity that can be recorded as the fourth key information.

If the device limiting section 117 determines that it is possible to record the device unique information as fourth key information on the optical disk 10 (YES in S474), the device limiting section 117 instructs the key information recording and erasing section 114 (key information recording means, fourth key information recording means) to record the device unique information as fourth key information in a predetermined region (specifically, in the key information region 109) of the optical disk 10. Upon receiving the instruction, the key information recording and erasing section 114 uses the recording and reproduction control section 12 to record the device unique information as new fourth key information in the key information region 109 of the optical disk 10 (S475). It should be noted that after S475, the process shifts to S469.

It should be noted that if NO in S466, NO in S467, NO in S470, NO in S472, and NO in S474, the device control section 13 ejects the optical disk 10 from the recording and reproduction device 1 (S476), thereby causing the recording and reproduction device 1a to complete the OS activation process, as in the case shown in Fig. 41.

It should be noted that although, in the process of Fig. 46, the device type determining section 116 carries out its step (S467) and the device limiting section 117 carries out its steps (S468, S474, and S475) after the authentication section 111 carries out its step (S466), this does not imply any limitation. That is, the authentication section 111 may carry out its step after the device type determining section 116 carries out its step and the device limiting section 117 carries out its steps.

Further, although, in the process of Fig. 46, the device type determining section 116 carries out its step and the device limiting section 117 carries out its steps, this does not imply any limitation. Either the device type determining section 116 or the device limiting section 117 may carry out its step(s).

As described above, the authentication section 111 carries out authentication if the device type determining section 116 determines that the model information and the third key information match each other. This makes it impossible to use the optical disk 10 in a model of recording and reproduction device 1 other than the model of recording and reproduction device 1 set up on the optical disk 10, thus restricting use of the first information.

Further, the authentication section 111 carries out authentication if the device limiting section 117 determines that the model information and the fourth key information match each other. This makes it impossible to use the optical disk 10 in a model of recording and reproduction device 1 other than the model of recording and reproduction device 1 set up on the optical disk 10, thus restricting use of the first information.

Therefore, by including the device type determining section 116 and the device limiting section 117, the recording and reproduction device 1 can use the first information with sufficient safeguards for the OS.

### (Flow of a Process in the Recording and Reproduction Device (Modification) at the Time of Temporary Ejection)

Next, the flow of a process in the recording and reproduction device 1 at the time of temporary ejection is described with reference to Fig. 47. Fig. 47 is a flow chart showing the flow of the process in the recording and reproduction device 1a at the time of temporary ejection.

Further, the steps S481 to S487 of Fig. 47 are identical to the steps of Fig. 42 and, as such, are not described here. That is, the process of Fig. 47 is achieved by adding steps S488 and S489 after S427 of Fig. 42.

If the authentication section 111 determines that the two pieces of first key information match each other (YES in S487), the authentication section 111 sends the determination result to the device type determining section 116. Upon receiving the determination result indicating that the two pieces of first key information match each other, the device type determining section 116 instructs the key information management section 112 to read out the third key information from the optical disk 10. Upon receiving the instruction, the key information management section 112 sends the key information readout section 113 a readout instruction to read out the third key information from the optical disk 10. Upon receiving the readout instruction, the key information readout section 113 reads out the third key information through the recording and reproduction control section 12 and sends the third key information to the device type determining section 116 through the key information management section 112.

As in the step S467 of Fig. 46, the device type determining section 116 determines whether or not the third key information read out from the optical disk 10 and the information, contained in the device unique information stored in the key information storage section 115, which indicates the model of recording and reproduction device 1a match each other (S488).

If the device type determining section 116 determines that the third key information and the device unique information match each other (YES in S488), the device type determining section 116 sends the determination result to the device limiting section 117. As in the step S468 of Fig. 46, the device limiting section 117 determines whether or not the fourth key information read out from the optical disk 10 by the key information readout section 113 and the device unique information stored in the key information storage section 115 match each other (S489).

If the device limiting section 117 determines that there is fourth key information that matches the device unique information (YES in S489), the process of temporary ejection from the recording and reproduction device 1 is completed.

It should be noted that if NO in S485 and NO in S487 to S489, the device control section 13 causes the optical disk 10 to be ejected from the disk insertion section (S490), and then returns to S482. Similarly, if NO in S483, the device control section 13 returns to S482.

### (Flow of a Process in the Recording and Reproduction Device at the Time of Initialization)

Next, the flow of a process that is carried out in the recording and reproduction device 1a when the OS recorded on the optical disk 10 is stored in the memory section 15 of the recording and reproduction device 1a is described with reference to Fig. 48. Fig. 48 is a flow chart showing the flow of the process that is carried out in the recording and reproduction device 1a when the OS recorded on the optical disk 10 is stored in the memory section 15 of the recording and reproduction device 1a.

Further, the steps S502 and S508 of Fig. 48 are identical to the steps of Fig. 44 and, as such, are not described here. That is, the process of Fig. 48 is achieved by adding steps S501 and S509 to the process of Fig. 44.

First, as in the step S467 of Fig. 46, the device type determining section 116 determines whether or not the third key information read out from the optical disk 10 and the information, contained in the device unique information stored in the key information storage section 115, which indicates the model of recording and reproduction device 1a match each other (S501).

If the device type determining section 116 determines that the third key information and the device unique information match each other (YES in S501), the device type determining section 116 sends the determination result to the key information management section 112. Upon receiving the determination result indicating that the third key information and the device unique information match each other, the key information management section 112 carries out the step S502 by sending the recording and reproduction control section 12 a readout instruction to read out second key information.

After that, the steps S502 and S508 are carried out. After the recording and reproduction control section 12 erases data such as user configuration data in S508, the recording and reproduction control section 12 sends, through the key information recording and erasing section 114 (or the key information readout section 113) and the key information management section 112 to the device limiting section 117, a data erasure completion notification indicating that the erasure of the data has been completed.

Upon receiving the data erasure completion notification, the device limiting section 117 instructs the key information recording and erasing section 114, as in the step S475 of Fig. 46, to record the device unique information, stored in the key information storage section 115, as fourth key information on the optical disk 10. This causes the key information recording and erasing section 114 to store the device unique information as fourth key information on the optical disk 10 through the recording and reproduction control section 12 (S509).

It should be noted that instead of device unique information being recorded as fourth key information on the optical disk 10, plural (e.g., three) pieces of first key information each containing device unique information may be recorded. That is, the optical disk 10 may be able to further have plural pieces of first key information recorded in its key information region 109.

This makes it possible to use the optical disk 10 in plural (e.g., three, which is the number of pieces of first key information recorded on the optical disk 10) recording and reproduction devices. Meanwhile, since the optical disk 10 cannot be used in four or more (which is greater than the number of pieces of first key information recorded on the optical disk 10) recording and reproduction devices, use of the first information can be restricted.

Further, the recording and reproduction device 1. may be configured not to execute the steps S507 and S508 at the time of initialization. This makes it possible to use the OS without initialization within the scope of limitation of recording and reproduction devices by the fourth key information, thus improving user friendliness.

### (Supplementary Information)

Finally, the blocks of the recording and reproduction device 1 or 1a according to the present embodiment, or the key information control section 11 (authentication section 111, key information management section 112 (key information generating section 1121), key information readout section 113, key information recording and erasing section 114 (enable/disable control section 21), device type determining section 116, device limiting section 117), the recording and reproduction control section 12 (information readout section 121, information storage control section 122), the device control section 13, and the code decoding section 14 in particular, may be constituted by hardware logic, or may be constituted by software with use of a CPU as described below.

That is, the recording and reproduction device 1 or 1a according to the present embodiment includes: a CPU (central processing unit) for executing an instruction of a control program for realizing various functions; a ROM (read-only memory) in which the program has been stored; a RAM for expanding the program; and a memory device (recording medium), such as a memory, in which the program and various data are stored. The object of the present invention can also be achieved by providing the mobile communication device 1 with a storage medium in which a program code (executable program, intermediate code, or source program) of the control program of the mobile communication device 1 has been stored in a computer readable manner, and by causing the computer (CPU or MPU) to read and execute the program code stored in the storage medium, the program code serving as software for realizing the aforementioned functions.

Examples of the recording medium include: a tape such as a magnetic tape or a cassette tape; a magnetic disk such as a floppy (registered trademark) disk or a hard disk; an optical disk such as a CD-ROM, an MO, an MD, a DVD, or a CD-R; a card such as an IC card (inclusive of a memory card) or an optical card; and a semiconductor memory such as a mask ROM, an EPROM, an EEPROM, or a flash ROM.

Further, the recording and reproduction device 1 or 1a according to the present embodiment may be connectable to a communication network, and the program code may be supplied via the communication network. Examples of the communication network include, but are not particularly limited to, the Internet, an intranet, an extranet, a LAN (local area network), an ISDN (integrated services digital network), a VAN (value added network), a CATV (cable TV) communication network, a virtual private network, a telephone network, a mobile communication network, and a satellite communication network. Further, usable examples of a transmission medium that constitutes the communication network include, but are not particularly limited to, a cable medium such as IEEE 1394, a USB, power line communication, a cable TV line, a telephone line, or an ADSL line and a wireless medium such as IrDA, infrared rays used for a remote controller, Bluetooth (registered trademark), IEEE 802.11, HDR (High Data Rate), a mobile phone network, satellite connection, or a terrestrial digital network. It should be noted that the present invention can also be realized in the form of a computer data signal realized by electronic transmission of the program code and embedded in a carrier wave.

### (Putting the Present Invention Differently)

It should be noted that the present invention can be expressed as follows:

That is, a recording and reproduction device according to the present invention, targeted at an information recording medium as described above, preferably includes: key information readout means which reads out the first key information from the information recording medium; authentication means which authenticates information for permission of use by use of the first key information; key information storage means in which the key information thus read out is stored; and key information recording and erasing means which records or erases the first key information, when the information recording medium is ejected, the first key information being read out by the key information readout means and stored in the key information storage means.

Further, the recording and reproduction device according to the present invention, targeted at an information recording medium as described above, is preferably configured to further include key information management means which manages the key information recorded on the information recording medium or stored in the key information storage means, wherein: the key information management means reads out the first key information from the information recording medium when the information recording medium has been inserted while the operating system is not being executed; and if the first key information has not been recorded, and if the key information storage means has the first key information stored therein, the key information management means creates new key information at least by use of second key information, records it in a recordable region of the information recording medium, and stores it in the key information storage means.

Further, the recording and reproduction device according to the present invention, targeted at an information recording medium as described above, is preferably configured such that the key information management means reads out the two pieces of first key information from the information recording medium and the key information storage means respectively when the information recording device has been inserted during execution of the operating system and, if either of the two pieces of first key information is absent or if the two pieces of first key information do not match each other, creates new key information at least by use of second key information, records it in a recordable region of the information recording medium, and stores it in the key information storage means.

Further, the recording and reproduction device according to the present invention, targeted at an information recording medium as described above, is preferably configured such that the key information management means reads out the first key information from the information recording medium when the information recording medium has been inserted and, if the first key information has been recorded and if the key information storage means has the first key information stored therein, causes the authentication means to determine whether the two pieces of key information match each other and, if they match each other, starts use of the information.

Further, the recording and reproduction device according to the present invention, targeted at an information recording medium as described above, is preferably controlled such that at the time of termination of execution of the operating system, the key information management means records the first key information in the recordable region of the information recording medium and stores it in the key information storage means.

Further, the recording and reproduction device according to the present invention is preferably configured to record, in the recordable region, environment configuration information set up by a user in at least one recording and reproduction device, together with identification information unique to the recording and reproduction device.

Further, the recording and reproduction device according to the present invention is preferably configured such that the second key information contains at least BCA code information.

Further, the recording and reproduction device according to the present invention is preferably configured to further include information code decoding means, wherein: the first key information contains key information for decoding the information recorded in the reproduce-only region; and by use of the first key information thus read out, the information code decoding means decodes the information recorded in the reproduce-only region.

Further, the recording and reproduction device according to the present invention is preferably configured such that: the information recording medium has the first key information recorded in a region of the recordable region that is different from a user data region; and the key information readout means reads out the first key information from a region that is different from a user region.

Further, the recording and reproduction device according to the present invention is preferably configured to further include device type determining means which records, as third key information in the recordable region of the information recording medium, information of a recording and reproduction device in which the information recorded in the reproduce-only region or in the recordable region can be used, wherein the authentication means renders the information usable only when the third key information read out by the key information readout means matches key information of a type of recording and reproduction device registered in advance in the device type determining means.

Further, the recording and reproduction device according to the present invention is preferably configured to further include device limiting means, wherein: the key information recording and erasing means records, as fourth key information in the recordable region of the information recording medium, information unique to a recording and reproduction device that used the information recorded in the reproduce-only region; and the authentication means renders the information usable only when the fourth key information read out from the information recording medium by the key information readout means is contained in fourth key information stored in the device limiting means.

Further, an information recording medium according to the present invention is preferably an information recording having a reproduce-only region and a recordable region having first key information recorded therein, information recorded in the reproduce-only region being authenticated for permission of use by use of the first key information.

Further, the information recording medium according to the present invention is preferably configured such that the first key information is created from information containing at least second key information unique to the information recording medium.

Further, the information recording medium according to the present invention is preferably configured such that the information recorded in the reproduce-only region is an operating system, is activated in in-device memory means on the recording and reproduction device, and stores data in the recordable region.

Further, the information recording medium according to the present invention is preferably configured such that environment configuration information set up by a user in at least one recording and reproduction device is recorded in the recordable region together with identification information unique to the recording and reproduction device.

Further, the information recording medium according to the present invention is preferably a multilayer structure having at least one reproduce-only layer and at least one recordable layer.

Further, the information recording medium according to the present invention is preferably configured such that the first key information recorded in the recordable region contains key information for decoding the information recorded in the reproduce-only region.

Further, the information recording medium according to the present invention preferably has the first key information recorded in a region of the recordable region that is different from a user data region.

Further, the information recording medium according to the present invention preferably has recorded information as third key information in the recordable region, the information regarding a recording and reproduction device in which the information recorded in the reproduce-only region and in the recordable region is usable.

Further, the information recording medium according to the present invention preferably has information recorded as fourth key information in the recordable region, the information being unique to a recording and reproduction device that used the information recorded in the reproduce-only region.

### [Examples of Configurations of the Present Invention]

As described above, the recording and reproduction device according to the present invention is preferably configured that: the information recording medium has recorded thereon first key information for permitting use of the first information, the recording and reproduction device further including authentication and confirmation means which, by use of the first key information recorded on the information recording medium, carries out authentication for use of the first information stored in the memory section, and which confirms whether or not the authentication has been completed successfully, the enable/disable control means being achieved by key information erasing means which erases the first key information from the information recording medium in accordance with a result of confirmation of the authentication by the authentication and confirmation means.

According to the foregoing configuration, the authentication and confirmation means authenticates, by use of the first key information, whether the recording and reproduction device can use the first information. Further, the key information erasing means erases the first key information from the information recording medium in accordance with a result of authentication by the authentication and confirmation means, thereby functioning as the enable/disable control means.

That is, the information recording medium, which had had the first key information recorded thereon before it was inserted into the recording and reproduction device, becomes devoid of the first key information during a period of time between insertion into the recording and reproduction device and temporary ejection at least from the recording and reproduction device. Thus, even if an attempt to use the first information in another recording and reproduction device has been made, the first information cannot be used in the another recording and reproduction device, since the information recording medium is devoid of the first key information. That is, by erasing the first key information from the information recording medium, the recording and reproduction device can render the first information unusable when the information recording medium has been inserted into another recording and reproduction device.

The recording and reproduction device according to the present invention is preferably configured such that the information recording medium has a reproduce-only region having the first information recorded therein and a recordable region having the first key information recorded therein.

According to the foregoing configuration, the recording and reproduction device authenticates, by use of the first key information recorded in the recordable region, whether the first information recorded in the reproduce-only region is usable or not, and erases the first key information from the recordable region of the information recording medium in accordance with a result of confirmation of the authentication.

That is, the information recording medium, which had had the first key information recorded in its recordable region before it was inserted into the recording and reproduction device, becomes devoid of the first key information by being inserted into the recording and reproduction device. As mentioned above, by erasing the first key information from the recordable region, the recording and reproduction device can render the first information recorded in the reproduce-only region unusable when the information recording medium has been inserted into another recording and reproduction device.

Therefore, the recording and reproduction device makes it possible, with sufficient safeguards for the first information recorded in the reproduce-only region of the information recording medium, to use the first information in a plurality of recording and reproduction devices.

The recording and reproduction device according to the present invention is preferably configured to further include execution control means which controls execution of the first information if the authentication and confirmation means confirms that the authentication has been completed successfully, wherein the key information erasing means erases the first key information from the information recording medium when the information recording medium is ejected from the recording and reproduction device during the execution of the first information by the execution control means.

According to the foregoing configuration, the key information recording means erases the first key information from the information recording medium when the information recording medium is ejected from the recording and reproduction device during the execution of the first information by the execution control means. This allows the recording and reproduction device to render the first information unusable in another recording and reproduction device while the first information is being executed in the recording and reproduction device.

The recording and reproduction device according to the present invention is preferably configured such that the information recording medium has stored thereon second key information serving as unique information for discriminating the information recording medium from another information recording medium, the recording and reproduction device further including: key information readout means which reads out the first key information and second key information recorded on the information recording medium; and key information management means which stores, in the memory section of the recording and reproduction device, the first key information and second key information read out by the key information readout means, when the information recording medium is ejected from the recording and reproduction device during the execution of the first information by the execution control means, the key information management means storing, in the memory section of the recording and reproduction device, the first key information and second key information read out by the key information readout means.

According to the foregoing configuration, the key information management means stores, in the memory section, the first and second information read out by the key information readout means during the execution of the first information by the execution control means.

This allows the recording and reproduction device, when the information recording medium has been inserted, to determine, by use of the first key information and second key information stored in the memory section, whether or not the information recording medium has recorded thereon the first information being executed by the execution control means. Further, by storing the first key information for authenticating whether the first information is usable or not, the recording and reproduction device can store license information for the first information.

The recording and reproduction device according to the present invention is preferably configured to further include key information recording means which records, on the information recording medium, the first key information stored in the memory section, wherein: upon insertion of the information recording medium, the authentication and confirmation means determines whether or not the second key information stored in the memory section and the second key information recorded on the information recording medium thus inserted match each other; and if the authentication and confirmation means determines that the two pieces of second key information match each other, the key information recording means records, on the information recording medium, the first key information stored in the memory section.

According to the foregoing configuration, the authentication and confirmation means determines, upon insertion of the information recording medium, whether or not the second key information stored in the memory section and the second key information recorded on the information recording medium thus inserted match each other. Then, if the authentication and confirmation means determines that the two pieces of second key information match each other, the key information recording means records, on the information recording medium, the first key information stored in the memory section.

This allows the recording and reproduction device to determine whether the information recording medium with which the first information being executed by the execution control means was authenticated for use and the inserted information recording medium are identical or not and, as such, to surely write the first key information stored in the memory section back onto the original information recording medium (the information recording medium on which the first information had been recorded).

The recording and reproduction device according to the present invention is preferably configured such that: the key information management means serves to erase the first key information and second key information stored in the memory section; and before or when the first information being executed by the execution control means is terminated, the key information management means erases the first key information and second key information stored in the memory section.

According to the foregoing configuration, when the execution of the first information by the execution control means is terminated, the recording and reproduction device can, on the one hand, render the previously inserted information recording medium usable in another recording and reproduction device and, on the other hand, render the first information unusable in the recording and reproduction device (i.e., the recording and reproduction device from which the information recording medium has been ejected). This allows the recording and reproduction device to ensure sufficient safeguards for the first information.

The recording and reproduction device according to the present invention is preferably configured such that the information recording medium has stored thereon second key information serving as unique information for discriminating the information recording medium from another information recording medium, the recording and reproduction device further including: medium key confirmation means which reads out key information recorded on the information recording medium and confirms whether or not the first key information exists in the key information; and device key confirmation means which confirms whether or not the memory section of the recording and reproduction device has the first key information and second key information stored therein, when the information recording medium has been inserted, and if the medium key confirmation means confirms the existence of the first key information and the device key confirmation means confirms that the memory section has neither the first nor second key information stored therein, the authentication and confirmation means determining that the authentication has been completed successfully.

According to the foregoing configuration, since the recording and reproduction device determines, if the authentication and confirmation means has confirmed as described above, that the first information has been successfully authenticated, the recording and reproduction device can use the first information after confirming, before authenticating the first information, whether or not the use of the first information recorded in the information recording medium was normally terminated.

The recording and reproduction device according to the present invention is preferably configured such that the information recording medium has stored thereon second key information serving as unique information for discriminating the information recording medium from another information recording medium, the recording and reproduction device further including: medium key confirmation means which reads out key information recorded on the information recording medium and confirms whether or not the first key information exists in the key information; and device key confirmation means which confirms whether or not the memory section of the recording and reproduction device has the first key information and second key information stored therein, when the information recording medium has been inserted, and if the medium key confirmation means confirms that the first key information does not exist and the device key confirmation means confirms that the memory section has both the first key information and the second key information stored therein, the authentication and confirmation means determining whether or not the second key information stored in the memory section and the second key information recorded on the information recording medium thus inserted match each other, and if the authentication and confirmation means determines that the two pieces of second key information match each other, the authentication and confirmation means determining that the authentication has been completed successfully.

According to the foregoing configuration, if the authentication and confirmation means has confirmed as described above and determines that the two pieces of second key information match each other, the authentication and confirmation means determines that the first information has been successfully authenticated.

This allows the recording and reproduction device to correctly recognize and authenticate the inserted information recording medium even if use of the first information is terminated, for example, after the occurrence of such a peculiar situation where the power supply has been shut off with both first key information and second key information existing in the recording and reproduction device (i.e., even if the first information is abnormally terminated). That is, the recording and reproduction device can put the first information back into the state of normal use preceding the abnormal termination.

The recording and reproduction device according to the present invention is preferably configured such that the first key information contains second key information recorded on the information recording medium and serving as unique information for discriminating the information recording medium from another information recording medium.

According to the foregoing configuration, by using only one piece of key information even when the first key information contains second key information, the recording and reproduction device makes it possible, with sufficient safeguards for first information recorded on an information recording medium, to use the first information in a plurality of recording and reproduction devices.

The recording and reproduction device according to the present invention is preferably configured such that the information recording medium has a recordable region containing a user data region in which a user is able to record various types of information, the recording and reproduction device further including key information recording means which records, on the information recording medium, the first key information stored in the memory section, the key information recording means recording the first key information in an nonuser data region of the recordable region that is different from the user data region.

According to the foregoing configuration, since the recording and reproduction device records the first key information in the nonuser data region that is different from the user data region in which various types of information can be recorded, loss of the first key information can be prevented.

The recording and reproduction device according to the present invention is preferably configured to further include authentication and confirmation means which, by use of first key information for permitting use of the first information, carries out authentication for use of the first information stored in the memory section, and which confirms whether or not the authentication has been completed successfully, the enable/disable control means being achieved by key information recording means which, in accordance with a result of confirmation of the authentication by the authentication and confirmation means, records, on the information recording medium, prohibition key information for prohibiting use of the first information.

According to the foregoing configuration, the authentication and confirmation means authenticates, by use of the first key information, whether the recording and reproduction device can use the first information (the recording and reproduction device can use the first information if there is no prohibition key information). The key information recording means, in accordance with a result of the authentication by the authentication and confirmation means, records, on the information recording medium, prohibition key information for prohibiting use of the first information, thereby functioning as the enable/disable control means.

That is, by getting the prohibition key information recorded thereon during a period of time between insertion into the recording and reproduction device and temporary ejection at least from the recording and reproduction device, the information recording medium comes into a recording state that is different from that in which the information recording medium had been before it was inserted into the recording and reproduction device. Thus, even if the information recording medium has been temporarily ejected from the recording and reproduction device and an attempt to use the first information in another recording and reproduction device has been made, for example, the first information cannot be used in the another recording and reproduction device, since the information recording medium has the prohibition key information recorded thereon. That is, by recording the prohibition key information on the information recording medium, the recording and reproduction device can render the first information unusable when the information recording medium has been inserted into another recording and reproduction device.

The recording and reproduction device according to the present invention is preferably configured such that the information recording medium has a reproduce-only region having the first information recorded therein and a recordable region in which the key information recording means is able to record the prohibition key information.

According to the foregoing configuration, the recording and reproduction device authenticates, by use of the first key information, whether the first information recorded in the reproduce-only region is usable or not and, in accordance with a result of confirmation of the authentication, records the prohibition key information in the recordable region of the information recording medium.

That is, by being inserted into the recording and reproduction device to get the prohibition key information recorded thereon, the information recording medium comes into a recording state that is different from that in which the information recording medium had been before it was inserted into the recording and reproduction device. Thus, as mentioned above, by recording the prohibition key information on the information recording medium, the recording and reproduction device can render the first information recorded in the reproduce-only region unusable when the information recording medium has been inserted into another recording and reproduction device.

Therefore, the recording and reproduction device makes it possible, with sufficient safeguards for first information recorded in a reproduce-only region of an information recording medium, to use the first information in a plurality of recording and reproduction devices.

The recording and reproduction device according to the present invention is preferably configured to further include execution control means which controls execution of the first information if the authentication and confirmation means confirms that the authentication has been completed successfully, wherein the key information recording means records the prohibition key information on the information recording medium when the information recording medium is ejected from the recording and reproduction device during the execution of the first information by the execution control means.

According to the foregoing configuration, the key information recording means records the prohibition key information on the information recording medium when the information recording medium is ejected from the recording and reproduction device during the execution of the first information by the execution control means. Thus, the recording and reproduction device can make it impossible to use the first information in another recording and reproduction device while the first information is being executed in the recording and reproduction device.

The recording and reproduction device according to the present invention is preferably configured such that the information recording medium has stored thereon second key information serving as unique information for discriminating the information recording medium from another information recording medium, the recording and reproduction device further including: key information readout means which reads out the second key information recorded on the information recording medium; and key information management means which stores, in the memory section of the recording and reproduction device, the second key information read out by the key information readout means, when the information recording medium is ejected from the recording and reproduction device during the execution of the first information by the execution control means, the key information management means storing, in the memory section of the recording and reproduction device, the second key information read out by the key information readout means.

According to the foregoing configuration, the key information management means stores, in the memory section, the second key information read out by the key information readout means during the execution of the first information by the execution control means.

This allows the recording and reproduction device, when the information recording medium has been inserted, to determine, by use of the second key information stored in the memory section, whether or not the information recording medium is one that has recorded thereon the first information being executed by the execution control means.

The recording and reproduction device according to the present invention is preferably configured to further include key which erases the prohibition key information recorded on the information recording medium, wherein: upon insertion of the information recording medium, the authentication and confirmation means determines whether or not the second key information stored in the memory section and the second key information recorded on the information recording medium thus inserted match each other; and if the authentication and confirmation means determines that the two pieces of second key information match each other, the key information erasing means erases the prohibition key information recorded on the information recording medium.

According to the foregoing configuration, upon insertion of the information recording medium, the authentication and confirmation means determines whether or not the second key information stored in the memory section and the second key information recorded on the information recording medium thus inserted match each other. Then, if the authentication and confirmation means determines that the two pieces of second key information match each other, the key information recording means erases the prohibition key information recorded on the information recording medium.

This allows the recording and reproduction device 1 to determine whether the information recording medium with which the first information being executed by the execution control means was authenticated for use and the inserted information recording medium are identical or not and, as such, can surely put the information recording medium back to the same state as the state of recording prior to the authentication by the authentication and confirmation means.

The recording and reproduction device according to the present invention is preferably configured such that: the key information management means serves to erase the first key information and second key information stored in the memory section; and before or when the first information being executed by the execution control means is terminated, the key information management means erases the first key information and second key information stored in the memory section.

According to the foregoing configuration, when the execution of the first information by the execution control means is terminated, the recording and reproduction device can, on the one hand, render the previously inserted information recording medium usable in another recording and reproduction device and, on the other hand, render the first information unusable in the recording and reproduction device (i.e., the recording and reproduction device from which the information recording medium has been ejected). This allows the recording and reproduction device to ensure sufficient safeguards for the first information.

The recording and reproduction device according to the present invention is preferably configured to further include: medium key confirmation means which reads out key information recorded on the information recording medium and confirms whether or not the prohibition key information exists in the key information; and device key confirmation means which confirms whether or not the memory section of the recording and reproduction device has at least the first key information stored therein, when the information recording medium has been inserted, and if the medium key confirmation means confirms that the prohibition key information does not exist and the device key confirmation means confirms that the memory section has the first key information stored therein, the authentication and confirmation means determining that the authentication has been completed successfully.

According to the foregoing configuration, since the recording and reproduction device determines, if the authentication and confirmation means has confirmed as described above, that the first information has been successfully authenticated, the recording and reproduction device can use the first information after confirming, before authenticating the first information, whether or not the use of the first information recorded in the information recording medium was normally terminated.

The recording and reproduction device according to the present invention is preferably configured such that the information recording medium has stored thereon second key information serving as unique information for discriminating the information recording medium from another information recording medium, the recording and reproduction device further including: medium key confirmation means which reads out key information recorded on the information recording medium and confirms whether or not the prohibition key information exists in the key information; and device key confirmation means which confirms whether or not the memory section of the recording and reproduction device has at least the second key information stored therein, when the information recording medium has been inserted, and if the medium key confirmation means confirms the existence of the prohibition key information and the device key confirmation means confirms that the memory section has the second key information stored therein, the authentication and confirmation means determining whether or not the second key information stored in the memory section and the second key information recorded on the information recording medium thus inserted match each other, and if the authentication and confirmation means determines that the two pieces of second key information match each other, the authentication and confirmation means determining that the authentication has been completed successfully.

According to the foregoing configuration, if the authentication and confirmation means has confirmed as described above and determines that the two pieces of second key information match each other, the authentication and confirmation means determines that the first information has been successfully authenticated.

This allows the recording and reproduction device to correctly recognize and authenticate the inserted information recording medium even if use of the first information is terminated, for example, after the occurrence of such a peculiar situation where the power supply has been shut off with second key information existing in the recording and reproduction device (i.e., even if the first information is abnormally terminated). That is, the recording and reproduction device can put the first information back into the state of normal use preceding the abnormal termination.

The recording and reproduction device according to the present invention is preferably configured such that: the information recording medium has a recordable region containing a user data region in which a user is able to record various types of information; the key information recording means records the prohibition key information stored in the memory section of the recording and reproduction device; and the key information recording means records the prohibition key information in an nonuser data region of the recordable region that is different from the user data region.

According to the foregoing configuration, since the recording and reproduction device records the prohibition key information in the nonuser data region that is different from the user data region in which various types of information can be recorded, loss of the prohibition key information can be prevented.

The recording and reproduction device according to the present invention is preferably configured such that the information recording medium has stored thereon second key information serving as unique information for discriminating the information recording medium from another information recording medium, the recording and reproduction device further including: key information readout means which reads out the second key information recorded on the information recording medium; and key information management means which stores, in the memory section of the recording and reproduction device, the second key information read out by the key information readout means, by use of the second key information stored in the memory section by the key information management means, the authentication and confirmation means identifying an information recording medium inserted into the recording and reproduction device.

According to the foregoing configuration, the key information management means stores, in the memory section of the recording and reproduction device, the second key information read out by the key information readout means. By use of the second key information stored in the memory section, the authentication and confirmation means identifies an information recording medium inserted into the recording and reproduction device.

This allows the recording and reproduction device to identify an inserted information recording medium by use of the second key information and therefore, for example, to determine whether or not the inserted information recording medium is one that was temporarily ejected from the recording and reproduction device.

The recording and reproduction device according to the present invention is preferably configured such that the authentication and confirmation means starts the authentication after the information storage means stores the first information in the memory section.

According to the foregoing configuration, the recording and reproduction device can use first information without reading out the first information from an information recording medium, thus reducing the time it takes to read out the first information.

Further, conventionally, in cases where an information recording medium is composed of a plurality of layers, namely a layer having first information recorded thereon and other layers and where a common optical pickup (i.e. a single optical pickup) is used for these layers, it not only has been impossible to simultaneously access the layers but also has taken time to switch from one layer to another. The foregoing configuration makes it possible to simultaneously access both the first information stored in the memory section and information recorded on a layer of the information recording medium that does not have the first information recorded thereon, thus achieving a speedup in comparison with the conventional configuration.

The recording and reproduction device according to the present invention is preferably configured such that the enable/disable control means is achieved by information erasing means which, when the information recording medium is ejected, erases the first information stored in the memory section by the information storage means.

According to the foregoing configuration, the information erasing means, when the information recording medium is ejected, erases the information storage means stored in the memory section, thereby functioning as the enable/disable control means. Such a situation can be created that although it is possible to use the first information in the recording and reproduction device while the recording and reproduction device is having the information recording medium inserted therein, it becomes impossible to use the first information in the recording and reproduction device once the information recording medium has been ejected.

Therefore, use of the recording and reproduction device of the present invention makes it possible, with sufficient safeguards (license protection) for first information recorded on an information recording medium, to use the first information in a plurality of recording and reproduction devices.

The recording and reproduction device according to the present invention is preferably configured such that the enable/disable control means is achieved by state control means which, after the information storage means stores the first information in the memory section, disables use of the first information recorded on the information recording medium.

According to the foregoing configuration, the state control means, after the first information is stored in the memory section, disables use of the first information recorded on the information recording medium, thereby functioning as the enable/disable control means. This makes it possible to, when the information recording medium is ejected, render the first information recorded on the information recording medium unusable. Meanwhile, since the recording and reproduction device stores the first information in its memory section before the first information recorded on the information recording medium becomes unusable, the recording and reproduction device can use the first information. That is, the recording and reproduction device can render the first information unusable in another recording and reproduction device when it can use the first information.

Therefore, use of the recording and reproduction device of the present invention makes it possible, with, sufficient safeguards (license protection) for first information recorded on an information recording medium, to use the first information in a plurality of recording and reproduction devices.

The recording and reproduction device according to the present invention is preferably configured such that: the information recording medium has at least a reproduce-only region and a recordable region; and the state control means is achieved by irradiation control means which irradiates the reproduce-only region with light having a particular light intensity that disables use of first information recorded in the reproduce-only region.

According to the foregoing configuration, the irradiation control means irradiates the reproduce-only region with light having a particular light intensity that disables use of the first information, thereby functioning as the enable/disable control means.

Usually, information recorded in a reproduce-only region, unlike information recorded in a recordable region, cannot be easily erased by rewriting or adding information. However, by causing the irradiation control means to irradiate the reproduce-only region with light having such a particular light intensity, the present invention can change the reproduce-only region into a region from which information cannot be read out. This makes it impossible to read out the first information from the reproduce-only region even if the region is later irradiated with reproducing light. That is, such a situation can be created that while the recording and reproduction device can use the first information stored in the memory section, another recording and reproduction device cannot read out the first information from the reproduce-only region of the information recording medium and therefore cannot use the first information.

Therefore, use of the recording and reproduction device of the present invention makes it possible, with sufficient safeguards (license protection) for first information recorded on an information recording medium, to use the first information in a plurality of recording and reproduction devices.

The recording and reproduction device according to the present invention is preferably configured such that the memory section of the recording and reproduction device has stored therein device unique information serving as unique information for discriminating the recording and reproduction device from another recording and reproduction device, the recording and reproduction device further including key information generating means which, by use of at least the device unique information stored in the memory section, generates first key information for permitting use of the first information stored in the memory section, the enable/disable control means being achieved by key information recording means which records, on the information recording medium, the first key information generated by the key information generating means.

According to the foregoing configuration, by use of at least the device unique information stored in the memory section and serving as unique information for discriminating the recording and reproduction device from another recording and reproduction device, the key information generating means generates first key information for permitting use of the first information stored in the information recording medium. Then, by recording, on the information recording medium, the first key information generated by the key information generating means, the key information recording means functions as the enable/disable control means.

That is, by getting the first key information generated and then recorded thereon during a period of time between insertion into the recording and reproduction device and temporary ejection at least from the recording and reproduction device, the information recording medium comes into a recording state that is different from that in which the information recording medium had been before it was inserted into the recording and reproduction device. Thus, even if the information recording medium has been temporarily ejected from the recording and reproduction device and an attempt to use the first information in another recording and reproduction device has been made, for example, the first information cannot be used in the another recording and reproduction device, since the information recording medium has recorded thereon the first key information generated by the key information generating means. That is, by recording the first key information on the information recording medium, the recording and reproduction device can render the first information unusable when the information recording medium has been inserted into another recording and reproduction device.

The recording and reproduction device according to the present invention is preferably configured such that the information recording medium has a reproduce-only region having the first information recorded therein and a recordable region in which the key information recording means is able to record the first key information.

According to the foregoing configuration, the recording and reproduction device records, in the recordable region of the information recording medium, the first key information for using the first information recorded in the reproduce-only region.

That is, by being inserted into the recording and reproduction device to get recorded in its recordable region the first key information generated by the recording and reproduction device, the information recording medium comes into a recording state that is different from that in which the information recording medium had been before it was inserted into the recording and reproduction device. Thus, as mentioned above, by recording the first key information in the recordable region, the recording and reproduction device can render the first information recorded in the reproduce-only region unusable when the information recording medium has been inserted into another recording and reproduction device.

Therefore, with sufficient safeguards for first information recorded in a reproduce-only region of an information recording medium, the recording and reproduction device can use the first information.

The recording and reproduction device according to the present invention is preferably configured to further include key information management means which stores, in the memory section of the recording and reproduction device, the first key information generated by the key information generating means.

According to the foregoing configuration, the key information management means stores the first key information in the memory section of the recording and reproduction device. This allows the recording and reproduction device, when the information recording medium has been inserted, for example, to determine, by use of the first key information stored in the memory section, whether or not the information recording medium is one that was once inserted.

The recording and reproduction device according to the present invention is preferably configured such that the key information management means serves to confirm whether or not the memory section of the recording and reproduction device has the first key information stored therein, the recording and reproduction device further including: key information readout means which reads out key information recorded on the information recording medium and confirms whether or not the first key information exists in the key information; key information determining means which, if the key information readout means confirms that the first key information exists on the information recording medium and the key information management means confirms that the memory section has the first information stored therein, determines whether or not the two pieces of first key information match each other, when the information recording medium has been inserted into the recording and reproduction device, and if the key information determining means determines that the two pieces of first key information do not match each other, the key information generating means generating first key information according to a user operation by use of at least the device unique information.

The recording and reproduction device according to the present invention is preferably configured such that the key information management means serves to confirm whether or not the memory section of the recording and reproduction device has the first key information stored therein, the recording and reproduction device further including key information readout means which reads out key information recorded on the information recording medium and confirms whether or not the first key information exists in the key information, when the information recording medium has been inserted into the recording and reproduction device, and either if the key information readout means confirms that the first key information exists on the information recording medium and the key information management means confirms that the memory section does not have the first key information stored therein, or if the key information readout means confirms that the first key information does not exist on the information recording medium and the key information management means confirms that the memory section has the first key information stored therein, the key information generating means generating first key information according to a user operation by use of at least the device unique information.

According to the foregoing configuration, if the key information determining means determines that the two pieces of first key information do not match each other, or if it is determined that only either the information recording medium or the memory section has first key information recorded thereon or stored therein, the key information generating means generates first key information in accordance with a user operation. That is, the recording and reproduction device can first recognize insertion of another information recording medium that is different from the information recording medium having the executed first information, for example, and then generate, in accordance with a user operation, first key information for permitting use of first information recorded on the information recording medium inserted.

This allows the recording and reproduction device, even when an information recording medium that was already used in another recording and reproduction device has been inserted, to permit, in accordance with a user operation, use of first information recorded on the information recording medium. Therefore, by rewriting first key information, the recording and reproduction device can both ensure sufficient safeguards for first information recorded on an information recording medium and improve user friendliness.

It should be noted that the term "user operation" refers to an operation of permitting the key information generating means to generate first key information by use of second key information recorded on an information recording medium inserted.

The recording and reproduction device according to the present invention is preferably configured to further include key information determining means which, if the key information readout means confirms that the first key information exists on the information recording medium and the key information management means confirms that the memory section has the first information stored therein, determines whether or not the two pieces of first key information match each other, wherein when the information recording medium has been inserted into the recording and reproduction device, and if the key information determining means determines that the two pieces of first key information match each other, the key information determining means determines that authentication for use of the first information has been completed successfully by use of the first key information generated by the key information generating means.

According to the foregoing configuration, if the two pieces of first key information match each other, the key information determining means determines that authentication for use of the first information has been completed successfully. This allows the recording and reproduction device to use first information recorded on an information recording medium, after confirming that the information recording medium is one that was once inserted into the recording and reproduction device, i.e., with sufficient safeguards for the first information.

The recording and reproduction device according to the present invention is preferably configured to further include key information determining means which, by use of the first key information generated by the key information generating means, carries out authentication for use of the first information, and which confirms whether or not the authentication has been completed successfully, wherein the key information determining means starts the authentication after the information storage means stores the first information in the memory section.

According to the foregoing configuration, the recording and reproduction device can use first information without reading out the first information from an information recording medium, thus reducing the time it takes to read out the first information.

The recording and reproduction device according to the present invention is preferably configured such that: the information recording medium has stored thereon second key information serving as unique information for discriminating the information recording medium from another information recording medium; and the second key information contains a BCA (burst cutting area) code.

According to the foregoing configuration, the second key information is an identification number recorded at the time of manufacture of the information recording medium uniquely to the information recording medium. This allows the recording and reproduction device to surely identify the information recording medium.

An information recording medium according to the present invention is preferably an information recording medium for use in a recording and reproduction device as described above, the information recording medium having at least a reproduce-only region and a recordable region, the reproduce-only region having stored therein first information that is usable in a recording and reproduction device capable of recording and reproducing information with respect to the information recording medium, the recordable region having recorded therein first key information for permitting the recording and reproduction device to use the first information, the first key information being erasable by the recording and reproduction device.

According to the foregoing configuration, the first key information recorded in the recordable region is erasable by the recording and reproduction device; therefore, when the first key information has been erased by the recording and reproduction device, the first information recorded in the reproduce-only region is rendered unusable in a device other than the recording and reproduction device.

Therefore, with sufficient safeguards (license protection) for the first information recorded on the information recording medium, the information recording medium allows a plurality of recording and reproduction devices to use the first information.

The information recording medium according to the present invention is preferably configured such that the first key information contains second key information, recorded on the information recording medium; which serves as unique information for discriminating the information recording medium from another information recording medium.

According to the foregoing configuration, even when the first key information contains second key information, the recording and reproduction device uses only one piece of key information. Therefore, with sufficient safeguards (license protection) for the first information recorded on the information recording medium, the information recording medium allows a plurality of recording and reproduction devices to use the first information.

The information recording medium according to the present invention is preferably configured such that: the recordable region is provided with a user data region in which a user is able to record various types of information, the information recording medium having the first key information recorded in a nonuser data region that is different from the user data region.

According to the foregoing configuration, since the information recording medium has the first key information recorded in the nonuser data region that is different from the user data region in which various types of information can be recorded, loss of the first key information can be prevented.

The information recording medium according to the present invention is preferably configured to have the first key information recorded in advance at a stage of manufacture of the information recording medium.

According to the configuration, by recording the first key information at the stage of manufacture (at the time of distribution) of the information recording medium, the manufacturer (distributor) of the information recording medium can arbitrarily set up the first key information for the first information.

An information recording medium according to the present invention is preferably an information recording medium for use in a recording and reproduction device as described above, the information recording medium having at least a reproduce-only region and a recordable region, the reproduce-only region having stored therein first information that is usable in a recording and reproduction device capable of recording and reproducing information with respect to the information recording medium, the recordable region allowing the recording and reproduction device to record, in the recordable region, prohibition key information for prohibiting use of the first information.

According to the foregoing configuration, when the prohibition key information for prohibiting use of the first information has been recorded in the recordable region by the recording and reproduction device, the first information recorded in the reproduce-only region is rendered unusable in a device other than the recording and reproduction device.

Therefore, with sufficient safeguards (license protection) for the first information recorded on the information recording medium, the information recording medium allows a plurality of recording and reproduction devices to use the first information.

The information recording medium according to the present invention is preferably configured such that: the recordable region is provided with a user data region in which a user is able to record various types of information, the information recording medium having the prohibition key information recorded in a prohibition key recording region inside of a nonuser data region different from the user data region.

According to the foregoing configuration, since the information recording medium has the prohibition key information recorded in the nonuser data region that is different from the user data region in which various types of information can be recorded, loss of the prohibition key information can be prevented.

An information recording medium according to the present invention is preferably an information recording medium for use in a recording and reproduction device as described above, the information recording medium having at least a reproduce-only region and a recordable region, the reproduce-only region having stored therein first information that is usable in a recording and reproduction device capable of recording and reproducing information with respect to the information recording medium, the recording and reproduction device having stored therein device unique information serving as unique information for discriminating the recording and reproduction device from another recording and reproduction device, the recordable region allowing the recording and reproduction device to record, in the recordable region, first key information for permitting use of the first information, the first key information being generated by use of at least the device unique information stored in the memory section.

According to the foregoing configuration, by having the first key information recorded in its recordable region by the recording and reproduction device, the information recording medium comes into a recording state that is different from that in which the information recording medium had been before it was inserted into the recording and reproduction device, thus rendering the first information recorded in the reproduce-only region unusable in another recording and reproduction device.

Therefore, with sufficient safeguards (license protection) for the first information recorded on the information recording medium, the information recording medium allows use of the first information.

The information recording medium according to the present invention is preferably configured such that: the recordable region is provided with a user data region in which a user is able to record various types of information; and the first key information is recordable by the recording and reproduction device in a nonuser data region that is different from the user data region.

According to the foregoing configuration, since the recording and reproduction device records the first key information in the nonuser data region that is different from the user data region in which various types of information can be recorded, loss of the first key information can be prevented.

The information recording medium according to the present invention is preferably configured such that the recordable region has recorded therein user configuration information set up by a user with respect to the first information.

According to the foregoing configuration, the information recording medium allows the user configuration for the first information to be shared with another recording and reproduction device when the first information is used in the another recording and reproduction device.

The information recording medium according to the present invention is preferably an information recording medium having a multilayer structure having at least one reproduce-only layer, wherein the reproduce-only layer has the first information recorded thereon.

According to the foregoing configuration, a multilayer structure having at least one first information recording layer having first information recorded thereon can be formed at a high speed, for example, by a stamper. This makes it possible to mass-produce such information recording media.

An information recording medium according to the present invention is preferably an information recording medium for use in a recording and reproduction device as described above, the information recording medium having at least a reproduce-only region and a recordable region, the reproduce-only region has the first information recorded in advance therein.

According to the foregoing configuration, the reproduce-only region has the first information recorded therein. For this reason, usually, information recorded in a reproduce-only region, unlike information recorded in a recordable region, cannot be easily erased by rewriting or adding information.

However, since the recording and reproduction device in which the information recording medium is used includes the state control means as the enable/disable control means, it is possible to, when the information recording medium is ejected, render the first information recorded on the information recording medium unusable. That is, it is possible to render the first information unusable in another recording and reproduction device when the recording and reproduction device of the present invention can use the first information.

Therefore, use of the information recording medium of the present invention makes it possible, with sufficient safeguards (license protection) for the first information recorded on the information recording medium, to use the first information in a plurality of recording and reproduction devices.

An information recording medium according to the present invention is preferably an information recording medium for use in a recording and reproduction device as described above, the information recording medium having at least a reproduce-only region and a recordable region, the reproduce-only region has the first information recorded in advance therein, the reproduce-only region being provided with a phase change recording film.

According to the foregoing configuration, the reproduce-only region having the first information recorded therein is provided with a phase change recording film. The irradiation control means, provided in the recording and reproduction device in which the information recording medium is used, which serves as enable/disable control means irradiates the phase change recording film with light at a particular light intensity, and can thereby change the recording film into a recording film that makes it impossible to read information from the reproduce-only region. That is, by providing the reproduce-only region with a phase change recording film and irradiating the recording film with light at such a particular light intensity, such a situation can be created that the first information cannot be read out from the reproduce-only region.

Therefore, use of the information recording medium of the present invention makes it possible, with sufficient safeguards (license protection) for the first information recorded on the information recording medium, to use the first information in a plurality of recording and reproduction devices.

An information recording medium according to the present invention is preferably an information recording medium for use in a recording and reproduction device as described above, the information recording medium having at least a recordable region, the recordable region having the first information recorded in advance therein.

According to the foregoing configuration, the recordable region has the first information recorded therein; therefore, when it is necessary to render the first information unusable, for example, the first information can be rendered unusable by rewriting or adding information, in comparison with a case where the reproduce-only region has the first information recorded therein.

### [Putting the Recording and Reproduction Devices according to the Embodiments Differently]

Furthermore, the recording and reproduction device 1 or 1a according to Embodiment 1, 2, or 5 can be expressed as follows:

The recording and reproduction device 1 or 1a of Embodiment 1 may be configured to include: a key information readout section 113 which reads out first key information recorded on an information recording medium (optical disk 10, 10a); and a key information management section 112 which stores, in a memory section 15, the first key information read out by the key information readout section 113, when the information recording medium is ejected from the recording and reproduction device 1 or 1a while first information is being executed by a device control section 13, the key information management section 112 recording, in the memory section 15, the first key information recorded on the information recording medium.

According to the foregoing configuration, the key information management section 112 stores, in the memory section 15, the first key information read out by the key information readout section 115 while the first information is being executed by the device control section 13.

This allows the recording and reproduction device 1 or 1 a, when the information recording medium has been inserted, to determine, by use of the first key information stored in the memory section 15, whether or not the information recording medium has recorded thereon the first information being executed by the device control section 13.

Further, since the key information readout section 113 stores only the first key information in the memory section, the recording and reproduction device 1 or 1a can simplify the process as compared with the case where second key information is also read out.

Further, the recording and reproduction device 1 or 1a of Embodiment 1 may be configured to further include a key information recording and erasing section 114 which records, on the information recording medium, the first key information stored in the memory section 15, wherein: the key information management section 112 serves to extract second key information contained in the first key information stored in the memory section 115; the authentication section 111 serves to, upon insertion of the information recording medium, determine whether or not the second key information extracted by the key information management section 112 and the second key information recorded on the information recording medium inserted match each other; and if the authentication section 111 determines that the two pieces of second key information match each other, the key information recording and erasing section 114 records, on the information recording medium, the first key information stored in the memory section 15.

According to the foregoing configuration, upon insertion of the information recording medium, the authentication section 111 determines whether or not the second key information extracted by the key information management section 112 and the second key information recorded on the information recording medium inserted match each other, and if the authentication section 111 determines that the two pieces of second key information match each other, the key information recording and erasing section 114 records, on the information recording medium, the first key information stored in the memory section 15.

This allows the recording and reproduction device 1 or 1a to determine whether the information recording medium with which the first information being executed by the execution control means was authenticated for use and the inserted information recording medium are identical or not and, as such, to surely write the first key information stored in the memory section 15 back onto the original information recording medium (the information recording medium on which the first information had been recorded).

Further, the recording and reproduction device 1 or 1a of Embodiment 1 may be configured such that: the key information management section 112 serves to erase the first key information stored in the memory section 15; and before or when the first information being executed by the device control section 13 is terminated, the key information management section 112 erases the first key information stored in the memory section 15.

According to the foregoing configuration, before or when the execution of the first information by the execution control means is terminated, the recording and reproduction device 1 or 1a can, on the one hand, render the previously inserted information recording medium usable in another recording and reproduction device and, on the other hand, render the first information unusable in the recording and reproduction device 1 or 1a (i.e., the recording and reproduction device from which the information recording medium has been ejected).

This allows the recording and reproduction device 1 or 1a to ensure sufficient safeguards for the first information.

Further, the recording and reproduction device 1 or 1a of Embodiment 1 may be configured further including: a key information readout section 113 which reads out key information recorded on the information recording medium and confirms whether or not there exists first key information exists in the key information; and a key information management section 112 which confirms whether or not the memory section 15 has the first key information stored therein, when the information recording medium has been inserted, and if the key information readout section 113 confirms the existence of the first key information and the key information management section 112 confirms that the memory section 15 does not have the first key information stored therein, the authentication section 111 determining that the authentication has been completed successfully.

According to the foregoing configuration, since the recording and reproduction device 1 or 1a carries out authentication if the authentication section 111 has confirmed as described above, the recording and reproduction device 1 or 1a can use the first information after confirming, before insertion of the information recording medium, whether or not the use of the first information recorded in the information recording medium was normally terminated.

Further, the recording and reproduction device 1 or 1a of Embodiment 1 may be configured to further include: a key confirmation readout section 113 which reads out key information recorded on the information recording medium and confirms whether or not the first key information exists in the key information; and a key information management section 112 which confirms whether or not the memory section 15 has the first key information stored therein, when the information recording medium has been inserted, and if the key confirmation readout section 113 confirms that the first key information does not exist and the key information management section 112 confirms that the memory section 15 has the first key information stored therein, the key information management section 112 extracting second key information contained in the first key information stored in the memory section 15, the authentication section 111 determining whether or not the second key information extracted by the key information management section 112 and the second key information recorded on the information recording medium thus inserted match each other; and if the authentication section 111 determines that the two pieces of second key information match each other, the authentication section 111 determining that the authentication has been completed successfully.

According to the foregoing configuration, if the authentication section 111 has confirmed as described above and determines that the second key information extracted by the key information management section 112 and the second key information recorded on the information recording medium thus inserted match each other, the authentication section 111 determines that the first information has been successfully authenticated.

This allows the recording and reproduction device 1 or 1a to correctly recognize and authenticate the inserted information recording medium even if use of the first information is terminated, for example, after the occurrence of such a peculiar situation where the power supply has been shut off with second key information existing in the recording and reproduction device (i.e., even if the first information is abnormally terminated). That is, the recording and reproduction device 1 or 1a can put the first information back into the state of normal use preceding the abnormal termination.

Further, the recording and reproduction device 1 or 1a of Embodiment 1 or 2 may be configured such that: the information recording medium has set up in advance thereon a model of recording and reproduction device in which the information recording medium is used and has recorded thereon model information serving as third key information for discriminating the model of recording and reproduction device from another model of recording and reproduction device; and the memory section 15 has stored therein device model information indicating the model of recording and reproduction device and serving as model information for discriminating the model of recording and reproduction device from another model of recording and reproduction device, the recording and reproduction device 1 or 1a further including a device type determining section 116 which determines whether or not the third key information recorded on the information recording medium and the device model information stored in the memory section 15 match each other, if the device type determining section 116 determines that the third key information and the device model information match each other, the authentication section 111 determining that the authentication has been completed successfully.

Similarly, the recording and reproduction device 1 or 1a of Embodiment 5 may be configured such that: the information recording medium has set up in advance thereon a model of recording and reproduction device in which the information recording medium is used and has recorded thereon model information serving as third key information for discriminating the model of recording and reproduction device from another model of recording and reproduction device; and the memory section 15 has stored therein device model information indicating the model of recording and reproduction device and serving as model information for discriminating the model of recording and reproduction device from another model of recording and reproduction device, the recording and reproduction device 1 or 1a further including an authentication section 111 which, by use of first key information generated by a key information generating section 1121, carries out authentication for use of the first information; and a device type determining section 116 which determines whether or not the third key information recorded on the information recording medium and the device model information stored in the memory section 15 match each other, if the device type determining section 116 determines that the third key information and the model information match each other, the authentication section 111 determining that the authentication has been completed successfully.

According to the foregoing configuration, the information recording medium has set up in advance thereon a model of recording and reproduction device in which the information recording medium is used; therefore, the first information recorded on the information recording medium can be used in a particular recording and reproduction device (e.g., the recording and reproduction device 1 or 1a), so that use of the first information can be restricted in advance.

Further, if the device type determining section 116 determines that the device model information and the third key information match each other, the authentication section 111 determines that the first information has been successfully authenticated. In this case, if the two pieces of information match each other, the first information can be used in the recording and reproduction device 1 or 1a, but if they do not match each other, the first information cannot be used in the recording and reproduction device 1 or 1a. That is, since the first information cannot be used in a model other than the model of recording and reproduction device set up on the information recording medium, use of the first information can be restricted.

Therefore, the recording and reproduction device 1 or 1a can use the first information while ensuring sufficient safeguards for (restriction of use of) the first information.

Further, the recording and reproduction device 1 or 1a of Embodiment 1 or 2 may be configured such that the memory section 15 has stored therein device unique information serving as unique information for discriminating the recording and reproduction device 1 or 1a from another recording and reproduction device, the recording and reproduction device 1 or 1a further including: a key information recording and erasing section 114 which records the device unique information as fourth key information on the information recording medium when the first information recorded on the information recording medium has been used; and a device limiting section 117 which determines whether or not the fourth key information recorded on the information recording medium by the key information recording and erasing section 114 and the device unique information stored in the memory section 15 match each other, if the device limiting section 117 determines that the fourth key information and the device unique information match each other, the authentication section 111 determines that the authentication has been completed successfully.

Similarly, the recording and reproduction device 1 or 1a of Embodiment 5 may be configured to include: an authentication section 111 which carries out authentication for use of the first information by use of first key information generated by a key information generating section 1121; a key information recording and erasing section 114 which records device unique information as fourth key information on an information recording medium when the first information recorded on the information recording medium has been used; and a device limiting section 117 which determines whether or not the fourth key information recorded on the information recording medium by the key information recording and erasing section 114 and the device unique information stored in the memory section 15 match each other, if the device limiting section 117 determines that the fourth key information and the device unique information match each other, the authentication section 111 determines that the authentication has been completed successfully.

According to the foregoing configuration, if the device limiting section 117 determines that the device unique information and the fourth key information match each other, the authentication section 111 determines that the authentication has been completed successfully. In this case, if the two pieces of information match each other, the first information can be used in the recording and reproduction device 1 or 1a, but if they do not match each other, the first information cannot be used in the recording and reproduction device 1 or 1a. That is, since the first information cannot be used in a model other than the model of recording and reproduction device set up on the information recording medium, use of the first information can be restricted.

Therefore, the recording and reproduction device 1 or 1a can use the first information while ensuring sufficient safeguards for (restriction of use of) the first information.

Further, the recording and reproduction device 1 or 1a of Embodiment 5 may be configured such that the key information management section 112 serves to confirm whether or not the memory section 15 has first key information stored therein, the recording and reproduction device 1 or 1a further including a key information readout section 113 which reads out key information recorded on an image recording medium and confirms whether or not there exists first key information in the key information, when the information recording medium has been inserted, and if the key confirmation readout section 113 confirms that there exists no first key information on the information recording medium and the key information management section 112 confirms that the memory section 15 has no first key information stored therein, the key information recording and erasing section 114 recording, on the information recording medium, first key information generated by a key information generating section 1121, the key information management section 112 storing, in the memory section 15, the first key information generated by the key information generating section 1121.

According to the foregoing configuration, if the recording and reproduction device 1 or 1a determines, when an information recording medium has been inserted, that neither the information recording medium nor the memory section 15 has first key information recorded thereon or stored therein, the recording and reproduction device 1 or 1a records or stores, on the information recording medium and in the memory section 15, first key information generated by the key information generating section 1121.

This allows the recording and reproduction device 1 or 1a to determine that since there exists no first key information on the information recording medium, the information recording medium is unused, and to record and store first key information on the information recording medium. Further, the recording and storage allow the recording and reproduction device 1 or 1a, when the information recording medium is inserted next time, to identify the information recording medium as one that was once inserted.

Further, the recording and reproduction device 1 or 1a of Embodiment 5 may be configured such that the authentication section 111 serves to confirm whether or not the authentication has been completed successfully, the recording and reproduction device 1 or 1a further including a device control section 13 which controls execution of the first information if the authentication section 111 has confirmed that the authentication has been completed successfully, the device control section 13 maintaining the execution of the first information if the authentication section 111 determines, when the information recording medium has been inserted into the recording and reproduction device 1 or 1a during the execution of the first information, that the two pieces of first key information match each other.

According to the foregoing configuration, if the authentication section 111 determines that the two pieces of first key information match each other, the device control section 13 maintains the execution of the first information. This allows the recording and reproduction device 1 or 1a to use first information recorded on an information recording medium, after confirming that the information recording medium is one that was once inserted into the recording and reproduction device 1 or 1a, i.e., with sufficient safeguards for the first information.

Further, the recording and reproduction device 1 or 1a of Embodiment 5 may be configured such that: before or when the first information being executed by the device control section 13 is terminated, the authentication section 111 records, on the information recording medium, the first key information stored in the memory section 15, if the key information readout section 113 has confirmed that there exists no first key information on the information recording medium; and if the key information management section 112 has confirmed that the memory section 15 has no first key information stored therein, the key information management section 112 stores, in the memory section 15, the first key information recorded on the information recording medium.

According to the foregoing configuration, if there exists no first key information on the information recording medium the recording and reproduction device 1 or 1a before or when the first information being executed by the device control section 13 is terminated, the recording and reproduction device 1 or 1a records, on the information recording medium, the first key information stored in the memory section 15. Similarly, if there exists no first key information in the memory section 15, the first key information recorded on the information recording medium is stored in the memory section 15.

This allows the recording and reproduction device 1 or 1a, at the time of termination of the first information, to cause the first key information to exist both on the information recording medium and in the memory section, thereby surely authenticating the first information again by determining whether or not these two pieces of first key information match each other.

Further, the recording and reproduction device 1 or 1a of Embodiment 1, 2, or 5 may be configured such that the first information is an operating system.

The foregoing configuration makes it possible, with sufficient safeguards for an operating system, to use the operating system in a plurality of recording and reproduction devices.

Further, the recording and reproduction device 1 or 1a of Embodiment 1, 2, or 5 may be configured to further include a recording and reproduction control section 12 which records, on the information recording medium, user configuration information set up by a user with respect to the first information.

According to the foregoing configuration, the recording and reproduction device 1 or 1a allows the user configuration for the first information to be shared with another recording and reproduction device when the first information is used in the another recording and reproduction device.

Further, the recording and reproduction device 1 or 1a of Embodiment 1, 2, or 5 may be configured such that the first information recorded on the information recording medium is in coded form, the recording and reproduction device 1 or 1a further including a code decoding section 14 which, by use of the first key information, decodes the first information recorded in coded form on the information recording medium.

According to the foregoing configuration, even when the first information is in coded form, the recording and reproduction device 1 or 1a can decode the first information for use by use of the first key information.

Furthermore, a method for controlling a recording and reproduction device 1 or 1a of Embodiments 1 to 5 is a method for controlling a recording and reproduction device capable of recording and reproducing information with respect to an information recording medium having recorded thereon first information that needs to be authenticated for use, the method including the steps of: (a) reading out the first information recorded on the information recording medium; (b) storing, in a memory section 15, the first information read out in the step (a); and (c), when the information recording medium is ejected, enabling use of either the first information stored in the memory section in the step (b) or the first information recorded on the information recording medium and disabling use of the other.

Furthermore, a method for controlling a recording and reproduction device 1 or 1a of Embodiment 1 is a method for controlling a recording and reproduction device capable of recording and reproducing information with respect to an information recording medium having recorded thereon (i) first information that needs to be authenticated for use and (ii) first key information for permitting use of the first information, the method including the steps of: (a), by use of the first key information recorded on the information recording medium, carrying out authentication for use of the first information recorded on the information recording medium, and confirming whether or not the authentication has been completed successfully; and (b) erasing the first key information from the information recording medium in accordance with a result of confirmation of the authentication in the step (a).

Furthermore, a method for controlling a recording and reproduction device 1 or 1a of Embodiment 2 is a method for controlling a recording and reproduction device capable of recording and reproducing information with respect to an information recording medium having recorded thereon first information that needs to be authenticated for use, the method including the steps of: (a), by use of first key information for permitting use of the first information, carrying out authentication for use of the first information recorded on the information recording medium, and confirming whether or not the authentication has been completed successfully; and (b), in accordance with a result of confirmation of the authentication in the step (a), recording, on the information recording medium, prohibition key information for prohibiting use of the first information.

Furthermore, a method for controlling a recording and reproduction device 1 or 1a of Embodiment 5 is a method for controlling a recording and reproduction device capable of recording and reproducing information with respect to an information recording medium having recorded thereon first information that needs to be authenticated for use, the recording and reproduction device including a memory section having stored therein device unique information serving as unique information for discriminating the recording and reproduction device from another recording and reproduction device, the method including the steps of: (a), by use of at least the device unique information stored in the memory section, generating first key information for permitting use of the first information recorded on the information recording medium; and (b) recording, on the information recording medium, the first key information generated in step (a).

As with the recording and reproduction device 1 or 1a, the four control methods make it possible, with sufficient safeguards (license protection) for first information recorded on an information recording medium, to use the first information in a plurality of recording and reproduction devices.

A control program for a recording and reproduction device 1 or 1a of Embodiments 1 to 5 may cause a computer to function as each section of the device. Further, in Embodiments 1 to 5, the control program may be recorded on a computer-readable recording medium.

A recording and reproduction device of Embodiments 1 to 5 may be achieved by a computer. In this case, a recording and reproduction device control program that causes a computer to operate as each of the means to achieve such a recording and reproduction device and a computer-readable recording medium having such a program recorded thereon are also encompassed in the scope of the present invention.

The control program achieves such a recording and reproduction device on computer by achieving the means by computer. Further, the recording medium allows the control program to be read out therefrom and achieved on a general-purpose computer.

Further, an information recording medium (optical disk 10, 10a, or 10b) of Embodiment 1, 2, or 5 may be configured such that the first information is an operation system and is activated by a recording and reproduction device 1 or 1a.

According to the foregoing configuration, the information recording medium allows a plurality of recording and reproduction devices to use the operating system with sufficient safeguards for the operating system.

Further, an information recording medium of Embodiment 1 may be configured such that the first information is in coded form. According to this configuration, since the first information is in coded form, information leakage can be prevented, for example, even if the first information is illegally copied.

Further, the information recording medium of Embodiment 1 may be configured such that: the first key information is key information for decoding the first information recorded on the first information recording layer 102; and the first information is decoded by the recording and reproduction device 1 or 1a using the first key information.

According to the foregoing configuration, the information recording medium allows the recording and reproduction device 1 to decode the coded first information for use by use of the first key information recorded on the information recording medium.

Further, the information recording medium of Embodiment 1, 2, or 5 may be configured such that: the second information recording layer 104 has set up in advance thereon a model of recording and reproduction device in which the information recording medium is used and has recorded therein model information serving as third key information for discriminating the model of recording and reproduction device from another model of recording and reproduction device; and the recording and reproduction device 1 or 1a identifies the model by use of the third key information.

According to the foregoing configuration, by having the third key information recorded on the second information recording layer 104, the information recording medium allows the recording and reproduction device 1 or 1a to identify the model by use of the third key information. This makes it possible to restrict use of the first information recorded on the optical disk 10 to a particular model of recording and reproduction device.

Further, the information recording medium of Embodiment 1, 2, or 5 may be configured such that: the recording and reproduction device 1 or 1a has stored therein device unique information serving as unique information for discriminating the recording and reproduction device 1 or 1a from another recording and reproduction device; and the device unique information is recorded as fourth key information on the second information recording layer 104 when the first information has been used by the recording and reproduction device 1 or 1a.

According to the foregoing configuration, the device unique information of the recording and reproduction device 1 or 1a having used the first information is recorded as the fourth key information on the second information recording layer 104 of the information recording medium. Use of the fourth key information makes it possible to restrict use of the first information recorded on the information recording medium to a particular recording and reproduction device.

The present invention is not limited to the description of the embodiments above, but may be altered by a skilled person within the scope of the claims. An embodiment based on a proper combination of technical means within the scope of the claims is encompassed in the technical scope of the present invention.

For example, although the optical disk 10, 10a, or 10b of each of Embodiment 1 to 5 has been described mainly as a BD, this does not imply any limitation, and it needs only be a structure, such as a DVD or an HD-DVD, which includes a reproduce-only region and a recordable region.

### Industrial Applicability

A recording and reproduction device and an information recording medium according to the present invention can be applied to a system in which, with sufficient safeguards for software, content, or the like recorded on the information recording medium, the software, the content, or the like can be used in a plurality of recording and reproduction devices. It should be noted applicable examples of such information recording media include semiconductor memories, HDDs (hard disk drives), removable disks, etc. as well as optical disks.

### Reference Signs List

1, 1a Recording and Reproduction Device 10, 10a, 10b Optical disk (information recording medium)
12 Recording and reproduction control section (information storage means, information recording means)
13 Device control section (execution control means)
14 Code decoding section (code decoding means)
15 Storage section
21 Enable/disable control section (enable/disable control means)
102, 102b First information recording layer (reproduce-only region, reproduce-only layer)
104 Second information recording layer (recordable region)
106 Lead-in region (nonuser data region)
107 User data region
108 Lead-out region (nonuser data region)
109 Key information region (nonuser data region)
111 Authentication section (authentication and confirmation means, key information determining means)
112 Key information management section (key information management means, device key confirmation means)
113 Key information readout section (key information readout means, medium key confirmation means)
114 Key information recording and erasing section (key information erasing means, key information recording means, fourth key information recording means)
115 Key information storage section (memory section)
116 Device type determining section (device type determining means)
117 Device limiting section (device limiting means)
121 Information readout section (information readout means)
122 Information storage control section (information storage means)
212 State control section (state control means)
211 Information erasing section (information erasing means)
1121 Key information generating section (key information generating means)
2121 Irradiation control section (irradiation control means)

## Claims

1. A recording and reproduction device (1, 1a) capable of recording and reproducing information with respect to an information recording medium (10, 10a) having recorded thereon first information that needs to be authenticated for use, first key information for permitting use of the first information, and second key information serving as unique information, the recording and reproduction device comprising:
information readout means (121) which reads out the first information recorded on the information recording medium (10, 10a);
information storage means (122) which stores, in a memory section (115) of the recording and reproduction device (1, 1a), the first information read out by the information readout means (121);
key information readout means (113) which reads out the first key information and second key information recorded on the information recording medium (10, 10a);
authentication and confirmation means (111) which, by use of the first key information recorded on the information recording medium (10, 10a), carries out authentication for use of the first information stored in the memory section (115), which confirms whether or not the authentication has been completed successfully, and which determines, upon insertion of the information recording medium (10, 10a) into the recording and reproduction device (1, 1a), whether or not the second key information stored in the memory section (115) and the second key information recorded on the information recording medium (10, 10a) thus inserted match each other;
execution control means (13) which controls execution of the first information if the authentication and confirmation means confirms that the authentication has been completed successfully;
key information management means (112) which stores, in the memory section (115) of the recording and reproduction device (1, 1a), the first key information and second key information read out by the key information readout means before the information recording medium (10, 10a) is ejected from the recording and reproduction device (1, 1a) during the execution of the first information by the execution control means (13);
key information erasing means (114) which erases the first key information from the information recording medium (10, 10a) before the information recording medium (10, 10a) is ejected from the recording and reproduction device (1, 1a) during the execution of the first information by the execution control means (13); and
key information recording means (114) which records, on the information recording medium (10, 10a), the first key information stored in the memory section (115) if (i) the information recording medium (10, 10a) having been ejected from the recording and reproduction device (1, 1a) is reinserted and (ii) the authentication and confirmation means (111) determines that the second key information stored in the memory section (115) and the second key information recorded on the information recording medium (10, 10a) match each other.

2. The recording and reproduction device (1, 1a) as set forth in claim 1, wherein the information recording medium (10, 10a) has a reproduce-only region (102) having the first information recorded therein and a recordable region (104) having the first key information recorded therein.

3. The recording and reproduction device (1, 1a) as set forth in claim 1 or 2, wherein:
the key information management means (112) serves to erase the first key information and second key information stored in the memory section (115); and
before or when the first information being executed by the execution control means (13) is terminated, the key information management means (112) erases the first key information and second key information stored in the memory section (115).

4. The recording and reproduction device (1, 1a) as set forth in claim 1, further comprising:
medium key confirmation means (113) which reads out key information recorded on the information recording medium (10, 10a) and confirms whether or not the first key information exists in the key information; and
device key confirmation means (112) which confirms whether or not the memory section (115) of the recording and reproduction device (1, 1a) has the first key information and second key information stored therein,
when the information recording medium (10, 10a) has been inserted, and if the medium key confirmation means (113) confirms that the first key information does not exist and the device key confirmation means (112) confirms that the memory section (115) has both the first key information and the second key information stored therein, the authentication and confirmation means (111) determining whether or not the second key information stored in the memory section (115) and the second key information recorded on the information recording medium (10, 10a) thus inserted match each other, and if the authentication and confirmation means (111) determines that the two pieces of second key information match each other, the authentication and confirmation means (111) determining that the authentication has been completed successfully.

5. The recording and reproduction device (1, 1a) as set forth in claim 1, wherein the information recording medium (10, 10a) has a recordable region (104) containing a user data region (107) in which a user is able to record various types of information, and
the key information recording means (114) records the first key information in an nonuser data region (109) of the recordable region (104) that is different from the user data region (107).

6. The recording and reproduction device (1, 1a) as set forth in claim 1, wherein
by use of the second key information stored in the memory section (115) by the key information management means (112), the authentication and confirmation means (111) identifies an information recording medium (10, 10a) inserted into the recording and reproduction device (1, 1a).

7. The recording and reproduction device (1, 1a) as set forth in claim 1, wherein the authentication and confirmation means (111) starts the authentication after the information storage means (122) stores the first information in the memory section (115).

8. Use of an information recording medium (10, 10a) in a recording and reproduction device (1, 1a) as set forth in claim 1, said information recording medium (10, 10a) having at least a reproduce-only region (102) and a recordable region (104),
the reproduce-only region (102) having stored therein first information that is usable in a recording and reproduction device (1, 1a) capable of recording and reproducing information with respect to the information recording medium (10, 10a),
the recordable region (104) having recorded therein first key information for permitting the recording and reproduction device (1, 1a) to use the first information,
the first key information being erasable by the recording and reproduction device (1, 1a).

9. The use of an information recording medium (10, 10a) as set forth in claim 8, wherein the recordable region (104) is provided with a user data region (107) in which a user is able to record various types of information, said information recording medium having the first key information recorded in a nonuser data region (109) that is different from the user data region (107).

10. The use of an information recording medium (10, 10a) as set forth in claim 8, said information recording medium (10, 10a) having the first key information recorded in advance at a stage of manufacture of the information recording medium (10, 10a).

11. The use of an information recording medium (10, 10a) as set forth in claim 8, wherein the recordable region (104) is configured to store user configuration information that has been set up by a user with respect to the first information.

12. The use of an information recording medium (10, 10a) as set forth in claim 8, said information recording medium (10, 10a) having a multilayer structure including a plurality of layers (101, 102, 103, 104) arranged on a substrate (105), the multilayer structure having at least one reproduce-only layer (102), wherein
the reproduce-only layer (102) has the first information recorded thereon.

13. A method for recording and reproducing information with respect to an information recording medium (10, 10a) having recorded thereon first information that needs to be authenticated for use, first key information for permitting use of the first information, and second key information serving as unique information, the method comprising the steps of:
(A) reading out the first information recorded on the information recording medium (10, 10a);
(B) storing, in a memory section (115) of a recording and reproduction device (1, 1a), the first information read out in the step (A);
(C) reading out the first key information and second key information recorded on the information recording medium (10, 10a);
(D) (a) carrying out, by use of the first key information recorded on the information recording medium (10, 10a), authentication for use of the first information stored in the memory section (115), (b) confirming whether or not the authentication has been completed successfully, and (c) determining, upon insertion of the information recording medium (10, 10a) into the recording and reproduction device (1, 1a), whether or not the second key information stored in the memory section (115) and the second key information recorded on the information recording medium (10, 10a) thus inserted match each other;
(E) controlling execution of the first information if it is confirmed in the step (D), after the first information is stored in the step (B), that the authentication has been completed successfully;
(F) storing, in the memory section (115) of the recording and reproduction device (1, 1a), the first key information and second key information read out in the step (A) before the information recording medium (10, 10a) is ejected from the recording and reproduction device (1, 1a) during the execution of the first information in the step (E);
(G) erasing the first key information from the information recording medium (10, 10a) before the information recording medium is ejected from the recording and reproduction device during the execution of the first information in the step (E); and
(H) recording, on the information recording medium (10, 10a), the first key information stored in the memory section if (i) the information recording medium having been ejected from the recording and reproduction device is reinserted and (ii) it is determined in the step (D) that the second key information stored in the memory section (115) and the second key information recorded on the information recording medium (10, 10a) match each other.

14. The method as set forth in claim 13, further comprising the step of:
(I) erasing the first key information and the second key information stored in the memory section (115) before or when the first information being executed in the step (E) is terminated.

15. The method as set forth in claim 13, further comprising the steps of:
(J) reading out key information recorded on the information recording medium (10, 10a) and confirming whether or not the first key information exists in the key information; and
(K) confirming whether or not the memory section (115) of the recording and reproduction device (1, 1a) has the first key information and the second key information stored therein, wherein:
when the information recording medium (10, 10a) has been inserted, and if it is confirmed in the step (J) that the first key information does not exist and it is confirmed in the step (K) that the memory section (115) has both the first key information and the second key information stored therein, it is determined in the step (D) whether or not the second key information stored in the memory section (115) and the second key information recorded on the information recording medium (10, 10a) thus inserted match each other, and if it is determined in the step (D) that the two pieces of second key information match each other, it is determined in the step (D) that the authentication has been completed successfully.

16. The method as set forth in claim 13, wherein the information recording medium (10, 10a) has a recordable region (104) containing a user data region (107) in which a user is able to record various types of information and
in the step (H), the first key information is recorded in an nonuser data region (109) of the recordable region that is different from the user data region (107).

## Patentansprüche

1. Aufnahme- und Wiedergabegerät (1, 1a), das dazu ausgelegt ist, Information aufzuzeichnen und wiederzugeben und zwar in Bezug auf ein Informationsaufnahmemedium (10, 10a), welches darauf erste Information, die zur Verwendung authentifiziert werden muss, erste Schlüsselinformation, die die Verwendung der ersten Information erlaubt, und zweite Schlüsselinformation, die als eindeutige Information dient, aufgezeichnet hat, wobei das Aufnahme- und Wiedergabegerät umfasst:
Informationsauslesemittel (121), welches die erste Information ausliest, die auf dem Informationsaufnahmemedium (10, 10a) aufgezeichnet ist;
Informationsspeichermittel (122), welches in einem Speicherabschnitt (115) des Aufnahme- und Wiedergabegeräts (1, 1a) die erste Information speichert, die von dem Informationsauslesemittel (121) ausgelesen wird;
Schlüsselinformationsauslesemittel (113), welches die erste Schlüsselinformation und die zweite Schlüsselinformation ausliest, die auf dem Informationsaufnahmemedium (10, 10a) aufgezeichnet ist;
Authentifizierungs- und Bestätigungsmittel (111), welche unter Verwendung der ersten Schlüsselinformation, die auf dem Informationsaufnahmemedium (10, 10a) aufgezeichnet ist, eine Authentifizierung zur Verwendung der ersten Information, die in dem Speicherabschnitt (115) gespeichert ist, ausführt, welche bestätigt, ob die Authentifizierung erfolgreich abgeschlossen ist oder nicht, und welche bei Einlegen des Informationsaufnahmemediums (10, 10a) in das Aufnahme- und Wiedergabegerät (1, 1a) bestimmt, ob die zweite Schlüsselinformation, die in dem Speicherabschnitt (115) gespeichert ist, und die zweite Schlüsselinformation, die auf dem folglich eingeführten Informationsaufnahmemedium (10, 10a) aufgezeichnet ist, miteinander übereinstimmen;
Ausführungssteuermittel (13), welches die Ausführung der ersten Information steuert, falls das Authentifizierungs- und Bestätigungsmittel bestätigt, dass die Authentifizierung erfolgreich abgeschlossen ist;
Schlüsselinformationsverwaltungsmittel (112), welches in dem Speicherabschnitt (115) des Aufnahme- und Wiedergabegeräts (1, 1a) die erste Schlüsselinformation und die zweite Schlüsselinformation speichert, die von dem Schlüsselinformationsauslesemittel ausgelesen werden, bevor das Informationsaufnahmemedium (10, 10a) von dem Aufnahme- und Wiedergabegerät (1, 1a) ausgeworfen wird, während des Ausführens der ersten Information durch das Ausführungssteuermittel (13);
Schlüsselinformationslöschmittel (114), welches die erste Schlüsselinformation von dem Informationsaufnahmemedium (10, 10a) löscht, bevor das Informationsaufnahmemedium (10, 10a) von dem Aufnahme- und Wiedergabegerät (1, 1a) ausgeworfen wird, während des Ausführens der ersten Information durch das Ausführungssteuermittel (13); und
Schlüsselinformationsaufnahmemittel (114), welches auf dem Informationsaufnahmemedium (10, 10a) die erste Schlüsselinformation, die in dem Speicherabschnitt (115) gespeichert ist, aufzeichnet, falls (i) das Informationsaufnahmemedium (10, 10a), das von dem Aufnahme- und Wiedergabegerät (1, 1a) ausgeworfen wurde, wieder eingelegt wird und (ii) das Authentifizierungs- und Bestätigungsmittel (111) bestimmt, dass die zweite Schlüsselinformation, die in dem Speicherabschnitt (115) gespeichert ist und die zweite Schlüsselinformation, die auf dem Informationsaufnahmemedium (10, 10a) aufgezeichnet ist, miteinander übereinstimmen.

2. Aufnahme- und Wiedergabegerät (1, 1a) nach Anspruch 1, wobei das Informationsaufnahmemedium (10, 10a) einen Nur-Wiedergabebereich (102), der darin die erste Information aufgezeichnet hat, und einen Bereich (104), in dem aufgezeichnet werden kann und in dem die erste Schlüsselinformation aufgezeichnet ist, aufweist.

3. Aufnahme- und Wiedergabegerät (1, 1a) nach Anspruch 1 oder 2, wobei:
das Schlüsselinformationsverwaltungsmittel (112) dazu dient, die erste Schlüsselinformation und die zweite Schlüsselinformation, die in dem Speicherabschnitt (115) gespeichert sind, zu löschen; und
bevor oder wenn die erste Information, die von dem Ausführungssteuermittel (13) ausgeführt wird, beendet ist, das Schlüsselinformationsverwaltungsmittel (112) die erste Schlüsselinformation und die zweite Schlüsselinformation, die in dem Speicherabschnitt (115) gespeichert sind, löscht.

4. Aufnahme- und Wiedergabegerät (1, 1a) nach Anspruch 1, des Weiteren umfassend:
Mediumschlüsselbestätigungsmittel (113), das Schlüsselinformation ausliest, die auf dem Informationsaufnahmemedium (10, 10a) aufgezeichnet ist, und bestätigt, ob die erste Schlüsselinformation in der Schlüsselinformation enthalten ist oder nicht; und
Geräteschlüsselbestätigungsmittel (112), welches bestätigt, ob der Speicherabschnitt (115) des Aufnahme- und Wiedergabegeräts (1, 1a) die erste Schlüsselinformation und die zweite Schlüsselinformation darin gespeichert hat oder nicht,
wenn das Informationsaufnahmemedium (10, 10a) eingelegt wurde und falls das Mediumschlüsselbestätigungsmittel (113) bestätigt, dass die erste Schlüsselinformation nicht enthalten ist und das Geräteschlüsselbestätigungsmittel (112) bestätigt, dass der Speicherabschnitt (115) sowohl die erste Schlüsselinformation als auch die zweite Schlüsselinformation darin gespeichert hat, die Authentifizierungs- und Bestätigungsmittel (111) bestimmen, ob die zweite Schlüsselinformation, die in dem Speicherabschnitt (115) gespeichert ist, und die zweite Schlüsselinformation, die auf dem folglich eingelegten Informationsaufnahmemedium (10, 10a) gespeichert ist, miteinander übereinstimmen und falls die Authentifizierungs- und Bestätigungsmittel (111) bestimmen, dass die zwei Teile der zweiten Schlüsselinformation miteinander übereinstimmen, die Authentifizierungs- und Bestätigungsmittel (111) bestimmen, dass die Authentifizierung erfolgreich abgeschlossen wurde.

5. Aufnahme- und Wiedergabegerät (1, 1a) nach Anspruch 1, wobei das Informationsaufnahmemedium (10, 10a) einen Bereich (104) aufweist, in dem aufgezeichnet werden kann und der einen Benutzerdatenbereich (107) enthält, in dem ein Benutzer verschiedene Arten von Information aufzeichnen kann, und
das Schlüsselinformationsaufnahmemittel (114) die erste Schlüsselinformation in einem Nicht-Benutzerdatenbereich (109) des Bereichs (104), in dem aufgezeichnet werden kann, aufzeichnet und der verschieden ist zu dem Benutzerdatenbereich (107).

6. Aufnahme- und Wiedergabegerät (1, 1a) nach Anspruch 1, wobei
unter Verwendung der zweiten Schlüsselinformation, die durch das Schlüsselinformationsverwaltungsmittel in dem Speicherabschnitt (115) gespeichert ist, das Authentifizierungs- und Bestätigungsmittel (111) ein Informationsaufnahmemedium (10, 10a) identifiziert, das in das Aufnahme- und Wiedergabegerät (1, 1a) eingelegt ist.

7. Aufnahme- und Wiedergabegerät (1, 1a) nach Anspruch 1, wobei das Authentifizierungs- und Bestätigungsmittel (111) die Authentifizierung startet, nachdem das Informationsspeichermittel (122) die erste Information in dem Speicherabschnitt (115) speichert;

8. Verwendung eines Informationsaufnahmemediums (10, 10a) in einem Aufnahme- und Wiedergabegerät (1, 1a) nach Anspruch 1, wobei das Informationsaufnahmemedium (10, 10a) zumindest einen Nur-Wiedergabebereich (102) und einen Bereich (104), in dem aufgezeichnet werden kann, aufweist,
der Nur-Wiedergabebereich (102) erste Information darin gespeichert hat, die in einem Aufnahme- und Wiedergabegerät (1, 1a) verwendet werden kann, das ausgelegt ist, Information in Bezug auf das Informationsaufnahmemedium (10, 10a) aufzuzeichnen und wiederzugeben,
der Bereich (104), in dem aufgezeichnet werden kann, erste Schlüsselinformation darin aufgezeichnet hat, die dem Aufnahme- und Wiedergabegerät (1, 1a) erlaubt, die erste Information zu verwenden,
die erste Schlüsselinformation durch das Aufnahme- und Wiedergabegerät (1, 1a) löschbar ist.

9. Verwendung eines Informationsaufnahmemediums (10, 10a) nach Anspruch 8, wobei der Bereich (104), in dem aufgezeichnet werden kann, mit einem Benutzerdatenbereich (107) ausgestattet ist, in dem ein Benutzer verschiedene Arten von Information aufzeichnen kann, wobei das Informationsaufnahmemedium die erste Schlüsselinformation in einem Nicht-Benutzerdatenbereich (109) aufgezeichnet hat, der verschieden ist zu dem Benutzerdatenbereich (107).

10. Verwendung eines Informationsaufnahmemediums (10, 10a)nach Anspruch 8, wobei das Informationsaufnahmemediums (10, 10a) die erste Schlüsselinformation im Voraus aufzeichnet und zwar zur Zeit der Herstellung des Informationsaufnahmemediums (10, 10a).

11. Verwendung eines Informationsaufnahmemediums (10, 10a) nach Anspruch 8, wobei der Bereich (104), in dem aufgezeichnet werden kann, eingerichtet ist, Benutzerkonfigurationsinformation zu speichern, die von einem Benutzer in Bezug auf die erste Information angelegt wurde.

12. Verwendung eines Informationsaufnahmemediums (10, 10a) nach Anspruch 8, wobei das Informationsaufnahmemedium (10, 10a) eine mehrschichtige Struktur mit einer Mehrzahl von Schichten (101, 102, 103, 104) aufweist, die auf einem Substrat (105) angeordnet sind, wobei die mehrschichtige Struktur zumindest eine Nur-Wiedergabeschicht (102) aufweist, wobei
die Nur-Wiedergabeschicht (102) die erste Information darauf aufgezeichnet hat.

13. Verfahren zum Aufzeichnen und Wiedergeben von Information in Bezug auf ein Informationsaufnahmemedium (10, 10a), welches darauf erste Information, die zur Verwendung authentifiziert werden muss, erste Schlüsselinformation, die die Verwendung der ersten Information erlaubt, und zweite Schlüsselinformation, die als eindeutige Information dient, aufgezeichnet hat, wobei das Verfahren die Schritte umfasst:
(A) Auslesen der ersten Information, die auf dem Informationsaufnahmemedium (10, 10a) aufgezeichnet ist;
(B) Speichern, in einem Speicherabschnitt (115) eines Aufnahme- und Wiedergabegeräts (1, 1a), der ersten Information, die in Schritt (A) ausgelesen wird;
(C) Auslesen der ersten Schlüsselinformation und der zweiten Schlüsselinformation, die auf dem Informationsaufnahmemedium (10, 10a) aufgezeichnet ist;
(D) (a) Ausführen, unter Verwendung der ersten Schlüsselinformation, die auf dem Informationsaufnahmemedium (10, 10a) aufgezeichnet ist, einer Authentifizierung zur Verwendung der ersten Information, die in dem Speicherabschnitt (115) gespeichert ist, (b) Bestätigen, ob die Authentifizierung erfolgreich abgeschlossen ist oder nicht, und (c) Bestimmen, bei Einlegen des Informationsaufnahmemediums (10, 10a) in das Aufnahme- und Wiedergabegerät (1, 1a), ob die zweite Schlüsselinformation, die in dem Speicherabschnitt (115) gespeichert ist, und die zweite Schlüsselinformation, die auf dem folglich eingeführten Informationsaufnahmemedium (10, 10a) aufgezeichnet ist, miteinander übereinstimmen;
(E) Steuern der Ausführung der ersten Information, falls die Bestätigung in Schritt (D) erfolgt, nachdem die erste Information in Schritt (B) gespeichert wird, dass die Authentifizierung erfolgreich abgeschlossen wurde;
(F) Speichern, in dem Speicherabschnitt (115) des Aufnahme- und Wiedergabegeräts (1, 1a), der ersten Schlüsselinformation und der zweiten Schlüsselinformation, die in Schritt (A) ausgelesen wird, bevor das Informationsaufnahmemedium (10, 10a) von dem Aufnahme- und Wiedergabegerät (1, 1a) ausgeworfen wird, während des Ausführens der ersten Information in Schritt (E);
(G) Löschen der ersten Schlüsselinformation von dem Informationsaufnahmemedium (10, 10a), bevor das Informationsaufnahmemedium von dem Aufnahme- und Wiedergabegerät (1, 1 a) ausgeworfen wird, während des Ausführens der ersten Information in Schritt (E); und
(H) Aufzeichnen, auf dem Informationsaufnahmemedium (10, 10a), der ersten Schlüsselinformation, die in dem Speicherabschnitt gespeichert ist, falls (i) das Informationsaufnahmemedium, das von dem Aufnahme- und Wiedergabegerät ausgeworfen wurde, wieder eingelegt wird und (ii) in Schritt (D) bestimmt wird, dass die zweite Schlüsselinformation, die in dem Speicherabschnitt (115) gespeichert ist, und die zweite Schlüsselinformation, die auf dem Informationsaufnahmemedium (10, 10a) aufgezeichnet ist, miteinander übereinstimmen.

14. Verfahren nach Anspruch 13, des Weiteren umfassend den Schritt:
(I) Löschen der ersten Schlüsselinformation und der zweiten Schlüsselinformation, die in dem Speicherabschnitt (115) gespeichert ist, bevor oder wenn die erste Information, die in Schritt (E) ausgeführt wird, beendet wird.

15. Verfahren nach Anspruch 13, des Weiteren die Schritte umfassend:
(J) Auslesen von Schlüsselinformation, die auf dem Informationsaufnahmemedium (10, 10a) aufgezeichnet ist, und Bestätigen, ob die erste Schlüsselinformation in der Schlüsselinformation enthalten ist oder nicht; und
(K) Bestätigen, ob der Speicherabschnitt (115) des Aufnahme- und Wiedergabegeräts (1, 1a) die erste Schlüsselinformation und die zweite Schlüsselinformation darin gespeichert hat oder nicht, wobei:
wenn das Informationsaufnahmemedium (10, 10a) eingelegt wurde und falls in Schritt (J) bestätigt wird, dass die erste Schlüsselinformation nicht enthalten ist und in Schritt (K) bestätigt wird, dass der Speicherabschnitt (115) sowohl die erste Schlüsselinformation als auch die zweite Schlüsselinformation darin gespeichert hat, in Schritt (D) bestimmt wird, ob die zweite Schlüsselinformation, die in dem Speicherabschnitt (115) gespeichert ist, und die zweite Schlüsselinformation, die auf dem folglich eingelegten Informationsaufnahmemedium (10, 10a) gespeichert ist, miteinander übereinstimmen und falls in Schritt (D) bestimmt wird, dass die zwei Teile der zweiten Schlüsselinformation miteinander übereinstimmen, in Schritt (D) bestimmt wird, dass die Authentifizierung erfolgreich abgeschlossen wurde.

16. Verfahren nach Anspruch 13, wobei das Informationsaufnahmemedium (10, 10a) einen Bereich (104) aufweist, in dem aufgezeichnet werden kann und der einen Benutzerdatenbereich (107) enthält, in dem ein Benutzer verschiedene Arten von Information aufzeichnen kann, und
in Schritt (H) die erste Schlüsselinformation in einem Nicht-Benutzerdatenbereich (109) des Bereichs (104), in dem aufgezeichnet werden kann, aufgezeichnet wird und der verschieden ist zu dem Benutzerdatenbereich (107).

## Revendications

1. Dispositif d'enregistrement et de reproduction (1, 1a) apte à enregistrer et à reproduire des informations par rapport à un support d'enregistrement d'informations (10, 10a) sur lequel sont enregistrées des premières informations qui ont besoin d'être authentifiées pour une utilisation, des premières informations clés pour permettre l'utilisation des premières informations, et des secondes informations clés qui servent d'informations uniques, le dispositif d'enregistrement et de reproduction comprenant :
des moyens de lecture d'informations (121) qui lisent les premières informations enregistrées sur le support d'enregistrement d'informations (10, 10a) ;
des moyens de stockage d'informations (122) qui stockent dans une section de mémoire (115) du dispositif d'enregistrement et de reproduction (1, 1a) les premières informations lues par les moyens de lecture d'informations (121) ;
des moyens de lecture d'informations clés (113) qui lisent les premières informations clés et les secondes informations clés enregistrées sur le support d'enregistrement d'informations (10, 10a) ;
des moyens d'authentification et de confirmation (111) qui, grâce à l'utilisation des premières informations clés enregistrées sur le support d'enregistrement d'informations (10, 10a), procèdent à l'authentification pour l'utilisation des premières informations stockées dans la section de mémoire (115), qui confirment que l'authentification a été effectuée avec succès ou non, et qui déterminent, lors de l'introduction du support d'enregistrement d'informations (10, 10a) dans le dispositif d'enregistrement et de reproduction (1, 1a), si les secondes informations clés stockées dans la section de mémoire (115) et les secondes informations clés enregistrées sur le support d'enregistrement d'informations (10, 10a) ainsi introduit concordent ;
des moyens de commande d'exécution (13) qui commandent l'exécution des premières informations si les moyens d'authentification et de confirmation confirment que l'authentification a été effectuée avec succès ;
des moyens de gestion d'informations clés (112) qui stockent dans la section de mémoire (115) du dispositif d'enregistrement et de reproduction (1, 1a) les premières informations clés et les secondes informations clés lues par les moyens de lecture d'informations clés avant que le support d'enregistrement d'informations (10, 10a) ne soit éjecté du dispositif d'enregistrement et de reproduction (1, 1a) pendant l'exécution des premières informations par les moyens de commande d'exécution (13) ;
des moyens d'effacement d'informations clés (114) qui effacent du support d'enregistrement d'informations (10, 10a) les premières informations clés avant que ledit support d'enregistrement d'informations (10, 10a) ne soit éjecté du dispositif d'enregistrement et de reproduction (1, 1a) pendant l'exécution des premières informations par les moyens de commande d'exécution (13) ; et
des moyens d'enregistrement d'informations clés (114) qui enregistrent sur le support d'enregistrement d'informations (10, 10a) les premières informations clés stockées dans la section de mémoire (115) si (i) le support d'enregistrement d'informations (10, 10a) qui a été éjecté du dispositif d'enregistrement et de reproduction (1, 1a) est réintroduit et (ii) les moyens d'authentification et de confirmation (111) déterminent que les secondes informations clés stockées dans la section de mémoire (115) et les secondes informations clés enregistrées sur le support d'enregistrement d'informations (10, 10a) concordent.

2. Dispositif d'enregistrement et de reproduction (1, 1a) tel qu'il est présenté dans la revendication 1, étant précisé que le support d'enregistrement d'informations (10, 10a) a une zone en reproduction seule (102) sur laquelle sont enregistrées les premières informations, et une zone enregistrable (104) dans laquelle sont enregistrées les premières informations clés.

3. Dispositif d'enregistrement et de reproduction (1, 1a) tel qu'il est présenté dans la revendication 1 ou 2, étant précisé :
que les moyens de gestion d'informations clés (112) servent à effacer les premières informations clés et les secondes informations clés stockées dans la section de mémoire (115) ; et
qu'avant ou quand les premières informations en cours d'exécution par les moyens de commande d'exécution (13) ne soient/sont terminées, les moyens de gestion d'informations (112) effacent les premières informations clés et les secondes informations clés stockées dans la section de mémoire (115).

4. Dispositif d'enregistrement et de reproduction (1, 1a) tel qu'il est présenté dans la revendication 1, comprenant :
des moyens de confirmation clé de support (113) qui lisent les informations clés enregistrées sur le support d'enregistrement d'informations (10, 10a) et qui confirment que les premières informations clés existent ou non dans les informations clés ; et
des moyens de confirmation clé de dispositif (112) qui confirment que les premières informations clés et les secondes informations clés sont ou non stockées dans la section de mémoire (115) du dispositif d'enregistrement et de reproduction (1, 1a),
quand le support d'enregistrement d'informations (10, 10a) a été introduit, et si les moyens de confirmation clé de support (113) confirment que les premières informations clés n'existent pas, et si les moyens de confirmation clé de dispositif (112) confirment qu'à la fois les premières informations clés et les secondes informations clés sont stockées dans la section de mémoire (115), les moyens d'authentification et de confirmation (111) déterminant que les secondes informations clés stockées dans la section de mémoire (115) et les secondes informations clés enregistrées sur le support d'enregistrement d'informations (10, 10a) ainsi introduit concordent, et si les moyens d'authentification et de confirmation (111) déterminent que les deux secondes informations clés concordent, les moyens d'authentification et de confirmation (111) déterminant que l'authentification a été effectuée avec succès.

5. Dispositif d'enregistrement et de reproduction (1, 1a) tel qu'il est présenté dans la revendication 1, étant précisé que le support d'enregistrement d'informations (10, 10a) a une zone enregistrable (104) qui contient une zone de données d'utilisateur (107) dans laquelle un utilisateur est apte à enregistrer différents types d'informations, et
que les moyens d'enregistrement d'informations clés (114) enregistrent les premières informations clés dans une zone de données de non utilisateur (109) de la zone enregistrable (104) qui est différente de la zone de données d'utilisateur (107).

6. Dispositif d'enregistrement et de reproduction (1, 1a) tel qu'il est présenté dans la revendication 1, étant précisé que grâce à l'utilisation des secondes informations clés stockées dans la section de mémoire (115) par les moyens de gestion d'informations clés (112), les moyens d'authentification et de confirmation (111) identifient un support d'enregistrement d'informations (10, 10a) introduit dans le dispositif d'enregistrement et de reproduction (1, 1a).

7. Dispositif d'enregistrement et de reproduction (1, 1a) tel qu'il est présenté dans la revendication 1, étant précisé que les moyens d'authentification et de confirmation (111) commencent l'authentification après que les moyens de stockage d'informations (122) ont stocké les premières informations dans la section de mémoire (115).

8. Utilisation d'un support d'enregistrement d'informations (10, 10a) dans un dispositif d'enregistrement et de reproduction (1, 1a) tel qu'il est présenté dans la revendication 1, ledit support d'enregistrement d'informations (10, 10a) ayant au moins une zone en reproduction seule (102) et une zone enregistrable (104),
la zone en reproduction seule (102) contenant, stockées en elle, des premières informations qui sont utilisables dans un dispositif d'enregistrement et de reproduction (1, 1a) apte à enregistrer et à reproduire des informations par rapport au support d'enregistrement d'informations (10, 10a),
la zone enregistrable (104) contenant, stockées en elle, des premières informations clés pour permettre au dispositif d'enregistrement et de reproduction (1, 1a) d'utiliser les premières informations,
les premières informations clés étant effaçables par le dispositif d'enregistrement et de reproduction (1, 1a).

9. Utilisation d'un support d'enregistrement d'informations (10, 10a) telle qu'elle est présentée dans la revendication 8, étant précisé que la zone enregistrable (104) est pourvue d'une zone de données d'utilisateur (107) dans laquelle un utilisateur est apte à enregistrer différents types d'informations, ledit support d'enregistrement d'informations ayant les premières informations clés enregistrées dans une zone de données de non utilisateur (109) de la zone enregistrable (104) qui est différente de la zone de données d'utilisateur (107).

10. Utilisation d'un support d'enregistrement d'informations (10, 10a) telle qu'elle est présentée dans la revendication 8, ledit support d'enregistrement d'informations (10, 10a) ayant les premières informations clés enregistrées à l'avance lors d'une étape de fabrication du support d'enregistrement d'informations (10, 10a).

11. Utilisation d'un support d'enregistrement d'informations (10, 10a) telle qu'elle est présentée dans la revendication 8, étant précisé que la zone enregistrable (104) est conçue pour stocker des informations de configuration qui ont été établies par un utilisateur par rapport aux premières informations.

12. Utilisation d'un support d'enregistrement d'informations (10, 10a) telle qu'elle est présentée dans la revendication 8, ledit support d'enregistrement d'informations (10, 10a) ayant une structure multicouche qui comprend plusieurs couches (101, 102, 103, 104) disposées sur un substrat (105), ladite structure multicouche ayant au moins une couche en reproduction seule (102), étant précisé
que les premières informations sont enregistrées sur la couche en reproduction seule (102).

13. Procédé pour enregistrer et reproduire des informations par rapport à un support d'enregistrement d'informations (10, 10a) sur lequel sont enregistrées des premières informations qui ont besoin d'être authentifiées pour une utilisation, des premières informations clés pour permettre l'utilisation des premières informations, et des secondes informations clés qui servent d'informations uniques, le procédé comprenant les étapes :
(A) de lecture des premières informations enregistrées sur le support d'enregistrement d'informations (10, 10a) ;
(B) de stockage, dans une section de mémoire (115) d'un dispositif d'enregistrement et de reproduction (1, 1a), des premières informations lues lors de l'étape (A) ;
(C) de lecture des premières informations clés et des secondes informations clés enregistrées sur le support d'enregistrement d'informations (10, 10a) ;
(D) (a) d'exécution, grâce à l'utilisation des premières informations clés enregistrées sur le support d'enregistrement d'informations (10, 10a), d'une authentification pour l'utilisation des premières informations stockées dans la section de mémoire (115), (b) de confirmation que l'authentification a été effectuée avec succès ou non, et (c) de détermination, lors de l'introduction du support d'enregistrement d'informations (10, 10a) dans le dispositif d'enregistrement et de reproduction (1, 1a), que les secondes informations clés stockées dans la section de mémoire (115) et les secondes informations clés enregistrées sur le support d'enregistrement d'informations (10, 10a) ainsi introduit concordent ou non ;
(E) de commande d'exécution des premières informations s'il a été déterminé lors de l'étape (D), après que les premières informations ont été stockées lors de l'étape (B), que l'authentification avait été effectuée avec succès ;
(F) de stockage, dans la section de mémoire (115) du dispositif d'enregistrement et de reproduction (1, 1a), des premières informations clés et des secondes informations clés lues lors de l'étape (A) avant que le support d'enregistrement d'informations (10, 10a) ne soit éjecté du dispositif d'enregistrement et de reproduction (1, 1a) pendant l'exécution des premières informations lors de l'étape (E) ;
(G) d'effacement des premières informations clés du support d'enregistrement d'informations (10, 10a) avant que ledit support d'enregistrement d'informations ne soit éjecté du dispositif d'enregistrement et de reproduction pendant l'exécution des premières informations lors de l'étape (E) ; et
(H) d'enregistrement, sur le support d'enregistrement d'informations (10, 10a), des premières informations clés stockées dans la section de mémoire (115) si (i) le support d'enregistrement d'informations qui a été éjecté du dispositif d'enregistrement et de reproduction est réintroduit et (ii) s'il est déterminé lors de l'étape (D) que les secondes informations clés stockées dans la section de mémoire (115) et les secondes informations clés enregistrées sur le support d'enregistrement d'informations (10, 10a) concordent.

14. Procédé tel qu'il est présenté dans la revendication 13, comprenant par ailleurs l'étape :
(I) d'effacement des premières informations clés et des secondes informations clés stockées dans la section de mémoire (115) avant ou quand les premières informations en cours d'exécution lors de l'étape (E) ne soient/sont terminées.

15. Procédé tel qu'il est présenté dans la revendication 13, comprenant par ailleurs les étapes :
(J) de lecture des informations clés enregistrées sur le support d'enregistrement d'informations (10, 10a), et de confirmation que les premières informations clés existent ou non dans les informations clés ; et
(K) de confirmation que les premières informations clés et les secondes informations clés sont ou non stockées dans la section de mémoire (115) du dispositif d'enregistrement et de reproduction (1, 1a), étant précisé :
que quand le support d'enregistrement d'informations (10, 10a) a été introduit, et s'il est confirmé lors de l'étape (J) que les premières informations clés n'existent pas, et s'il est confirmé lors de l'étape (K) qu'à la fois les premières informations clés et les secondes informations clés sont stockées dans la section de mémoire (115), il est déterminé lors de l'étape (D) que les secondes informations clés stockées dans la section de mémoire (115) et les secondes informations clés enregistrées sur le support d'enregistrement d'informations (10, 10a) ainsi introduit concordent ou non, et s'il est déterminé lors de l'étape (D) que les deux secondes informations clés concordent, il est déterminé lors de l'étape (D) que l'authentification a été effectuée avec succès.

16. Procédé tel qu'il est présenté dans la revendication 13, étant précisé que le support d'enregistrement d'informations (10, 10a) a une zone enregistrable (104) qui contient une zone de données d'utilisateur (107) dans laquelle un utilisateur est apte à enregistrer différents types d'informations, et
que lors de l'étape (H), les premières informations clés sont enregistrées dans une zone de données de non utilisateur (109) de la zone enregistrable qui est différente de la zone de données d'utilisateur (107).
